(19) Europäisches Patentamt
European Patent Office
Office européen des brevets

(11) Publication number : **0 327 281 B1**

(12) # EUROPEAN PATENT SPECIFICATION

(45) Date of publication of patent specification : **28.12.94 Bulletin 94/52**

(51) Int. Cl.$^5$ : **H04N 1/387,** H04N 1/46

(21) Application number : **89300858.1**

(22) Date of filing : **27.01.89**

(54) **Image processing apparatus.**

(30) Priority : **28.01.88 JP 17690/88**

(43) Date of publication of application : **09.08.89 Bulletin 89/32**

(45) Publication of the grant of the patent : **28.12.94 Bulletin 94/52**

(84) Designated Contracting States : **DE GB**

(56) References cited :
**FR-A- 2 505 518**
**GB-A- 2 183 961**
**US-A- 4 476 497**
**US-A- 4 558 374**
**SYSTEMS & COMPUTERS IN JAPAN, vol. 18, no. 8, August 1987, NEW YORK US, pages 77-87; HASE ET AL: 'A method for extracting marked regions from document images'**

(73) Proprietor : **KONICA CORPORATION**
**26-2, Nishishinjuku 1-chome,**
**Shinjuku-ku**
**Tokyo 160 (JP)**

(72) Inventor : **Matsunawa, Masahiko**
**Konica Corporation**
**2970, Ishikawa-machi**
**Hachioji-shi Tokyo (JP)**

(74) Representative : **Wood, Anthony Charles et al**
**Urquhart-Dykes & Lord**
**91 Wimpole Street**
**London W1M 8AH (GB)**

**EP 0 327 281 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

### FIELD OF THE INVENTION

The present invention relates to an image processing apparatus which has an image processing function such as a resolution correction function, and is suitably applied to a simple electrophotographic color copying machine and, more particularly, to an image processing apparatus which can perform image processing in the recording order of colors.

### DESCRIPTION OF THE PRIOR ART

A color image processing apparatus which optically reads color image data such as a document, separates the read data into a plurality of colors, e.g., black, red, and blue, and records an image on a recording paper sheet on the basis of the separated colors using an output apparatus such as an electrophotographic color copying machine is disclosed in Japanese Patent Laid-Open (Kokai) Nos. 57-147374 and 58-62769, and the like.

US-A-4 476 497 discloses magnification processing of designated image areas. An original image is read by an original reader and image areas are designated on a separate layout sheet. Data obtained by the area designation are then combined with the read original image data for magnification processing.

Fig. 1 shows a main part of an arrangement of an image processing apparatus of this type.

In Fig. 1, color image data is color-separated into white and cyan, and these colors are projected onto image sensors 104 and 105 (e.g., CCDs) to be photoelectrically converted.

White and cyan color signals are supplied to a subtractor 2 to separate a red signal therefrom. These color signals are subjected to gain control by AGC circuits 3, 4, and 5, and are then binarized by binarizing circuits 6, 7, and 8. The binary outputs are reconverted to red and black color signals by an arithmetic circuit 9, and the recovered signals are supplied to a color copying machine as image signals, thus reproducing a color image.

In the image processing circuit shown in Fig. 1, since the image signals are binarized and then color-separated, various image processing after color separation must use the binary signals.

For this reason, the content of the image data as an object to be image-processed is insufficient.

Since the binary data is used, image quality is also impaired. For example, when enlargement processing is executed based on the binary data, dots constituting an oblique line undesirably becomes conspicuous.

Since the apparatus has independent channels in units of colors, a circuit scale is enlarged, resulting in high-cost apparatus.

Therefore, a demand has arisen for development of a color image processing apparatus which can meet the following requirements:

Appropriate image processing can be performed in units of colors for many colors;
Specific processing, e.g., color erasure, can be performed;
Color conversion processing can be partially performed;
Multi-value recording can be used, and image equality can be improved; and
The apparatus must be inexpensive.

Of the above-mentioned processing operations, if color erasure processing is available, in a monochromatic recording mode, when some color letters are written on a black-and-white document or spots of color ink are present thereon, and the document is copied in such a state, the written letters and spots can be erased, resulting in very convenience.

However, the above-mentioned conventional apparatus cannot meet the requirements.

In the apparatus capable of color image recording, image data are color separated and are sequentially recorded in units of separated colors. Therefore, various image processing operations and color processing are preferably performed in the order of recording colors due to the following reasons.

Even if image processing such as resolution correction processing, variable magnification processing, and the like or color processing such as color conversion, color erasure, and the like are performed for for all the color data to be recorded, signal processing is complicated, and there is no merit to obtain.

### SUMMARY OF THE INVENTION

It is an object of the present invention to provide an image processing apparatus as set out in the appended claims which can solve the conventional problems with a simple arrangement, and can easily and reliably perform various image processing and color processing operations.

According to the present invention, after color separation of document image data, a plurality of color-separated data are discriminated into a plurality of color signals, color processing is executed on the basis of area designation data for designating an image processing area, color data in units of pixels, color processing designation data, and recording color data, and image processing is executed with respect to density data with reference to area designation data.

The density data after color processing is obtained by processing corresponding data in the order of recording colors.

Optically sensed image data of a document is separated into a plurality of colors. The color-separated image data are photoelectrically converted by reading means such as CCDs.

Each photoelectrically converted image signal is separated into color data and density data of the corresponding image. The color data is subjected to image processing such as color ghost correction.

The density data is subjected to various image processing operations such as enlargement/reduction processing, resolution processing, processing inside/outside a specific area (e.g., extraction and erasure), and the like.

On the other hand, an attribute designation signal P is detected from the image data subjected to the color ghost correction.

The attribute designation signal P is a signal according to whether a document content is a line image or photograph. By utilizing the signal P, a filter coefficient for resolution correction (MTF correction) or a threshold value for multi-value processing is updated.

The filter coefficient of the resolution correction (MTF correction) and the threshold value for the multi-value processing are preferably changed depending on whether the document is a line image or photograph, so that more appropriate image processing can be executed.

In order to extract a specific area, a color marker is added to a document, and image data inside or outside an area surrounded by the color marker is extracted in accordance with an area signal obtained by automatically detecting the color marker.

A combination of the area signal and the above-mentioned attribute designation signal will be referred to as a control signal for an image.

The control signal is subjected to the same enlargement/reduction processing as image data in an enlargement/reduction processing mode. Thus, in the enlargement/reduction processing mode, image processing of a specific area can be performed.

Color processing is executed in addition to the above-mentioned image processing.

The color processing is processing of erasing specific color data and recording remaining image data in a color of the image data, and replacing specific color data with another designated color to record a corresponding image area.

This color processing can also be performed for image data which is enlarged/reduced.

The image processing and color processing are executed in the order of recording colors of a developing device, thereby simplifying the image and color processing.

When the developing devices record colors each per revolution of a photosensitive drum in the order of red → blue → black, a red image is subjected to developing processing in a red copying sequence, and is fixed after developing processing for all the colors is completed, thus completing a color copying operation.

A color to be validated or invalidated is determined by external designation.

After various image processing and color processing operations are completed, multi-value processing is executed. Optical images are visualized based on multi-value processed images.

Since the image processing is executed before multi-value processing, image quality will not be degraded even if enlargement/reduction processing is executed.

## BRIEF DESCRIPTION OF THE DRAWINGS

Fig. 1 is a block diagram showing a main part of an arrangement of a conventional color image processing apparatus;

Fig. 2 is a block diagram of a main part of a color image processing apparatus according to an embodiment of the present invention;

Fig. 3 is a schematic sectional view of an electrophotographic copying apparatus to which the present invention can be applied;

Fig. 4 is a graph showing a transmittance of a dichroic mirror;

Fig. 5 is a graph showing an emission spectrum;

Fig. 6 is a graph showing spectral sensitivity characteristics;
Fig. 7 is a graph showing a relative luminance distribution of a light source;
Figs. 8A to 8C are charts for explaining shading correction;
Fig. 9 is a block diagram showing a shading correction circuit;
Figs. 10A to 10H and 12A to 12C are waveform charts for explaining a shading correction operation;
Fig. 11 is a block diagram of an A/D converter;
Figs. 13A and 13B are views for explaining the operation of the A/D converter;
Fig. 14 and Figs. 16A to 16C show color-separation maps;
Fig. 15 shows a truth table of color codes;
Fig. 17 and Figs. 18A to 18C are views for explaining a color ghost;
Fig. 19 and Figs. 20A to 20C are views for explaining a generation mechanism of a color ghost;
Fig. 21 is a view showing an arrangement of a CCD mounting device;
Fig. 22 is a view showing main part of the CCD mounting device;
Fig. 23 is a partial sectional view of the CCD mounting device;
Fig. 24 is a view for explaining a generation mechanism of a color ghost;
Figs. 25 and 26 are tables for explaining a color ghost correction;
Fig. 27 is a block diagram of a color ghost correction means;
Figs. 28 to 30 are views for explaining a line image and a photograph;
Figs. 31A and 31B and Figs. 32A and 32B are graphs for explaining MTF deterioration caused by a color ghost;
Fig. 33 is a block diagram of a convolution filter as an example of MTF;
Figs. 34A and 34B are views of an area extraction unit;
Figs. 35 to 39 are waveform charts for explaining the operation of the area extraction unit;
Fig. 40 is a block diagram of an area extraction circuit;
Fig. 41 is a circuit diagram of a color marker detector;
Fig. 42 is a circuit diagram of the area extraction unit;
Figs. 43A to 43P are waveform charts for explaining an operation of area extraction;
Fig. 44 is a circuit diagram of an area judgement circuit;
Figs. 45A to 48 are views for explaining the operation of the area judgement circuit;
Fig. 49 is a view showing another example of area designation;
Fig. 50 is a block diagram of a processing means;
Figs. 51 and 52 are tables showing a color erasure designation code and its processing content;
Fig. 53 is a table for explaining partial color conversion;
Fig. 54 is a view for explaining enlargement/reduction processing;
Fig. 55A is a block diagram of a variable magnification circuit for an image signal D;
Fig. 55B is a block diagram of a variable magnification circuit for an area designation signal S;
Fig. 55C is a block diagram of a variable magnification circuit for an attribute designation signal P;
Fig. 56 is a table showing interpolation data used in an enlargement/reduction processing mode;
Fig. 57 is a block diagram of an input buffer;
Fig. 58 is a block diagram of an output buffer;
Figs. 59A to 61E are timing charts for explaining the operation of the enlargement/reduction processing;
Fig. 62 is a block diagram of a data selective write circuit;
Figs. 63A to 63G are waveform charts of the enlargement/reduction processing operation;
Figs. 64 and 65 are tables showing numerical values of interpolation data used in the enlargement/reduction processing;
Fig. 66 is a block diagram of a sync circuit;
Figs. 67A to 680 are waveform charts for explaining the operation of the sync circuit;
Fig. 69 shows a content of a data ROM;
Figs. 70A to 70E are charts showing data input/output states of the input and output buffers;
Figs. 71A to 71C are views for explaining enlargement/reduction processing with reference to the center;
Fig. 72 is a table showing write start address data when a recording operation with reference to the center is performed;
Figs. 73A to 73G are timing charts for explaining the processing operation of the recording operation;
Figs. 74A to 74K are timing charts for explaining an operation of an image enlargement processing mode;
Figs. 75A to 75J are timing charts for explaining an operation of an image reduction processing mode;
Figs. 76A and 76B are views showing another examples of image reading and recording;
Figs. 77 and 78 are tables showing the relationship between a write start address and preset data used when the image reading and recording shown in Figs. 76A and 76B are performed;

Fig. 79 is a block diagram of a halftone processing circuit;
Figs. 80A and 80B are views for explaining halftone processing, in which Fig. 80A shows a state before halftone processing and Fig. 80B shows a state after the halftone processing;
Fig. 81 is a table showing halftone pattern data;
Fig. 82 is a waveform chart before and after halftone processing;
Fig. 83 is a graph of a density histogram;
Figs. 84 to 86 are block diagrams of a threshold value automatic determining means;
Fig. 87 shows dither matrices;
Fig. 88 is a block diagram of a selector controller;
Fig. 89 shows a logic table of the selector controller;
Fig. 90 is a block diagram of a multi-value circuit;
Fig. 91 is a graph showing a threshold value level;
Fig. 92 shows a logic table for multi-value processing;
Fig. 93 is a block diagram of an edge extraction processing circuit;
Figs. 94A to 95K are timing charts for explaining the operation of the edge extraction processing circuit;
Fig. 96 is a view showing data assignment;
Fig. 97 is a block diagram of an interface circuit;
Fig. 98 is a block diagram of a first interface;
Figs. 99A to 99N are timing charts showing the operation of the first interface;
Fig. 100 is a block diagram of an output unit;
Fig. 101 is a view showing an arrangement of a laser beam scanner;
Fig. 102 is a chart for explaining a developing process;
Fig. 103 is a block diagram showing a second control unit;
Fig. 104 is a block diagram of a first control unit;
Figs. 105A to 107X are waveform charts for explaining the operations of the first and second control units;
Fig. 108 is a view showing a key arrangement on an operation/display unit;
Figs. 109 to 117 are views for explaining key operation processing;
Fig. 118 shows a table of a variable conversion lattice point used in an SPC method for the enlargement/reduction (variable magnification) mode;
Fig. 119 shows an interpolation ROM table used in a variable magnification mode of the area designation signal S and the attribute designation signal P; and
Fig. 120 is a sectional view showing an embodiment of a single-color electrophotographic copying apparatus to which an image processing apparatus of the present invention is applied.

## DETAILED DESCRIPTION OF THE PREFERRED EMBODIMENTS

An embodiment of a color image processing apparatus according to the present invention will now be described in detail with reference to Fig. 2 and subsequent figures.

Fig. 2 shows a schematic arrangement of a color image processing apparatus according to the present invention.

Color image data (optical image) of a document 52 is separated into two color-separated images by a dichroic mirror 55. In this embodiment, the image data is separated into a red (R) color-separated image and a cyan (Cy) color-separated image. For this purpose, the dichroic mirror 55 having a cutoff wavelength of 540 to 600 nm is used. Thus, a red component becomes transmission light, and a cyan component becomes reflection light.

The R and Cy color-separated images are supplied to image reading means, e.g., CCDs 104 and 105. The CCDs 104 and 105 output image signals consisting of only a red component R and a cyan component Cy, respectively.

The image signals R and Cy are supplied to A/D converters 60A and 60B and are converted into digital signals of a predetermined number of bits (in this embodiment, 6 bits). Simultaneously with A/D conversion, the image signals are subjected to shading correction. Reference numerals 15A and 15B denote shading correction circuits. The shading correction will be described later in detail.

Signal components corresponding to a maximum document width are extracted from the shading-corrected digital image signals by an effective area extraction circuit 30, and are supplied to a color discriminator 35. When a maximum document width to be handled is a B4 size, a size signal B4 generated by a timing signal forming means (not shown) of a system is used as a gate signal.

If the shading-corrected digital image signals are respectively given by VR and VC, these image signals VR and VC are supplied to the color discriminator 35 and discriminated to a plurality of color signals.

In this embodiment, red, blue, and black color signals are discriminated from the image signals.

More specifically, each pixel of an image on a document is classified to one of red, blue, and black regardless of colors of a document. With this processing, each portion of a document is recognized as corresponding one of red, blue, and black.

Note that the color discrimination processing includes modifications using other colors in place of red, blue, and black or increasing the number of 4 or more colors.

Each discriminated color signal consists of color code data (2-bit data) and its density data (6-bit data). As these data of the color signals, data stored in a color discrimination map comprising a ROM are used.

The color-discriminated image data are then subjected to a color image processing step.

The image data are supplied to a color ghost correction means 300, so that color ghosts in the main scan direction (horizontal scan direction) and the subscan direction (drum rotating direction) are corrected.

During color discrimination, unnecessary red or blue color ghosts may appear at edge portions of a black letter.

When these color ghosts are removed, image quality can be improved. Color ghost processing is performed for only the color code data.

Even when an image is copied in a monochrome mode, if the apparatus has a function of copying an image while erasing a colored portion, the color ghost correction circuit is necessary like in this embodiment.

Reference numeral 300A denotes a main scan color ghost correction circuit; and 300B, a subscan color ghost correction circuit.

When color ghost correction is performed using 7 bits (horizontal direction) x 7 lines (vertical direction) image data, a 7-bit shift register 301 and a memory 310 for 7 or 8 lines are used.

The image data subjected to color ghost correction are subjected to various image processing operations through a line memory for a buffer (in this embodiment, a 3-line memory 799).

Image processing includes various image processing operations by a resolution correction means (MTF correction means) 450, a specific area extraction/erasure/painting means (to be referred to as a "signal processing means" hereinafter) 420, an enlargement/reduction processing means (to be referred to as an "enlargement/reduction circuit" hereinafter) 1, a halftone processing means 440, a reverse means 460, a multi-value means 600 for multi-value processing, and the like.

Of these image processing operations, in the MTF correction means 450, its filter coefficient is preferably changed in accordance with an image content so as to obtain a clear image.

In the multi-value means 600, threshold values for multi-value processing are preferably changed.

In order to change the filter coefficients or the threshold values for multi-value processing, it must be recognized whether a presently reading image is a line image or a photograph.

For this purpose, an attribute detection means 800 for detecting an attribute of an image is connected to the output of the 3-line memory 799, and a filter coefficient or a threshold value is changed in accordance with the attribute designation signal P obtained by the detection means 800.

The density data and the color code data subjected to the color ghost correction are supplied to an MTF correction means 450, and are subjected to resolution correction (MTF correction).

The reason why the MTF correction is performed is as follows. That is, as well as degradation in sharpness in a transmission system such as lenses, aperture sizes of the CCDs 104 and 105 may often be increased in the subscan direction, and since a signal is obtained by integrating a light signal in the subscan direction, MTF degradation in the subscan direction is noticeable as compared to the main scan direction. Therefore, they need be corrected.

When the MTF correction processing is performed, omission and painting-out of characters can be corrected.

The MTF correction is performed using a 3 x 3 convolution filter.

The MTF-corrected image data is subjected to extraction/erasure/painting processing for a specific area by the processing means 420.

These processing operations are executed for a portion inside or outside a specific area. Therefore, in order to execute these processing operations, the specific area must be detected.

The specific area is detected with reference to a marker written on a document.

In order to detect a document image area marked by a color marker on a document, an area extraction circuit 500 is arranged.

The area extraction circuit 500 outputs a signal (area signal) S indicating inside/outside an area surrounded by a color marker. For this reason, the area extraction circuit 500 receives the color code data, a color erasure designation signal, and a color conversion designation signal (these signals include data designating entire or partial processing and designating the inside or outside of a designated area).

These signals are designated at a display/operation unit, and a BBR signal indicating a color which is presently sensed and is to be output is also input. Based on these signals, a processing designation signal is output for image processing.

For example, when a copying operation is simply performed, only image data having the same color as indicated by the BBR signal is output.

When color conversion is performed for the entire document, i.e., when red and blue are respectively color-converted to blue and red, control is performed such that red image data is output during blue recording and blue image data is output during red recording.

When color conversion is partially executed, black data in an area surrounded by a color marker is recorded in a color of the marker.

For example, when black data in an area surrounded by a red marker is controlled so as to be output in a phase of recording red, an image in the area can be partially color-converted and recorded.

The partial color conversion and color designation processing are allowed by employing a developing system in which each color image is developed by rotating a drum for each color, and fixing processing is performed after the developing processing of the final color is completed when color images are developed.

In this case, an image sensing operation is executed a plurality of times. In this manner, when an image sensing operation and a developing operation for each color are performed a plurality of times in the order of recording colors, an image recording processing operation can be simplified.

The image recording processing operation can be performed in real time. The real-time processing can reduce the capacity of a memory for storing an image.

The area extraction circuit 500 outputs the signal (area signal) S indicating an area surrounded by a color marker in the order of recording colors, and supplies them to the signal processing means 420 for performing extraction/erasure/painting.

In the signal processing means 420, a signal for performing extraction/erasure/painting is generated in accordance with an area-extracted signal. In this case, the area signal is generated in accordance with a designation of the inside/outside of a marker area or a designation of entire or partial processing.

When color erasure or the like is executed, the area signal is generated based on the color code data.

The signal is supplied to the enlargement/reduction circuit 1 for performing variable magnification processing through an input buffer 400, and is subjected to enlargement/reduction processing as needed.

Data necessary for enlargement/reduction processing includes the density data output from the processing means 420, the area signal S, and the attribute designation signal P.

In addition to the density data, the area signal S and the like are subjected to the enlargement/reduction processing for the following reason.

That is, since the area signal S and the attribute designation signal P are used for halftone processing or edge extraction processing after enlargement/reduction processing, the control signal such as the area signal S must be enlarged/reduced in accordance with a magnification with the density data to adjust the number of data with a designated magnification.

A magnification is set in the enlargement/reduction circuit 1 by a CPU.

The enlargement/reduction processing is performed by electrical processing in the main scan direction, and is performed by controlling a scan speed of an optical system in the subscan direction.

After these processing operations are executed for a required area, image data is input to the halftone processing circuit 440. In this circuit, the required area of the image data is subjected to the halftone processing.

The halftone processing is performed after the enlargement/reduction processing is completed since a designated dot pitch is to be kept constant after the enlargement/reduction processing.

The image data subjected to the halftone processing is supplied to the multi-value processing means 600 and is subjected to multi-value processing.

Threshold values used when the image data is converted to multi-value data are manually or automatically set.

When the threshold value is automatically determined based on input image data (density data), a threshold value for a character (line image) and a threshold value for a photograph are separately stored in ROMs 600B and 600C.

The ROM 600B is used for a character, and the ROM 600C is used for dither-processing of a photograph. In this embodiment, a fixed ROM 600D for a character image is used.

When the multi-value processing is performed using four levels, e.g., black, white, and two gray levels (light gray and dark gray), corresponding threshold values Ti (i = 1 to 3) are selected.

Therefore, the ROMs 600B to 600D output threshold value data T1 to T3 corresponding to colors.

The threshold value data T1 to T3 are selected by data selectors 600E to 600G, respectively.

For this purpose, the attribute designation signal P output from the enlargement/reduction circuit 1 is supplied to a controller 600H.

Excluding a case wherein a processing content is externally designated, the controller 600H selects the selectors 600E to 600G on the basis of the attribute designation signal P.

When a character image is externally designated, the threshold value ROM 600B or 600D is selected, and when a photograph image is selected, the threshold value ROM 600C is selected.

Based on the selected threshold value, the density data is subjected to the multi-value processing by a multi-value means 600A. As multi-value, levels, two to four levels are appropriately used, and in this embodiment, four levels are employed.

The multi-value image data output from the multi-value means 600A is supplied to an edge extraction processing circuit 470 through a 9-line memory 459 serving as a delay means.

Edge extraction processing is processing of extracting edge data of an image. In this embodiment, only data having four-dot width at an edge of an image is extracted in both the main scan and subscan directions.

The edge-extracted image data is input to the reverse circuit 460, and its required area is subjected to negative/positive reverse processing in accordance with a reverse instruction.

Thereafter, the image data is supplied to an output unit 70 through an interface circuit 40.

The interface circuit 40 has first and second interfaces. Of these interfaces, the second interface receives patch image data used for toner density control.

The output unit 70 can comprise a laser recording apparatus (laser printer). When the laser recording apparatus is used, the multi-value image data is converted to a light signal, and the light signal is modulated based on the multi-value data.

As a developing device used in the output unit 70, an electrophotographic color copying machine is used. In this embodiment, a two-component jumping developing process and a reversal developing process are employed.

That is, a transfer drum used in conventional color image formation is not used. In this embodiment, in order to reduce the size of the apparatus, blue, red, and black color images are developed on an OPC photosensitive body (drum) for image formation during three revolutions of the drum, and after the developing process, a transfer operation is performed once, thereby transferring the resultant image to a recording paper sheet such as normal paper.

Therefore, according to the color image processing apparatus shown in Fig. 2, an apparatus having the following advantages can be realized:

Appropriate image processing can be performed for many colors;
Color erasure processing and the like can be performed;
Color conversion can be performed;
Multi-value recording can be used, and high image quality can be realized;
The apparatus is inexpensive.

The arrangements of the respective portions of the color image processing apparatus according to the present invention with the above arrangement will be described in detail below.

A simplified color copying machine suitably applied to the present invention will now be described with reference to Fig. 3 and subsequent figures.

The simplified color copying machine separates image data into three color data, and records a color image. In this embodiment, three color data to be color-separated include black BK, red R, and blue B.

When a copying button of the apparatus is turned on, a document reader A is driven.

First, a document 52 on a document table 81 is optically scanned by an optical system.

The optical system comprises a carriage 84 provided with a halogen lamp (light source) 85 and a reflection mirror 87, and a movable mirror unit 88 provided with V mirrors 89 and 89'.

The carriage 84 and the movable mirror unit 88 are moved at a predetermined speed in a predetermined direction along slide rails by a stepping motor 90.

Optical data (image data) obtained by irradiating the document 52 with light emitted from the halogen lamp 85 is guided to an optical data conversion unit 100 through the reflection mirror 87 and the V mirrors 89 and 89'.

As the light source 85, a commercially available warm-white (WW) fluorescent lamp can also be used. In this case, the fluorescent lamp 85 is turned on and driven by a high-frequency power source having a frequency of about 40 kHz so as to prevent flickering. The lamp 85 is heated by a heater using a positive starter so as to maintain a tube wall at a predetermined temperature and to accelerate warm-up.

A standard white plate 97 is provided on the left end portion of the upper surface of platen glass 81. The standard white plate 97 is used to normalize an image signal to be a white signal by optically scanning it.

The optical data conversion unit 100 comprises a lens 801, a prism 802, the dichroic mirror 55, the CCD 104 to which a red color-separated image is projected, and the CCD 105 on which a cyan color-separated image is projected.

A light signal obtained from the optical system is focused by the lens 801, and is color-separated into red and cyan optical data by the dichroic mirror 55 arranged in the prism 802.

The color-separated images are focused on the light-receiving surfaces of the corresponding CCDs, thus obtaining image signals converted to electrical signals. The image signals are subjected to signal processing by a signal processing system, and the color signals are output to a write unit B.

The signal processing system includes signal processing circuits such as the color separation means, multi-value means, and the like in addition to the A/D conversion means.

The write unit B has a deflector 935. As the deflector 935, a deflector comprising a photodeflector using quartz may be used as well as a galvano mirror, rotary polygonal mirror, and the like. A laser beam modulated by the color signal is deflected and scanned by the deflector 935.

When deflection scan is started, beam scan is detected by a laser beam index sensor (not shown), and beam modulation by a first color signal (e.g., blue signal) is started. The modulated beam is scanned on an image forming body (photosensitive drum) 110 uniformly charged by a charger 121.

An electrostatic latent image corresponding to the first color signal is formed on the image forming body 110 by the main scan by the laser beam and the subscan upon rotation of the image forming body 110.

The latent image is developed by a developing unit 123 which stores a blue toner. The developing unit 123 is applied with a predetermined bias voltage from a high-voltage power source. With this developing process, a blue toner image is formed.

Toner replenishment of the developing unit 123 is performed when a toner replenishment means (not shown) is controlled based on an instruction signal from a system control CPU (not shown), so that the toner is replenished as needed.

The blue toner image is rotated while contact of a cleaning blade 127 is released. A latent image is formed based on a second color signal (e.g., red signal) in the same manner as in the first color signal, and is developed using a developing unit 124 which stores a red toner, thus forming a red toner image.

The developing unit 124 is applied with a predetermined bias voltage, as described above.

Similarly, a latent image is formed based on a third color signal (black signal), and is developed using a developing unit 125 which stores a black toner, as described above.

Therefore, a multi-color toner image is written on the image forming body 110.

Formation of the three-color toner image has been described. However, a two- or single-color toner image can be formed in accordance with a designated recording mode, as a matter of course.

In the developing processing, as described above, a so-called non-contact two-component jumping developing process is performed wherein the color toners are caused to fly toward the image forming body 110 to develop images while AC and DC bias voltages from the high voltage power source is applied.

The developing units 124 and 125 are replenished with predetermined amounts of toners on the basis of an instruction signal from the CPU in the same manner as described above.

A recording paper sheet fed from a paper feed unit 141 through feed rollers 132 and timing rollers 143 is conveyed onto the surface of the image forming body 110 in synchronism with the rotation of the image forming body 110. The multi-color toner image is transferred onto the recording sheet by a transfer electrode 130 applied with a high voltage from the high voltage source, and the sheet is separated from the image forming body 110 by a separation electrode 131.

The separated recording paper sheet is conveyed to the fixing unit 132 to be subjected to fixing processing, thus obtaining a color image.

The image forming body 110 subjected to the transfer processing is cleaned by a cleaning unit 126 to prepare for the next image formation process.

In the cleaning unit 126, in order to facilitate recovery of a toner cleaned by a blade 127, a predetermined DC voltage is applied to a metal roller 128 provided to the blade 127. The metal roller 128 is arranged above the surface of the image forming body 110 in a noncontact state.

The contact state of the blade 127 is released after the cleaning operation is completed. An auxiliary cleaning roller 129 for removing residual unnecessary toner upon releasing is arranged. The roller 129 is rotated in a direction opposite to the image forming body 110, and is brought into contact therewith, thereby sufficiently cleaning and removing the unnecessary toner.

Note that the paper feed unit 141 comprises a sensor 65a, and the detection output of the sensor 65a is supplied to the CPU.

Fig. 4 shows transmittance characteristics of the above-mentioned dichroic mirror, Fig. 5 shows an emission spectrum of the light source, and Fig. 6 shows spectral sensitivity characteristics of the CCD.

Shading correction must be performed for the following reasons.

First and second problems are caused by the optical system and the light source. As a third problem, PRNU (Photo Response NonUniformity) correction is necessary.

The problem of the optical system is solved by the $\cos^4\theta$ rule.

The light source as the second problem will be described below. The light source, e.g., the fluorescent lamp is a linear light source. The light source causes nonuniformity of a light amount in its longitudinal direction due to the influence of a filament, as shown in Fig. 7.

The nonuniformity of a light amount is caused by the above-mentioned reason.

The CCD as the third problem has a structure wherein 2,048 to 5,000 pixels are aligned in line. It is difficult to uniform characteristics of such many pixels. Normally, ±10% of PRNU is present, and sensitivity nonuniformity must be corrected in order to improve image quality.

When shading occurs, even if an identical white document is sensed, the sensed output can only be a white signal whose output level is decreased at its peripheral portion, as shown in Fig. 8A.

In order to perform shading correction, the optical system is operated first to scan the standard white plate before actual scan, thereby obtaining a white signal (Fig. 8B). The white signal can be used as a reference signal for A/D conversion, so that an quantization step upon A/D conversion can be modulated by the reference signal. More specifically, as shown in Fig. 8A, the quantization steps are controlled to be small at the end portion of an image and to become large at the center.

As a result, when A/D conversion is performed while modulating the reference signal, its output (analog output) has a constant output level, as shown in Fig. 8C, and a shading distortion can be corrected. In this manner, the white signal sensed before actual scan is utilized as a reference signal for shading correction.

Fig. 9 shows an embodiment of a shading correction circuit 15A.

In this embodiment, the standard white plate 97 is sensed for two lines, and the sensed output is used as the reference signal. A first buffer 16 is controlled in an active state by a switching signal (Fig. 10B) supplied thereto during a period corresponding to two lines, and an A/D-converted white signal is stored in a memory 19 through the first buffer 16.

In the normal image read mode, an image signal shown in Fig. 10A is output and digitized by an A/D converter 60A. In the image read mode, the memory 19 is controlled to be set in the read mode, and the second buffer 17 is controlled to be enabled. The reference signal (white signal) read out from the memory 19 is converted to an analog signal by a D/A converter 20. The analog signal is used as the reference signal for the A/D converter 60A.

The A/D converter 60A employs a parallel type A/D converter, as shown in Fig. 11, and the above-mentioned reference signal is supplied to comparators 61 constituting a parallel circuit. In the A/D converter 60A, reference numeral 62 denotes a reference signal forming means comprising a plurality of bleeder resistors; 63, an encoder; and 64, a latch.

In order to control a second buffer 17 in an active state during only an operation period, an OR output OR1 (Fig. 10E) of the switching signal and an image valid signal is supplied through an OR gate 21.

In this embodiment, a third buffer 18 is arranged to perform A/D conversion using a reference signal of a predetermined level (HIGH level) during a horizontal blanking period. For this purpose, an output OR2 (Fig. 10F) obtained by phase-inverting the OR output OR1 by an inverter 22 is supplied to the third buffer 18 so as to be set in an active state during only the horizontal blanking period (image invalid period).

Therefore, since the reference signal for the comparators 61 is modulated by the reference signal shown in Fig. 10G, the A/D-converted image data is converted to an analog signal, as shown in Fig. 10H.

If a white signal corresponding to all the pixels of the CCD is stored in a memory 19, the PRNU correction can be performed at the same time.

The shading correction is independently performed for red and cyan channels. When a signal for the cyan channel is to be corrected using a white signal for the red channel, since the PRNU of the red channel is difference from that of the cyan channel, a variation in corrected white signal output for the cyan channel may be increased.

In Figs. 10A to 10H, A/D conversion is performed using a reference signal having a predetermined reference level during a horizontal blanking period HBLK for the following reason.

When the shading correction, in particular, A/D conversion falling outside the image valid period, is performed, if shading correction data stored in a 1-line memory is directly supplied to a reference terminal 62a (Fig. 11) of the A/D converter 60A, an A/D conversion range becomes almost zero in the A/D converter 60A, and the input signal and the shading-correction reference signal have the same potential. The input signal includes much noise N (Fig. 12A).

Since the A/D converter 60A executes judgement variations in voltage of the input image signal and the reference signal and the conversion range is almost zero, the judgement result is determined to be one of the maximum value (HIGH level) or the minimum value (LOW level).

If the output value is varied for a relatively short period of time due to the influence of noise, the comparators of the A/D converter are simultaneously and repetitively turned on/off, and a large change in current appears in the entire A/D converter.

Since the change in current has a relatively high frequency and is not present in a signal waveform, it may influence the input signal as noise. Furthermore, since a relatively large current flows through a generation source, an impedance is low, and the change in current appears in a power source line or a ground line as larger noise than normal one.

Noise caused by the signal input to the A/D converter and the shading-correction reference signal (Fig. 12B) is mixed in the black level of the input signal, and the black level is largely varied thereby (Fig. 12C).

In this embodiment, the conversion range is prevented from being zero during at least a black-level period other than the image invalid period, thereby preventing mixing of noise.

In this embodiment, a voltage value set in a period other than the image valid period corresponds to a full-scale value of A/D conversion, thus preventing the conversion range from being zero and preventing a signal to be shading-corrected and the shading correction signal from having the same potential.

With the above processing, the A/D conversion and shading correction can be performed at the same time. In the correction method described above, if the white input signal exceeds 30 to 40% of the full-scale value of A/D conversion, correction can be performed (Fig. 13A).

When a low white signal below the lower limit is input (for example, caused by a decrease in light amount due to blackening or an ON operation for a long period of time), it can be corrected but much noise is superposed on the image signal. Thus, in practice, it is difficult to use such an image signal without extra processing (Fig. 13B).

Color discrimination, i.e., color separation (image data consisting of a plurality of bits) is performed using the shading-corrected red and cyan output signals described above. In this embodiment, black, red, and blue signals are discriminated from the red and cyan signals.

When a conventional method wherein after an image signal is binarized, the binary image signal is color-separated is employed, the color-separated data is a binary signal, and is inappropriate since various processing operations are executed thereafter.

In this embodiment, the image signal is color-separated before it is binarized. A map shown in Fig. 14 is prepared for color separation. Numerical values in Fig. 14 represent values of (color code + density data) at color boundaries.

The color separation map is assumed to comprise a ROM (bipolar ROM). In this case, color codes (for designating red, blue, black, white, red marker, and blue marker) and density data are stored at addresses given by 6-bit image data VR and VC having a halftone level.

That is,

One image data = color code + density data

For example, a pixel having a density value of 30 level 30 in the hexadecimal notation (XXX011110) is given by:

$$\text{red} = \underbrace{010}_{\text{color code}}\underbrace{011110}_{\text{density data}} = 9E$$

Similarly,

blue = 001011110 = 5E
black = 000011110 = 1E
white = 011011110 = DE
red marker = 101011110 = 15E
blue marker = 110011110 = 19E

White may be either DE or C0. That is, the density data of white is insignificant.

The above-mentioned data are stored at corresponding addresses as shown in Fig. 14.

Fig. 15 shows color codes.

Since the color codes include 6 colors, i.e., white, red, blue, black, red marker, and blue marker, each code is represented by 3 bits. The number of bits can be increased as the number of colors is increased.

In this embodiment, the density data has a 6-bit format but can have a 4-bit format in a practical application for only characters. Therefore, the number of bits can be changed depending on an object image.

In the map illustrated in Fig. 14, boundaries of color separation must be determined in consideration of a variation in output at the edge portion of a line portion. If not so, an unnecessary color called a color ghost as a kind of color error is generated at an edge of a black character or the like.

Since the color separation boundaries are normally fixed, colors are largely varied depending on setting of boundary lines. In particular, when multi-color recording is performed, the influence of the boundaries is conspicuous. Therefore, in order to prevent a variation in multi-color recording result, the following requirements must be satisfied:

(a) prevention of a variation in emission spectrum of the light source;
(b) prevention of a variation in chromatic aberration or the like of the lens; and
(c) prevention of a variation of cutoff wavelength of the dichroic prism.

The item (a) has already been described. In the case of a fluorescent lamp, a $^{+}Ar$ spectrum may appear at a low temperature, and must be prevented. Normally, control is made using a heater to cause a tube wall temperature to fall in a predetermined level. The tube wall temperature set to fall within the range of 30°C to 80°C, and preferably, 40°C to 70°C.

The item (b) will be described later.

The item (c) is the problem of variation management of a film. The variation is set to fall within ±15 nm and preferably ±10 nm with respect to the preset cutoff wavelength. If not so, a boundary color between red and black or blue and black is largely varied by a variation in cutoff wavelength of the prism.

In this embodiment, the color separation method is carried out using the two signals VR and VC. Alternatively, other color-separation axes $f_1$ (VR, VC) and $f_2$ (VR, VC) may be used. When the color-separation axes are obtained by an arithmetic operation or the like, if a noise component is superposed on the signals VR and VC, addresses are varied as compared to a case wherein no noise component is superposed, depending on formulas, and independent noise components in different colors tend to be easily generated. Therefore, the color-separation axes must be carefully calculated.

When a specific color is to be extracted or when a color other than red, blue, and black is to be extracted, color-separation maps different from that in this embodiment are prepared, and one of the color-separation maps is selected as needed. A color-separation ROM may be detachably arranged, and the ROM may be replaced with necessary one (in the form of ROM packs in practice).

Figs. 16A and 16B show maps for three colors, and Fig. 16C shows a map for four colors.

A color ghost correction circuit 300 for removing a color ghost from color-separated image data as described will be described below.

A color ghost is generated by various causes. For example,

1. Pixel offset between two CCDs (mounting precision and aging)
2. Noncoincidence between cyan and red image magnifications
3. Difference of cyan and red output levels caused by chromatic aberration of the lens
4. Noise

A generation mechanism of the color ghost will be described below.

Fig. 17 shows an example of generation of the color ghost.

Fig. 17 illustrates a color ghost generated after a black letter "柱" is sensed and is color-separated. As can be seen from Fig. 17, red and blue ghosts appear at the edge portion of a black line, a black ghost appears at the edge portion of a blue line, and a black ghost also appears at the edge portion of a red line, as shown in Figs. 18A to 18C.

The color ghost appears in a different manner for another combination of colors, as can be apparent from the above description.

The cause of the above-mentioned phenomenon will be described with reference to the above-mentioned examples.

1. Pixel offset between two CCDs (Figs. 19 & 20A to 20C)

As shown in Fig. 19, if the CCDs are not strictly aligned, red and blue ghosts appear at the black edges; a black ghost, at a red edge; and a black ghost, at a blue edge during color separation, as shown in Figs. 20A to 20C.

Therefore, in order to prevent this, the two CCDs must be strictly aligned. Normally, the CCDs must be aligned within a variation in one pixel and preferably, a 1/4 pixel. In this embodiment, in order to realize this, the two CCDs are caused to coincide with each other on a jig, and are then fixed by an adhesive.

Fig. 21 and the subsequent figures show an example of the fixing method.

A lens barrel 801 is mounted at a predetermined position on an apparatus board 810 after it is received in a V-shaped receiving portion, which is open upward at a right angle, of a holding member 801a and is fixed by a metal fastener 801c.

A mounting surface 801b capable of receiving a front surface portion 802b of a prism 802 is formed at the rear side surface of the holding member 801a, so that the prism 802 held by a mounting member 802a is urged against the mounting surface 801b and is fixed thereto by screws.

Since the mounting surface 801b can be formed by a simple machining process, precision of a distance to the lens barrel 801 and squareness with respect to an optical axis is very high, and predetermined optical images can be correctly focused on the above-mentioned CCDs 104 and 105 through the prism 802 attached thereto.

As shown in Fig. 22, a change in an offset amount (an inclination amount of the squareness of the dichroic surface with respect to the lens optical axis) between squareness values R1 and R1′ of the flat surface 801b of the lens barrel 801, perpendicular to the optical axis, and the surface 802b opposing the lens of the prism 802 is given by a resolution MTF obtained by signal outputs corresponding to white and black line portions with respect to a white background:

$$MTF = (y - x/y + x) \times 100\%$$

Normally, a value exceeding 30% is decreased by 3/10 (9%) when the inclination amount is 10′ in angle, and is decreased by 1/2 (15%) at 30′ in angle, thus disturbing extraction of a black-and-white judgement signal. Therefore, it is important to maintain surface precision during this interval (in this case, a prism surface may be brought into contact with the end of the lens barrel).

The CCDs 104 and 105 are fixed by an adhesive to the prism 802 through mounting members 804 and 806.

Fig. 23 shows the principal section of the above-mentioned structure. The CCDs 104 and 105 are fixed by an adhesive to a focusing portion through mounting members 804a and 804b (806a and 806b) which are symmetrically adhered to two side portions of the prism 802 as a beam-splitting member.

A material for the mounting member requires a small linear expansion coefficient for the following two reasons. One reason is to prevent a pixel offset due to a change in temperature, and another reason is to prevent crack or the like in a prism caused by an internal stress due to a difference in linear expansion coefficient between the prism and the mounting member adhered thereto.

The problem of the pixel offset between the CCDs caused by a change in temperature can be eliminated by setting equal fixing conditions with the CCD mounting members. However, the linear expansion coefficient must be still small.

Normally, since the linear expansion coefficient of the prism is as small as about $7.4 \times 10^{-6}$ (optical glass BK-7), as a material of the mounting member, glass, ceramic material ($7.0$ to $8.4 \times 10^{-6}$), and a low thermal expansion alloy (e.g., an Inver alloy ($1 \times 3$ to $10^{-6}$) a nigirest cast iron ($4$ to $10 \times 10^{-6}$)) are preferable, and an aluminum material ($25 \times 10^{-6}$) is not preferable.

In this embodiment, the prism and the mounting members, and the mounting members and the CCDs are fixed by the adhesive. After the positional relationship between the CCDs is adjusted for split optical images, the above-mentioned members are fixed by an adhesive, as shown in Fig. 22.

In particular, in Fig. 23, even if iron having a large linear expansion coefficient ($12 \times 10^{-6}$) is used as a mounting member, since the size in a c direction is small, thermal expansion is not so influenced. A d direction corresponds to an alignment direction of line sensors, and the prism and a package of each line sensor are formed of a ceramic material, and have the same linear expansion coefficient. With this structure, no pixel offset was observed.

An example of adhesive includes a two-pack adhesive and a photo-setting adhesive, and, more preferably, an ultraviolet-setting adhesive.

In particular, the photo-setting adhesive can shorten a setting time of an adhesive simply by light intensity, thus improving workability, reducing cost, and providing uniform products. Of the photo-setting adhesive, the ultraviolet-setting adhesive is not almost changed by heat upon radiation of an ultraviolet ray, and can be stably set.

When an ultraviolet ray was radiated by a high-voltage mercury lamp using Three-Bond TB306 (tradename) Denka 1045K (tradename), and Norland 65 (tradename) as a photo-setting adhesive. A good result was obtained in an environmental test and the like (to be described later).

When ultraviolet-setting urethane-based Three-Bond 3026B (tradename) LT350 (tradename), and the like were used, humidity resistance could be effectively improved, and adhesion assuring mechanical strength could be achieved.

With the above method, a total offset of the CCDs can be suppressed within $7/4 = 1.75\mu$ if one pixel is $7 \mu$.

2. Noncoincidence between cyan and red magnifications

When a color document is to be processed, the influence of chromatic aberration or the like of the lens appears. When a light wavelength range is divided into two, i.e., cyan and red, since an image forming position F of the cyan range is different from an image forming position E of the red range, this influence significantly appears at a position where an image position is high. Some lenses produce a difference corresponding one pixel.

3. Difference between cyan and red output levels

When design for improving lens chromatic aberration is not made, MTF values of cyan and red channels may often have a large difference to the chromatic aberration of the lens. In an output of the CCD, this appears as a level difference.

When a black line is sensed, cyan and red output signal levels preferably fall within the following range upon mounting of the CCDs if they are quantized by 6 bits:

$$|Vr - Vc| \leqq 10 \text{ (level)}$$

Preferably,

$$|Vr - Vc| \leqq 6 \text{ (level)}$$

With the above-mentioned countermeasures, the color ghost can be eliminated to an extent. However, in consideration of a variation in lens performance and a variation in CCD mounting precision in mass-production, it is difficult to completely remove the color ghost in practice.

For this reason, color ghost correction is also performed by an electrical means using color-separated color codes.

The color ghost is eliminated using a lower 2-bit pattern of a color code, i.e., by a color pattern method since the color of color ghost is predetermined with respect to an original color:

original black → red and blue ghosts
original red & blue → black ghost

When the color pattern method is employed, colors of a pixel of interest and pixels therearound (pattern) can be checked in order to determine the color of the pixel of interest, thereby identifying a color of an original image.

Fig. 25 shows a pixel of interest and a color pattern therearound, and the color of the pixel of interest determined at that time.

In a first example, since white and black pixels are located at two sides of the pixel of interest, blue of the pixel of interest is determined as a color ghost appearing at the edge of black. In a third example, red is also determined as a color ghost of black. Therefore, in both the first and third examples, the pixels of interest are converted to black pixels.

In contrast to this, in second and fourth examples, it cannot be determined that a color ghost appears, and the color of the pixel of interest is directly output.

Such processing cannot be easily realized by an arithmetic circuit. In this embodiment, the processing content is stored in a ROM, and is used in an LUT (look-up table) form. As a color pattern, linear and two-dimensional patterns can be used. If the number of colors is represented by N and the number of surrounding pixels including the pixel of interest is represented by M, the number of color patterns is:

$N^M$

Therefore, if the two-dimensional pattern is used, the value M is greatly increased, and cannot be put into a practical application. More specifically, in the two-dimensional pattern, the number of surrounding pixels in each dimensional direction (main scan direction/subscan direction) cannot be so increased, but only the number of patterns is undesirably increased.

Fig. 26 shows the relationship between sizes and the number of color patterns.

In this embodiment, a linear color pattern having a size of 1 x 7 pixels (i.e., N = 4, M = 7) is used, and a color ghost is eliminated independently in the main scan and subscan directions. In this case, since there is no difference in color ghost in an image in the main scan and subscan directions, an identical color pattern is used for both the main scan and subscan directions.

As a color pattern size, a 1 x 7 matrix is selected. If the degree of appearance of a color ghost is low, a small-size color pattern (e.g., 1 x 5) can be used.

The 1 x 5 color pattern can eliminate a ghost corresponding to one pixel, and the 1 x 7 color pattern can eliminate a ghost corresponding to up to two pixels.

When the 1 x 7 color pattern is used, lower 2 bits of a color code are input as an address of the ROM. For example, in the following color pattern:

```
white     white     blue      blue      black     black     black
\___________________________/  /         \_________________________/
color of              color of pixel     color of surrounding
surrounding           of interest        pixels
pixels
```

Lower 2-bit patterns of color codes are:

```
white : white : blue : blue : black : black : black
  11  :  11   :  01  :  01  :  00   :  00   :  00
```

An address is:

3D40

At this address, as shown in Fig. 24, a black code 00 is stored. With the above method, the LUT is realized.

In practice, the 1 x 7 pattern requires a 14-bit address bus. It is preferable that a bipolar ROM having 14-bit address inputs and 2-bit color code outputs is available. However, such a large-capacity, high-speed ROM cannot be easily obtained on a market and is expensive.

In this embodiment, the ROM is selected in accordance with the start pixel, and the LUT is realized using the codes of the remaining 6 pixels. More specifically, two ROMs are used. A first ROM is used when the start pixel is a black or blue pixel, and a second ROM is used when the start pixel is a red or white pixel.

First ROM (black & blue ROM)
Start code black (00), blue (01)
Address content:

```
00000000000000 (black,black,black,black,black,black,black)
      .                          .
      .                          .
      .                          .
00111111111111 (black,white,white,white,white,white,white)
01000000000000 (blue,black,black,black,black,black,black)
      .                          .
      .                          .
      .                          .
01111111111111 (blue,white,white,white,white,white,white)
```

Second ROM (red & white ROM)
Start code red (10), white (11)
Address content:

```
10000000000000 (red,black,black,black,black,black,black)
      .                          .
      .                          .
      .                          .
10111111111111 (red,white,white,white,white,white,white)
11000000000000 (white,black,black,black,black,black,black)
      .                          .
      .                          .
      .                          .
11111111111111 (white,white,white,white,white,white,white)
```

In the color patterns shown in Fig. 25, since all the start pixels are white pixels, the second ROM is selected.

If a high-speed ROM (large capacity) is available, all the color patterns can be stored in one ROM. Four ROMs may be used, and are switched depending on colors of the start pixels to access the LUTs.

As a large-capacity, high-speed bipolar ROM, MB7143/7144 (available from FUJITSU, LTD.) is known.

When a low-speed, large-capacity EPROM is used, data is transferred to a plurality of SRAMs before operation, and color ghost correction can be performed using the SRAMs.

Fig. 27 shows the color ghost correction circuit 300. Color ghost processing is performed in the main scan direction (horizontal scan direction) and the subscan direction (vertical scan direction).

In this embodiment, a ghost in the horizontal and vertical directions is removed by utilizing image data of 7 pixels in the horizontal direction x 7 lines in the vertical direction.

The color ghost processing is performed for lower 2 bits of each color code of image data.

For this purpose, a color code read out from the color-separation ROM is supplied to the main scan color ghost correction circuit 300A.

The color code data are sequentially supplied to a shift register 301 having a 7-bit format, and are converted to parallel data. The parallel color code data corresponding to 7 pixels are supplied to a ROM 302 for removing a ghost in a horizontal direction, and ghost removing processing is performed in units of pixels.

An example of use of the ROM 302 is as described above. Upon completion of the ghost processing, data output from the ROM 302 is latched by a latch 303.

Density data output from the color separation ROM is supplied to a latch 306 through a shift register 305 (7-bit format) for adjusting a timing. In this manner, a data transfer condition is determined so that density data is serially transferred after the color code data.

The serial-processed color code data and density data are supplied to a line memory unit 310 arranged in the color ghost correction circuit 300B.

The line memory unit 310 is arranged to remove a color ghost in the vertical direction using 7-line image data.

Note that line memories for a total of 8 lines are used, and are an example of a real-time processing means. Of course, real-time processing can be achieved using line memories for 7 lines.

The 8-line color code data and density data are separated from each other by a gate circuit group 320 connected to the outputs of the line memory unit 310. The gate circuit group 320 comprises gate circuits 321 to 328 respectively corresponding to line memories 311 to 328.

8-line output data from the line memories, which are converted to parallel data by the line memory unit 310, are separated into color code data and density data by the gate circuit group 320. The separated color code data are supplied to a selector 330, and color code data from the seven line memories necessary for the color ghost processing are selected therefrom. In this case, the selected line memories are shifted such that when the line memories 311 to 317 are selected, the line memories 312 to 318 are selected at the next processing timing.

The selected parallel color code data from the seven line memories are supplied to a ROM 335 for removing a ghost in the vertical direction. Thus, a color ghost in the vertical direction is removed.

Thereafter, the data output from the ROM 335 are latched by a latch 336.

The density data separated by the gate circuit group 320 are directly supplied to a latch 337, and are output synchronously with the color code data.

The most significant bit of each color code is subjected to timing adjustment in a line memory 329 in the same manner as the lower 2 bits, and is output. The output data are mixed to generate complete image data.

The image data subjected to the color ghost correction processing is supplied to a 3-line memory 799 for a buffer.

Of the output image data, the density data is supplied to an attribute detector 800 and the resolution correction means 450. In this embodiment, resolution (MTF) correction is performed on the basis of the attribute designation signal P.

For the sake of descriptive convenience, the attribute detector 800 will be described first.

The attribute designation signal P is a signal for discriminating a document content and identifying whether the document content is a line image, i.e., a character image, or a photograph image. The filter coefficient for the resolution (MTF) correction or the threshold value for multi-value processing is updated by utilizing the signal P.

The filter coefficient for the resolution (MTF) correction or the threshold value for the multi-value processing is preferably updated depending on whether a document includes a character image or a photograph image, so that appropriate image processing can be performed.

For this purpose, whether a pixel of interest is a character image or a photograph image is determined using the density data subjected to the color ghost correction.

The determination is performed using data indicating a density level difference between the pixel of interest and adjacent pixels surrounding it.

As shown in Fig. 28, if the densities of pixels (i,j), (i-1,j), and (i,j-1) are represented by X, Y, and Z, a density level difference t is calculated by the following equation:

$$t = |X - Y| - |X - Z|$$

If t > q, a line image is determined, and if t < q, a photograph image is determined. In this case, q is a constant, and an arbitrary value of q = 3 to 10 levels is selected. According to a test, q = 5 is preferable due to the following reason.

More specifically, the density level differences t when an input image is a photograph image, a character image, and a dot image are as shown in Fig. 29.

The differences t are plotted along the abscissa, and frequencies are plotted along the ordinate. The photograph image is represented by a curve L1 in Fig. 29, and the character image is represented by a curve L2. The dot image is represented by a curve between the curves L1 and L2.

Therefore, as can be seen from the frequency distribution, if t is small, a document image mainly consists of a photograph image in which a change in density is small; if t is large, it mainly consists of a character or dot image in which a change in density is large.

The relationship between the photograph image and the entire frequency is as shown in Fig. 30. To summarize these data, q is selected in the range of 3 to 10 levels, thus discriminating the photograph image from other images. In particular, from the frequency distribution of Fig. 30, q = 5 is preferable.

Note that the value of q is a value when image data has a 6-bit format.

If t > q, the line image is determined, and in this case, the attribute designation signal P is set to be P = 0. Therefore, if t < q, the photograph image is determined, and the attribute designation signal is set to be P = 1.

The MTF correction processing is performed after color separation. This will be described below.

In the conventional apparatus, after image data is binarized, color separation is performed. Thus, resolution correction must be executed before binary processing. For this purpose, in an apparatus using a plurality of CCDs and sensing color-separated images of a document, resolution correction must be executed for the respective CCD outputs. More specifically, a plurality of sets of circuits for resolution correction must be prepared.

In addition, since the MTFs of optical lenses are different from each other in a plurality of color separation operations, MTF correction parameters are undesirably different in respective resolution correction circuits.

If the resolution correction processing is performed after color separation and before multi-value processing like in this invention, since the number of data to be processed is one, the circuit scale can be reduced, and a correction parameter determination process can be simplified, thus providing practical merits.

MTF deterioration until an image is recorded/reproduced are caused by problems in the following systems:

1. optical system
2. optical travel system
3. processing circuit
4. recording system

The problem in item 1 is caused by variations in performance of the optical system by the MTF of a lens (in units of waveform ranges, a change with respect to an image height, an allowance of an image forming position, machining precision), precision of a prism surface, mounting precision of a CCD, a warp of a CCD chip, a variation in spectrum of a light source, and the like.

In the optical travel system of item 2, the problem includes a vibration of an optical mirror or the like, and a variation in moving speed.

In the processing circuit of item 3, the problem includes a distortion of a signal waveform caused by a capacitive component in an analog circuit, and in particular, a signal distortion caused through a transmission line.

The problem in the recording system of item 4 includes the following causes:

* beam spot size and beam shape of laser beam
* developing characteristics (amount of toner attached, toner density, toner particle size, toner color, and the like) of toner with respect to photosensitive drum
* transfer characteristics (transfer ratio, transfer characteristics of transfer sheet, and the like)
* fixing characteristics (variation in toner particle size before and after toner is fixed)

Of these factors, the optical system and its travel system directly influence the deterioration of the resolution.

Figs. 31A and 31B show MTF values (before correction) in the main scan and subscan directions when the optical system is driven. The characteristics are measured when black-and-white patterns having spatial frequencies from 2 to 16 dots/mm are scanned.

In this case, the MTF is defined as:

$$MTF = (W - BK)/(W + BK)\ (\%)$$

where W is the white signal, and BK is the black signal.

As can be seen from Figs. 31A and 31B, the MTF deterioration noticeably appears in the subscan direction. In order to obtain the same correction results in both the main scan and subscan directions, the correction amount in the subscan direction can be set to be twice to four times that in the main scan direction.

In order to improve reproducibility of a fine line portion of an image, the MTF value should be 30% or more.

When the resolution correction means is constituted by weighting processing of a pixel of interest and surrounding pixels, in order to obtain the same correction results in both the main scan and subscan directions and to prevent deterioration of the reproducibility of the fine line portion, the resolution correction means can comprise a convolution filter using image data of 3 x 3 pixels.

The elements of the filter are written on the left side and positions (i,j) of the corresponding pixels are written on the right side as follows.

$$\begin{pmatrix} a & b & c \\ d & e & f \\ g & h & i \end{pmatrix}, \quad \begin{pmatrix} (i-1,j-1) & (i-1,j) & (i-1,j+1) \\ (i,j-1) & (i,j) & (i,j+1) \\ (i+1,j-1) & (i+1,j) & (i+1,j+1) \end{pmatrix}$$

For the density Iij of the pixel (i,j), surrounding eight pixels are taken into account. In this case, if a new density value is represented by I(ij)′ for pixels (i-1,j-1) to (i+1,j+1), the density value I(ij)′ is given by:

$$I(ij)' = \sum_{\pm\Delta} I(i+\Delta, j+\Delta) \times C(i+\Delta, j+\Delta)$$

where C(ij) is the filter coefficient, and is given by:

$$C(ij) = a, b, c, \ldots, i$$

A filter coefficient for realizing the above-mentioned correction content will be exemplified below. The filter coefficient can be changed in accordance with the types of document (line image, photograph image).

In a mixed image mode, the degree of MTF correction can be varied in accordance with the value of the attribute designation signal P.

For example,

(1) When P = 1 (photograph), the filter coefficients are selected as follows not to perform correction:

$$\begin{matrix} 0 & 0 & 0 \\ 0 & 1 & 0 \\ 0 & 0 & 0 \end{matrix}$$

When a moiré pattern is present in a photograph image, and in particular, a dot image, this pattern can be prevented from being emphasized.

Therefore, when the following filter coefficients are used, a "gradation" effect can be positively used:

$$1/10 \begin{bmatrix} 1 & 1 & 1 \\ 1 & 2 & 1 \\ 1 & 1 & 1 \end{bmatrix}$$

This processing corresponds to a case wherein data around the pixel of interest are fetched and are subjected to averaging processing.

If the weighting coefficient for the pixel of interest is increased, the averaging effect is reduced.

(2) When P = 0 (character), the following filter coefficients can be set:

$$1/2 \begin{bmatrix} 0 & -2 & 0 \\ -1 & 8 & -1 \\ 0 & -2 & 0 \end{bmatrix} \rightarrow \begin{bmatrix} 0 & -1 & 0 \\ -0.5 & 4 & -0.5 \\ 0 & -1 & 0 \end{bmatrix}$$

In order to increase the correction amount, the appropriate filter coefficients can be selected accordingly.

Figs. 32A and 32B show the correction results by the convolution filter using the correction coefficients given by the above relations.

Fig. 33 is a block diagram of the resolution correction means 450 using the convolution filter described above.

Since a 3 x 3 matrix is used, two line memories 451 and 452 and seven latches 453 to 459 are used. Image data in the first line and second column and that in the second line and second column are added to each other by a first adder 430, and thereafter, the sum data is multiplied with a predetermined coefficient by a multiplier (bit-shift circuit) 431.

Image data in the second line and first column and that in the second line and third column are added to each other by a second adder 433, and the sum data is multiplied with a predetermined coefficient by a multiplier 434. The products output from the multipliers 434 and 431 are added to each other by an adder 435.

A multiplier 432 comprising a 3-bit shift circuit receives image data in the second line and second column, and executes multiplication processing. Thereafter, the product from the multiplier 432 and the sum output from the adder 435 are subjected to subtraction processing by a subtractor 436. The output from the subtractor 436 are divided by 2 by a divider 437 to be normalized.

The resolution correction means 450 can be modified as follows.

A ROM may be used in place of multiplication or addition/subtraction processing.

The resolution correction is executed after color ghost processing. However, the processing position of the resolution correction may be changed as long as it is executed after color separation and before multi-value processing.

As the line memories, those used for color ghost correction may be commonly used.

Simultaneously with the resolution correction, power of a laser beam for recording an image may be controlled. With this control, reproducibility of a fine line portion can be improved.

Of the resolution-corrected image data, color code data is supplied to an area extraction circuit 500.

In area extraction processing, an arbitrary area designated by a color marker is extracted so that various image processing operations can be performed for an image (black image) inside or outside the designated area.

In a conventional apparatus, position designation is performed by a digitizer or the like, and thereafter, an original image is placed to start scan processing. In addition, every time position designation is performed, a position data input switch is operated. The position designation is limited to a rectangular area, e.g., a square or rectangle, and an arbitrary area cannot be designated.

In the marker area extraction processing to be described below, an arbitrary area written by a marker is detected, image processing is performed for an image inside/outside the area designated by the marker, and thereafter, the processed image can be copied.

As an application of marker area detection processing, partial color conversion processing will be described below.

In this conversion processing, an arbitrary area written by a marker can be copied in marker color or another designated color.

For example, an area a is designated by a blue marker, the area a is automatically detected, and an image included in the area a is copied in blue as the marker color. An image outside the area a is normally copied. The color marker may be a red marker. A document as an object of partial color conversion is a color document.

In order to copy an image in the area a specified by a designated color as described above, as shown in Fig. 35, marker signals BP and RP (color code data in practice) indicating the color marker area and area signals QB′ and QR′ indicating the area a must be detected.

Basically, these area detection operations can be realized as follows. As shown in Figs. 36 to 39, a signal portion between the leading and trailing edges of a marker signal P common to an area signal Q of the immediately preceding line is obtained, and the signal Q and the marker signal P are ORed to calculate an area of the present line.

Figs. 37 and 39 exemplify cases wherein the present line is as shown in Fig. 36 and wherein the present line is as shown in Fig. 38.

Fig. 40 shows an embodiment of the area extraction circuit 500. In Fig. 40, bit data of color code data obtained by scanning a color marker are supplied to a color marker detector 501, thus detecting the presence/absence of a specific color marker. In this embodiment, red and blue markers are employed. Therefore, two marker signals BP and RP are detected.

The marker signals RP and BP are respectively supplied to pre-processors 502 and 503, and are pre-processed to be converted to marker signals accurately representing the designated area.

The pre-processing is a kind of signal waveshaping processing. In this embodiment, the pre-processors 502 and 503 respectively comprise blur correction circuits 504 and 507, noise correction circuits 505 and 508 (in the main scan direction), and marker disconnection correction circuits 506 and 509. In the blur correction of the color marker, blur within 16 dots/mm can be corrected, and in the noise correction, omission of data within 8 dots/mm can be corrected.

The waveshaped marker signals RP and BP are supplied to an area extraction unit 520 together with the color code data, and gate signals for extracting density data, which are formed based on the area signal indicating an image inside the designated area a are output in units of scan lines.

The detailed arrangement will be described below.

Fig. 41 shows the color marker detector 501 in detail. When a color marker is scanned, the color of the marker itself can be detected.

Blue color code data is "01", and red color code data is "10".

As shown in Fig. 41, the least significant bit (LSB) data and middle bit data are phase-inverted by an inverter 511, and the inverted data are supplied to an AND gate 513.

Similarly, data obtained by phase-inverting the LSB data by an inverter 512 and the middle bit data are supplied to an AND gate 514.

An AND output of a vertical valid signal V-VALID and a size signal B4 obtained from an AND gate 515 and the most significant bit (MSB) of the color code are supplied to an AND gate 518, thus judging the color marker.

The judgement data is supplied to the AND gates 513 and 514 as a gate signal.

As a result, if the color marker is a blue marker, a blue marker signal BP having a pulse width corresponding to the width of the edge of the marker is output from a terminal 516.

Similarly, if the color marker is a red marker, a red marker signal RP is output from the other terminal 517. Fig. 35 shows the marker signal.

Fig. 42 shows the area extraction unit 520.

The area extraction unit 520 comprises first and second area extraction sections 520A and 520B. The section 520A comprises a data storage circuit 521A and an area calculation circuit 522A, and the section 520B comprises a data storage circuit 521B and an area calculation circuit 522B.

Both the first and second area extraction sections 520A and 520B have a red marker area extraction function as well as a blue marker area extraction function. For the sake of descriptive convenience, the blue marker area extraction function will be described below.

When a blue area signal is formed, an area signal of the present scan line is calculated and formed based on an area signal obtained in an immediately preceding scan and a marker signal obtained by scanning the present scan line.

For this purpose, arithmetic processing must be executed by utilizing at least three line periods. The first data storage circuit 521A must have a function of storing an area signal as final data of the immediately preceding scan line, a function of storing first and second area signals (NAND output in practice) formed based on this area signal and the marker signal BP obtained by scanning the present scan line, and a function of storing an area signal of the present scan line obtained by calculating these area signals.

In this embodiment, since the second area signal is formed by reading out data from a memory in a reverse direction, a total number of memories required for realizing these memory functions is 16. Furthermore, since the red marker must be detected, a total of 32 line memories are necessary.

For this reason, the first data storage circuit 521A has a pair of memories 525 and 526 each comprising eight line memories. In order to switch these memories in units of lines, a pair of Schmitt trigger circuits 523 and 524, a pair of data selectors 527 and 528, and a latch 529 are arranged.

The first data storage circuit 521A receives the blue marker signal BP, and three signals obtained by a first area calculator 530B for the blue marker.

In the first area calculator 530B, a blue marker area signal QB′ on the present scan line n is formed based on the immediately preceding area signal QB and the marker signal BP on the present scan line.

For the sake of descriptive convenience, when the scan line n shown in Fig. 35 is considered, the relationship between the area signal QB (the area signal of a scan line (n-1)) and the marker signal BP is as shown in Figs. 43B and 43C. These signals are stored in the memory 525 in units of lines. In the next scan line (n+1), these signals are read out through the data selector 527 and the latch 529 (Figs. 43D and 43E).

The pair of signals QB and BP are supplied to a NAND gate 531, and its NAND output PB1 (Fig. 43F) is supplied to a preset terminal PR of a D flip-flop 532, and the immediately preceding area signal QB is supplied to a clear terminal CL of the D flip-flop 532. As a result, a first NAND output (first edge signal) BN0 shown in Fig. 43G is obtained.

The first NAND output BN0 and the marker signal BP are sequentially stored in the memory 526. For this purpose, in the scan line (n+1), the Schmitt trigger circuit 524 is controlled to be in an active state.

The similar processing is executed at the same timing in the second area extraction section 520B. The memories of the section 520B are address-controlled so that a write access is performed in a forward direction and a read access is performed in a reverse direction.

Therefore, the output timing of the marker signal BP and the immediately preceding area signal QB is defined by W1 in the line n, while it is defined by W2 in the line (n+1) and the data is read out slightly earlier (Figs. 43H and 43I). As a result, a second NAND output BN1 is as shown in Fig. 43K. The marker signal BP and the second NAND output BN1 are stored in the data storage circuit 521B.

In the next scan line (n+2), the first NAND output BN1, the marker signal BP, and the second NAND output BN1 are read out (Figs. 43L to 43N).

Note that since write access is performed in the forward direction and read access is performed in the reverse direction in the memories of the second area extraction section 520, the readout timings of the first and second NAND outputs BN1 and BN2 coincide with each other.

These outputs are supplied to an AND gate 533, and an AND output AB and the marker signal BP (Figs. 43N and 430) are supplied to an OR gate 534, thus obtaining an OR output QB′ shown in Fig. 43P.

The OR output QB′ is nothing but a signal indicating an image inside the edge of a blue marker written on the present scan line n. More specifically, the OR output serves as the area signal QB′ of the present scan line.

Since the area signal QB′ is used as the immediately preceding area signal QB on the next scan line, it is fed back to the data storage circuits 521A and 521B.

In this manner, by utilizing the pair of NAND outputs BN0 and BN1 obtained by reversing a readout direction of the memories, the marker area can be accurately detected.

Since the red marker is detected in the same manner as described above, a description of an area calculation circuit 530R will be omitted.

Reference numeral 535 denotes a NAND gate; 536, a D flip-flop; 537, an AND gate; and 538, an OR gate. In addition, reference symbol QR′ denotes an area signal of a red marker.

The pair of Schmitt trigger circuits 523 and 524, the pair of memories 525 and 526, and the pair of data selectors 527 and 528 are arranged since the blue and red markers may be present at the same time.

Thus, these circuits are alternately switched and used in units of lines in response to a switching signal having a 2-line period and supplied to terminals A and B.

The area signals QB′ and QR′ obtained at the output terminals are supplied to an area judgement circuit 540 shown in Fig. 44.

The area judgement circuit 540 controls supply of the area signals QB′ and QR′ depending on an externally designated processing content of the image area, i.e., processing for the entire image, processing for a partial image, or processing for an image inside or outside a color marker.

The area judgement circuit 540 has four flip-flops 541 to 544. The area signals QB′ and QR′ latched at the flip-flops 541 and 542 at the input side are supplied to corresponding NAND gates 545 to 548. The area signals QB′ and QR′ latched at the flip-flops 543 and 544 are supplied to the corresponding NAND gates 545 to 548.

The signal relationship on the scan line n shown in Fig. 45A is as shown in Figs. 46 and 47.

Figs. 46H and 46L show FF outputs Q1 and Q2 in response to the area signals BP and RP (Figs. 46A to 46D).

In response to signals shown in Figs. 47A and 47B, the first NAND gate 545 outputs a first NAND output M1 shown in Fig. 47C. Similarly, based on signals shown in Figs. 47D and 47E, the second NAND gate 546 outputs a second NAND output M2 shown in Fig. 47F. As a result, a first AND gate 551 outputs a gate signal S1 associated with a period III (see Fig. 45A and 45B) shown in Fig. 47G.

Similarly, a third NAND output M3 shown in Fig. 47J is obtained based on input signals shown in Figs. 47H and 47I, and a fourth NAND output M4 shown in Fig. 47M is obtained based on input signals shown in Figs. 47K and 47L.

As a result, a second AND gate 552 outputs a gate signal S1 (Fig. 47N) associated with periods II and IV.

The gate signals S1 and S2 are ANDed by a third AND gate 553, thus outputting a third gate signal S3.

Therefore, when the blue marker is used, the gate signal S1 is selected, and with this signal, the blue marker area signal is formed.

Similarly, when the red marker is used, the gate signal S2 is selected. When both the red and blue markers are used, both the gate signals S1 and S2 are selected.

Therefore, as shown in Fig. 48, if red and blue areas overlap each other, an area signal of "1" can be extracted for each scan, so that an image can be recorded in a corresponding color.

The gate signal S3 is used as an area signal S.

Whether an image inside or outside the area designated by the area signal S is used is selected by a marker inside/outside designation signal supplied to a terminal 559 shown in Fig. 44.

For this reason, the area signal S is supplied to an EX-OR gate 556 constituting a gate means 555, thereby obtaining an output in accordance with the marker inside/output designation signal (Figs. 47O to 47Q).

The area signal S is also controlled by the entire/partial image designation signal. For this reason, a gate circuit constituted by a pair of NAND gates 557 and 558 is arranged, and its gate state is controlled by the designation signal supplied to a terminal 561.

Another example of area extraction processing will be described below.

In this processing, a processing content can be predetermined in units of color markers and reserved processing can be performed for a detected area.

The background color of a document is white but is not limited to this.

As color markers, fluorescent markers having particularly colors in a red system (e.g., orange, pink), and colors in a blue system are preferable.

When a document cannot be directly written with a color marker, it can be marked with it through a transparent sheet.

Note that if a required area is painted, as shown in Fig. 49, a designated area can be detected.

The resolution-corrected density data and the area signal S are supplied to the signal processing means 420, and processing (extraction/erasure/paining/color erasure processing) according to an externally designated processing designation signal is selected.

Signal processing will be explained below.

1) Non-processing

When a recording color is "red", only red is specified by a color code, and "red" pixels are determined as an area to output image data.

This also applies to blue/black.

2) Color erasure

When "blue" erasure is performed, if a developing order is red → blue → black, a blue image is not output when the recording color is blue.

3) Intra-marker designation

The presence/absence of a marker is determined based on the MSB of a color code.

When the developing order is red → blue → black, the marker is detected during red recording, and image data is output in correspondence with a red color code inside the detected marker.

When an image outside the marker is designated, the same processing as described above is executed outside the marker.

Fig. 50 shows an embodiment of the signal processing means 420.

The signal processing means 420 receives image data through the resolution correction means 450, and the area signal S generated by the area extraction circuit 500 at corresponding input terminals 651 and 652, respectively.

When a document is a color document, image data of colors to be subjected to processing such as extraction, erasure, and the like are externally designated.

For this reason, a color code coincidence circuit 655 is arranged and receives a color code (lower 2 bits) and color erasure designation data. When the color erasure designation data coincides with the color code, input image data is blocked at a gate circuit 656. The image data at that time becomes "1".

A NAND gate 653 is arranged to cause the gate circuit 656 to block the image data even when the image data coincides with the color code but falls outside the area signal S.

Fig. 51 shows final processing to be executed when color erasure is designated.

If the color erasure designation code is "000", no color erasure processing is executed, and image data on a document is recorded as a black-and-white image. Similarly, when the color erasure designation code is "001", only a blue image is erased, and recording processing of other input images is executed.

In order to execute the above processing, the coincidence circuit 655 generates an output u shown in Fig. 52. Fig. 52 exemplifies the relationship with the output u for some color erasure modes.

Image data gated by the gate circuit 656 is supplied to a selector 657 and is converted to image data corresponding to a processing designation signal.

For this purpose, a control signal generator 660 is arranged in association with the selector 657.

The control signal generator 660 comprises three NAND gates 661 to 663 and a NAND gate 664 which receives the outputs from the NAND gates 661 to 663, as shown in Fig. 50. The input-side NAND gates 661 to 663 receive the corresponding processing designation signals and the common area signal S.

An output from the NAND gate 661 for designating painting, i.e., entire black processing, is supplied to an input terminal of the selector 657 together with the image data, and the selector 657 is controlled by a control signal as an output from the NAND gate 664.

In Fig. 50, when the control signal is at "H" level, a terminal b is selected.

When "extraction" processing is designated as the processing designation signal, a terminal a of the selector 657 is selected while this designation signal is input, and input image data is output.

Similarly, in "erasure" processing, outputting of image data is interrupted while this processing is designated. When "entire painting" processing is designated, a signal "1" (predetermined DC voltage) is output as image data in place of the input image data.

Image data subjected to conversion processing such as extraction, erasure, and the like is then subjected to partial color conversion processing.

In the partial color conversion processing, for example, blue and black images can be recorded as blue images.

For this purpose, a partial color conversion circuit 670 receives color code data as color data of presently scanned image data, the BBR signal indicating a color which is presently copied by the developing unit, and a color conversion designation signal for designating a color to be converted and a color to be recorded.

Therefore, the partial color conversion circuit 670 comprises a ROM, and a data output timing and the content of color conversion output are selected based on the color code data, the BBR signal, and the color conversion designation signal.

When a color conversion output r is obtained, image data is selected by a selector 671; otherwise, image data "1" is selected.

Fig. 53 shows the relationship between logic data when black and blue images are recorded as blue images.

The image data subjected to partial color conversion processing is supplied to the variable magnification means (enlargement/reduction means) 1, and variable magnification processing according to a designation magnification is executed.

In this case, a magnification can be selected between 50% and 200% at 1.0% intervals.

In this invention, principally, enlargement processing is executed by increasing image data, and reduction processing is executed by interpolation processing by sampling image data.

Enlargement/reduction processing in the main scan direction shown in Fig. 54 is executed by electrical signal processing, and enlargement/reduction processing in the subscan direction (rotational direction of the image forming body) is performed by changing a moving speed of a photoelectric conversion element provided to an image reader in the subscan direction while the exposure time of the photoelectric conversion element is kept unchanged.

When the moving speed in the subscan direction is decreased, an original image is enlarged, and when it is increased, the image is reduced.

This processing is equivalent to control of an increase/decrease in the number of scanning lines.

Figs. 55A to 55C show embodiments of the enlargement/reduction circuit 1. In Fig. 55C, the timing signal generator 10 generates a timing signal for controlling a processing timing of the entire enlargement/reduction circuit 1, and receives a sync clock CLK1, a horizontal valid area signal H-VALID, a vertical effective area signal V-VALID, and a horizontal sync signal H-SYNC as in the CCDs 104 and 105.

The timing signal generator 10 outputs a sync clock CLK2 for a period of the horizontal valid area signal H-VALID. The frequency of the clock CLK2 is the same as that of the sync clock CLK1.

The timing signal generator 10 outputs memory control signals INSEL and OUTSEL for memories arranged in an input buffer 400 and an output buffer 350.

Image data D having 64 gradation levels are input to the input buffer 400.

The input buffer 400 is arranged for the following reasons.

First, in enlargement processing, since the number of image data to be used is larger than that before processing, a processing speed after the data is increased can be increased without increasing the frequency of a fundamental clock.

Second, an enlarged image in the enlargement processing is recorded with reference to the center.

In order to satisfy the first condition, in the enlargement processing, the frequency of a read clock RDCLK supplied to the input buffer is lower than that in a normal mode. In order to satisfy the second condition, a read start address is set in accordance with a magnification. This will be described in detail later.

The image data D output in accordance with a designated enlargement/reduction magnification is supplied to two cascade-connected latches 11 and 12. Of 6-bit image data, i.e., image data D which is output to have a halftone level, image data D1 and D0 corresponding to two adjacent pixels are latched at the timing of a latch clock DLCK. The latch clock DLCK has the same frequency as that of the sync clock CLK1.

The image data latched by the latches 11 and 12 are used as address data for an interpolation data memory (using a ROM, to be referred to as an interpolation ROM hereinafter) 13.

The ROM 13 is an interpolation data table for storing image data (this image data will be referred to as interpolation data SS hereinafter) having a new halftone level, which is referred to based on two adjacent image data.

The address data for the interpolation ROM 13 includes the above-mentioned latch data D0 and D1 and interpolation selection data SD.

Reference numeral 700 denotes an interpolation data selection means for storing the interpolation selection data SD. As will be described in detail later, the interpolation selection data SD is used as address data for determining which data of a data table from a data table group is used as interpolation data. This data table is selected by the pair of latch data D0 and D1.

The interpolation data SD is determined by a selected enlargement/reduction magnification, as will be described later.

Fig. 56 shows interpolation data SS selected by the latch data D0 and D1 and the interpolation selection data SD. In this embodiment, data obtained by linearly interpolating data D1 and D0 is used as interpolation data.

In Fig. 56, reference symbol SS denotes the interplation data (6 bits) output in 64 gradation levels. Since the image data D0 and D1 used as the latch data have 64 gradation levels, the interpolation data SS includes 64 x 64 = 4,096 data blocks.

Fig. 56 shows theoretical values (five decimal places) by linear interpolation in respective steps and values for positive and negative inclinations of interpolation data SS actually stored in a memory.

The interpolation data SS output from the interplation ROM 13 is latched by a latch 14, and is then supplied to an output buffer 350.

The output buffer 350 is arranged to process invalid data generated when image data is decreased in image reduction processing. In addition, the output buffer 350 is arranged to record a reduced image with reference to the center of a recording sheet in the image reduction processing.

Fig. 57 shows an embodiment of the input buffer 400.

The input buffer 400 comprises a pair of line memories 401 and 402, each of which receives image data D for one line. The pair of line memories 401 and 402 are arranged to alternately supply image data for one line, so that image data can be written or read out in real time.

Each of line memories 401 and 402 has a capacity of 4,096 x 8 bits. This capacity is determined when a resolution is 16 dots/mm, and when a maximum document size is a B4 size (width = 256 mm).

When data is written in the line memories 401 and 402, the write clock CLK2 is used, and when data is read out from the memories, the read clock RDCLK is used. Therefore, these clocks are supplied to address counters 405 and 406 through first and second switches 403 and 404 for selecting the clock, respectively.

The read clock RDCLK is set at a frequency different from that in a normal mode when the enlargement magnification is designated. The frequency varied depending on a designated magnification.

The first and second switches 403 and 404 are complementarily controlled so that when one line memory is in a write mode, the other line memory is set in a read mode. For this purpose, the control signal INSEL generated by the timing signal generator 10 is used as a switch control signal.

In this case, a signal obtained by inverting the signal INSEL by an inverter 409 is supplied to one line memory. The control signal INSEL is a rectangular wave signal having two horizontal periods as one period (Figs. 73A to 73G).

In order to record an enlarged image with reference to the center of a recording sheet in an image enlargement mode, a write start timing is controlled in accordance with an enlargement magnification in the enlargement processing. For this purpose, the clock CLK2 is supplied to the first and second switches 403 and 404 through a clock output controller 410 comprising a gate circuit, and the like.

The controller 410 receives preset data $P_0$ for controlling the write start timing.

The controller 410 counts the clock CLK2 and when the count value coincides with the preset data $P_0$, starts outputting of the clock CLK2. Thus, a data write volume to the input buffer 400 is restricted, as will be described in detail later.

One of the outputs from the line memories 401 and 402 is selected by a third switch 407, and the selected output is supplied to a latch 11. As a switching signal for the switch 407, the above-mentioned control signal INSEL is used.

Fig. 58 shows an arrangement of the output buffer 350. The output buffer 350 has substantially the same arrangement as that of the input buffer 400, except that since enlarged or reduced image data is stored therein, each of line memories 351 and 352 has a capacity of 4,096 x 8 bits.

Reference numerals 353, 354, and 357 denote first to third switches; 355 and 356, address counters; and 359, an inverter.

As a control signal for switch selection, the signal OUTSEL (Fig. 73C) generated by the timing signal generator 10 is used.

The frequency of a clock LCK2 is changed only when a reduction magnification is designated. A clock PCLK is a sync clock for the output unit 70.

The address counters 355 and 356 receive address designation data for setting their initial addresses. As shown in Fig. 58, write start address data and read start address data are supplied to the counters 355 and 356 through fourth and fifth switches 361 and 362, respectively.

In this case, the write start address data and the read start address data are controlled by the switch control signal OUTSEL to be alternately supplied for each line. The read start address is always selected to be address "0", and the write start address is automatically changed in accordance with a magnification so that a reduced image can be recorded with reference to the center. This will be described in detail later.

The write start address data and the read start address data are supplied from a system controller (not shown).

The processing operations in the input and output buffers 400 and 350 will be described below with reference to Figs. 59 to 75J.

Figs. 59A to 59E show a processing operation in an equal magnification mode. The frequency of the read clock RDCLK supplied to the input buffer 400 in response to the sync clock CLK1 as shown in Fig. 59A is the same as that of the sync clock CLK1 (Fig. 59B).

The image data D shown in Fig. 59C is therefore read out from the input buffer, and is supplied as address data for the interpolation ROM 13.

As a result, the interpolation data SS shown in Fig. 59D is obtained. The interpolation data SS is finally supplied to the output buffer 350 and temporarily stored therein.

Figs. 60A to 60E show a processing operation when a magnification is selected to be 200%.

When a magnification equal to or larger than 100% is set, the frequency of only the read clock RDCLK supplied to the input buffer 400 is changed in accordance with the selected magnification.

When the magnification is selected to be 200%, the frequency of the read clock RDCLK supplied to the input buffer 400 in response to the sync clock CLK1 shown in Fig. 60A is reduced to 1/2 (Fig. 60B).

Thus, the image data D shown in Fig. 60C is read out from the input buffer 400, and is supplied as address data for the interpolation ROM 13.

As a result, one interpolation data SS is obtained for each cycle of the sync clock CLK1, as shown in Fig. 60D. The interpolation data SS is supplied to the output buffer 350 and temporarily stored therein.

In this case, the frequency of the write clock LCK2 supplied to the output buffer 350 is the same as that of the sync clock CLK1 (Fig. 60E).

In this manner, when a magnification equal to or larger than 100% is selected, the frequency of the read clock RDCLK is decreased to perform enlargement processing. Thus, the processing operation can be executed while the clocks other than the clock RDCLK supplied to the input buffer are left unchanged to be fundamental clocks. The enlargement/reduction circuit 1 need not use a circuit element having a high operation speed.

Since the clock frequency of even the input buffer 400 is lower than that in the equal magnification mode, all the circuit elements need not have a high operation speed.

In the reduction mode, for example, when an image is reduced to 50%, as shown in Figs. 61A to 61E, the read clock RDCLK supplied to the input buffer 400 is the same as the sync clock CLK1 but the frequency of the write clock LCK2 supplied to the output buffer 350 is reduced to 1/2.

Since the interpolation data SS is written once in every other cycles, excessive image data is sampled, and is stored in the output buffer 350.

The enlargement/reduction processing operation will be described in detail later.

The interpolation data selection means 700 shown in Fig. 55 comprises a data selection signal write circuit 710, and a data selection memory 720.

The data selection signal write circuit 710 stores in units of blocks the interpolation selection data SD determined in accordance with a magnification, and a processing timing signal for performing control so that the interpolation selection data SD is output at a timing according to the magnification.

Since the interpolation selection data SD has a large volume, the write circuit 710 comprises a large-capacity ROM. In this case, a special-purpose ROM can be used, but a control program ROM comprised of the system controller may be used.

The data selection memory 720 is used for storing the interpolation selection data SD and the processing timing signal TD, according to a designated magnification, of those stored in the interpolation selection data write circuit 710.

Therefore, as the interpolation selection data in actual image processing, the interpolation selection data written in the data selection memory 720.

As the data selection memory 720, a static RAM or the like capable of performing high-speed read/write access is used.

Magnification designation data and a magnification set pulse DS are supplied to the write circuit 710.

When the interplation selection data SD and the processing timing signal TD are written in the data selection memory 720, a clock SETCLK of the write circuit 710 is used.

For this purpose, a clock selector 730 is connected to the input of the data selection memory 720, and selects the sync clock CLK2 and the write clock SETCLK from the write circuit 710.

The selected clock is counted by a counter 740, and the count output is supplied to 12-bit address terminals A0 to A11 of the data selection memory 720 as address data.

The counter 740 is arranged to generate a carry pulse when it counts 4,096 clocks (data corresponding to 4,096 pixels).

The carry pulse is used as a transfer end signal (write end signal) CS (Fig. 63B).

Fig. 62 shows an embodiment of the write circuit 710.

In Fig. 62, reference numeral 711 denotes a data ROM, which stores the interpolation selection data SD and the processing timing signal TD shown in Figs. 64 and 65.

Prior to image reading, the interpolation selection data SD and the like stored in the write circuit 710, i.e., the data ROM 711, is transferred to the data selection memory 720 on the basis of a data set pulse (magnification set pulse) DS (Fig. 63A) after a magnification is externally designated.

The data set pulse DS is supplied to a controller 712 shown in Fig. 62, thereby generating a write enable control signal ES shown in Fig. 63C.

The control signal ES is supplied to a counter 713, thus controlling a count state of the clock SETCLK supplied thereto from an oscillator 714. (Figs. 63D and 63E).

While the control signal ES is "0", the interplation selection data SD and the processing timing signal TD corresponding to the addresses A0 to A6 by the counter 713 and the addresses A7 to A13 by a designated magnification are repeated in units of blocks (indicated by an alternate long and short dashed line in Figs. 64 and 65), thus writing 4,096 data corresponding to one line in the data selection memory.

When a magnification is 160%, as shown in Figs. 63F and 63H, 160 clocks (data corresponding to 160 pixels) are repeated, and when a magnification is 80%, 100 clocks (data corresponding to 100 pixels) are repeated.

Since the data ROM 711 has a long access time, data is read out in response to a clock having a frequency than that used at a normal readout speed. The write timing is synchronous with the data transfer clock SETCLK.

Note that a buffer circuit 715 is arranged so that a signal from the data ROM 711 does not adversely affect the data selection memory 720 and a sync circuit 750 (to be described later) in an image reading state. The buffer circuit 715 is enabled only while the control signal ES is at "0" level.

The control signal ES is used as a write enable signal for the data selection memory 720 (Fig. 55).

After data (4,096 data) is written in the data selection memory 720, the counter 740 outputs the transfer end signal CS, thus ending a data write period (see Fig. 63).

Thereafter, a normal image processing mode is set, and the interpolation selection data SD and the processing timing signal SD are read out from the data selection memory 720 and are supplied to the sync circuit 750, the input of which is connected thereto.

The counter 713 is cleared in response to a clear signal CLR (Fig. 63F). In this case, the clear timing is varied depending on a magnification.

When a reduction magnification is selected, the clear timing is as shown in Figs. 63G and 63H. Figs. 63G and 63H show the relationship between the address data of the counter 713 when the magnification is 80%, and the clear signal CLR supplied thereto.

The processing timing signal TD is set to be "1" when the interpolation data SS is present, and is set to be "0" when no data SS is present and data is to be sampled.

Fig. 66 shows an embodiment of the sync circuit 750 shown in Fig. 58.

As shown in Fig. 66, the sync circuit 750 comprises a plurality of latches 751 to 755 and a plurality of AND gates 761 to 764. The interplation data SD is sequentially latches by the latches 751, 752, and 755.

Data of bit 1 of the processing timing signal TD is sequentially latched by the latches 751 to 754. Contrary to this, data of bit 0 is latched by the latches 751 and 752.

The latches 751 to 754 receive the sync clock CLK2 as a latch clock, and the remaining latch 755 and the AND gates 761 to 764 receive phase-inverted sync clock CLK2 as a latch clock.

The plurality of AND gates 761 to 764 receives the latched processing timing signal TD. An output from the AND gate 761 is supplied to the input buffer 400 as the read clock RDCLK, and an output from the AND gate 762 is supplied to the latches 11 and 12 as the latch clock DLCK.

Similarly, an output from the AND gate 764 is supplied to the output buffer 350 as the write clock LCK2, and an output from the AND gate 763 is supplied to the latch 14 as the latch clock LCK1.

When the processing timing signal TD is at "1" level, the AND gates 761 to 764 are open, and when it is "0", are closed.

When the sync circuit 750 is arranged as described above, the read and write clocks having a frequency according to a designated magnification can be generated. This embodiment will be described below.

Figs. 67A to 67O are timing charts when a 160% magnification is selected.

Of data output from the data selection memory 720, 4 bits from the LSB correspond to the interpolation selection data SD, and of the remaining 4 bits, bit 0 is used as data for the read clock RDCLK for the input buffer 400 and the latch clock DLCK for the latches 11 and 12.

Bit 1 is used as the write clock LCK2 for the output buffer 350 and the latch clock LCK1 for the latch 14. Bit 2 is used as a repetition signal for the data ROM 711 and the clear signal CLR for the counter 714. Bit 3 is a nonused bit in this embodiment.

When the magnification is 160%, the interpolation selection data SD shown in Fig. 67B is output from the data selection memory 720, and data shown in Figs. 67D and 67E are output as bits 0 and 1 of the processing timing signal TD.

Both Figs. 67B and 67C show the interpolation selection data SD. Fig. 67B shows a timing before the data is latched by the latch 751, and Fig. 67C indicates a timing after the data is latched.

Therefore, the following latch 752 outputs data delayed by one cycle, as shown in Figs. 67F to 67H.

Since the interplation selection data SD is then latched by the latch 755, it is further delayed by one cycle, as shown in Fig. 67I. The interpolation selection data SD shown in Fig. 67I is supplied to the interpolation ROM 13 as address data.

Since the AND gates 761 and 762 receive the processing timing signals TD including bits 0 shown in Figs. 67D and 67G, these signals can be ANDed with the sync clock CLK2 in an opposite phase, thereby obtaining the read clock RDCLK and the latch clock DLCK shown in Figs. 67J and 67K.

Since the latches 753 and 754 latch the processing timing signals of bits 1 (Figs. 67L and 67M), the AND gates 763 and 764 output the clocks LCK1 and LCK2 shown in Figs. 67N and 67O. These clocks LCK1 and LCK2 have opposite phases, but their frequencies are the same as that of the sync clock CLK1.

When the enlargement magnification is selected, the frequency of only the read clock RDCLK supplied to the input buffer 400 is changed.

Figs. 68A to 68O are timing charts when data is reduced to 80%.

In this case, the interpolation data SD shown in Fig. 68B is output from the data selection memory 720, and data shown in Figs. 68D and 68E are output as bits 0 and 1 of the processing timing signal TD.

The read clock RDCLK supplied to the input buffer 400 and the latch clock DLCK supplied to the latches 11 and 12 are as shown in Figs. 68J and 68K. More specifically, these frequencies are left unchanged.

In contrast to this, since the latches 753 and 754 output the latch clocks shown in Figs. 68L and 68M, the latch clock LCK1 shown in Fig. 68N is obtained from the AND gate 763. The write clock LCK2 shown in Fig. 68O is obtained from the other AND gate 764.

In this manner, in the image reduction mode, only the frequency of the write clock to the output buffer 350 is changed in accordance with a selected magnification.

In order to record an enlarged or reduced image data with reference to a center line $\ell$ of a recording sheet, as described at the beginning, the write start timing of the input buffer 400 or the read start timing of the output buffer 350 can be controlled. The reason will be explained below.

As described above, assuming that the maximum image reading size of the CCDs 104 and 105 is a B4 size and its resolution is 16 dots/mm, a memory capacity per line is 4,096 bits.

Therefore, each of the line memories 401 and 402 need only have a capacity of 4,096 bits.

In the equal magnification mode, line data corresponding to the capacity of 4,096 bits is directly supplied to the output buffer 350, and is then supplied to the output unit 70.

In contrast to this, in the image enlargement mode, the image data volume of the input buffer 40 is increased in accordance with a magnification, and the increased image data is supplied to the output buffer 350. If the capacity of the memory is left unchanged, the input image data overflows, and necessary image data cannot be stored in the output buffer 350 without omission. In addition, an image cannot be recorded with reference to the center.

When an original image is enlarged to 200%, an image data volume becomes twice that of original image data by interpolation processing. For this reason, data to be written in the input buffer 400 is restricted to 1/2 in advance.

The 2,048th bit of the image data corresponds to a portion 1/2 the capacity (4,096 bits) of an effective horizontal line (effective length) of the B4 size, and corresponds to the center $\ell$ of an image to be recorded.

A total of 2,048 bits from the 1,024th bit to the 3,072nd bit of the input image data can be sequentially written in the input buffer 400 from address "0", as shown Fig. 70A. In this manner, even if the written data volume is doubled by the interpolation processing, all the image data can be written in the output buffer 350 (Fig. 70B).

In this case, since the interpolated image data is data enlarged having the center $\ell$ of the image as the center, as shown in Fig. 70B, a required image can be prevented from being partially omitted.

In the enlargement mode, when the write start address of the input buffer can be controlled in accordance with a selected magnification, an image can be recorded on a recording sheet to have its center coinciding with that of the recording sheet, as shown in Fig. 70B.

Therefore, the preset data $P_0$ in the enlargement mode is set as follows:

$$\text{Preset data } P_0 = (4{,}096 \times \text{enlargement magnification} - 4{,}096)/2$$

Note that Fig. 71C shows a recording operation in the equal magnification mode.

In the reduction processing mode, as shown in Fig. 70C, data write and read operations of the input buffer 400 are the same as those in the equal magnification mode, and are started from address "0".

When an image is to be reduced to 50%, image data for one line is reduced to 1/2 by the interpolation processing, and the reduced image data is written in the output buffer 350.

If the readout image data is directly written in the output buffer 350, the image data is written from address "0" of the output buffer 350, as shown in Fig. 70E, and the image data from address "0" is sequentially recorded from one side of a recording sheet. Therefore, only an upper left portion of an original image is recorded.

In order to avoid this, the write start address can be set to be 1,024th bit (Fig. 70D).

When the read start address is set to be address "0", blank data (corresponding to white) is recorded up to the 1,024th bit. Therefore, a reduced image can be recorded to have the center $\ell$ of the recording sheet as the center, as shown in Fig. 71A. The read start address is set by the preset data $P_0$.

Therefore, the write start address of the output buffer 350 is set as:

$$\text{Write start address} = (4{,}096 - 4{,}096 \times \text{reduction magnification})/2$$

Thus, when the write start timing (preset data $P_0$) of the input buffer 400 and the write start address of the output buffer 350 are appropriately selected, recording processing with reference to the center can be realized even if a line memory having a 1-line capacity is used. Fig. 72 shows an example of write start address data and preset data $P_0$.

Figs. 73A to 73G show an example of the above-mentioned processing operation.

As shown in Figs. 73D to 73G, the preset data $P_0$ and the write start address are always set in synchronism with the horizontal sync signal H-SYNC.

Figs. 73D and 73E show write and read timings of the input buffer 400. Similarly, Figs. 73F and 73G show write and read timings of the output buffer 350.

The control signals INSEL and OUTSEL are rectangular wave signals having two horizontal periods as one period.

Figs. 74A to 74K show timing charts of signals at respective portions in the interpolation processing.

Assume that original image data obtained from the CCDs 104 and 105 are given by D0(0), D1(F), D2(F), D3(0), and D4(0) (a value in parentheses indicates a gradation level of each image data).

When the read clock RDCLK is supplied to the input buffer 400, the image data D is output after the lapse of access time t1 (Figs. 74A and 74B), and is latched in response to the latch clock DLCK (Fig. 74C). When data D1(F) is output from the latch 11 in synchronism with the latch clock, the data D0(0) is output from the latch 12 (Figs. 74D and 74E).

Note that the latch clock DLCK is delayed from the sync clock CLK1 by one cycle.

On the other hand, 0 ; 28 ; 10 ; 38 ;... (Fig. 74F) are output as the interpolation selection data SD by an externally set variable magnification signal.

As a result, in the interpolation ROM 13, the interpolation data table is referred to using the image data D0 and D1 and the interpolation selection data SD, and necessary interpolation data SS (Fig. 74G) is output. Therefore, the interpolation data SS is given by:

0 ($S_0$), 9 ($S_1$), F ($S_2$), F ($S_3$),
8 ($S_4$), 0 ($S_5$),...

The readout interpolation data SS is sequentially supplied to the latch 14 (Figs. 74H and 74I). The binarized interpolation data SS is written in the output buffer 350 in response to the write clock LCK2 (Figs. 74J and 74K).

Note that in Figs. 74A to 74K, t2 is the access time of the interpolation ROM 13 and t3 is the access time of the output buffer 350.

The reduction processing will be described below. Figs. 75A to 75J are timing charts of the signals when a reduction magnification is 80%.

Assume that the gradation level of each image data remains the same as in the enlargement processing described above.

Two adjacent image data (e.g., image data D1 and D0) are supplied from the latches 11 to 12 to the interpolation ROM 13 as an address signal, and an externally set reduction magnification (80%) is supplied to the data selection write circuit 710 in the same manner as in the enlargement processing described above.

In the reduction processing, the read clock RDCLK and the latch clock DLCK have the same frequency as that of the sync clock CLK1, and the relationship among signals from the input buffer 400 to the interpolation ROM 13 is as shown in Figs. 75A to 75F.

In contrast to this, since the latch clock LCK1 is as shown in Fig. 75G, the latch output becomes as shown in Fig. 75H.

Since the write clock LCK2 has the same frequency as that of the latch clock LCK1, data shown in Fig. 75I is written in the output buffer 350.

In the above embodiment, when the enlargement or reduction magnification is changed, the interpolation selection data SD output from the interpolation data selection memory 720 is changed, and the interpolation ROM 13 is addressed accordingly to output the corresponding interpolation data SS.

In the above description, the present invention is applied to the image processing apparatus which reads an image with reference to the center of a document, and records an image with reference to the center of a recording sheet. However, the present invention can be applied to other image processing apparatuses.

First, when both image reading and image recording are processed with reference to one side of a document (recording sheet), the image reading start positions of the CCDs 104 and 105 are the same as the recording start position (start position of optical scan; in the laser printer, a recording beam start position of the laser beam). Therefore, the present invention is applied to such an apparatus without posing a problem.

Second, in an image processing apparatus wherein image reading is performed with reference to the center line of a document and image recording is processed with reference to one side of a recording sheet, the read start address of the input buffer 400 is determined as follows.

In this case, the preset data $P_0$ of the output buffer 350 is always 0. In contrast to this, the read start address cannot be determined by only a variable magnification signal, and is varied depending on a document size.

For this reason, in an image processing apparatus of this type, the read start address is determined based on a designated variable magnification indicating a document size.

A case will be described below wherein the document 52 to be read has an A4 size, as shown in Fig. 76A.

As described above, when the resolution is 16 dots/mm, the number of bits in the widthwise direction of the A4 size is:

$$210 \text{ mm} \times 16 \text{ dots/mm} = 3{,}360 \text{ bits}$$

Therefore, if the maximum read document size is a B4 size, a value obtained by multiplying a variable magnification with a width Y in Fig. 76A serves as the read start address for the input buffer 400.

Therefore, the read start address is given by:

$$(4{,}096 - 3{,}360)/2 = 368 \text{ bits}$$

Fig. 77 shows the read start address in an arbitrary variable magnification and corresponding preset data $P_0$.

In Fig. 77, a document size is the A4 size.

The write start address and the preset data $P_0$ are constant regardless of a variable magnification since an image is recorded with reference to one side of a recording sheet.

Third, in an image processing apparatus wherein image reading is performed with reference to one side of a document, as shown in Fig. 76B, and image recording is processed with reference to the center line $\ell$ of a recording sheet, the preset data $P_0$ of the input buffer 400 and the write start address of the output buffer 350 are determined as follows.

More specifically, in the case of 4,096 > 3,360 x variable magnification, the write start address is set; otherwise, the preset data $P_0$ is set.

Therefore, when 4,096 > 3,360 x variable magnification, the write start address is given by:

$$\text{Write start address} = (4{,}096 - 3{,}360 \times \text{variable magnification})/2$$

In this case, the preset data $P_0$ for the input buffer 400 is set to be 0.

In contrast to this, when 4,096 < 3,360 x variable magnification, the preset data $P_0$ is given by:

Preset data $P_0$ = (3,360 - 4,096/variable magnification)/2

In this case, the write start address of the output buffer 350 is 0.

As a result, the write start address in an arbitrary variable magnification and the preset data $P_0$ are as shown in Fig. 78.

In this manner, the write start address or preset data $P_0$ can be changed according to a read or write reference of a document.

The enlargement/reduction circuit 1 receives the above-mentioned image data, the area signal S, and the attribute designation signal P.

Thus, the area signal S and the attribute designation signal P can be subjected to the same enlargement/reduction processing as the image data.

Since both the area signal S and the attribute designation signal P are 1-bit signals, a method for the image signal D can be simplified to perform enlargement/reduction processing.

A case using a linear SPC method will be exemplified below. In the SPC method, a new pixel value subjected to variable magnification processing (i.e., pixel density conversion) becomes a value of a most adjacent pixel, as shown in Fig. 118. Figs. 55B and 55C show an application of the SPC method to the area signal S and the attribute designation signal P. In Figs. 55A, 55B, and 55C, the same reference numerals denote the same constituting parts having the same functions regardless of S or P suffixed to the reference numerals, like the latches 11, 11S, and 11P, and the interpolation ROMS 13, 13S, and 13P. The circuit operation of Figs. 55B and 55C is the same as that of the processing circuit of the image signal D shown in Fig. 55A. Control signals and clocks input to these circuits are commonly used. Interpolation ROM tables shown in Figs. 55B and 55C have the contents shown in Fig. 119.

With this arrangement, the area signal S and the attribute designation signal P can be and efficiently reduced/enlarged parallel in the same variable magnification as that for the image signal D. Since the control signals and the clock signals can be generated by a common circuit, the circuit scale can be reduced.

The area signal S and the attribute designation signal P can be reduced/enlarged by a method of calculating a logical product of a pixel of interest and an original adjacent pixel as a new pixel value, a three-split method (corresponding to a 9-split method in two-dimensional processing), or the like.

The area signal and the attribute designation signals have the common feature as an area control signal for designating an image area, and can be equally processed.

Enlarged/reduced image data is then subjected to halftone processing.

The halftone processing will be described in detail later. The halftone processor 440 is arranged, as shown in Fig. 79.

The halftone processor 440 has a halftone data ROM 441. When column and row addresses of the ROM 441 are referred to, data necessary for the halftone processing can be read out from the ROM.

For this purpose, a column counter 442 and a row counter 443 are arranged. The column address of the ROM 441 is designated by a counter output which is incremented by a signal corresponding to a B4 size. Similarly, the row address of the halftone data ROM 441 by a counter output which is incremented by a clock CK synchronous with one pixel.

Dot pattern data obtained by address designation is supplied to a gate circuit 444, and is subjected to the following gate processing.

More specifically, an image inside a specific area designated by a color marker is subjected to halftone processing. As halftone processing, a dot recording operation will be exemplified below. In the case of dot recording, dots are recorded on only an area, where no image is recorded, of a specific area. More specifically, as shown in Fig. 80B, dots are recorded so as not to overlap a character image.

For this purpose, the gate circuit 444 comprises an OR gate 445 and a switching circuit 446. Halftone (or dot pattern) data and image data are supplied to the OR gate 445, and the OR output and the image data are selected by the switching circuit 446.

In this case, for an image area, the image data is selected, and in the designated area excluding the image, the OR output is selected. Thus, only the image data is recorded on the image area, and a dot pattern is recorded on the remaining area. Therefore, the image and the dot pattern can be prevented from overlapping each other (Fig. 80B).

An image area and a non-image area are determined by a color code and another color code (character color code) indicating a character color. For this purpose, the color code and the character color code are supplied to a coincidence circuit 44, and when a coincidence is found therebetween, a character color portion (image area) is determined. Therefore, the coincidence output is supplied to the switching circuit 446 as a switching pulse.

Image data output from the gate circuit 444 is output from a data selector 448 when its color coincides with a copy sequence of a designated color. More specifically, when a color is particularly designated for half-

tone processing, a control terminal 449 receives a color code for the halftone processing so that the dot pattern is recorded in the designated color. When the color of image data coincides with an input color code, it is output.

For example, when the dot pattern is to be recorded in the same color as that of the color marker, the color of the color marker can be designated. Thus, when the color of image data coincides with the designated color code, the selected halftone image data is output.

Fig. 82A shows a waveform of an original image before it is subjected to halftone processing. The waveform shown in Fig. 82A becomes a waveform shown in Fig. 82B after the halftone processing.

A dot pattern is not limited to one shown in Fig. 81, and a plurality of ROMs may be prepared and selected.

The image data subjected to the halftone processing is then subjected to multi-value processing.

In a conventional apparatus, in order to set a threshold value of an image to be recorded, a level selection button arranged on an operation unit is operated.

However, it is often difficult for a person who is not skilled in the operation of a copying apparatus to set an optimal level by a single operation. That is, in the conventional apparatus, a wasteful trial copying operation is often repeated.

In order to eliminate such a drawback, an automatic density method is proposed. In this method, a document is prescanned prior to actual scan to obtain density data, and the threshold value of a document is determined based on the density data.

However, the drawback of this method is to detect density data of a document by prescan. With this operation, an initial copy time for performing a copying operation is prolonged, and productivity of copies are not so improved. For this reason, a method of setting a threshold value in real time need be developed.

When a density of a document is to be set in real time, a density histogram of a document can be formed.

Assuming that a density histogram shown in Fig. 83 is obtained from density data, a threshold value for multi-value processing is calculated from a level giving a peak frequency in this density histogram. For this reason, when this means is employed, frequencies in each density level must be counted, and a circuit scale is enlarged.

In the following description, an automatic threshold value determination means 600B which can set an optimal document density in real time without increasing a circuit scale will be exemplified. The automatic threshold value determination means 600B is arranged in association with the multi-value circuit 600A.

In this means, a threshold value is determined in units of lines on the basis of maximum value data DH and minimum value data DL of density data of each scan line. In a color copying operation, since copying operations are performed in the order of blue, red, and black, density data of a pixel corresponding to a color to be presently recorded is sampled, and its minimum and maximum values are calculated for each color.

An equation for calculating a threshold value T for binarization is:

$$Ti = Ki(DH - DL) + DL$$

where

i = blue, red, black

k = coefficients between 0.1 to 0.8, preferably, 0.2 to 0.6

The value k is varied depending on a color. However, it is obvious that the value k is varied depending on a value of density data stored in the color separation map described above.

For example, k is 1/2 to 1/3 for black, and is about 1/2 for red and blue.

In a process of calculating a maximum or minimum value, a noise component may be mixed. As its countermeasure, when density data is immediately changed, it is not sampled and immediately preceding density data may be used or an average value of density data therebefore and thereafter may be used. In order to prevent an immediate change in calculated threshold value, an average value of threshold values for a plurality of lines may be used as a threshold value for the present line.

When the multi-value processing is performed, the coefficient k can be selected in correspondence with threshold values.

When an original image is copied in a single color, the coefficient k is varied depending on colors. That is, an original image mainly consists of characters based on black, and also includes color characters and the like at a lower frequency than the black characters. Therefore, when a threshold value is determined in correspondence with the black character, a color (e.g., red or blue) character in a reproduced image tends to be omitted. When the threshold value is determined in correspondence with a color character, the black character tends to be painted.

In order to prevent this, the fixed threshold value ROM 600D for a character image is prepared, as shown in Fig. 2, so that a threshold value can be manually and independently selected for each color. In the multi-value processing, a threshold value for each color is addressed by the BBR signal (color designation signal for each scan).

In this circuit, seven fixed threshold values are stored in units of colors, and can be manually selected.

The automatic threshold value determination means 600B will be described in detail below.

In Fig. 84, a ROM storing threshold values in units of colors calculated by the above-mentioned equation is prepared, and the threshold value data is selected in accordance with the maximum and minimum values of a line of interest.

In Fig. 84, reference numeral 611 denotes a ROM storing the threshold values in units of colors. The density data is simultaneously supplied to a maximum value calculator 612 and a minimum value calculator 616.

The maximum and minimum value calculators 612 and 616 have the same arrangement. Therefore, the arrangement of the maximum value calculator 612 will be described below.

The density data of the present pixel and the density data of the immediately preceding pixel latched by a latch 614 are supplied to a switching circuit 613. The density data of the present pixel and the density data of the immediately preceding pixel are supplied to a comparator 615 to be compared with each other. One of the present pixel and the immediately preceding pixel is selected based on the comparison output. When the density data of the original pixel is larger, the density data of the present pixel is selected as shown in Fig. 84.

The comparison operation is executed for all the pixels of a line of interest, and the maximum value DH of the line is detected.

Similarly, in the minimum value calculator 616, the minimum value DL of the line is detected based on the comparison output indicating a minimum value obtained by a comparator 619.

When the above-mentioned operation is completed for one line, the threshold value ROM 611 is addresssed by the maximum and minimum values DH and DL. The BBR signal supplied to the threshold value ROM 611 determines a color for which the threshold value is to be selected.

The content of the threshold value ROM 611 is varied depending on multi-value image data. For example, if image data is converted to 4-value data of white, black, light gray, and dark gray, the output threshold values can be determined as follows:

Threshold value T1
...Low threshold value...white 1, gray 1/3
Threshold value T2
...Middle threshold value...gray 1/3, gray 2/3
Threshold value T3
...High threshold value...gray 2/3, black 1

As the threshold value ROM 611, ROMs 621 to 623 independently storing threshold value data in correspondence with colors may be prepared and selected in accordance with the BBR signal, as shown in Fig. 85. In this case, an encoder 624 for encoding the BBR signal is necessary.

The above-mentioned equation can be calculated in real time to calculate a threshold value. Fig. 86 shows this example.

In Fig. 86, the maximum and minimum values DH and DL detected as described above are subjected to a calculation (DH - DL) in a subtractor 625, and the difference is supplied to a first coefficient ROM 626 storing the coefficient k and is multiplied with the coefficient selected in accordance with the BBR signal. The product output ki(DH - DL) and the minimum value DL are added to each other by an adder 627.

Note that as a countermeasure against noise, a pre-processor such as an averaging circuit for density data may be arranged. Alternatively, a post-processor for averaging calculated threshold values Ti may be arranged.

The 3 colors x Ti (i = 3) threshold value determination means 600B having the same arrangement are arranged.

When the above-mentioned calculation means is used, if an image is copied in a single color (all black, all red, or all blue), other colors can be binarized using a black threshold value. That is, in a single-color copy mode, data can be fetched using only black codes to satisfactorily reproduce a black image.

When a photograph image is subjected to multi-value processing, a special-purpose threshold value is selected. For this purpose, a special-purpose threshold value ROM 600C is arranged.

As the threshold value ROM 600C, a 4 x 4 or 8 x 8 dither matrix may be used. In this case, the address of the threshold value ROM 600C can be controlled using counter outputs for designating a row and a column. In this embodiment, three 8 x 8 matrices are used to obtain 4-value data.

Fig. 87 shows an example of a 4-value dither matrix. In Fig. 87, Ti (i = 1 to 3) is the threshold value used.

A character image threshold value and a photograph image threshold value are selected in accordance with external designation.

For this purpose, first to third selectors 600E to 600G are arranged, and a controller 600H therefor is arranged.

Fig. 88 shows the controller 600H in detail. In an external designation mode, i.e., when a character image or a photograph image is selected, a threshold value associated with a designated mode M (M1 or M2) is selected regardless of the attribute designation signal P.

The controller 600H comprises an encoder 625 and a logic circuit 630 for outputs Yi of the encoder 625. The relationship between the external designation mode M and the outputs EOC and DOC from the logic circuit 630 is defined as shown in Fig. 89.

When a character image is externally selected, the first selector 600E is selected by the selection output EOC. When a photograph image is selected, the second selector 600F is selected by the selection output DOC.

When a fixed threshold value is selected, the third selector 600G is selected in place of the first selector 600E. A detailed description thereof will be omitted.

When a mixed image is selected, one of the first and second selectors 600E and 600F is selected in accordance with the value of the attribute designation signal P, so that a corresponding threshold value can be automatically selected in accordance with the content of an input image.

The multi-value processing is performed using the selected threshold value.

Note that the logic circuit 630 comprises four NAND gates 631 to 634 and two inverters 635 and 636, which are connected as shown in Fig. 88.

The selected threshold value data and image data (density data) output from the halftone processor 440 are supplied to the multi-value circuit 600A and are converted to multi-value data.

As shown in Fig. 90, the multi-value circuit 600A comprises a data comparator 640 and an encoder 641. The image data is compared with selected threshold value data T1 to T3.

In this case, if the levels of the threshold value data T1 to T3 are set as shown in Fig. 91, the relationship among input image data, comparison outputs C1 to C3, and encoder outputs J0 and J1 is defined as shown in Fig. 92.

Therefore, when a laser beam is modulated (PWM-modulated) by the encoder outputs J0 and J1, a recording density at that time is changed in four steps from white to black.

The multi-value image data is supplied to the edge extraction processor 470 shown in Fig. 93.

In the edge extraction processing, 4-bit edge data for 4 lines are used to form an edge-extracted image (character).

For this purpose, the multi-value image data is supplied to the 9-line memory 459 (Fig. 2), and is delayed by 1 line, 5 lines, and 9 lines, respectively.

The image data associated with the delayed lines are supplied to the edge extraction processor 470 shown in Fig. 93.

In this case, as the image data, 4-value data is exemplified.

The 4-value data (2-bit data) for each line is delayed by a predetermined number of bits by delay elements 471 to 476 each comprising a shift register or the like. If 4-value data delayed by 4 lines is assumed to be image data of a pixel of interest, the delay outputs from the delay elements 471 to 476 are supplied to subscan and main scan edge detectors 480 and 490 for a line of interest.

The detectors 480 and 490 have the same arrangement, and each comprises edge detection logic circuits 481, 482, 491, and 492 associated with the MSB of 4-value data, and edge detection logic circuits 483, 484, 493, and 494 associated with the LSB.

Processing of the MSB will be described below. The MSB data a, b, and c (their waveforms are shown in Figs. 94A to 94C) delayed by 4 bits for the respective lines are supplied to the NAND gate 481, and its NAND output d (Fig. 94D) and the 4-bit delay output b of the line of interest are EX-ORed by the EX-OR gate 482. If the EX-OR output is given by e (Fig. 94E), the output e becomes an edge output in the subscan direction.

Similarly, three 4-value data f, b, and h (Figs. 94F to 94H) at 4-bit intervals in the subscan direction of the 5th line are supplied to the NAND gate 491, and its NAND output i (Fig. 94I) and 4-value data b of the pixel of interest are supplied to the EX-OR gate 492 to be EX-ORed.

Therefore, an output j (Fig. 94J) from the EX-OR gate 492 becomes an edge output in the main scan direction.

The edge outputs e and j in the main scan and subscan directions are supplied to one NAND gate 496 constituting the edge detector 495, thus obtaining an edge detection output k (Fig. 94K) for the MSB.

Figs. 94A to 94K show waveforms for explaining edge detection at the start point of an edge (e.g., a character). Contrary to this, Figs. 95A to 95K are views for explaining edge detection at a middle portion of the edge. At an edge having a certain width, the 4-bit detection output k can be obtained in correspondence with both-side edge portions.

The LSB of image data is subjected to the same edge detection processing described above. For this purpose, NAND gates 483, 493, and 497, and EX-OR gates 484 and 494 are arranged.

The edge detection output and the image data of the pixel of interest (4-bit data) of the line of interest are selected in accordance with the presence/absence of edge extraction processing designation in a selector 498.

When a selection signal CS as an AND output of the area signal S and an edge extraction signal is obtained, the edge detection output, i.e., the edge extraction signal (an input p of the selector 498) is selected; otherwise, normal image data as an input g is selected.

Note that reference numeral 485 denotes a delay element; and 486, an AND gate.

An output from the edge extraction processor 470 is subjected to reverse processing by the reverse circuit shown in Fig. 92.

If multi-value recording is 4-value recording (normally, even-numbered value recording), multi-value data can only consist of 2 bits. Therefore,

| | | | | |
|---|---|---|---|---|
| 00 | white | | 11 | black |
| 01 | light gray | reverse → | 10 | dark gray |
| 10 | dark gray | | 01 | light gray |
| 11 | black | | 00 | white |

The reverse circuit 460 comprises a pair of EX-OR gates 461 and 462, and an AND gate 463 for calculating an AND output of the area signal S and a reverse signal. Only when the reverse signal is obtained, bits of edge-extracted or non-processed image data are reversed.

Each of the above-mentioned external designation signals and image processing signals consists of 24 bits, as shown in Fig. 96, and various processing signals are assigned to respective bits.

The signal subjected to the above-mentioned processing is supplied to the interface circuit 40.

The arrangement and operation of the interface circuit 40 will be described below with reference to Fig. 97.

The interface circuit 40 comprises a first interface 41 for receiving 4-value data, and a second interface 42 for receiving the 4-value data output from the interface 41.

The first interface 41 receives horizontal and vertical valid area signals H-VALID and V-VALID from a timing circuit 43, and also receives a clock signal having a predetermined frequency (in this embodiment, 6 MHz) from a counter clock circuit 44.

The 4-value data is sent to the second interface 42 in synchronism with a CCD drive clock during only a period wherein the horizontal and vertical valid area signals are generated.

The counter clock circuit 44 generates a main scan timing clock synchronous with an optical index signal.

The second interface 42 is an interface for selecting the 4-value data sent from the first interface 41 and other image data, and sending the selected data to the output unit 70.

Other image data include the following image data:

That is, other image data include, first, test pattern image data obtained from a test pattern generator 46, second, patch image data obtained from a patch circuit 47, and third, control data obtained from a printer controller 45.

The test pattern image data is used in a test mode of image processing, and the patch image data for detecting a toner density is used in patch processing.

The test pattern generator 46 and the patch circuit 47 are driven based on the clock signal from the counter clock circuit 44 to be synchronized with the 4-value data sent from the first interface 41.

The 4-value data output from the second interface 42 is used in the output unit 70 as a laser beam modulation signal.

Fig. 98 shows an embodiment of the first interface 41, and employs a pair of line memories 901 and 902. This is to process 4-value data in real time.

The pair of line memories 901 and 902 receive an enable signal using two lines as one period, and receive predetermined address data from address counters 903 and 904. Reference symbol CK denotes a clock for the address counters (Fig. 93B).

An enable signal forming circuit 901 comprises a first AND gate 911, which receives the above-mentioned clock CK and a size signal B4 (in this embodiment, maximum size = B4 size; Fig. 99A) which can be processed in this apparatus to form a first AND output A1 (Fig. 99C).

A D flip-flop 912 is arranged and receives as a clock a line signal SH (Fig. 99D) which is synchronous with a deflection timing of a deflector 935 of the output unit 70 and is output once per line. As a result, outputs having polarities shown in Figs. 99E and 99F can be obtained from the Q and $\overline{Q}$ terminals of the flip-flop 912.

The $\overline{Q}$ output and the first AND output A1 are supplied to a first NAND gate 913, and the Q output and the first AND output A1 are supplied to a second AND gate 914. First and second NAND outputs N1 and N2 (Figs. 99G and 99H) from the NAND gates 913 and 914 are supplied to the line memories 901 and 902 as the enable signals.

Therefore, the line memories 901 and 902 are alternately set in a write enable state for every line.

The states of outputs from the line memories 901 and 902 are controlled by tristate gate circuits 905 and 906. For this purpose, a gate signal forming circuit 920 is arranged.

The forming circuit 920 comprises a pair of AND gates 921 and 922, and NAND gates 923 and 924. The Q and $\overline{Q}$ outputs and the horizontal valid area signal H-VALID (Fig. 99I) are supplied to the second and third AND gates 921 and 922, thus forming AND outputs A2 and A3 shown in Figs. 99J and 99K. The third and fourth NAND gates 923 and 924 connected to the AND gates 921 and 922 receives the AND outputs A2 and A3, and the common vertical valid area signal V-VALID (Fig. 99L). Thus, a third NAND output N3 (Fig. 99M) is supplied to one gate circuit 905, and a fourth NAND output N4 (Fig. 99N) is supplied to the other gate circuit 906.

As a result, the gate state is alternately controlled for every line, and 4-value image data for the respective lines are sequentially and alternately read out from the first interface 41.

Horizontal and vertical valid widths are determined by the horizontal and vertical valid area signals H-VALID and V-VALID. The clock CK and the horizontal and vertical valid area signals H-VALID and V-VALID are supplied from the output unit 70.

Fig. 100 shows peripheral circuits of the output unit 70. A driver 932 is connected to a semiconductor laser 931, and receives the above-mentioned 4-value data as a modulation signal. With this modulation signal, a laser beam is internally modulated. The laser driver 932 is controlled by a control signal from a timing circuit 933 so as to be enabled during only horizontal and vertical valid area periods. A signal indicating a light amount of a laser beam is fed back to the laser driver 932, and the laser is controlled so that the light amount of the beam becomes constant.

The scan start point of the laser beam deflected by a polygonal mirror 935 having an octahedral shape is detected by an index sensor 936, and the detected index signal is converted into a voltage signal by an I/V amplifier 937. The converted index signal is supplied to the counter clock circuit 44, and the like to form the line signal SH and to adjust a timing of optical main scan.

Note that reference numeral 934 denotes a driver for a polygonal mirror motor, and its ON/OFF signal is supplied from the timing circuit 933.

An image exposure means shown in Fig. 101 employs a laser beam scanner.

A laser beam scanner 940 has the laser 931 such as a semiconductor laser, which is ON/OFF controlled based on color-separation images (4-value data). A laser beam emitted from the laser 931 becomes incident on the polygonal mirror 935 comprising a rotary octahedral mirror through mirrors 942 and 943. The laser beam is deflected by the polygonal mirror 935, and is radiated on the surface of the image forming body 110 through an f-θ lens 944 for forming an image.

Reference numerals 945 and 946 denote cylindrical lenses for correcting a tilt angle.

The laser beam is scanned along the surface of the image forming body 110 at a constant speed in a predetermined direction a by the polygonal mirror 935. With this scanning, image exposure corresponding to color-separated images.

Note that the f-θ lens 944 is used for adjusting a beam spot size on the image forming body 110 to be a predetermined diameter.

The polygonal mirror 935 may comprise a galvano mirror, an optical quartz deflector, and the like in place of a rotary polygonal mirror.

A latent image formed in this manner is developed while reversing negative and positive images, thereby forming a primary image on the photosensitive body. This state is illustrated in Fig. 102.

A latent image formed on the image forming body 110 is developed by a developing agent attracted thereto.

Note that in the developing operation, a developing bias signal is applied to a developing sleeve (not shown). The developing bias signal consists of DC components selected to have substantially the same potential as that of a non-exposed portion of the image forming body 110.

As a result, only a toner of a developing agent on the developing sleeve is moved to the surface of the image forming body 110 on which the latent image is selectively formed and becomes attracted thereto, thus performing developing processing.

Fig. 102 illustrates changes in surface potential of the image forming body 110, and exemplifies a case wherein the charging potential is positive. In Fig. 102, reference symbol PH denotes an exposed portion of the image forming body; DA, a non-exposed portion of the image forming body; DUP, an increase in potential caused by attraction of a positively charged toner T1 to the exposed portion PH in a first developing process.

The image forming body 110 is uniformly charged by a charger to have a given positive surface potential E.

A first image exposure process is performed using the laser as an exposure source, and the potential of the exposed portion PH is decreased according to the light amount.

An electrostatic latent image formed in this manner is developed by the developing unit applied with a positive bias substantially equal to the surface potential E of the non-exposed portion. As a result, the positively charged toner T1 becomes attracted to the exposed portion PH having a relatively low potential, thus forming a first toner image. On a region where the toner image is formed, the potential is increased by DUP since the positively charged toner T1 is attracted thereto, but does not become equal to the potential of the non-exposed portion DA.

The surface of the image forming body on which the first toner image is formed is subjected to second charging. As a result, the surface of the image forming body has the uniform surface potential E regardless of the presence/absence of the toner T1.

A second image exposure process is performed on the surface of the image forming body 110, thus forming a new latent image.

The latent image is developed using a positively charged toner T2 having a color different from the toner T1 in the same manner as described above, thus forming a second toner image.

The above-mentioned process is repeated three times, and a multi-color toner image is formed on the image forming body. The toner image is transferred to a transfer sheet P, and is fixed by heating or compressing, thereby obtaining multi-color recording image data. In this case, the residual toner and charge on the surface of the image forming body are cleaned to prepare for the next formation of a multi-color image.

The developing process is performed such that a developing agent layer does not contact the surface of the image forming body.

As a method of forming a latent image for multi-color image formation, an electrophotographic method, a method of forming an electrostatic latent image by directly injecting a charge on the image forming body using a multi-needle electrode, a method of forming a magnetic latent image by a magnetic head, and the like may be employed.

In this apparatus, a two-component developing agent consisting of a nonmagnetic toner and a magnetic carrier is preferably used since frictional charge control of toner is easy, developing characteristics are good, and the toner can be arbitrarily colored.

The above-mentioned units and circuits are controlled by first and second control units 200 and 250, as shown in Fig. 103. The second control unit 250 will be described first.

The second control unit 250 mainly controls an image reading system and its peripheral devices. Reference numeral 251 denotes a microcomputer (second microcomputer) for controlling an optical drive system. Various data signals are serially exchanged between the second microcomputer 251 and a microcomputer (first microcomputer) 201 for controlling the main body. An optical scan start signal output from the first microcomputer 201 is directly supplied to an interrupt terminal of the second microcomputer 251.

The second microcomputer 251 generates various instruction signals in synchronism with a clock having a predetermined frequency (12 MHz) obtained from a reference clock generator 254.

The second microcomputer 251 outputs a threshold value selection signal, a BBR signal (color selection signal) for color recording, an image processing designation signal, and the like.

The second microcomputer 251 also outputs the following signals.

First, a control signal for turning on/off the driver for the CCDs 104 and 105 is supplied to a power source controller (not shown). Second, a predetermined control signal is supplied to an ON/OFF controller 253 for a light source 85 for radiating required light to the document 52. Third, a control signal is also supplied to a driver 252 for driving a stepping motor 90 for moving a movable mirror unit (e.g., 88) arranged in the image reading unit A.

The second microcomputer 251 receives data indicating a home position of the light source.

The first microcomputer 201 mainly controls the color copying machine. Fig. 104 shows input and output systems to and from the color copying machine.

At an operation/display unit 202, various input data such as magnification designation, designation of a recording position, designation of a recording color, and the like are input, and their contents are displayed. A display means comprises, e.g., LED elements.

A paper size detector 203 detects the paper size of a cassette loaded in a tray to display the detected size, and automatically selects a paper size in accordance with a document size.

The rotational position of the image forming body 110 is detected by a drum index sensor 220, and the timing of electrostatic processing is controlled by the index signal from the sensor 220.

A cassette paper-zero sensor 221 detects whether or not the number of paper sheets in the cassette is zero. A manual feed paper-zero sensor 222 similarly detects the presence/absence of a manual feed paper sheet in a manual feed mode.

A toner density sensor 223 detects a toner density on the drum 110 or after fixing.

Three toner remaining amount sensors 224 to 226 respectively detect the remaining amounts of the developing units 123 to 125. When it is detected that the toner must be replenished, a toner replenishment display element arranged on the operation unit is turned on.

A temporary stop sensor 227 detects whether or not a paper sheet is correctly fed from a cassette to a second paper feed roller (not shown) during use of the color copying machine.

A paper exhaust sensor 228 detects whether or not a paper sheet after fixing is correctly exhausted outside the apparatus.

A manual feed sensor 229 is used for detecting whether or not a manual feed tray is set. If the manual feed tray is detected, the manual feed mode is automatically set.

The sensor outputs from the above-mentioned sensors are fetched in the first microcomputer 201, so that necessary data are displayed on the operation/display unit 202 and the drive condition of the color copying machine is controlled as requested.

In the color copying machine, a motor 231 exclusively used for black is arranged in addition to a red and blue developing motor 230, and these motors 230 and 231 are controlled by an instruction signal from the first microcomputer 201. Similarly, the drive condition of a main motor (drum motor) 204 is controlled by a driver 205 comprising a PLL arrangement. The drive condition of the driver 205 is also controlled by the control signal from the first microcomputer 201.

During color developing, a predetermined high voltage must be applied to a developing unit which is being subjected to a developing process. For this purpose, a charging high-voltage power source 232, a developing high-voltage power source 233, a transfer·separation high-voltage power source 234, and a toner reception high-voltage power source 235 are arranged, and predetermined high voltages are applied thereto as needed.

Note that reference numeral 237 denotes a cleaning roller driver; 238, a first paper feed roller driver; 239, a second paper feed roller driver; and 236, a motor for bringing the cleaning roller into contact with the drum or releasing it from the drum. In addition, reference numeral 240 denotes a separation pawl driver.

The second paper feed roller is used for feeding a paper sheet fed from the first paper feed roller to an electrostatic latent image formed on the drum 110.

A fixing heater 208 is controlled by a fixing heater ON/OFF circuit 207 in accordance with a control signal from the first microcomputer 201.

A fixing temperature is sensed by a thermistor 209, and is controlled by the first microcomputer 201 to be an optimal temperature.

Reference numeral 206 denotes a clock circuit (about 12 MHz).

A nonvolatile memory 210 connected to the first microcomputer 201 is used for storing data which should be stored after the power switch is turned off. The data to be stored includes data of a total counter, initial setting values, and the like.

In this manner, in the first and second microcomputers 201 and 251, various control operations necessary for color image processing are executed in accordance with predetermined sequences.

A series of processing operations in color recording will be described below with reference to Figs. 105 to 107. In this embodiment, single-color recording is available in accordance with an external designation in addition to multi-color (three colors, i.e., blue, red, and black) recording. Thus, the multi-color recording will be described below with reference to Figs. 105A to 105DD and Figs. 106A to 106DD.

In Figs. 105A to 105DD and Figs. 106A to 106DD, a period F1 is a period from when a main power source of the apparatus is turned on until a copy button is operated. A period F1 is a pre-rotation processing period of the image forming body (to be referred to as a drum hereinafter).

A period I is a blue developing (recording) period, and a period III is a black developing period. A period IV is a post-rotation processing period.

Numerical values illustrated in Figs. 105A to 105DD and Figs. 106A to 106DD represent a count value of the drum counter, and count values of other counters such as a pre-rotation counter.

When the main power source is turned on, the main motor such as the drum motor 204 is rotated for a predetermined period of time, and when the copying button is operated, the main motor is rotated (Fig. 105D). When a V-shaped index element attached to the drum 110 is detected by the index sensor 936, the drum counter is cleared (Figs. 105B and 105C). The following processing operation is executed with reference to the count value of the drum counter. The durations (time periods) of the periods I to IV are equal to each other. In this embodiment, one revolution of the drum 110 corresponds to the count value "778".

In the pre-rotation period F2, a pre-rotation lamp is kept on from an intermediate time of the period F2 for a predetermined period of time (until an intermediate time of the blue developing period I), thus executing color developing pre-processing.

When control enters the blue to black developing periods, the developing sleeves arranged in the developing units 123 to 125 are rotated in the corresponding periods, and the developing biases go to HIGH level in synchronism with the rotation timings of the sleeves (Figs. 105F to 105K and Figs. 106F to 106K).

The cleaning blade 127 is brought into contact with the drum in synchronism with the leading edge of the drum index signal in the pre-rotation period F2 to remove toner attracted to the drum 110 (Fig. 105L). The blade 127 is released after one revolution of the drum 110 (Fig. 105M). With this toner removing operation, since toner is slightly left on the drum or toner is scattered when the blade is released, the cleaning roller is driven at a timing slightly delayed from the start of releasing of the blade, thereby removing the residual toner (Fig. 105N).

Immediately before the blue developing period I, the first paper feed roller is rotated to feed a recording paper sheet to the second paper feed roller (Fig. 105O). The first paper feed roller is arranged to feed a paper sheet stored in a cassette. The paper sheet fed by the first paper feed roller is fed to the drum 110 by driving the second paper feed roller.

The feed timing is present in a final exposure process period (in Fig. 106P, exposure process III).

The paper feed operation by the first paper feed roller is stopped when the recording paper sheet reaches the temporary stop sensor arranged immediately before the second paper feed roller. The second paper feed roller is then driven, and when the recording paper sheet passes the sensor, the sensor output therefrom becomes zero (Fig. 106S).

Transfer processing is executed slightly delayed from the driving operation of the second paper feed roller, and a predetermined AC voltage is applied to a paper separation electrode in synchronism with the transfer processing so as to prevent winding of the paper sheet to the drum 110 during transfer (Fig. 106Q).

After the output from the temporary stop sensor 227 goes to zero level, the developing and fixing processing operations are completed, and the paper exhaust sensor 228 detects a paper exhaust state of the paper sheet after fixing (Fig. 106T).

In color recording, a toner density is detected for each developing processing. The density detection timings are determined by count values from the blue to black detection counters (U2 to U4 in Figs. 105U and 106U). These counters are reset with reference to a timing at which a density detection patch begins to be written. The blue counter is reset when the count value of the drum counter has reached 706, and the toner density is detected when the count value after resetting has reached 602.

Similarly, the red and black counters are reset when the count value of the drum counter is 707.

The toner density is detected with reference to a specific image area. For this purpose, a density detection patch signal (e.g., an image signal corresponding to an 8 x 16 (mm) image area) shown in Figs. 105Z and 106Z is utilized, and after the lapse of a predetermined period of time from detection of the patch signal, a toner density detection signal (Figs. 105R and 106R) is output to detect the image density of the specific area.

The pre-rotation counter is cleared when the first drum index signal after the copy button is ON is input, and when its count value has reached 1,266, pre-rotation processing is completed (U1 in Fig. 105U).

When the main power source is turned on, the polygonal mirror motor 934 for driving the polygonal mirror 935 is simultaneously driven, so that the polygonal mirror is rotated at a constant speed (Fig. 105V).

Image data necessary for image recording is output at the following timing. More specifically, a video gate signal goes to "1" level in synchronism with the blue counter, and goes to "0" level simultaneously with completion of a laser write operation corresponding to a black image (Fig. 105W). Image data is sent to the output unit 70 in only a period wherein the video gate signal is at "1" level.

The vertical valid area signal V-VALID is output to be enabled for a predetermined period of time (until the count value becomes 528 when the recording sheet has an A4 size) (Figs. 105Y and 106Y).

Note that a copy signal is output from a controller of the output unit 70 (Fig. 105AA), and a start signal for optical scan is output. The optical scan start signal sets a start state at a trailing edge from "1" to "0" level (Figs. 105BB and 106BB).

When a movable mirror unit including a light source as a part of an image reading means is moved in the image reader B, a home position signal indicating the home position of the optical system is sent to the controller of the output unit 70 in each developing processing step (Figs. 105CC and 106CC).

Upon reception of the home position signal, when the next exposure process is to be executed, a copy R signal (Figs. 105AA and 106AA) is output (Figs. 105DD and 106DD).

The multi-color recording operations are executed in accordance with the timing charts described above.

When an original image is recorded in an externally designated color (only one color), image processing associated with the designated color is executed according to the timing charts of Fig. 107, and no image processing steps for other colors are executed.

For this reason, a detailed description of the operation of the single-color image processing step will be omitted.

In the image processing step shown in Fig. 107, an image is recorded in black (in a normal black-and-white copy mode).

The operation/display unit 202 of this apparatus will be described below with reference to Fig. 108.

Reference symbol a denotes a copying button. When the copy switch is depressed, the copying operation is performed in accordance with the above-mentioned sequence. LEDs are arranged below this switch. When a red LED is kept on, this indicates a warming-up operation, and when a green LED is turned on, this indicates a ready state.

Reference symbol b denotes a display unit for displaying a copy count, a display of a self-diagnosis mode, an abnormal state, or its portion. The display unit b comprises 7-segment LEDs, and digitally displays the content.

Reference symbol c denotes a key group for performing setting of a copy count, instruction of the self-diagnosis mode operation, interruption of a copying operation, clearing of the set copy count, and the like. For example, when the power switch is turned on while depressing numerical keys "4" and "7", the self-diagnosis mode can be set. In this case, when a specific numerical value is input, the motor for the red developing unit can be independently rotated.

The control can be escaped from this mode by inputting another specific numerical value or by turning on the power switch without depressing any key after it is turned off.

In the normal mode, a normal copying operation can be performed. When a key n is used, data, a test pattern, or the like can be printed out.

For example, a printer controller is connected to the second interface 42. In this state, when the print mode is selected and the copying button is turned on, data can be output from the printer controller.

Similarly, after the print mode is selected, "53P + copy" is input using the key group c, thus printing out a test pattern. During the copying operation, when a stop/clear key is depressed while the blue developing process is executed in a multi-color single-paper copy mode, the post-rotation process operation is executed after the blue developing operation is completed. After this operation is completed, an initial state is resumed. This also applies to a multiple copy mode.

Reference symbol d denotes an EE mode cancel key. When the EE mode is canceled by depressing the key d, one of keys e is depressed, so that a threshold value can be manually adjusted.

The key e is used for determining a threshold level of an entire image. When a left key is depressed, a low threshold value is selected. When the left key is depressed once, the threshold value is changed from a normal one to the next one of the seven threshold values. A right key is used to perform an operation opposite to that described above.

The color copy mode includes a single-color mode, a two-color mode, and a three-color mode. These modes are designated by key groups o and p. The designation operation will be described below.

When a single-color recording operation is to be selected, a "MONO" key is depressed first. If an image is to be recorded in blue, a blue key of the key group o can be depressed next; if the image is to be recorded in black, a black key can be depressed. This also applies to a red recording operation. When the three-color copy mode is to be selected, a "MULTI" key of the key group p is depressed. With this operation, the three-color copy mode can be selected, and a copying operation is performed by depressing the copying button in the order of blue → red → black.

When, for example, a red key is depressed in this mode, a red erasure mode, i.e., two-color copy mode is set, and when the copying button is depressed, the copying operation is performed in the order of blue → black.

Similarly, when the blue key is depressed, a blue erasure mode is selected. When the copying button is depressed, the copying operation is performed in the order of red → black. When the black key is depressed, the copying operation is similarly performed in the order of red → blue. The color erasure mode can be easily determined in accordance with an ON/OFF state of the LEDs of the keys o.

Reference symbol g denotes a key for indicating a partial color conversion. When this key is depressed, a marker area on a document is detected, and a black portion surrounded by a marker is recorded in a marker color or a designated color in the above-mentioned process.

Reference symbol f denotes variable magnification processing keys.

A "MAGNIFICATION" designation key is used for selecting a fixed/zoom/longitudinal/lateral mode, and "∇" and "Δ" keys are used for setting a magnification.

For example, after the fixed mode is selected using the "MAGNIFICATION" key, the "∇" or "Δ" key is depressed to select an enlargement/reduction magnification of B5 → B4 to B4 → B5.

When the zoom mode is selected, a magnification is adjusted using the "∇" or "Δ" key while observing an LED h.

This also applies to the longitudinal/lateral independent variable magnification mode. In this case, after the fixed magnification mode is selected to set one of the longitudinal and lateral magnifications, a magnification in the other direction is selected by a longitudinal/lateral designation key. Then, a magnification is set using the "∇" or "Δ" key, thus allowing high-speed designation.

Keys i are used for designating image processing for an entire image or an image inside/outside an area designated by a marker.

Keys m are used for selecting a color erasure mode, and one or two colors of red, blue, and black can be selected.

These keys are used as follows.

Example-1: An area inside a marker is subjected to halftone processing in blue.

An area inside the marker is designated by an "AREA" key, and a "HALFTONE" key is then depressed. In this case, an LED in the "HALFTONE" key is turned on. Thereafter, a "BLUE" key is depressed. After it is confirmed that an LED is turned on, a "MULTI" key of the keys p is selected, and the copying button a is then depressed.

Example-2: Red outside a marker is erased.

An area outside the marker is designated by the "AREA" key, and an "ERASURE" key is then depressed. A "RED" key is then depressed. After the "MULTI" key of the keys p is depressed, the copying button a is turned on.

With the above operation, the following image processing can be performed.

(1) Only an image inside an area surrounded by a marker is extracted (Fig. 109).

In this case, an extracted image can be recorded in a specific color. The extracted image can also be recorded in specific colors of color data inside the area.

For the recording colors, this also applies to the following processing.

(2) A document image is recorded while erasing only an image inside a color marker (Fig. 110).

(3) Only an area inside a color marker is painted (Fig. 111).

(4) Only an area designated by a color marker is subjected to halftone processing (Fig. 112).

(5) An area inside a color marker is subjected to edge extraction processing (Fig. 113).

(6) Only an image inside a color marker is extracted and is subjected to halftone processing (Fig. 114).

(7) Only an image inside a color marker is extracted and is subjected to edge extraction processing (Fig. 115).

(8) Only an image inside a color marker is extracted and is reversed (Fig. 116).

(9) Only an image inside a color marker is extracted and is enlarged/reduced (Fig. 117).

Various other combinations are available, and a description thereof will be omitted.

Reference symbol k denotes LED display elements for displaying an operation state of the copying machine (jam, paper supply, a moving position of a sheet, and a trouble in an optical scanner), and indicating toner replenishment.

Reference symbol j denotes a key for switching image quality. When a "CHARACTER" or "PHOTOGRAPH" mode is selected, the threshold value data stored in the corresponding ROM 600B or 600C is selected.

When a "PHOTOGRAPH-CHARACTER" mode is selected, the ROM 600B or 600C is selected on the basis of the attribute designation signal P.

Keys ℓ are used for selecting a threshold value (density level) in units of colors.

In this apparatus, various operation instructions for checking operations can be performed using the key group c. For example,

I) 6XP: Scanner Check

| | |
|---|---|
| 60P + copy; | a light source (FL) is turned on, and a scanner optical system is stopped. In this state, |
| 1+ copy; | only the optical system is moved in the subscan direction at a speed lower than a regular speed while the FL is kept on. If the copying button is turned on, the optical system is stopped at that position while the FL is kept on. |
| 2 + copy; | the same function as "1 + copy", but the optical system is moved in an opposite direction. |
| 3 + copy; | regular scan is continuously performed while the FL is kept on (three-color mode). |
| 4 + copy; | regular scan is continuously performed while the FL is kept on (single-color black mode). |
| 5 + copy; | regular scan is continuously performed while the FL is kept on (single-color red mode). |
| 6 + copy; | regular scan is continuously performed while the FL is kept on (single-color blue mode). |
| 61P + copy; | if one of "1 to 6 + copy" operations is performed in this state, the same operations as described above are performed while the FL is kept off and the scanner optical system is stopped. |

This operation is canceled by depressing the stop/clear key. In each operation, signal levels output from the respective circuits can be checked.

II) 7XP: Printer Unit Check

| | |
|---|---|
| 70P + copy; | only the polygonal mirror motor is rotated, and the laser is turned on. The index signal can be checked. In this state, |
| 1 + copy; | printer controller data can be output. |

| | |
|---|---|
| 2 + copy; | test pattern data can be output. |
| 3 + copy; | patch data can be output. |
| 71P + copy; | a check mode associated with the recording unit. In this state, |
| 1 + copy; | the charger is ON. |
| 2 + copy; | the blue developing unit motor is ON, and developing bias is ON. |
| 3 + copy; | the red developing unit motor is ON, and developing bias is ON. |
| 4 + copy; | the black developing unit motor is ON, and developing bias is ON. |
| 5 + copy; | the transfer electrode is ON. |
| 6 + copy; | the cleaning blade contacts the drum. |
| 7 + copy; | the cleaning blade is released. |
| 8 + copy; | a voltage is applied to the cleaning roller. |
| 9 + copy; | the separation electrode is ON. |
| 10 + copy; | the first paper feed motor is ON. |
| 11 + copy; | the second paper feed motor is ON. |

When the stop/clear key is depressed, the above-mentioned modes are canceled in the same manner as described above.

The self-diagnosis check operations are not limited to the above examples. With the above self-diagnosis operations, a maintenance by a serviceman in the market can be facilitated, and trouble can be quickly removed since a user can easily check the apparatus before the maintenance.

The present invention can be applied to a system using a single-color printer as a recording unit. Fig. 120 shows an electrophotographic copying apparatus using the single-color printer. In this copying machine, after a document image is separated into color data, the color data is recorded as a monochrome image.

The operation of the apparatus shown in Fig. 120 is substantially the same as the multi-color recording operation except that read scanning (excluding prescan), charging, image exposure, and developing are performed once in an image forming process. The arrangement of the apparatus is substantially the same as that of the multi-color recording apparatus excluding a recording unit shown in Fig. 120. An image signal obtained by a single scan operation is subjected to the above-mentioned processing, and is supplied to a laser scanner of the recording unit.

In this apparatus, only specific color data can be recorded, and an image can be variously processed (e.g., reverse, halftone, painting, edge extraction, erasure processing) by utilizing specific color data as area designation data.

As described above, according to the present invention, in an apparatus capable of color image recording, various image processing and color processing operations are performed in the order of recording colors since color-separation image data are sequentially recorded in units of separated colors.

Thus, since image processing such as resolution correction processing, variable magnification processing, and the like, and color processing such as color conversion, color erasure, and the like can be performed for all the color data to be recorded, signal processing can be much simplified.

According to the present invention, various image processing is performed prior to multi-value processing. Thus, a circuit scale can be prevented from being increased, thus eliminating a cause of an increase in cost in the conventional apparatus. Since image processing such as color ghost correction, resolution correction, and the like can be performed for image data before the multi-value processing, desired image processing can be executed without degrading image quality. For this reason, high-quality color recording can be achieved.

## Claims

1. An image processing apparatus for processing an image of a designated area of a colour original (52), said apparatus comprising:

    magnification designation means for providing a signal representative of a desired magnification for said designated area; and

    signal processing means (1,420,500) for providing a signal representative of the desired magnified image of said designated area;

    characterized by:

    image signal forming means (84,100,104,105) for scanning said colour original and forming an image signal representative thereof and also an area control signal representative of said area of the original designated by a mark associated with the original being scanned;

    said image signal including a density data signal representative of the densities of pixels of said original and a colour data signal representative of the colours of said pixels;

said signal processing means (1,420,500) includes magnification means (1,13,13S,13P) operable to apply the same desired magnification to said image signal and to said area control signal; and

said magnification means (1,13,13S,13P) including density signal varying means (13) for sampling said density data signal at new pixel intervals according to said desired magnification to form new density data signals, and area control signal varying means (13S) for sampling said area control signal at new pixel intervals according to the same said desired magnification to form new area control signals.

2. Image processing apparatus according to Claim 1 characterized by means for generating a mode signal to designate a desired one of a plurality of processing modes including an image processing operation within said designated area, an image processing operation outside said designated area, and an image processing of the whole area of said original (52).

3. Image processing apparatus according to Claim 1 or Claim 2 characterized in that said image signal forming means (84,100,104,105) is adapted to detect a mark drawn on the original by a marker to designate said area and to generate said area control signal on the basis of said mark.

4. Image processing apparatus according to Claim 3 characterized in that said area control signal uses a colour code representative of a colour of said mark.

5. Image processing apparatus according to any one of Claims 1 to 4 characterized by means (420) for carrying out a selected one of an extraction processing, an erasure processing, a decolouring processing, and a painting processing on the basis of said area control signal before said magnification.

6. Image processing apparatus according to any one of Claims 1 to 5 characterized by means (440,470,460,600) for processing the magnified image data including means for carrying out at least one of a half-tone processing, edge-extraction processing, reverse processing, and multi-value processing.

7. Image processing apparatus according to Claim 6 characterized in that said means (440) for carrying out said half-tone processing is operable only on a background area in the designated area.

8. Image processing apparatus according to any one of Claims 1 to 7 characterized by means (800) for generating an attribute signal for indicating an attribute of an image, and said magnification means (13,13S,13P) also magnifies said attribute signal to said same magnification.

9. Image processing apparatus according to any one of Claims 1 to 8 characterized in that said magnification means (1,13,13S,13P) is operable to carry out said magnification operation in a main scanning direction and in a direction perpendicular to the main scanning direction, relative to said original (52).

10. Image processing apparatus according to any one of Claims 1 to 9 characterized in that said magnification means (1,13,13S,13P) is operable to perform said magnification operation as a life-size magnification.

11. Image processing apparatus according to any one of Claims 1 to 10 characterized by means for generating a signal commanding said image processing before the magnification, during said magnification, and said image processing after the magnification, each in the form of serial data.

12. Image processing apparatus according to any one of Claims 1 to 11 characterized by operation/display unit means (Fig. 108) for enabling manual selection or image processing operations to be carried out by the apparatus, said operation/display unit means including at least one of a ten-key pad, a display portion, an operating portion for setting said desired magnification, an operating portion for setting density, a control portion for colour change, decolouring or painting; an operating portion for image-extraction, an operating portion for erasure, an operating portion for image-reversal, an operating portion for edge-extraction, an operating portion for designating an attribute of the image, and a clear key.

## Patentansprüche

1. Bildverarbeitungsvorrichtung zum Verarbeiten eines Bildes eines ausersehenen bzw. festgelegten Bereichs einer Farbvorlage (52), wobei die Vorrichtung umfaßt:

eine Vergrößerungsfestlegungseinrichtung zum Bereitstellen eines Signals, das eine gewünschte Vergrößerung für den festgelegten Bereich darstellt, und

eine Signalverarbeitungseinrichtung (1, 420, 500) zum Bereitstellen eines Signals, das das gewünschte vergrößerte Bild des festgelegten Bereichs darstellt; gekennzeichnet

durch eine Bildsignalbildungseinrichtung (84, 100, 104, 105) zum Scannen bzw. Abtasten der Farbvorlage und Bilden eines Bildsignals, das diese darstellt, und auch eines Bereichssteuersignals, das den Bereich der Vorlage darstellt, der durch eine Markierung bzw. Marke festgelegt ist, die mit der abgetasteten Vorlage verbunden ist;

dadurch, daß das Bildsignal ein Dichtedatensignal, das die Dichten von Bildpunkten der Vorlage darstellt, und ein Farbdatensignal, das die Farben der Bildpunkte darstellt, enthält;

dadurch, daß die Signalverarbeitungseinrichtung (1, 420, 500) eine Vergrößerungseinrichtung (1, 33, 13S, 13P) enthält, die betrieben sein kann, um dieselbe gewünschte Vergrößerung auf das Bildsignal und auf das Bereichssteuersignal anzuwenden; und

dadurch, daß die Vergrößerungseinrichtung (1, 13, 13S, 13P) eine Dichtesignaländerungseinrichtung (13) zum Abtasten des Dichtedatensignals bei neuen Bildpunktintervallen gemäß der gewünschten Vergrößerung zur Bildung neuer Dichtedatensignale und eine Bereichssteuersignaländerungseinrichtung (13S) zum Abtasten des Bereichssteuersignals bei neuen Bildpunktintervallen gemäß derselben gewünschten Vergrößerung zur Bildung neuer Bereichssteuersignale enthält.

**2.** Bildverarbeitungsvorrichtung nach Anspruch 1, gekennzeichnet durch eine Einrichtung zum Erzeugen eines Modussignals zum Festlegen eines gewünschten von einer Vielzahl von Verarbeitungsmodi einschließlich einer Bildverarbeitungsoperation in dem festgelegten Bereich, einer Bildverarbeitungsoperation außerhalb des festgelegten Bereichs und einer Bildverarbeitung des gesamten Bereichs der Vorlage (52).

**3.** Bildverarbeitungsvorrichtung nach Anspruch 1 oder Anspruch 2, dadurch gekennzeichnet, daß die Bildsignalbildungseinrichtung (84, 100, 104, 105) angepaßt ist, um eine Marke zu erkennen, die auf durch einen Markierer auf der Vorlage gezogen ist, um den Bereich festzulegen und das Bereichssteuersignal auf der Grundlage der Marke zu erzeugen.

**4.** Bildverarbeitungsvorrichtung nach Anspruch 3, dadurch gekennzeichnet, daß das Bereichssteuersignal einen Farbcode benutzt, der eine Farbe der Marke darstellt.

**5.** Bildverarbeitungsvorrichtung nach einem der Ansprüche 1 bis 4, gekennzeichnet durch eine Einrichtung (420) zum Ausführen einer gewählten von einer Extraktionsverarbeitung, einer Löschverarbeitung, einer Entfärbungsverarbeitung und einer Malverarbeitung auf der Grundlage des Bereichssteuersignals vor der Vergrößerung.

**6.** Bildverarbeitungsvorrichtung nach einem der Ansprüche 1 bis 5, gekennzeichnet durch eine Einrichtung (440, 470, 460, 600) zum Verarbeiten der vergrößerten Bilddaten, die eine Einrichtung enthält zum Ausführen von mindestens einer von einer Halbtonverarbeitung, Rand- bzw. Kantenextraktionsverarbeitung, Umkehrverarbeitung und Mehrwertverarbeitung.

**7.** Bildverarbeitungsvorrichtung nach Anspruch 6, dadurch gekennzeichnet, daß die Einrichtung (440) zum Ausführen der Halbtonverarbeitung nur in einem Hintergrundbereich in dem festgelegten Bereich betrieben sein kann.

**8.** Bildverarbeitungsvorrichtung nach einem der Ansprüche 1 bis 7, gekennzeichnet durch eine Einrichtung (800) zum Erzeugen eines Attributsignals zum Angeben eines Attributs eines Bildes und dadurch, daß die Vergrößerungseinrichtung (13, 13S, 13P) auch das Attributsignal auf dieselbe Vergrößerung vergrößert bzw. verstärkt.

**9.** Bildverarbeitungsvorrichtung nach einem der Ansprüche 1 bis 8, dadurch gekennzeichnet, daß die Vergrößerungseinrichtung (1, 13, 13S, 13P) betrieben sein kann, um die Vergrößerungsoperation in einer Hauptabtastrichtung und in einer Richtung senkrecht zur Hauptabtastrichtung, relativ zu der Vorlage (52), auszuführen.

**10.** Bildverarbeitungsvorrichtung nach einem der Ansprüche 1 bis 9, dadurch gekennzeichnet, daß die Vergrößerungseinrichtung (1, 13, 13S, 13P) betrieben sein kann, um die Vergrößerungsoperation als eine Lebensgröße- Vergrößerung auszuführen.

11. Bildverarbeitungsvorrichtung nach einem der Ansprüche 1 bis 10, gekennzeichnet durch eine Einrichtung zum Erzeugen eines Signals, das die Bildverarbeitung vor der Vergrößerung, während der Vergrößerung und der Bildverarbeitung nach der Vergrößerung jeweils in der Form von seriellen Daten befiehlt.

12. Bildverarbeitungsvorrichtung nach einem der Ansprüche 1 bis 11, gekennzeichnet durch eine Bedienungs-/ Anzeigeeinheit-Einrichtung (Fig. 108) zum Ermöglichen von manueller Wahl oder Bildverarbeitungsoperationen, die von der Vorrichtung auszuführen sind, wobei die Bedienungs-/Anzeigeeinheit-Einrichtung mindestens einen Zehn-Tasten-Block, einen Anzeigeteilbereich, einen Bedienungsteilbereich zum Einstellen der gewünschten Vergrößerung, eine Bedienungsteilbereich zum Einstellen der Dichte, eine Steuerteilbereich zum Farbwechseln, Entfärben oder Malen; einen Bedienungsteilbereich zum Bildextrahieren, einen Bedienungsteilbereich zum Löschen, einen Bedienungsteilbereich zum Bildumkehren, einen Bedienungsteilbereich zum Kantenextrahieren, einen Bedienungsteilbereich zum Festlegen eines Attributs des Bildes und eine Löschtaste enthält.

## Revendications

1. Appareil de traitement d'images pour traiter une image d'une zone désignée d'un original en couleurs (52), ledit appareil comprenant:

   un moyen de désignation d'agrandissement pour fournir un signal représentatif d'un agrandissement désiré de ladite zone désignée; et

   un moyen de traitement de signaux (1,420,500) pour fournir un signal représentatif de l'image agrandie désirée de ladite zone désignée;

   caractérisé par:

   un moyen de formation de signaux d'image (84,100,104,105) pour balayer ledit original en couleurs et former un signal d'image représentatif de celui-ci et aussi un signal de contrôle de zone représentatif de ladite zone de l'original désignée par une marque associée à l'original en cours de balayage;

   ledit signal d'image comportant un signal de données de densité représentatif des densités des pixels dudit original et un signal de données de couleur représentatif des couleurs desdits pixels;

   ledit moyen de traitement de signaux (1,420,500) comporte un moyen d'agrandissement (1,13,13S,13P) actionnable pour appliquer le même agrandissement désiré audit signal d'image et audit signal de contrôle de zone; et

   ledit moyen d'agrandissement (1,13,13S,13P) comportant un moyen de variation de signal de densité (13) pour échantillonner ledit signal de données de densité à de nouveaux intervalles de pixels conformément audit agrandissement désiré pour former de nouveaux signaux de données de densité, et un moyen de variation de signal de contrôle de zone (13S) pour échantillonner ledit signal de contrôle de zone aux nouveaux intervalles de pixels conformément audit même agrandissement désiré pour former de nouveaux signaux de contrôle.

2. Appareil de traitement d'images selon la revendication 1, caractérisé par un moyen pour générer un signal de mode pour désigner un mode désiré d'une pluralité de modes de traitement comportant une opération de traitement d'image au sein de ladite zone désignée, une opération de traitement d'image en dehors de ladite zone désignée, et un traitement d'image de toute la zone dudit original (52).

3. Appareil de traitement d'images selon la revendication 1 ou la revendication 2, caractérisé en ce que ledit moyen de formation de signaux d'image (84,100,104,105) est adapté pour détecter une marque dessinée sur l'original avec un marqueur pour désigner ladite zone et pour générer ledit signal de contrôle de zone en fonction de ladite marque.

4. Appareil de traitement d'images selon la revendication 3, caractérisé en ce que ledit signal de contrôle de zone utilise un code de couleur représentatif d'une couleur de ladite marque.

5. Appareil de traitement d'images selon l'une quelconque des revendications 1 à 4, caractérisé par un moyen (420) pour effectuer un traitement sélectionné parmi un traitement d'extraction, un traitement d'effacement, un traitement de décoloration, et un traitement de coloriage en fonction dudit signal de contrôle de zone avant ledit agrandissement.

6. Appareil de traitement d'images selon l'une quelconque des revendications 1 à 5, caractérisé par un moyen (440,470,460,600) pour traiter les données de l'image agrandie comportant un moyen pour effectuer au moins un traitement parmi un traitement de demi-teintes, un traitement d'extraction d'arêtes, un traitement d'inversion, et un traitement de valeurs multiples.

7. Appareil de traitement d'images selon la revendication 6, caractérisé en ce que ledit moyen (440) pour effectuer ledit traitement de demi-teintes n'est actionnable que sur une zone de fond dans la zone désignée.

8. Appareil de traitement d'images selon l'une quelconque des revendications 1 à 7, caractérisé par un moyen (800) pour générer un signal d'attribut pour indiquer un attribut d'une image, et ledit moyen d'agrandissement (13,13S,13P) agrandit aussi ledit signal d'attribut jusqu'au même dit agrandissement.

9. Appareil de traitement d'images selon l'une quelconque des revendications 1 à 8, caractérisé en ce que ledit moyen d'agrandissement (1,13,13S,13P) est actionnable pour effectuer ledit traitement d'agrandissement dans un sens de balayage principal et dans un sens perpendiculaire au sens de balayage principal, par rapport audit original (52).

10. Appareil de traitement d'images selon l'une quelconque des revendications 1 à 9, caractérisé en ce que ledit moyen d'agrandissement (1,13,13S,13P) est actionnable pour effectuer ladite opération d'agrandissement comme un agrandissement grandeur réelle.

11. Appareil de traitement d'images selon l'une quelconque des revendications 1 à 10, caractérisé par un moyen pour générer un signal commandant ledit traitement d'image avant l'agrandissement, durant ledit agrandissement, et ledit traitement d'image après l'agrandissement, chacun sous la forme de données série.

12. Appareil de traitement d'images selon l'une quelconque des revendications 1 à 11, caractérisé par un moyen d'unité de fonctionnement/d'affichage (figure 108) pour permettre la réalisation par l'appareil d'opérations de sélection ou de traitement d'image manuelles, ledit moyen d'unité de fonctionnement/d'affichage comportant au moins un élément parmi un clavier à dix touches, une partie d'affichage, une partie opérationnelle de réglage dudit agrandissement désiré, une partie opérationnelle de réglage de densité, une partie de contrôle de changement de couleur, décoloration ou coloriage; une partie opérationnelle d'extraction d'image, une partie opérationnelle d'effacement, une partie opérationnelle d'inversion d'image, une partie opérationnelle d'extraction d'arêtes, une partie opérationnelle de désignation d'un attribut de l'image, et une touche de remise à zéro.

F I G. 1

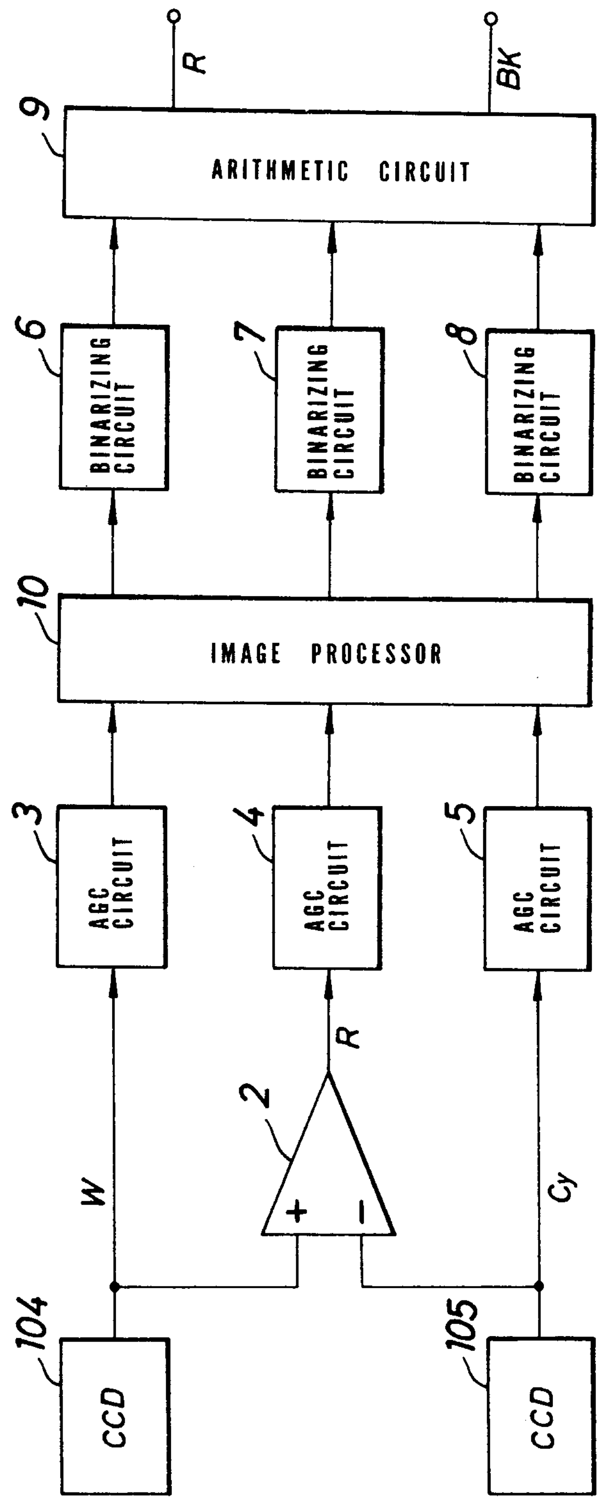
ARITHMETIC CIRCUIT
R
BK
9
BINARIZING CIRCUIT
6
7
8
IMAGE PROCESSOR
10
AGC CIRCUIT
3
4
5
R
2
W
Cy
CCD
104
105

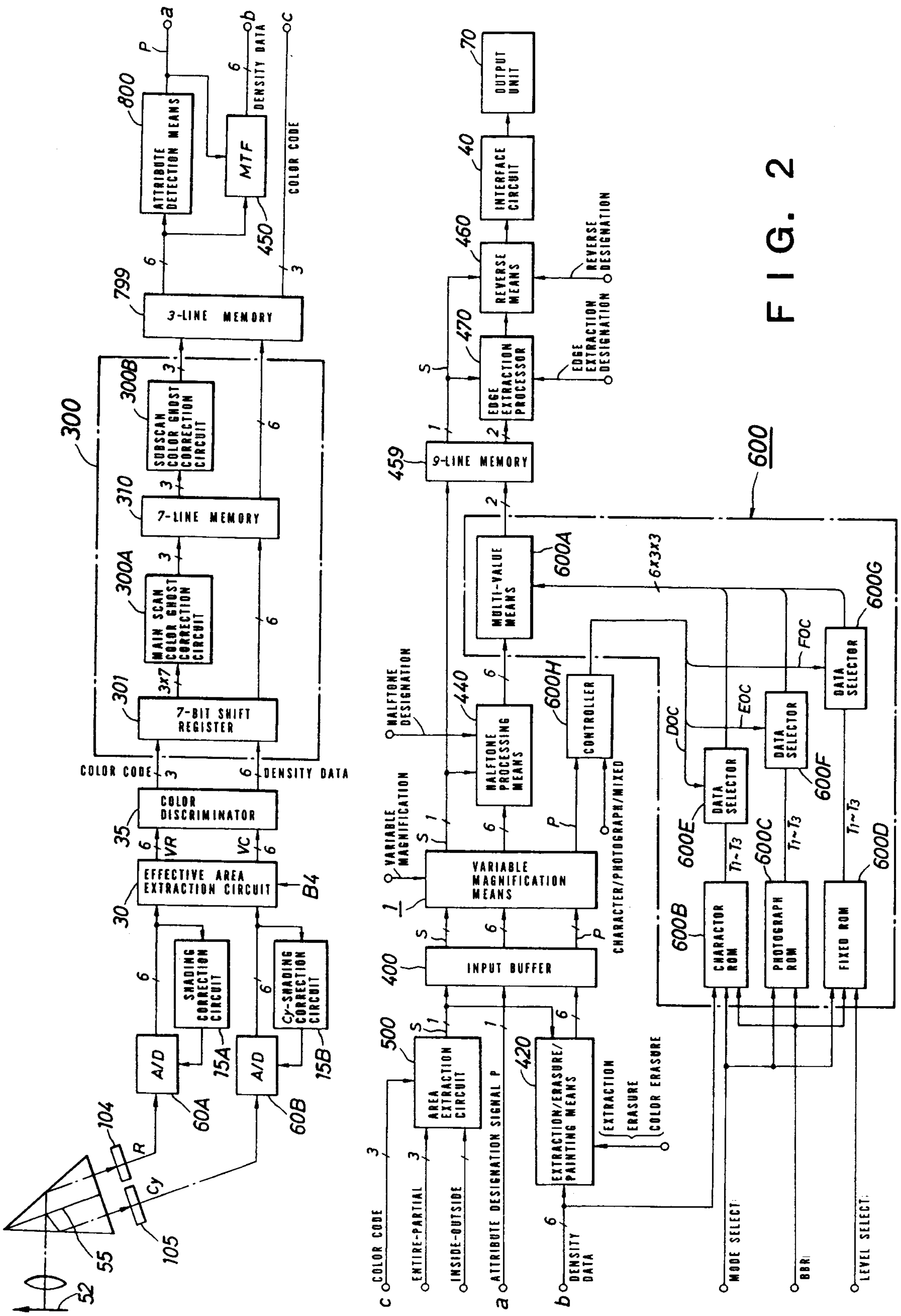

ATTRIBUTE DETECTION MEANS
MTF
DENSITY DATA
COLOR CODE
3-LINE MEMORY
SUBSCAN COLOR GHOST CORRECTION CIRCUIT
7-LINE MEMORY
MAIN SCAN COLOR GHOST CORRECTION CIRCUIT
7-BIT SHIFT REGISTER
COLOR DISCRIMINATOR
EFFECTIVE AREA EXTRACTION CIRCUIT
SHADING CORRECTION CIRCUIT
Cy-SHADING CORRECTION CIRCUIT
A/D
OUTPUT UNIT
INTERFACE CIRCUIT
REVERSE MEANS
REVERSE DESIGNATION
EDGE EXTRACTION PROCESSOR
EDGE EXTRACTION DESIGNATION
9-LINE MEMORY
MULTI-VALUE MEANS
HALFTONE DESIGNATION
HALFTONE PROCESSING MEANS
CONTROLLER
DATA SELECTOR
VARIABLE MAGNIFICATION
VARIABLE MAGNIFICATION MEANS
CHARACTER/PHOTOGRAPH/MIXED
INPUT BUFFER
CHARACTOR ROM
PHOTOGRAPH ROM
FIXED ROM
AREA EXTRACTION CIRCUIT
EXTRACTION/ERASURE/PAINTING MEANS
EXTRACTION
ERASURE
COLOR ERASURE
ENTIRE-PARTIAL
INSIDE-OUTSIDE
ATTRIBUTE DESIGNATION SIGNAL P
MODE SELECT
BBR
LEVEL SELECT


F I G. 2

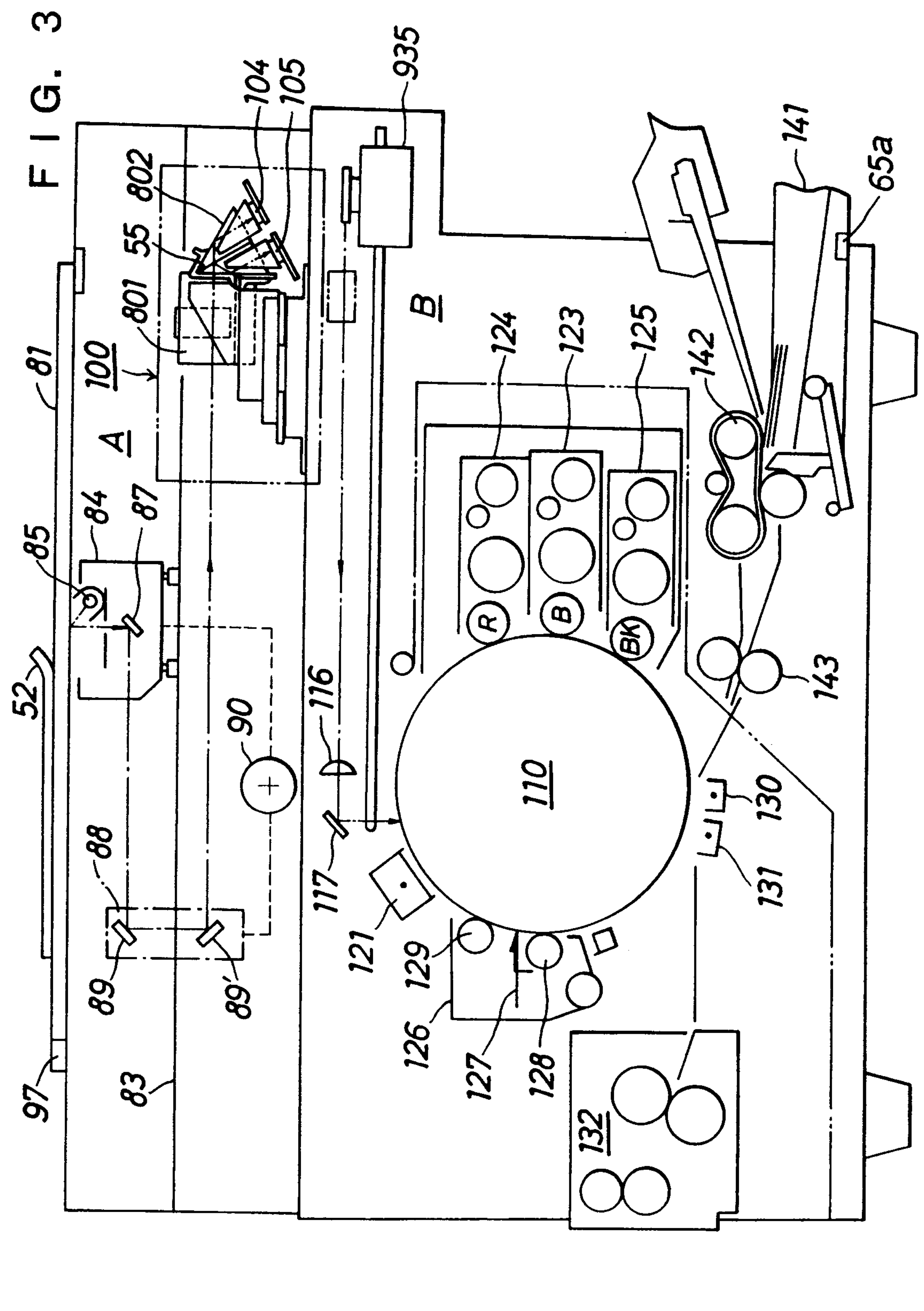
81
100
A
801
55
802
104
105
935
B
124
123
125
142
141
65a
84
85
87
52
90
116
110
R
B
BK
143
130
131
117
121
129
88
89
89'
83
97
126
127
128
132

FIG. 3

FIG. 4

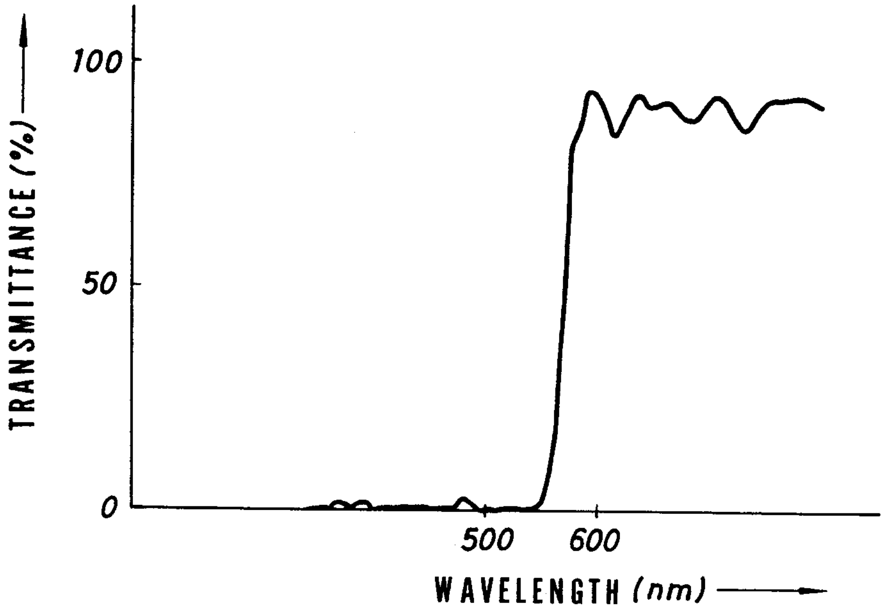
TRANSMITTANCE (%)
100
50
0
500
600
WAVELENGTH (nm)

FIG. 5

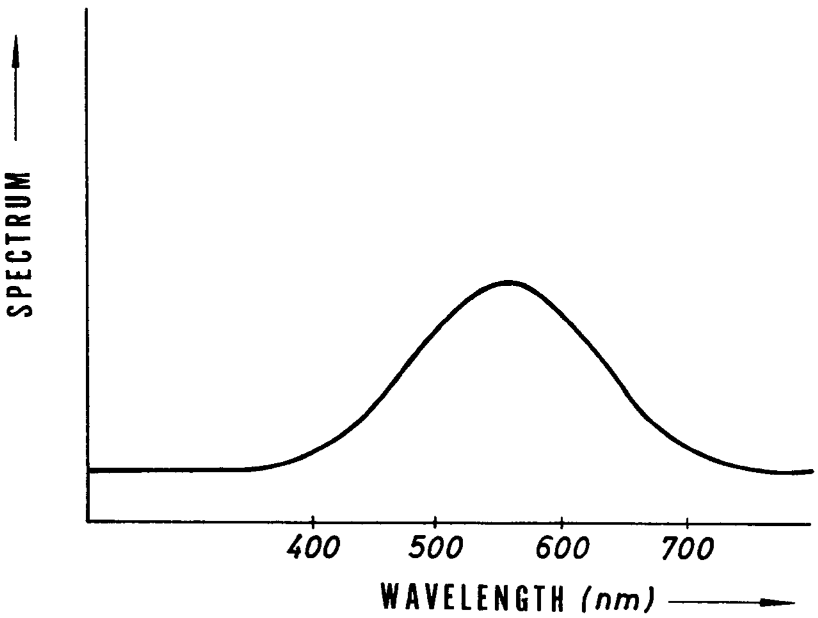
SPECTRUM
400
500
600
700
WAVELENGTH (nm)

F I G. 6

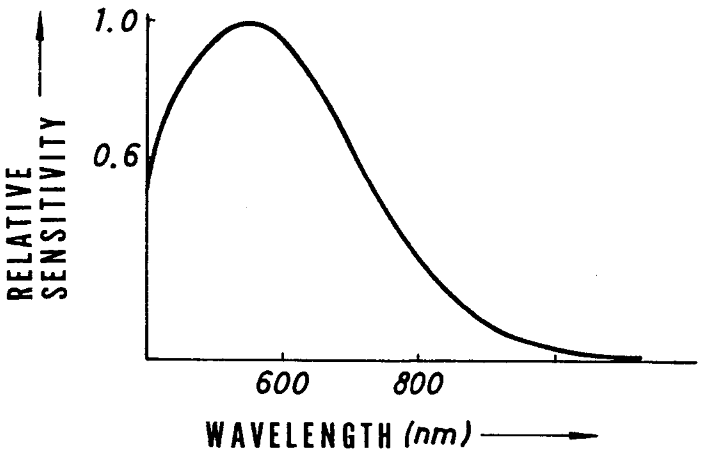
RELATIVE SENSITIVITY
1.0
0.6
600
800
WAVELENGTH (nm)

F I G. 7

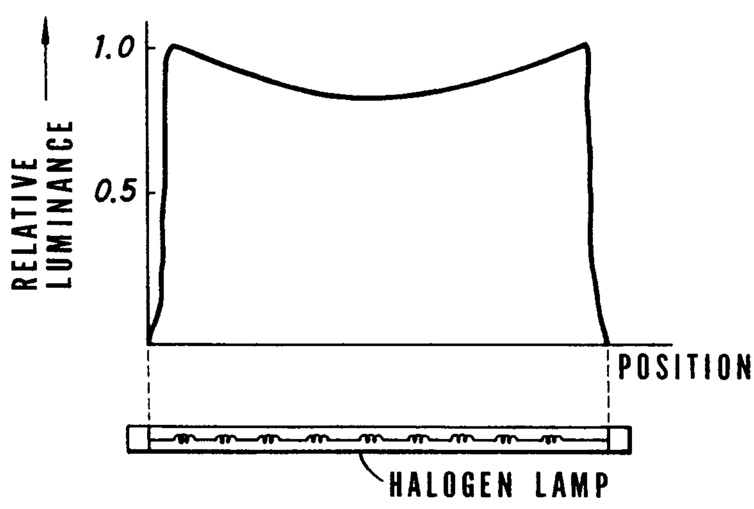
RELATIVE LUMINANCE
1.0
0.5
POSITION
HALOGEN LAMP

FIG. 8A
WHITE SIGNAL (BEFORE CORRECTION)

FIG. 8B
REFERENCE SIGNAL

FIG. 8C
WHITE SIGNAL (AFTER CORRECTION)

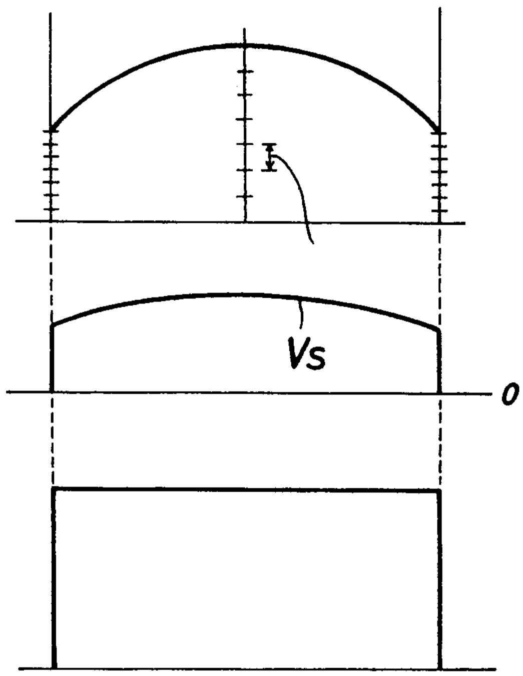


FIG. 12A
IMAGE SIGNAL

FIG. 12B
REFERENCE SIGNAL

FIG. 12C
OUTPUT IMAGE SIGNAL

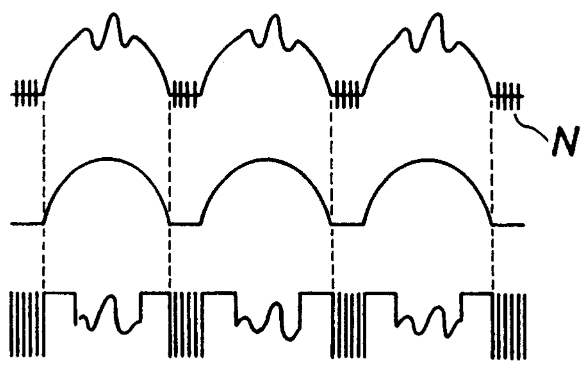

F I G. 9

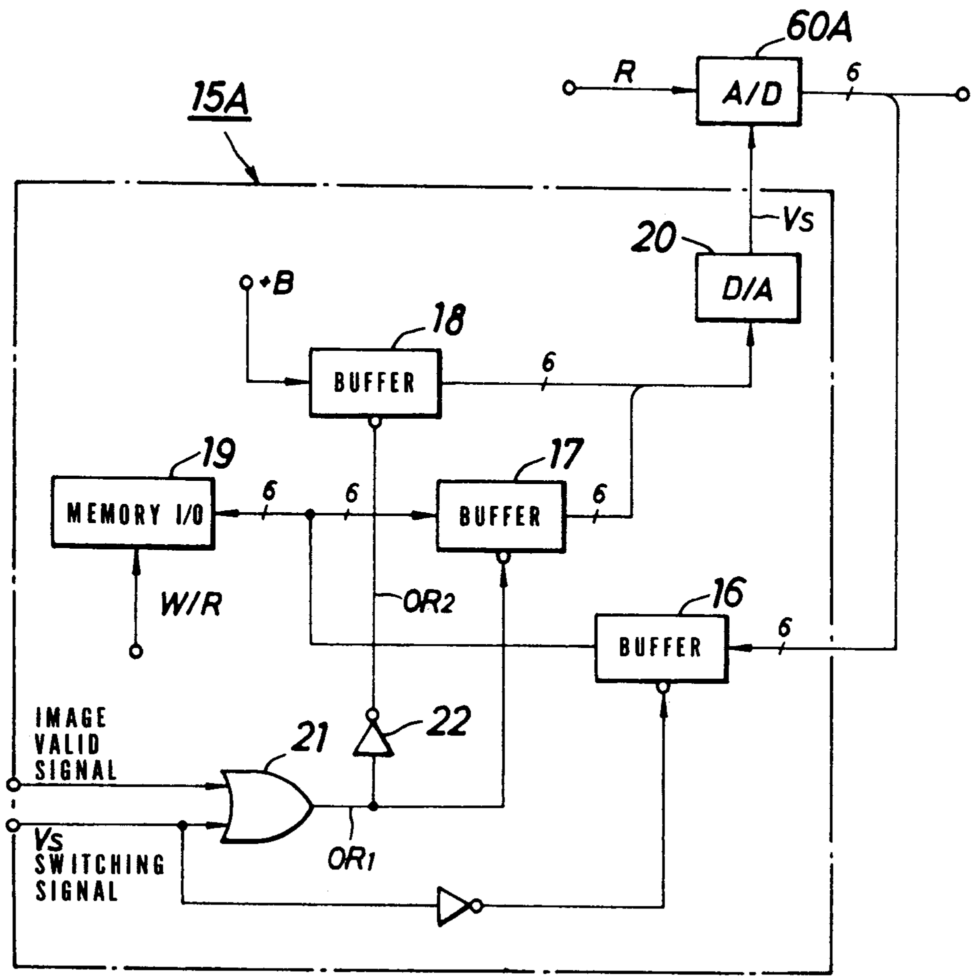
60A
R
A/D
6
15A
Vs
20
D/A
+B
18
BUFFER
6
19
17
MEMORY I/O
6
6
BUFFER
6
W/R
OR2
16
BUFFER
6
IMAGE
VALID
SIGNAL
21
22
Vs
SWITCHING
SIGNAL
OR1

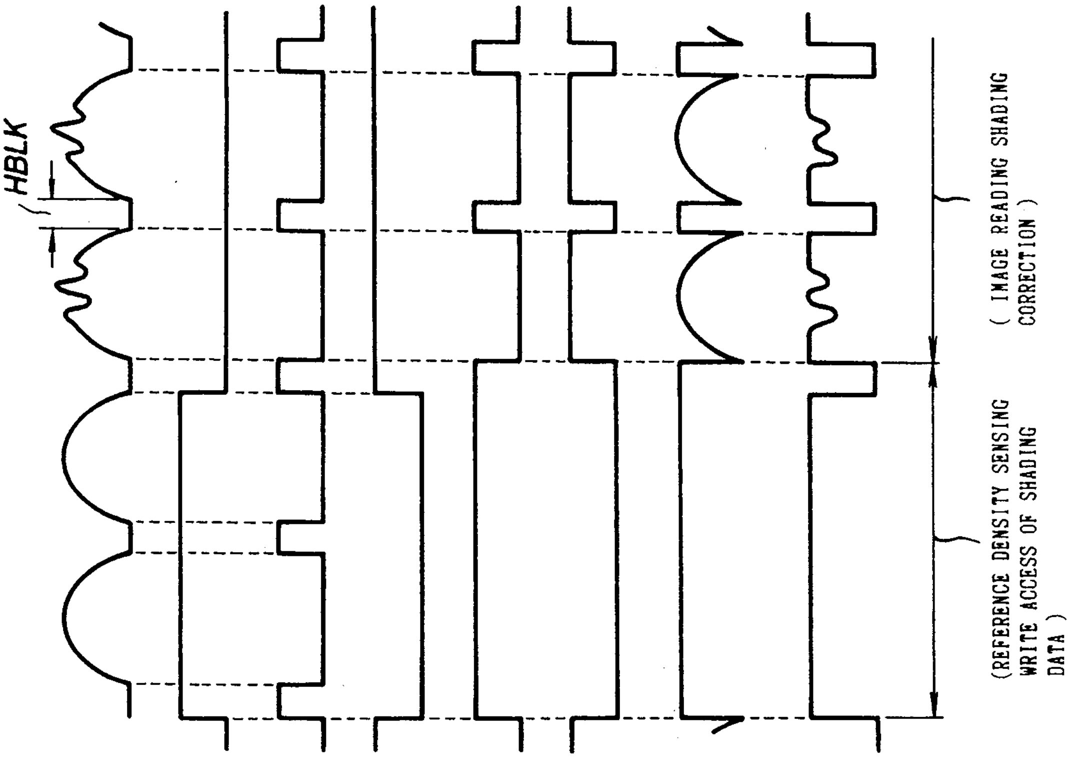


FIG.10A IMAGE SIGNAL

FIG.10B SWITCHING SIGNAL

FIG.10C IMAGE VALID SIGNAL

FIG.10D SWITCHING SIGNAL

FIG.10E OUTPUT $OR_1$

FIG.10F OUTPUT $OR_2$

FIG.10G REFERENCE SIGNAL

FIG.10H OUTPUT IMAGE DATA

F I G. 11

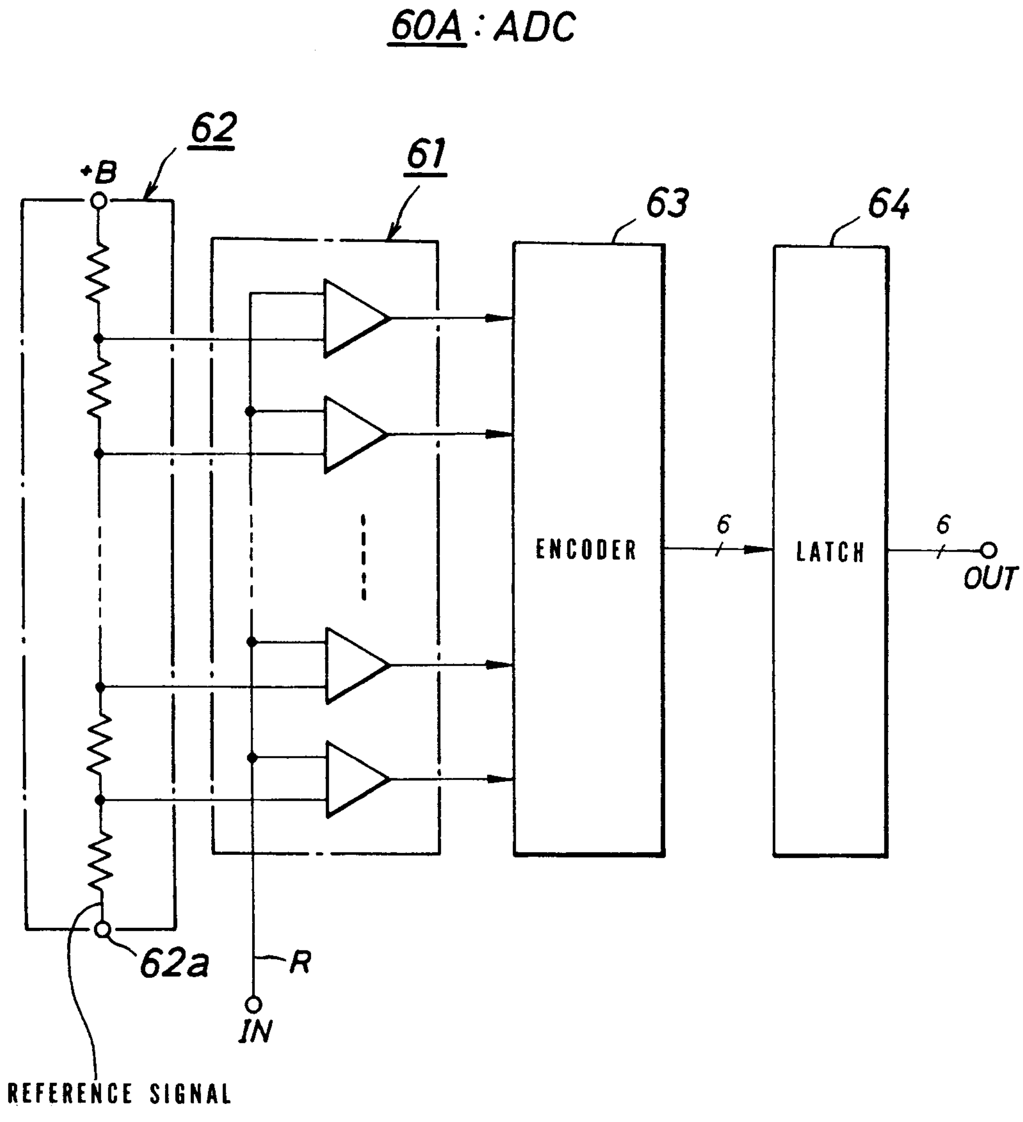
60A : ADC
62
+B
61
63
64
ENCODER
6
LATCH
6
OUT
62a
R
IN
REFERENCE SIGNAL

F I G. 13A

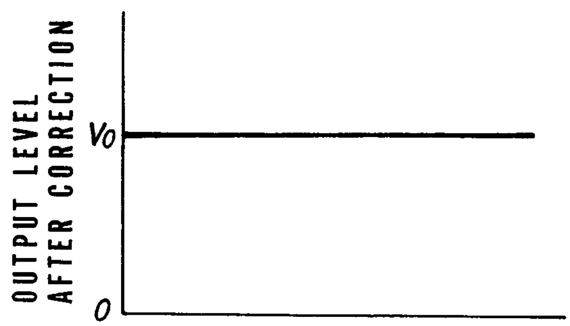


( $V_{in}$ > A/D FULL SCALE = 30% OR MORE )

F I G. 13B

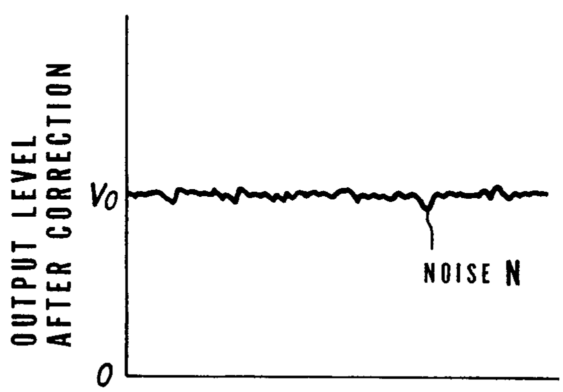


( $V_{in}$ = A/D FULL SCALE = 15% )

F I G. 14

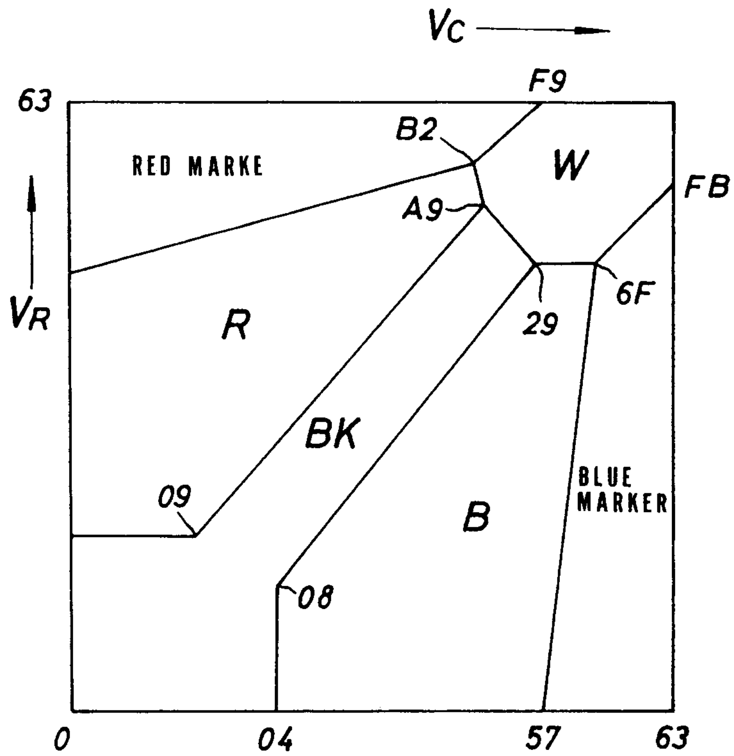


F I G. 15

| COLOR | COLOR CODE | |
|---|---|---|
| | MARKER | COLOR |
| BLACK | 0 | 0 0 |
| BLUE | 0 | 0 1 |
| RED | 0 | 1 0 |
| WHITE | 0 | 1 1 |
| BLUE MARKER | 1 | 0 1 |
| RED MARKER | 1 | 1 0 |

F I G. 16A

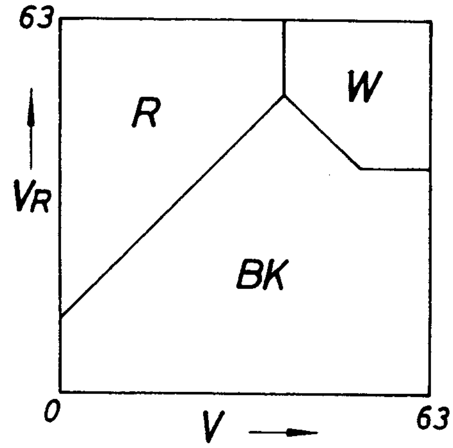


F I G. 16B

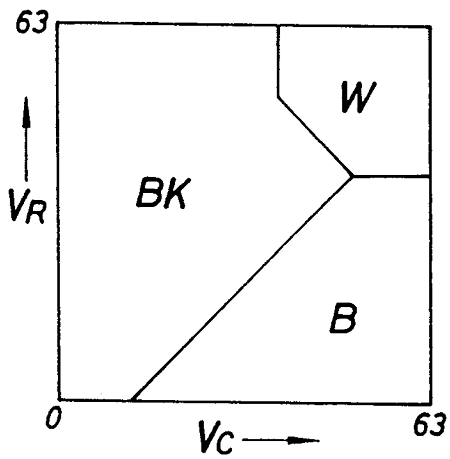


F I G. 16C

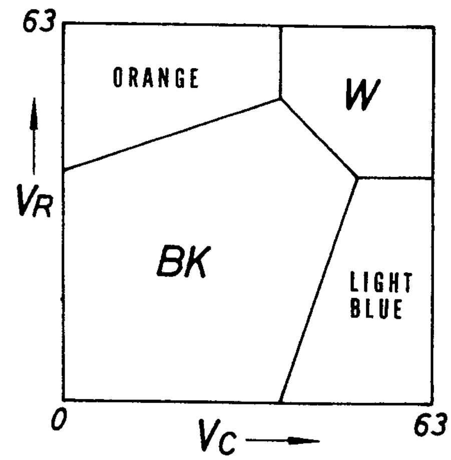

FIG. 17

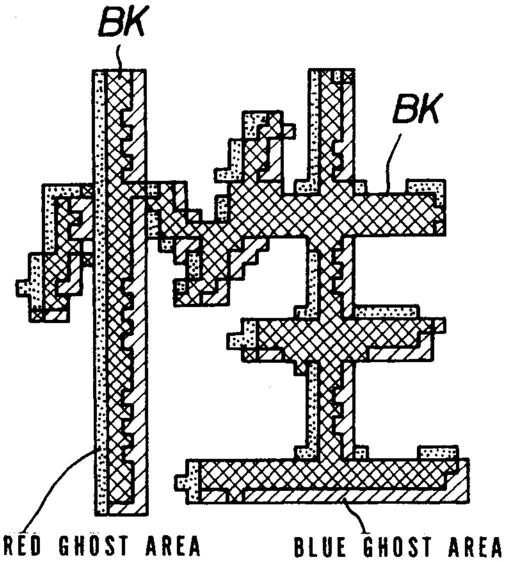


FIG. 18A

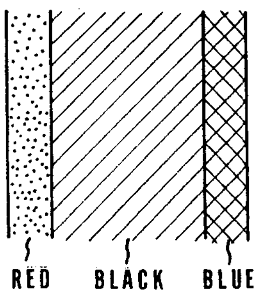


FIG. 18B

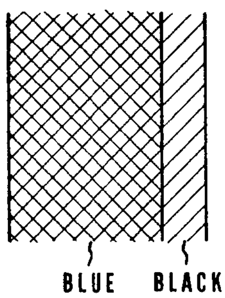


FIG. 18C

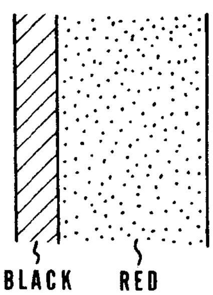


FIG. 19

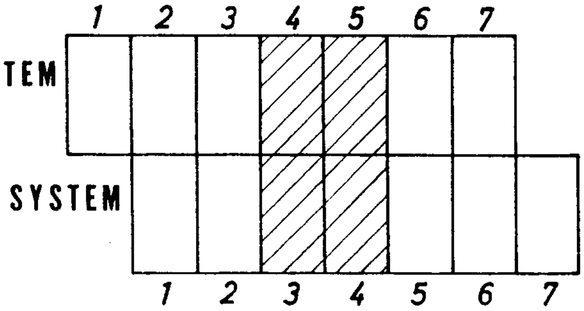

FIG. 20A

| BLACK LINE ↓PIXEL NO. | | CYAN SYSTEM CCD | RED SYSTEM CCD | COLOR SEPARATION OUTPUT |
|---|---|---|---|---|
| | 1 | W | W | W |
| | 2 | W | W | W |
| | 3 | W | BK | (B) |
| | 4 | BK | BK | BK |
| | 5 | BK | W | (R) |
| | 6 | W | W | W |
| | 7 | W | W | W |

BK;BLACK
B;BLUE
R;RED

FIG. 20B

| RED LINE ↓PIXEL NO. | | CYAN SYSTEM CCD | RED SYSTEM CCD | COLOR SEPARATION OUTPUT |
|---|---|---|---|---|
| | 1 | W | W | W |
| | 2 | W | W | W |
| | 3 | W | R | (BK) |
| | 4 | R | R | R |
| | 5 | R | W | R |
| | 6 | W | W | W |
| | 7 | W | W | W |

BK;BLACK
R;RED

FIG. 20C

| BLUE LINE ↓PIXEL NO. | | CYAN SYSTEM CCD | RED SYSTEM CCD | COLOR SEPARATION OUTPUT |
|---|---|---|---|---|
| | 1 | W | W | W |
| | 2 | W | W | W |
| | 3 | W | B | B |
| | 4 | B | B | B |
| | 5 | B | W | (BK) |
| | 6 | W | W | W |
| | 7 | W | W | W |

BK;BLACK
B;BLUE

COLOR IN PARENTHESES IS
COLOR GHOST COLOR

F I G. 21

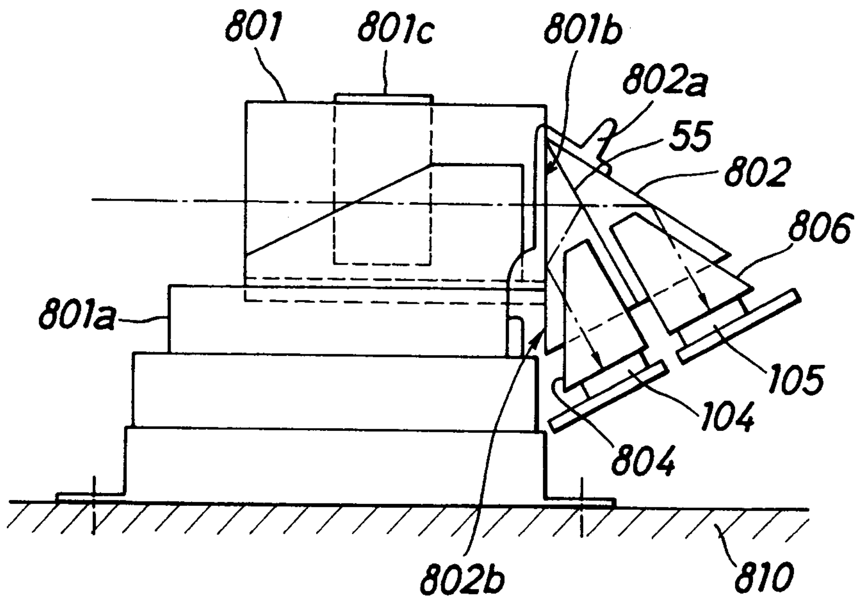
801
801c
801b
802a
55
802
806
801a
105
104
804
802b
810

F I G. 22

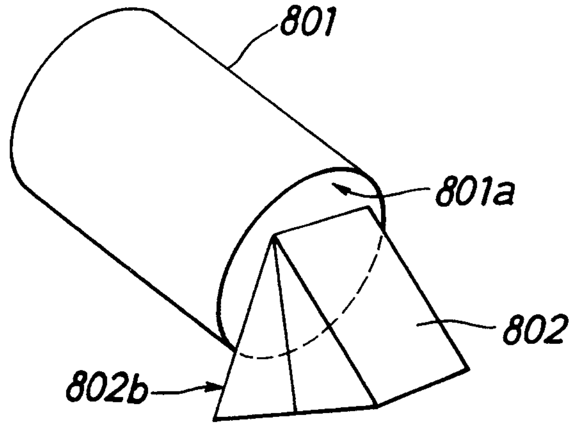
801
801a
802
802b

F I G. 23

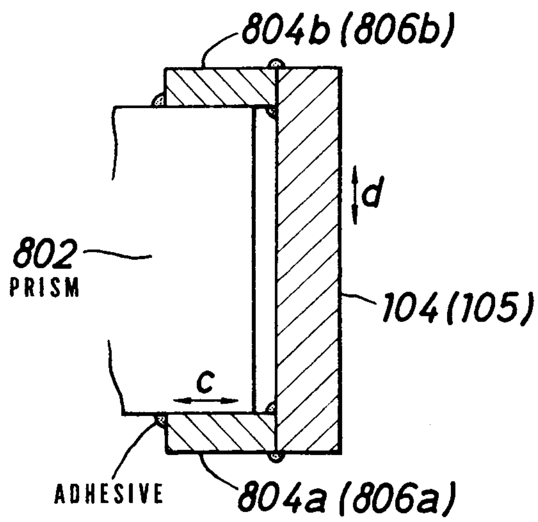
804b (806b)
d
802
PRISM
104 (105)
c
ADHESIVE
804a (806a)

F I G. 24

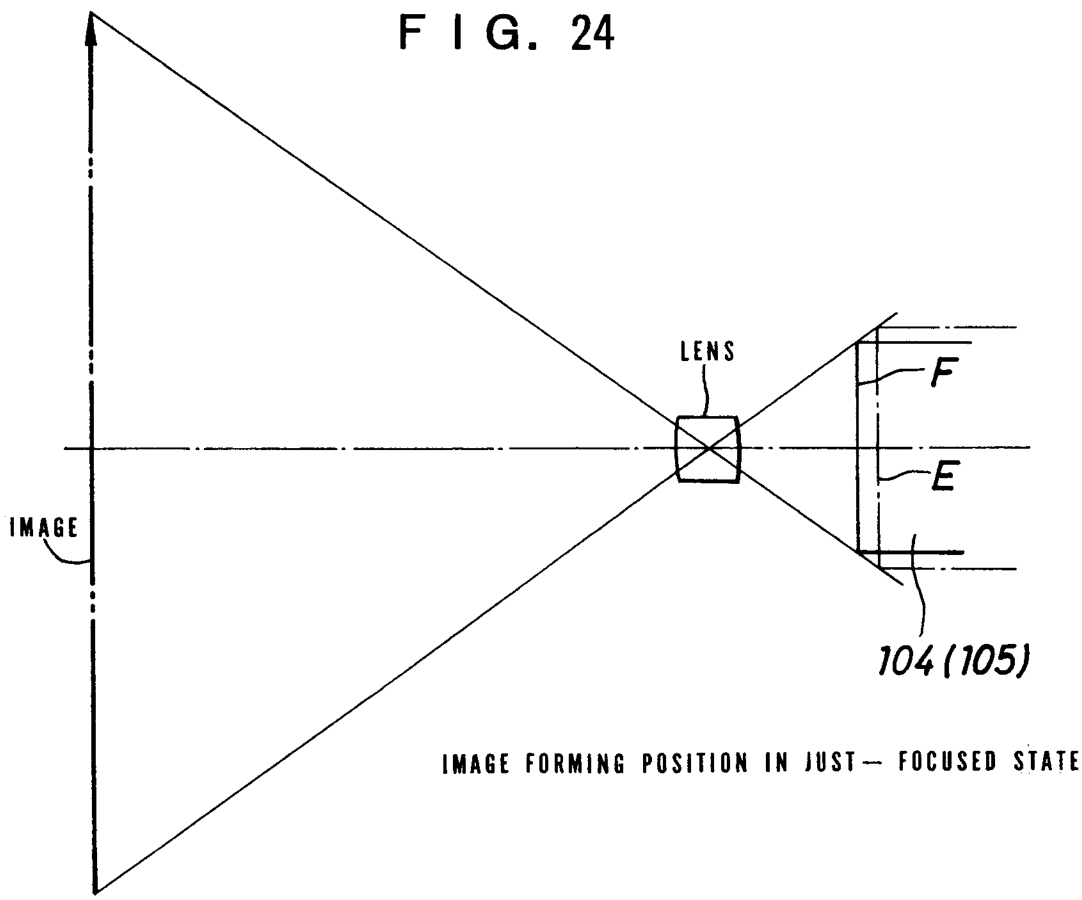
LENS
F
E
IMAGE
104 (105)
IMAGE FORMING POSITION IN JUST– FOCUSED STATE

# F I G. 25

| NUMBER | COLOR PATTERN | CHANGE IN PIXEL OF INTEREST |
|---|---|---|
| 1 | W W B B BK BK BK | BLUE → BLACK |
| 2 | W W B B B W W | BLUE → BLUE |
| 3 | W W W R BK BK BK | RED → BLACK |
| 4 | W W R R R W W | RED → RED |

SURROUNDING PIXELS

PIXEL OF INTEREST

SURROUNDING PIXELS

# F I G. 26

| N | M | NUMBER OF COLOR PATTERNS | PATTERN SIZE |
|---|---|---|---|
| 2 (WHITE BLACK) | 3 | 8 | 1 x 3 |
| | 5 | 32 | 1 x 5 |
| | 7 | 128 | 1 x 7 |
| 3 (WHITE BLACK RED) | 3 | 27 | 1 x 3 |
| | 5 | 243 | 1 x 5 |
| | 7 | 2187 | 1 x 7 |
| 4 (WHITE BLACK RED BLUE) | 3 | 64 | 1 x 3 |
| | 5 | 1024 | 1 x 5 |
| | 7 | 16384 | 1 x 7 |
| | 9 | 262144 | 3 x 3 , 1 x 9 |

F I G. 27

300 COLOR GHOST CORRECTION MEANS

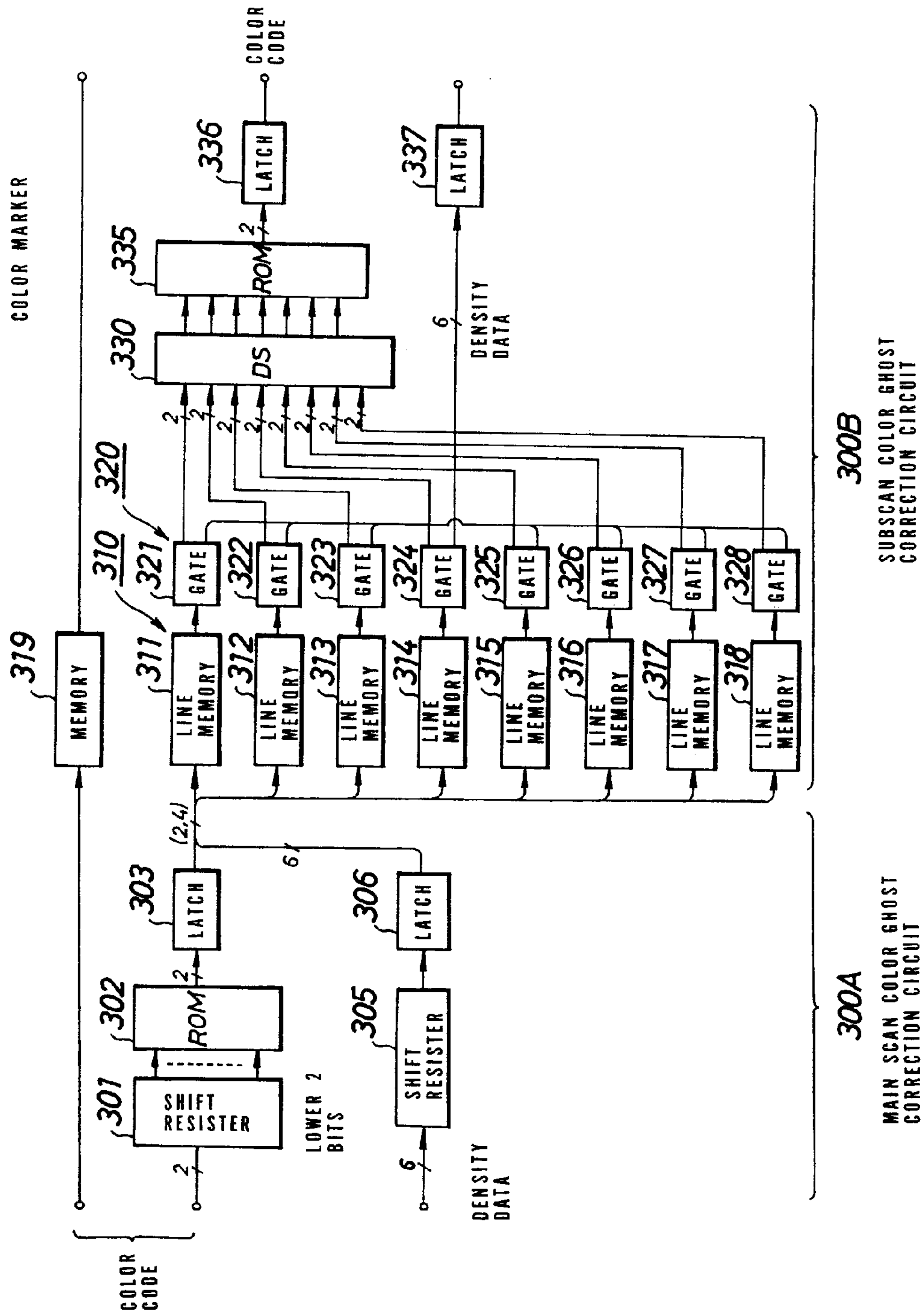

F I G. 28

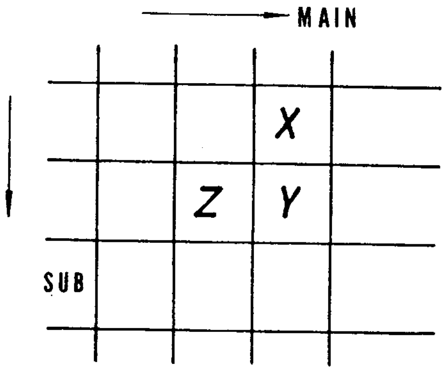


F I G. 29

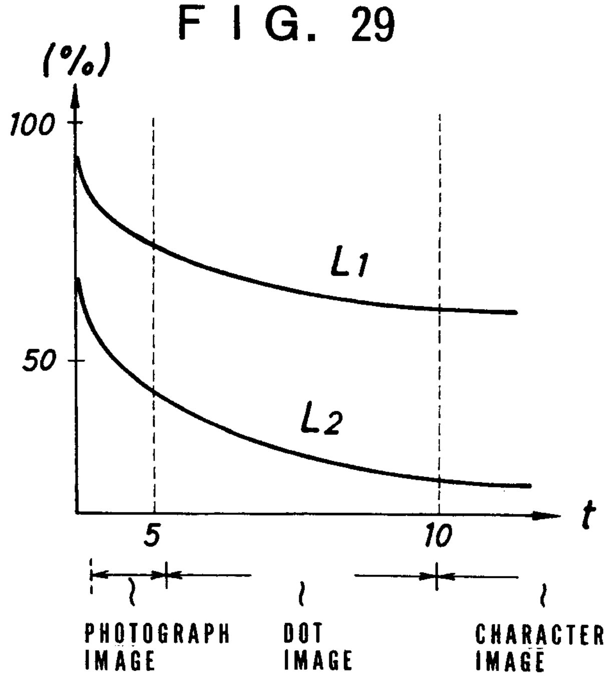


F I G. 30

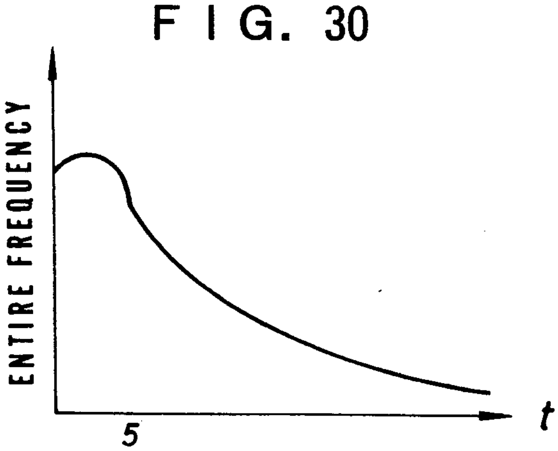

F I G. 31A

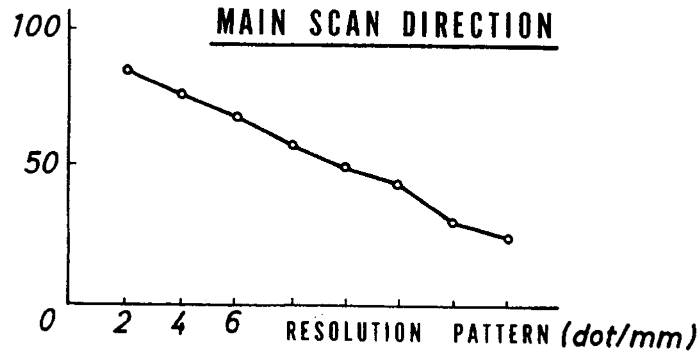


F I G. 31B

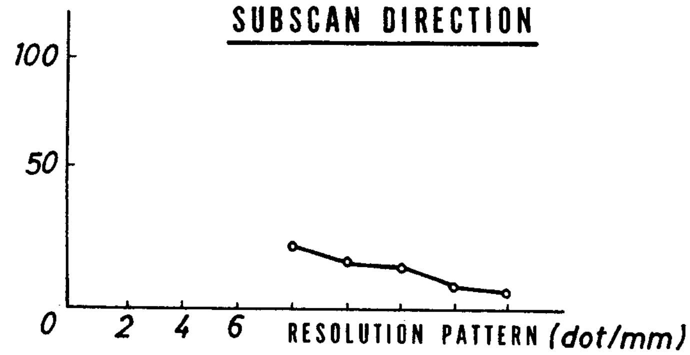


F I G. 32A

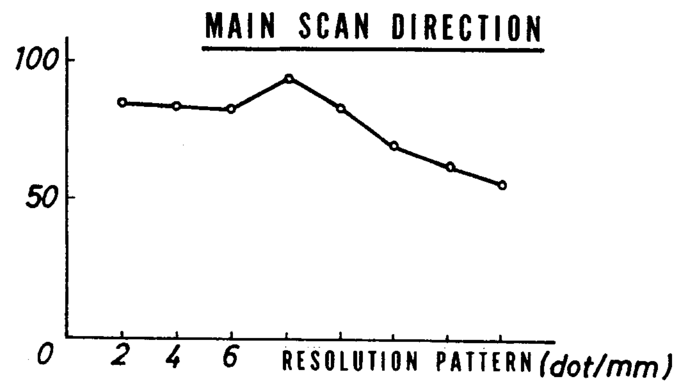


F I G. 32B

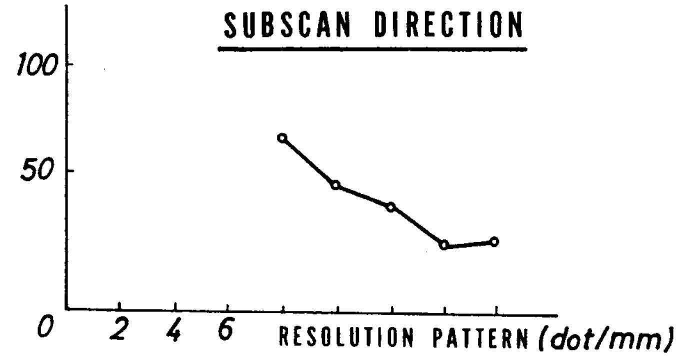

FIG. 33

450: 3 × 3 CONVOLUTION CIRCUIT

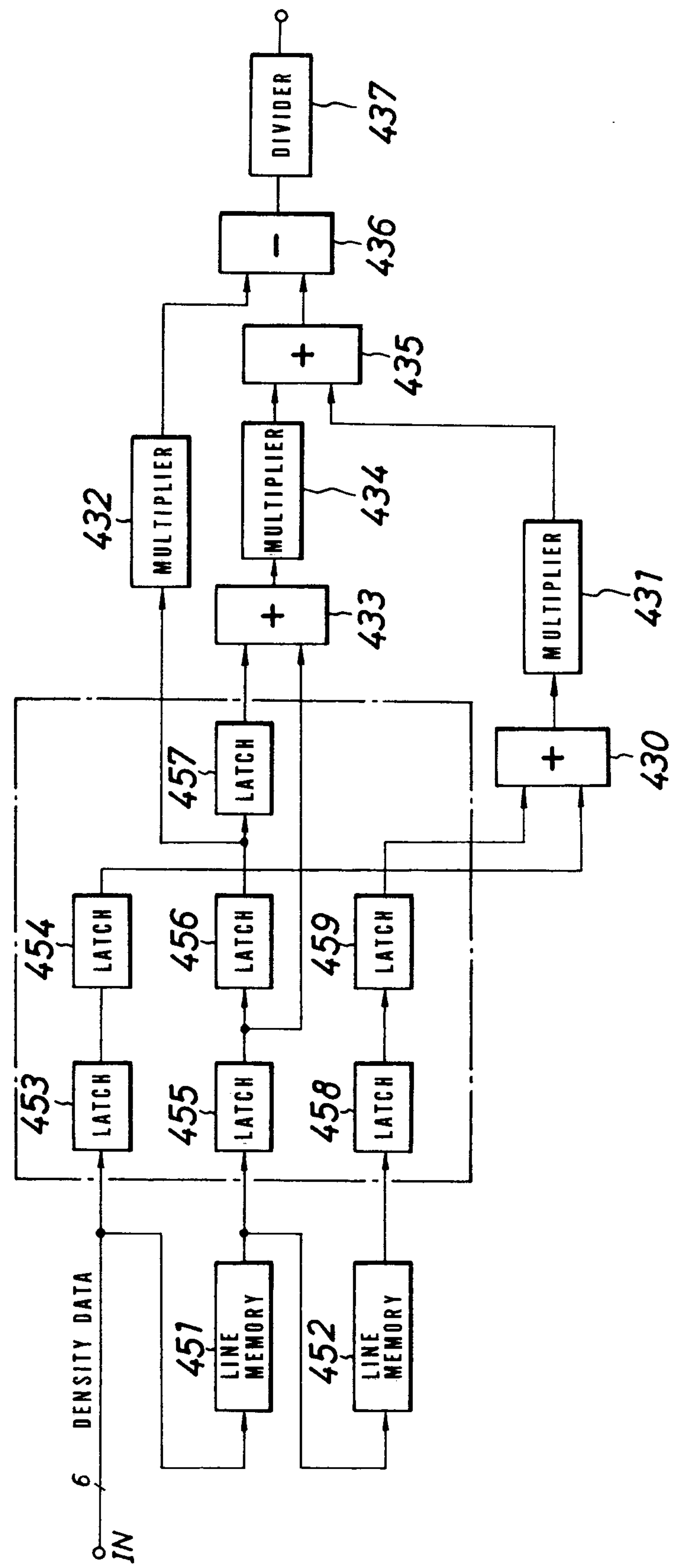

F I G. 34A

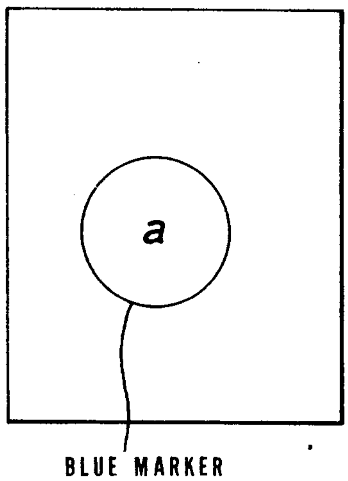


F I G. 34B

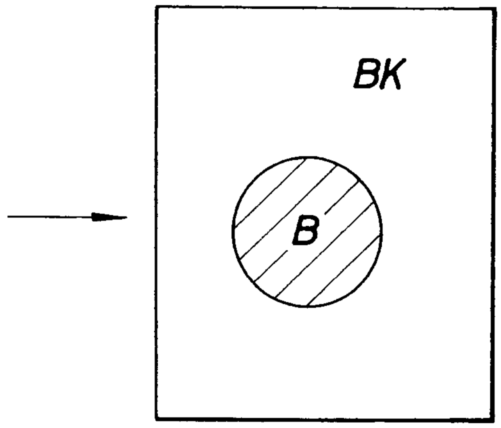


F I G. 35

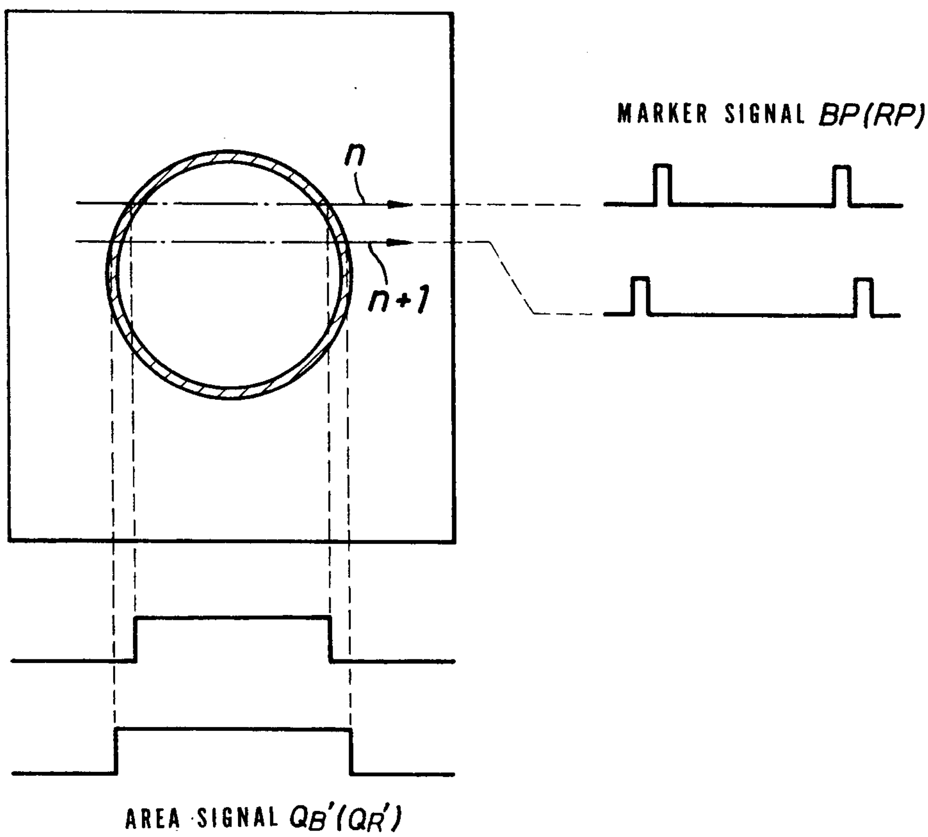

F I G. 36

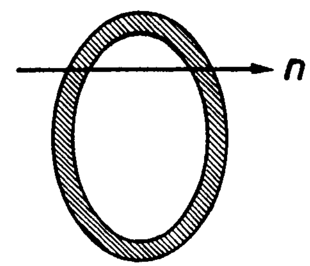


EXTRACTION AREA OF PRESENT LINE

F I G. 37

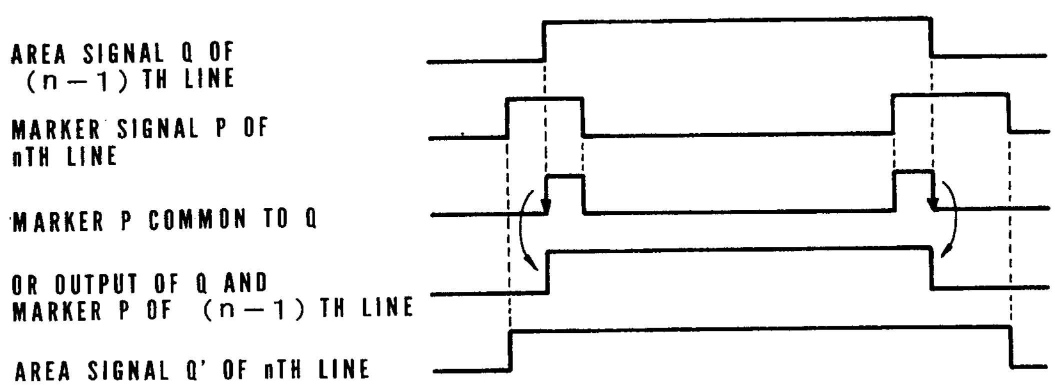

FIG. 38

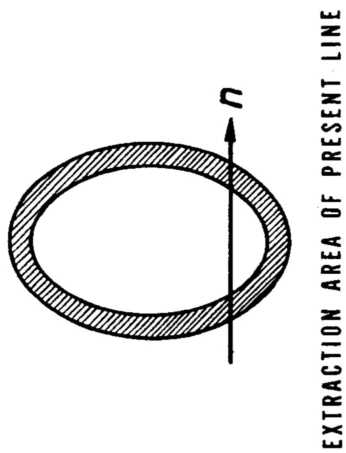
n
EXTRACTION AREA OF PRESENT LINE

FIG. 39

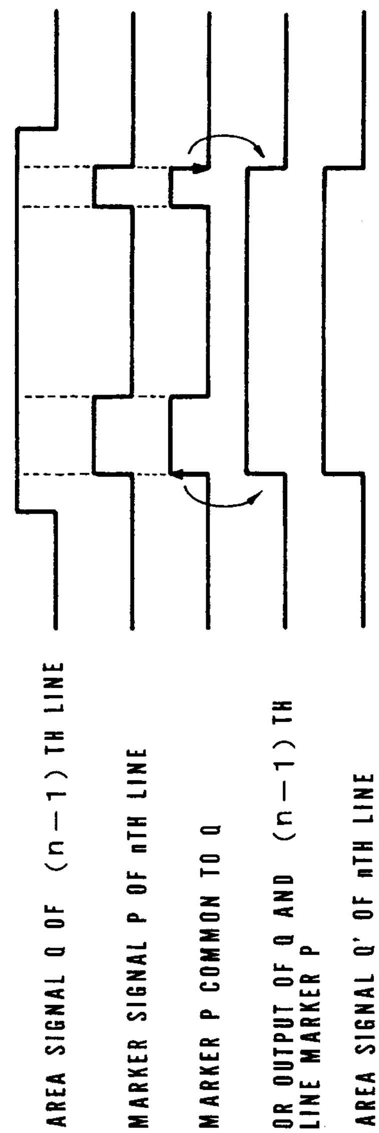
AREA SIGNAL Q OF (n−1) TH LINE
MARKER SIGNAL P OF nTH LINE
MARKER P COMMON TO Q
OR OUTPUT OF Q AND (n−1) TH LINE MARKER P
AREA SIGNAL Q' OF nTH LINE

FIG. 40

500 : AREA EXTRACTION CIRCUIT

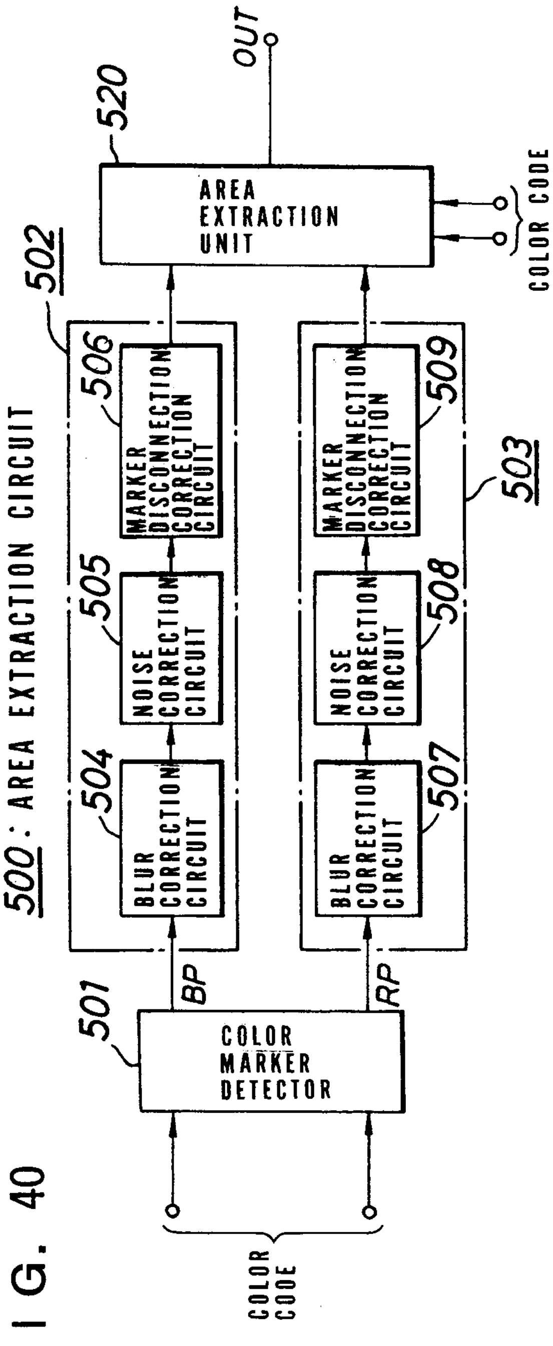


FIG. 41

501 : COLOR MARKER DETECTOR

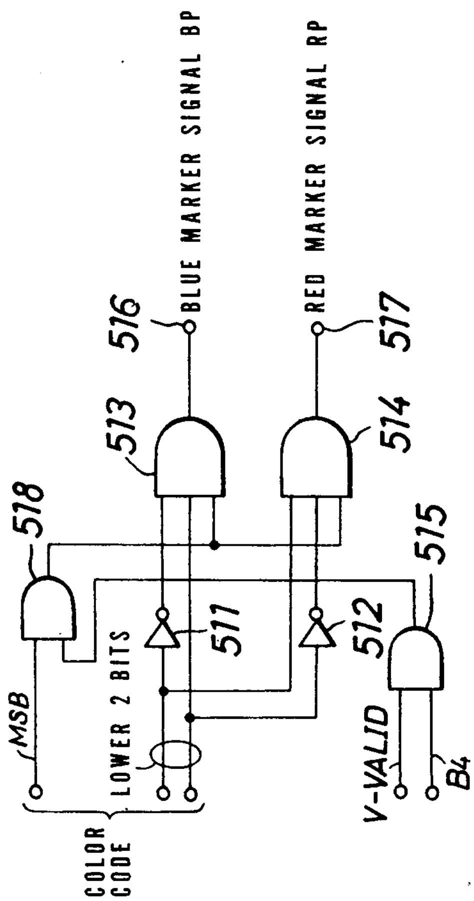

# F I G. 42

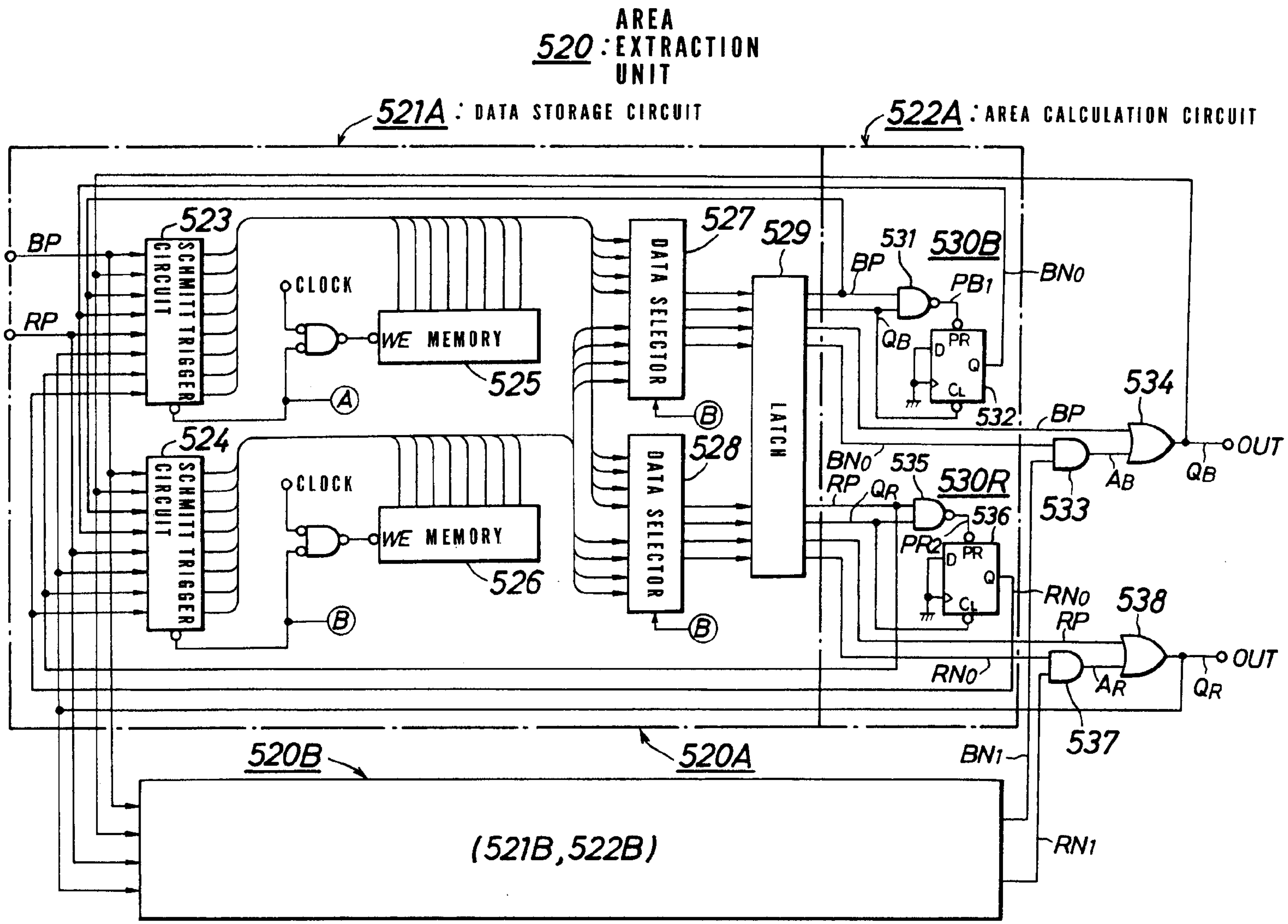
520 : AREA EXTRACTION UNIT
521A : DATA STORAGE CIRCUIT
522A : AREA CALCULATION CIRCUIT
BP
RP
523
SCHMITT TRIGGER CIRCUIT
524
SCHMITT TRIGGER CIRCUIT
CLOCK
CLOCK
A
B
WE MEMORY
525
WE MEMORY
526
DATA SELECTOR
527
DATA SELECTOR
528
B
B
LATCH
529
531
530B
PB1
BN0
QB
532
BP
534
OUT
QB
AB
533
BN0
RP
QR
535
530R
536
PR2
RN0
RP
538
OUT
QR
AR
537
RN0
BN1
RN1
520B
520A
(521B, 522B)

FIG.43A H-VALID SIGNAL
FIG.43B MARKER SIGNAL BP
FIG.43C AREA SIGNAL QB
FIG.43D MARKER SIGNAL BP
FIG.43E AREA SIGNAL QB
FIG.43F PRESET PULSE PB1
FIG.43G NAND OUTPUT BN0
FIG.43H MARKER SIGNAL BP
FIG.43I AREA SIGNAL QB
FIG.43J PRESET PULSE PB2
FIG.43K NAND OUTPUT BN1
FIG.43L NAND OUTPUT BN0
FIG.43M NAND OUTPUT BN1
FIG.43N AND OUTPUT AB
FIG.43O MARKER SIGNAL BP
FIG.43P AREA SIGNAL QB'

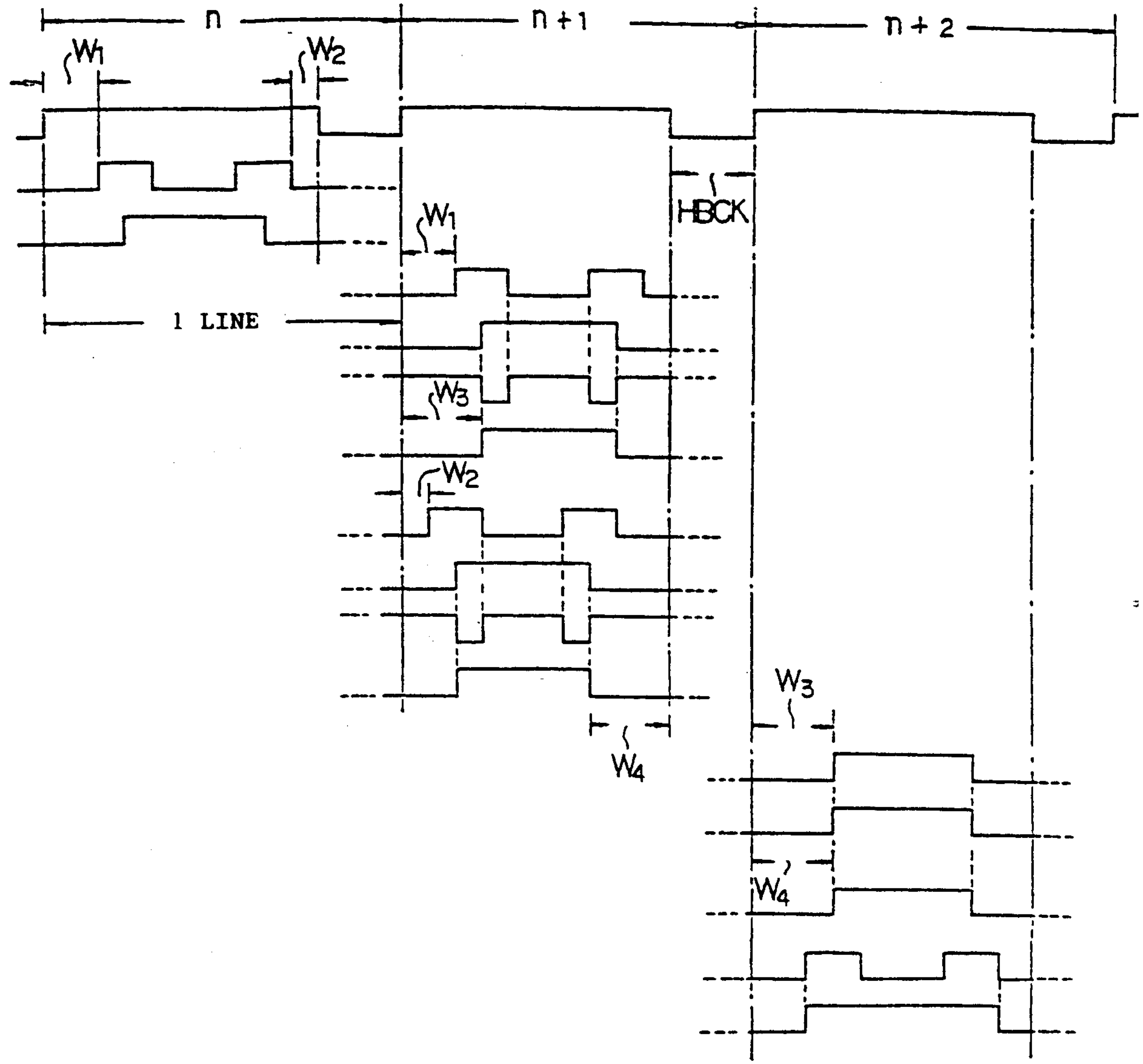

F I G. 44

540 : AREA JUDGEMENT CIRCUIT

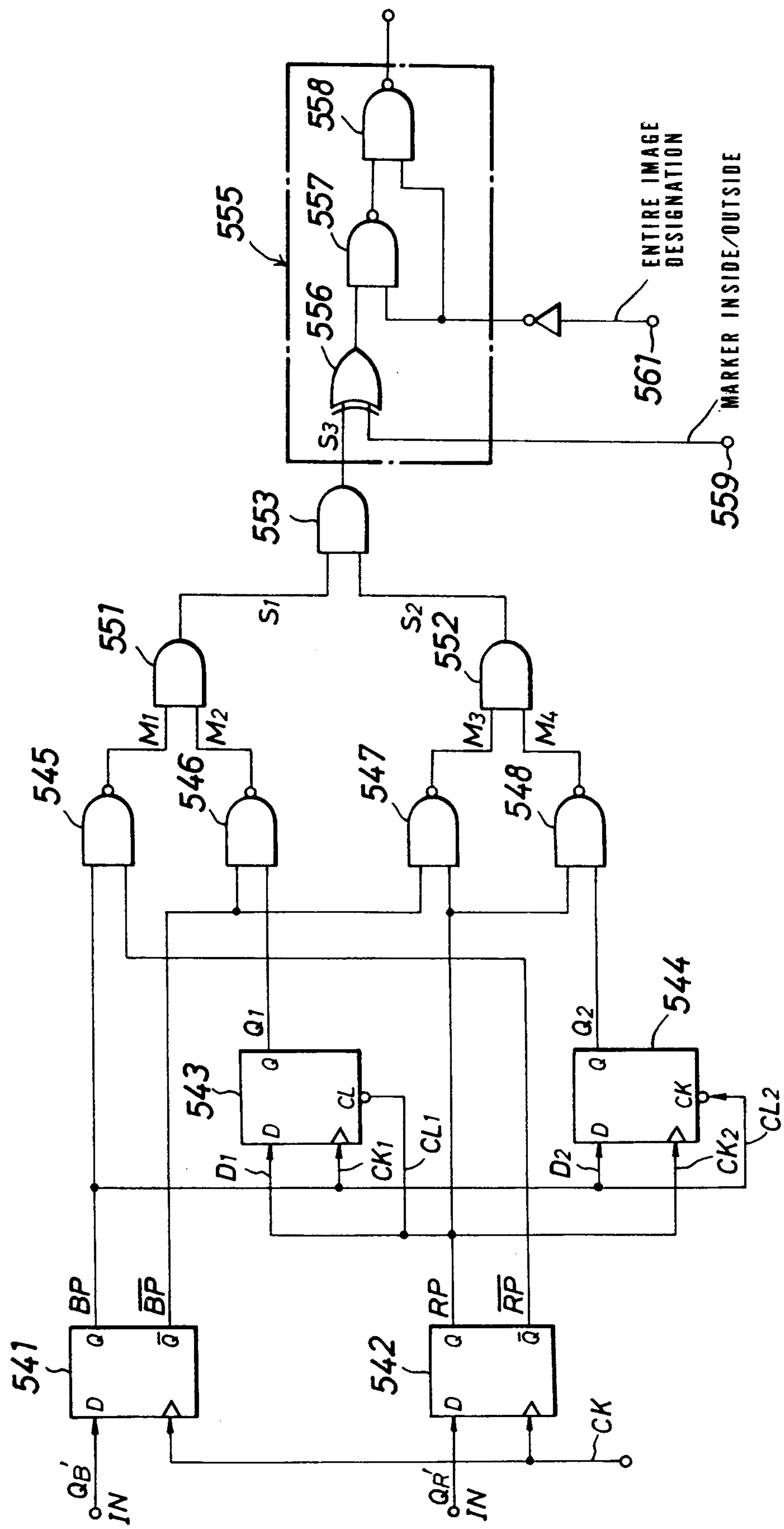

F I G. 45A

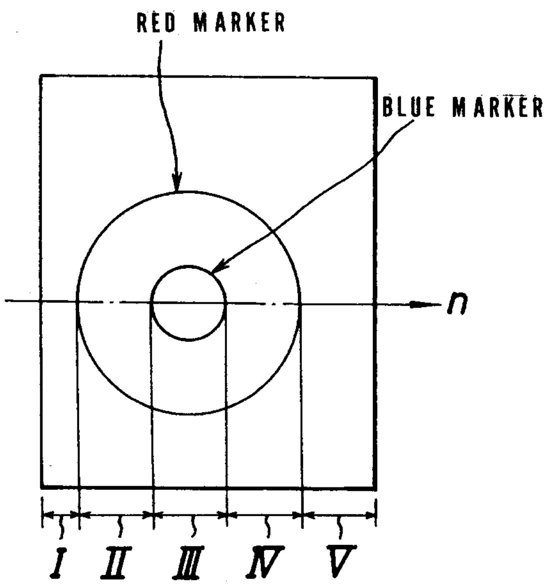


F I G. 45B

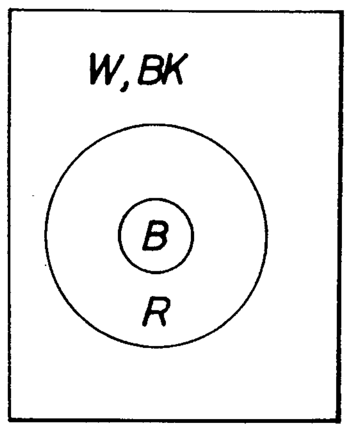

FIG. 46A BLUE AREA SIGNAL BP

FIG. 46B BLUE AREA SIGNAL $\overline{BP}$

FIG. 46C RED AREA SIGNAL RP

FIG. 46D RED AREA SIGNAL $\overline{RP}$

FIG. 46E CLOCK CK1

FIG. 46F DATA INPUT D1

FIG. 46G CLEAR PULSE CL1

FIG. 46H FF OUTPUT Q1

FIG. 46I CLOCK CK2

FIG. 46J DATA INPUT D2

FIG. 46K CLEAR PULSE CL2

FIG. 46L FF OUTPUT Q2

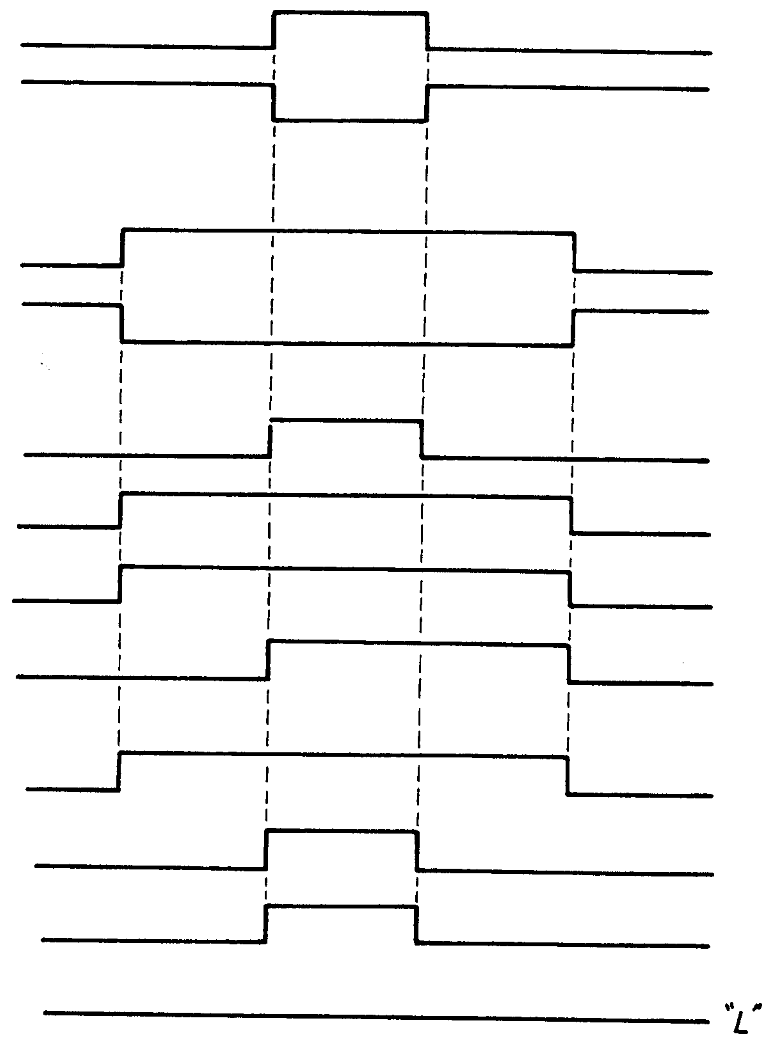

FIG.47A BLUE AREA SIGNAL BP
FIG.47B RED AREA SIGNAL RP
FIG.47C NAND OUTPUT M 1
FIG.47D BLUE AREA SIGNAL BP
FIG.47E FF OUTPUT Q1
FIG.47F NAND OUTPUT M 2
FIG.47G GATE SIGNAL S1
FIG.47H RED AREA SIGNAL RP
FIG.47I BLUE AREA SIGNAL BP
FIG.47J NAND SIGNAL M 3
FIG.47K RED AREA SIGNAL RP
FIG.47L FF OUTPUT Q2
FIG.47M NAND OUTPUT M 4
FIG.47N GATE SIGNAL S2
FIG.47O GATE SIGNAL S3
FIG.47P INSIDE MARKER SIGNAL
FIG.47Q GATE SIGNAL S4

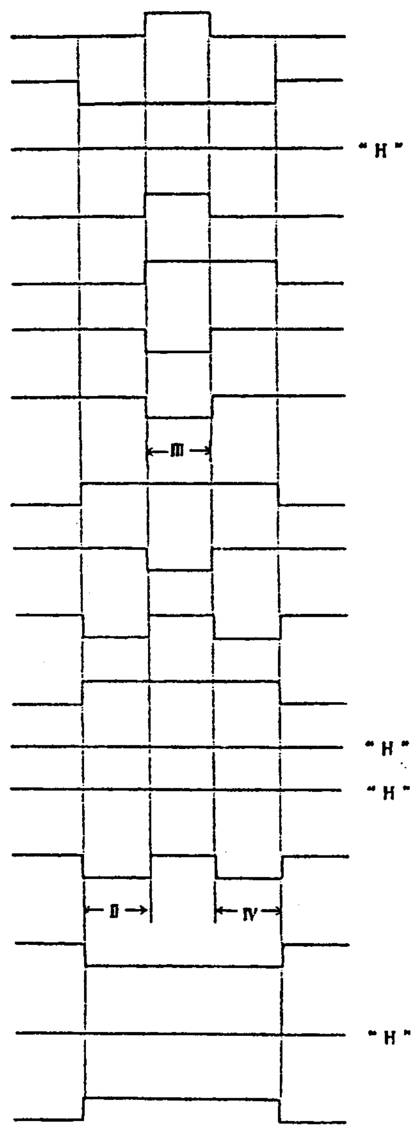

F I G. 48

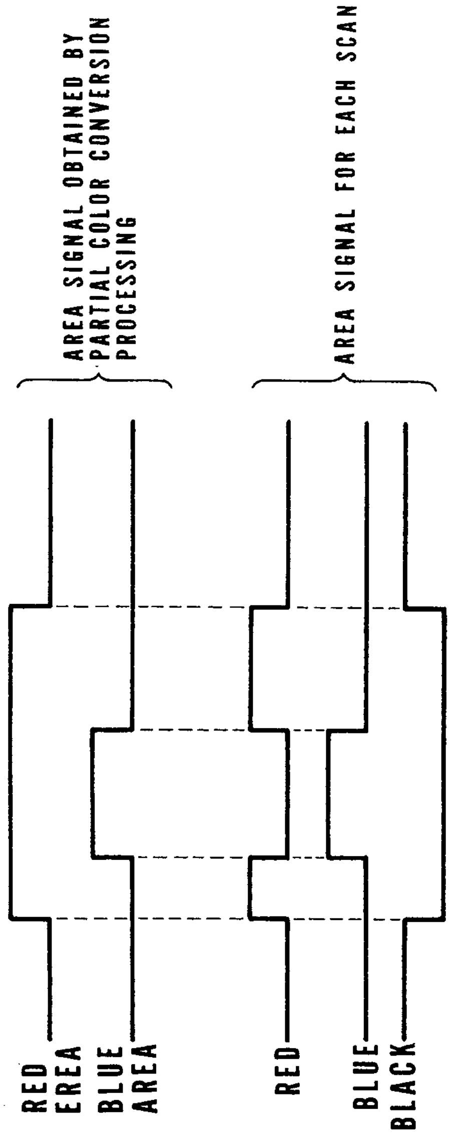
AREA SIGNAL OBTAINED BY PARTIAL COLOR CONVERSION PROCESSING
AREA SIGNAL FOR EACH SCAN
RED EREA
BLUE AREA
RED
BLUE
BLACK

F I G. 49

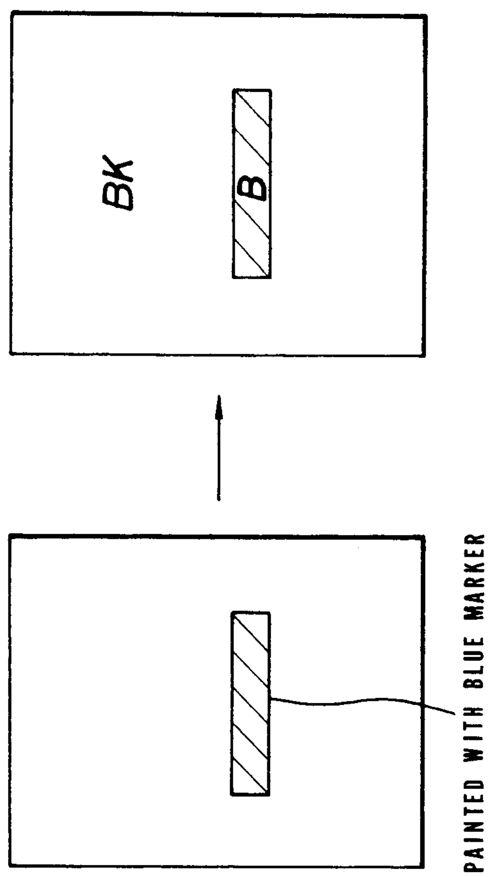
BK
B
PAINTED WITH BLUE MARKER

F I G. 50

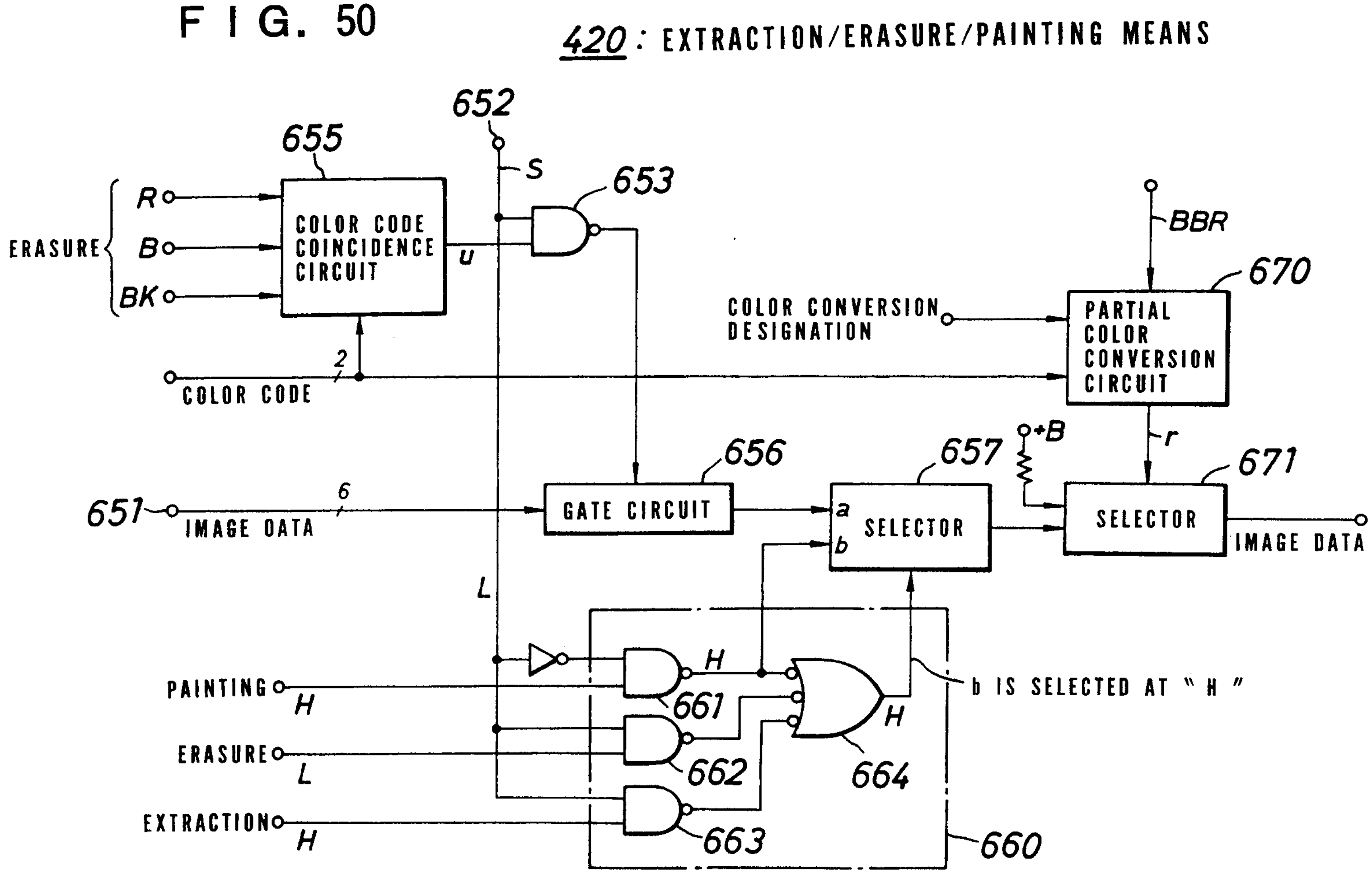
420 : EXTRACTION/ERASURE/PAINTING MEANS
652
S
655
653
ERASURE
R
B
BK
COLOR CODE COINCIDENCE CIRCUIT
u
BBR
670
COLOR CONVERSION DESIGNATION
PARTIAL COLOR CONVERSION CIRCUIT
2
COLOR CODE
+B
r
656
657
671
651
6
IMAGE DATA
GATE CIRCUIT
a
b
SELECTOR
SELECTOR
IMAGE DATA
L
H
b IS SELECTED AT " H "
PAINTING
H
661
H
ERASURE
L
662
664
EXTRACTION
H
663
660

F I G. 51

| COLOR ERASURE DESIGNATION CODE | PROCESSING |
|---|---|
| 0 0 0 | NOT PERFORMED |
| 0 0 1 | BLUE ERASURE |
| 0 1 0 | RED ERASURE |
| 1 0 0 | BLACK ERASURE |
| 0 1 1 | RED/BLACK ERASURE |
| 1 0 1 | BLUE/RED ERASURE |
| 1 1 0 | RED/BLACK ERASURE |

F I G. 52

| COLOR ERASURE DESIGNATION CODE | COLOR CODE (LOWER BITS) | OUTPUT u |
|---|---|---|
| 0 0 1 | 0 0 | H |
| | 0 1 | L |
| | 1 0 | H |
| | 1 1 | H |
| 0 1 0 | 0 0 | H |
| | 0 1 | H |
| | 1 0 | L |
| | 1 1 | H |
| 0 1 1 | 0 0 | H |
| | 0 1 | L |
| | 1 0 | L |
| | 1 1 | H |

F I G. 53

| COLOR CONVERSION (BLACK → BLUE) | BBR | COLOR CODE | | | |
|---|---|---|---|---|---|
| | | 00 | 01 | 10 | 11 |
| 100 → 001 | 0 0 | 1 | 1 | 1 | 1 |
| 100 → 001 | 0 1 | 0 | 1 | 1 | 1 |
| 100 → 001 | 1 0 | 1 | 1 | 0 | 1 |

CASE OF RECORDING BLACK/BLUE IMAGE IN BLUE

F I G. 54

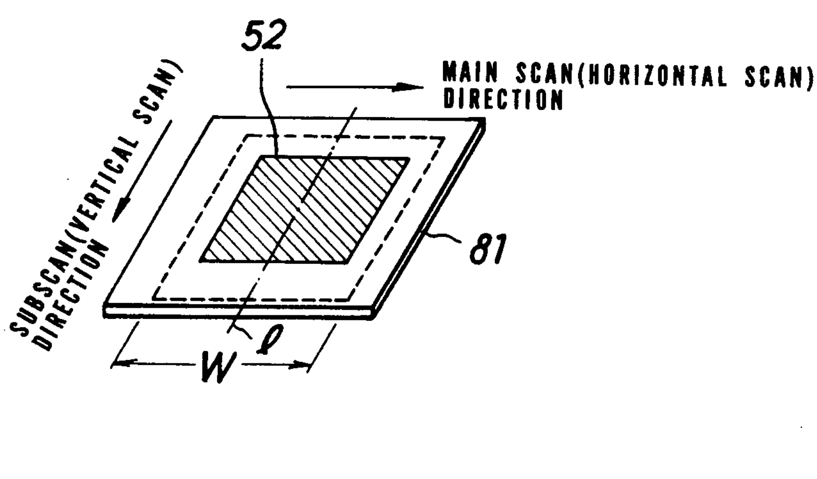

FIG. 55A

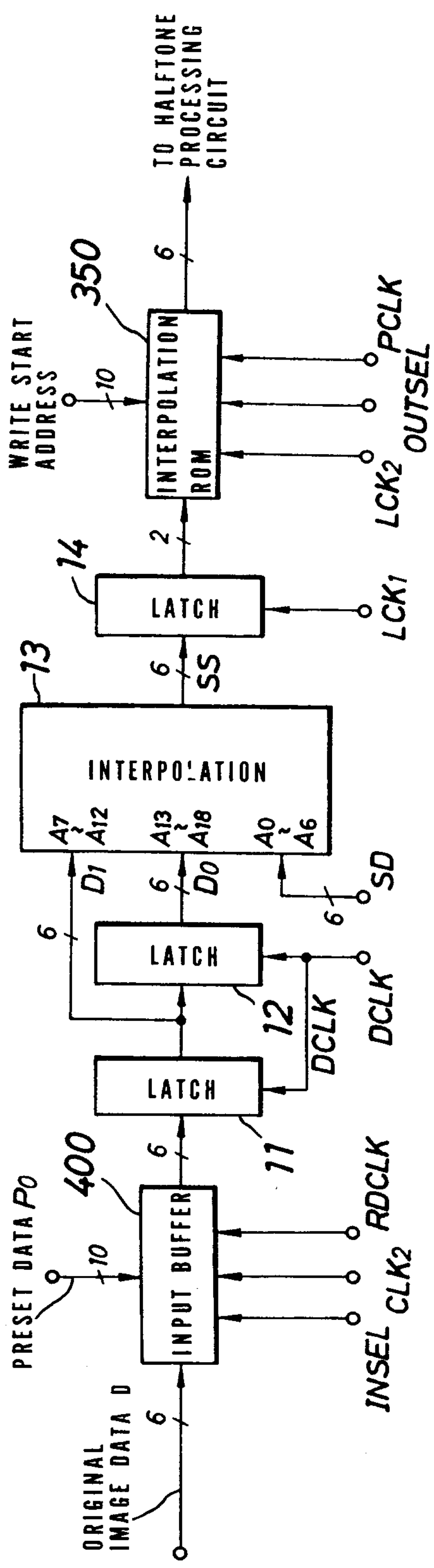


FIG. 55B

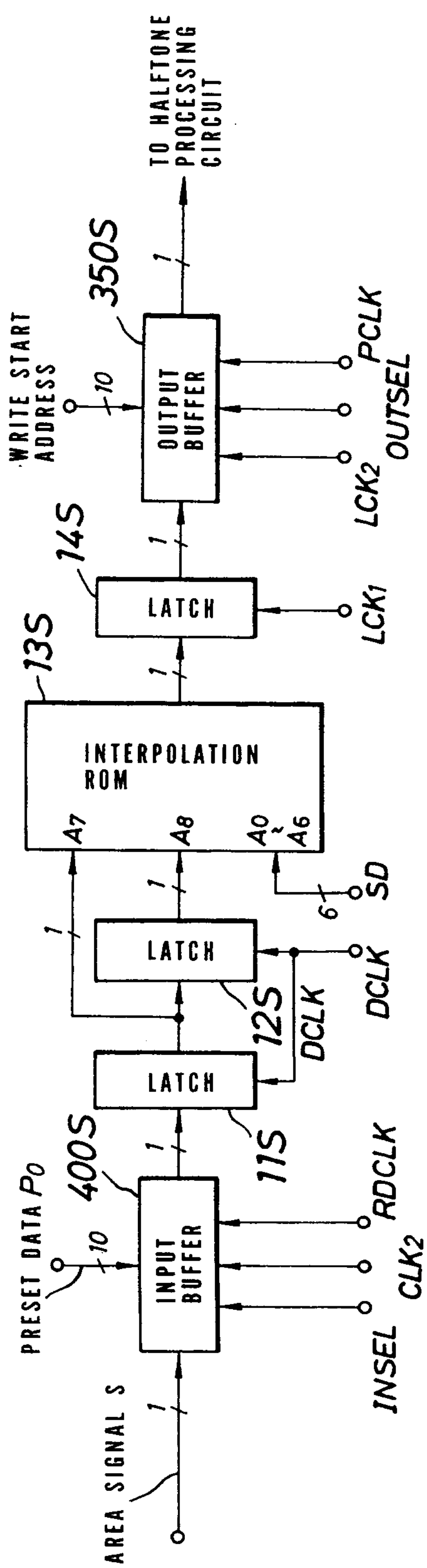

FIG. 55C

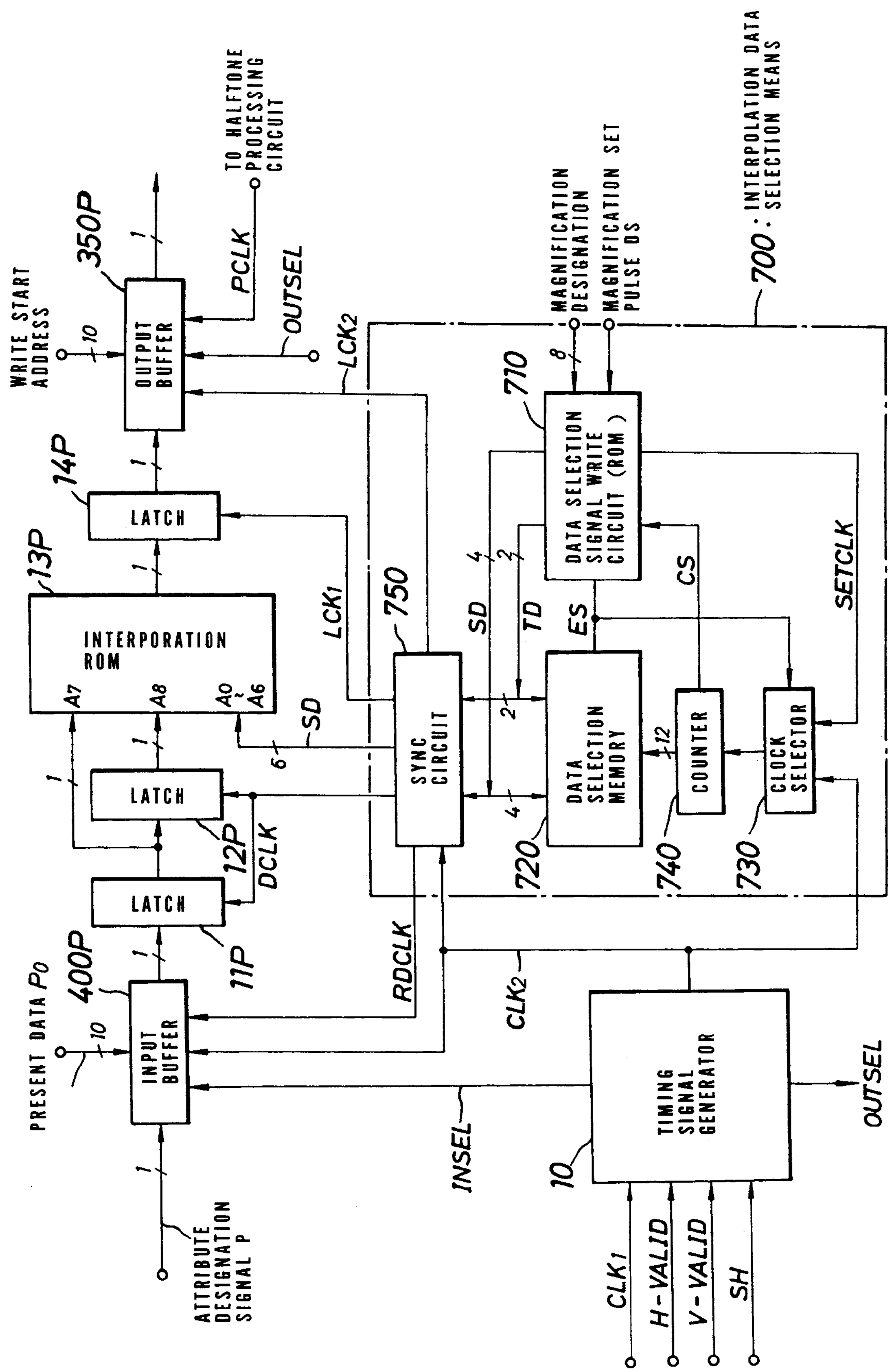

WRITE START ADDRESS
TO HALFTONE PROCESSING CIRCUIT
350P
OUTPUT BUFFER
PCLK
OUTSEL
LCK2
MAGNIFICATION DESIGNATION
MAGNIFICATION SET PULSE DS
700 : INTERPOLATION DATA SELECTION MEANS
14P
LATCH
13P
INTERPORATION ROM
A7
A8
A0 ~ A6
LCK1
750
710
DATA SELECTION SIGNAL WRITE CIRCUIT (ROM)
SD
TD
ES
CS
SETCLK
SYNC CIRCUIT
DATA SELECTION MEMORY
COUNTER
CLOCK SELECTOR
12P
DCLK
11P
720
740
730
PRESENT DATA Po
400P
INPUT BUFFER
RDCLK
CLK2
TIMING SIGNAL GENERATOR
INSEL
OUTSEL
10
ATTRIBUTE DESIGNATION SIGNAL P
CLK1
H-VALID
V-VALID
SH

# F I G. 56

| POSITIVE INCLINATION | | | NEGATIVE INCLINATION | | |
|---|---|---|---|---|---|
| 0F0 | 0.00000 | 0 | F00 | 15.00000 | F |
| 0F1 | 0.93750 | 1 | F01 | 14.06250 | E |
| 0F2 | 1.87500 | 2 | F02 | 13.12500 | D |
| 0F3 | 2.81250 | 3 | F03 | 12.18750 | C |
| 0F4 | 3.75000 | 4 | F04 | 11.25000 | B |
| 0F5 | 4.68750 | 5 | F05 | 10.31250 | A |
| 0F6 | 5.62500 | 6 | F06 | 9.37500 | 9 |
| 0F7 | 6.56250 | 7 | F07 | 8.43750 | 8 |
| 0F8 | 7.50000 | 8 | F08 | 7.50000 | 8 |
| 0F9 | 8.43750 | 8 | F09 | 6.56250 | 7 |
| 0FA | 9.37500 | 9 | F0A | 5.62500 | 6 |
| 0FB | 10.31250 | A | F0B | 4.68750 | 5 |
| 0FC | 11.25000 | B | F0C | 3.75000 | 4 |
| 0FD | 12.18750 | C | F0D | 2.81250 | 3 |
| 0FE | 13.12500 | D | F0E | 1.87500 | 2 |
| 0FF | 14.06250 | E | F0F | 0.93750 | 1 |

IMAGE DATA D1 INTERPOLATION DATA SS INTERPOLATION SELECTION DATA SD

IMAGE DATA D0

FIG. 57

400 : INPUT BUFFER

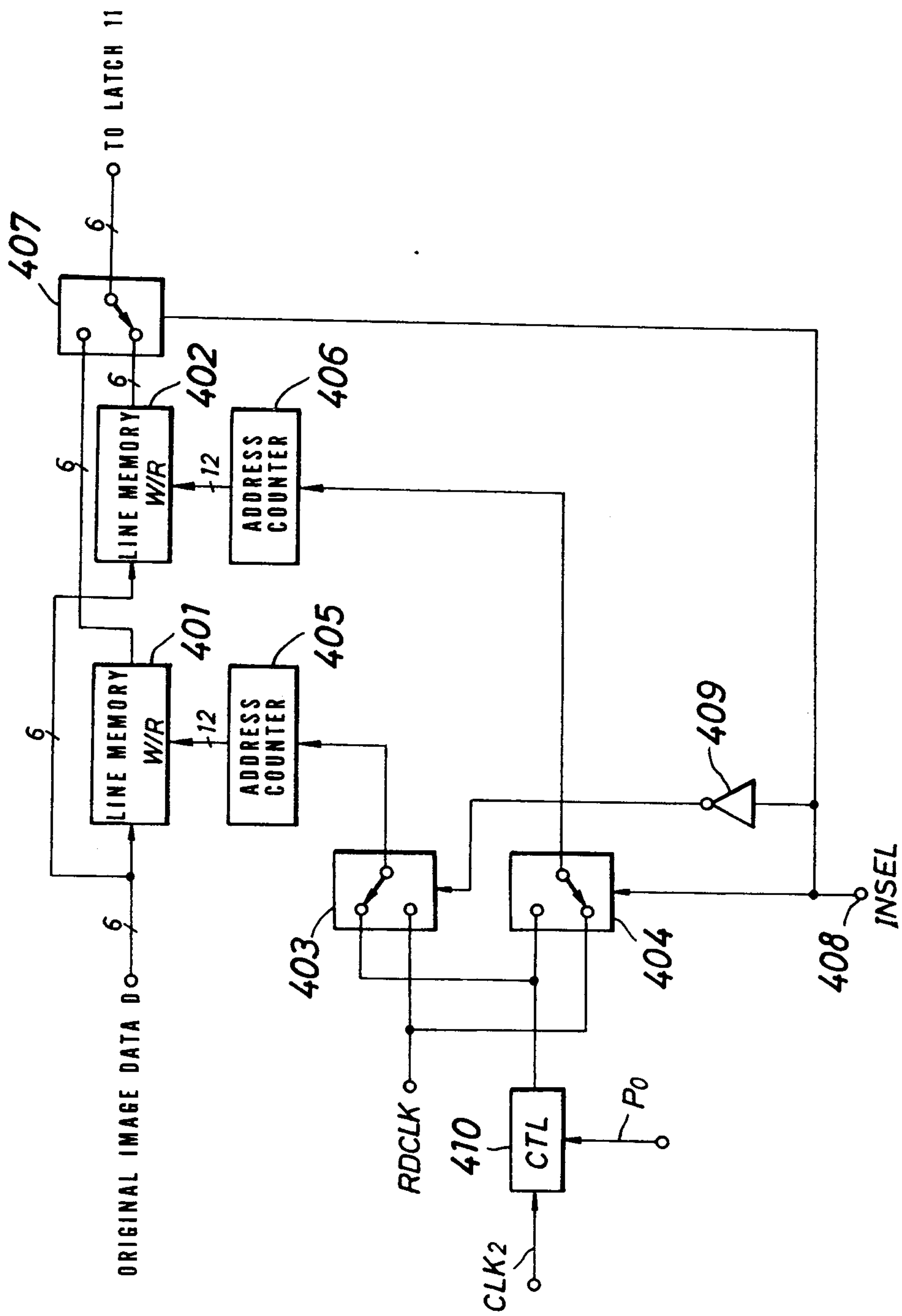

F I G. 58

350 : OUTPUT BUFFER

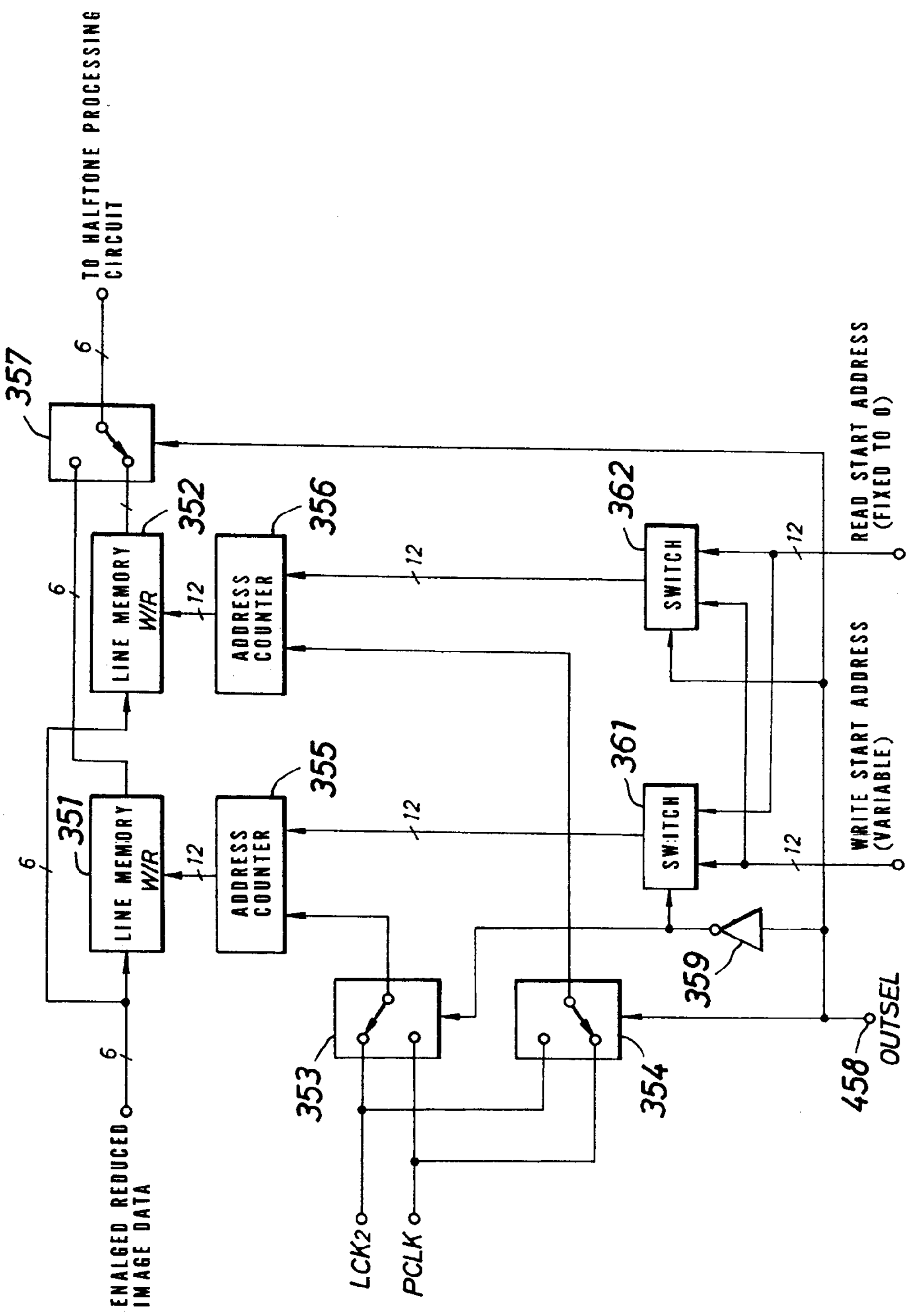

FIG. 59A SYNC CLOCK CLK1

FIG. 59B READ CLOCK RDCLK

FIG. 59C IMAGE DATA D

FIG. 59D INTERPOLATION DATA SS

FIG. 59E WRITE CLOCK LCK2

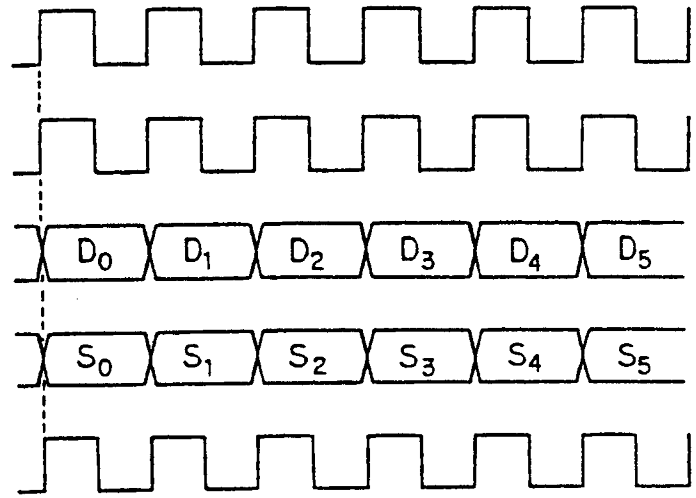


FIG. 60A SYNC CLOCK CLK1

FIG. 60B READ CLOCK RDCLK

FIG. 60C IMAGE DATA D

FIG. 60D INTERPOLATION DATA SS

FIG. 60E WRITE CLOCK LCK2

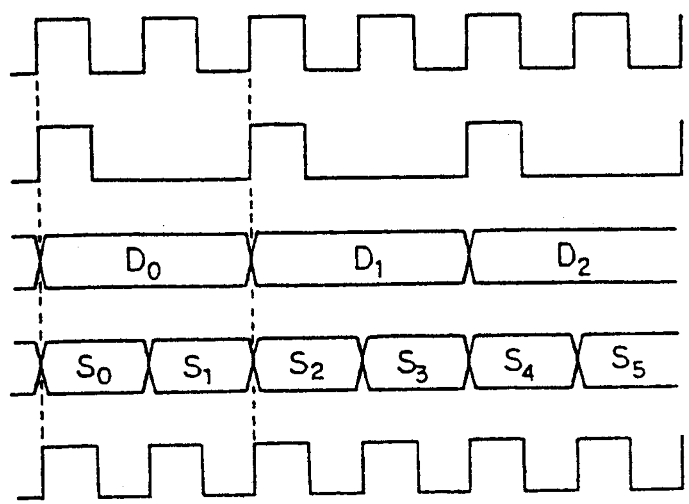

FIG.61A SYNC CLOCK CLK1

FIG.61B READ CLOCK RDCLK

FIG.61C OUTPUT IMAGE DATA D

FIG.61D INTERPOLATION DATA SS

FIG.61E WRITE CLOCK LCK2

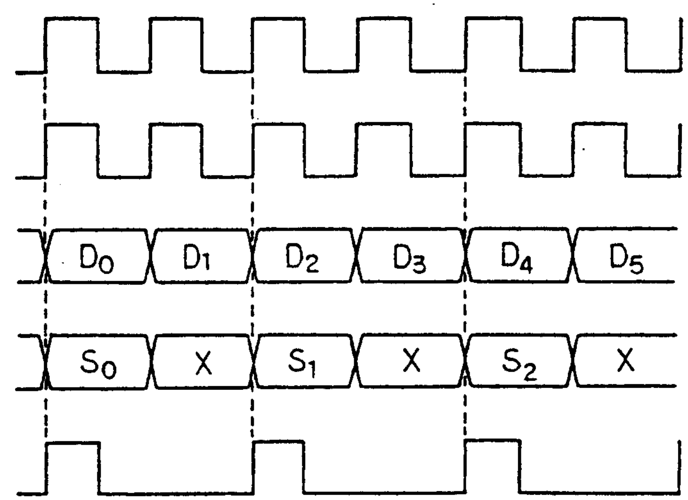

F I G. 62

710 : DATA SELECTION SIGNAL WRITE CIRCUIT

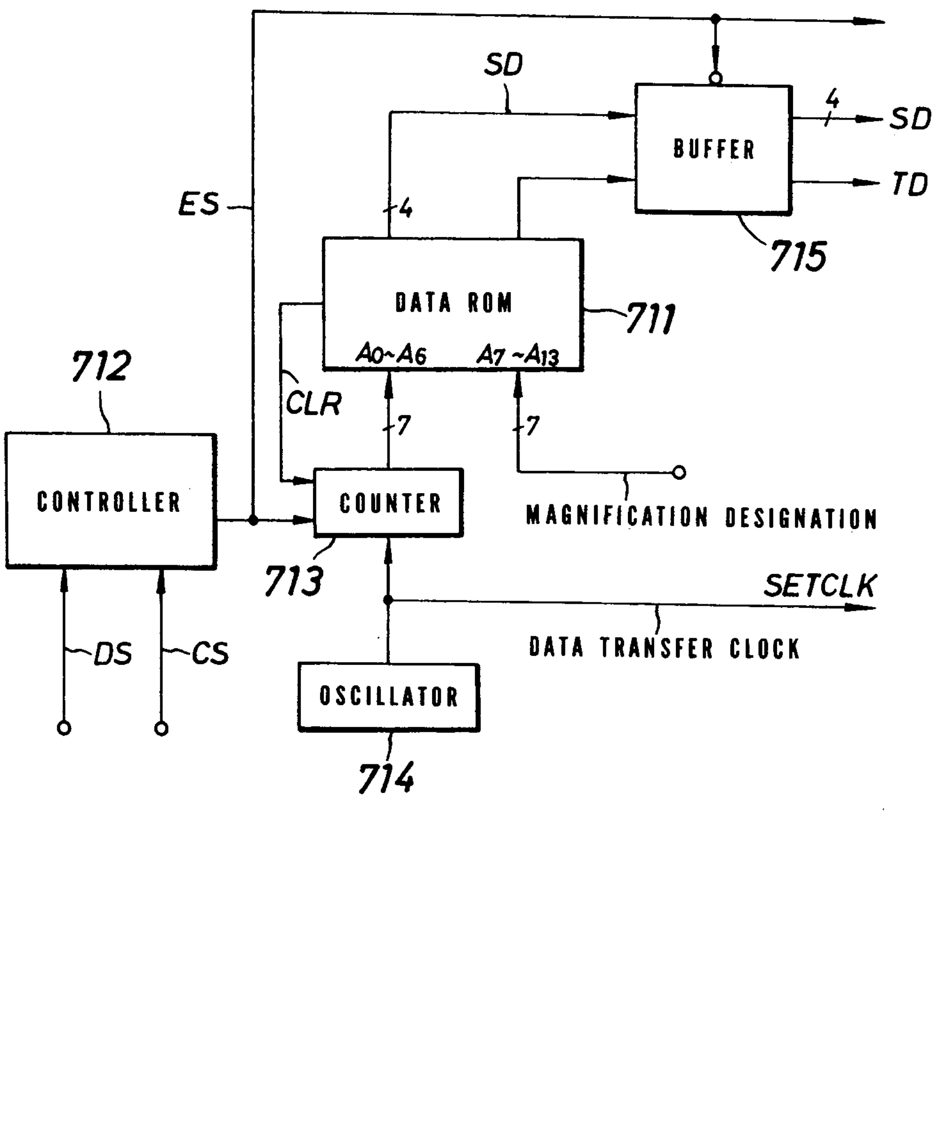

FIG. 63A MAGNIFICATION SET PULSE DS

FIG. 63B TRANSFER END SIGNAL CS

FIG. 63C WRITE ENABLE SIGNAL ES

FIG. 63D DATA TRANSFER CLOCK SET CLK

FIG. 63E ADDRESS OF COUNTER 713

MAGNIFICATION = 160%

FIG. 63F CLEAR SIGNAL CLR OF COUNTER

FIG. 63G ADDRESS OF COUNTER 713

MAGNIFICATION = 80%

FIG. 63H CLEAR SIGNAL CLR OF COUNTER 713

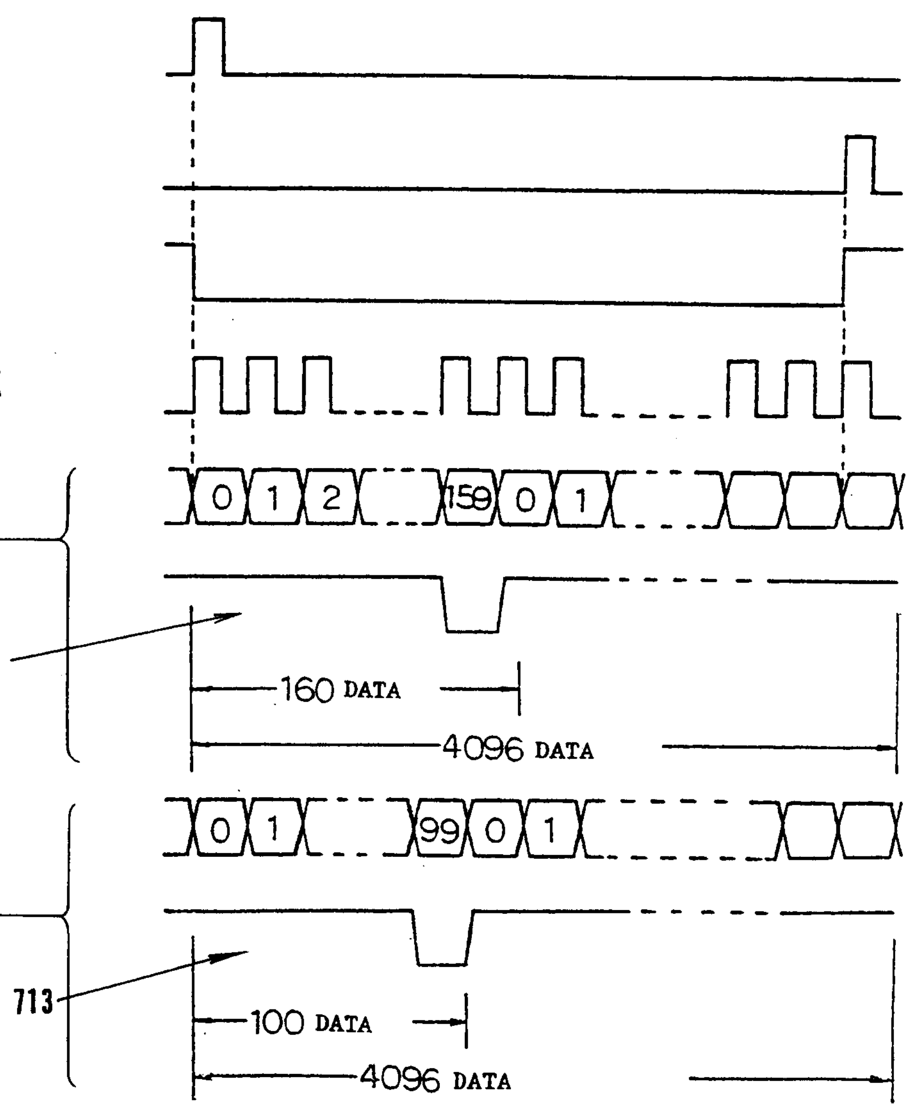

# F I G. 64

INTERPOLATION SELECTION DATA SD

PROCESSING TIMING SIGNAL TD

| ADRS | +0 | +1 | +2 | +3 | +4 | +5 | +6 | +7 | +8 | +9 | +A | +B | +C | +D | +E | +F |
|---|---|---|---|---|---|---|---|---|---|---|---|---|---|---|---|---|
| 00 | 07 | A6 | 47 | E6 | 87 | 27 | C6 | 67 | 07 | A6 | 47 | E6 | 87 | 27 | C6 | 67 |
| 10 | 07 | A6 | 47 | E6 | 87 | 27 | C6 | 67 | 07 | A6 | 47 | E6 | 87 | 27 | C6 | 67 |
| 20 | 07 | A6 | 47 | E6 | 87 | 27 | C6 | 67 | 07 | A6 | 47 | E6 | 87 | 27 | C6 | 67 |
| 30 | 07 | A6 | 47 | E6 | 87 | 27 | C6 | 67 | 07 | A6 | 47 | E6 | 87 | 27 | C6 | 67 |
| 40 | 07 | A6 | 47 | E6 | 87 | 27 | C6 | 67 | 07 | A6 | 47 | E6 | 87 | 27 | C6 | 67 |
| 50 | 07 | A6 | 47 | E6 | 87 | 27 | C6 | 67 | 07 | A6 | 47 | E6 | 87 | 27 | C6 | 67 |
| 60 | 07 | A6 | 47 | E6 | 87 | 27 | C6 | 67 | 07 | A6 | 47 | E6 | 87 | 27 | C6 | 67 |
| 70 | 07 | A6 | 47 | E6 | 87 | 27 | C6 | 67 | 07 | A6 | 47 | E6 | 87 | 27 | C6 | 67 |
| 80 | 07 | A6 | 47 | E6 | 87 | 27 | C6 | 67 | 07 | A6 | 47 | E6 | 87 | 27 | C6 | 67 |
| 90 | 07 | A6 | 47 | E6 | 87 | 27 | C6 | 67 | 07 | A6 | 47 | E6 | 87 | 27 | C6 | 63 |
| A0 | 00 | 00 | 00 | 00 | 00 | 00 | 00 | 00 | 00 | 00 | 00 | 00 | 00 | 00 | 00 | 00 |
| B0 | 00 | 00 | 00 | 00 | 00 | 00 | 00 | 00 | 00 | 00 | 00 | 00 | 00 | 00 | 00 | 00 |
| C0 | 00 | 00 | 00 | 00 | 00 | 00 | 00 | 00 | 00 | 00 | 00 | 00 | 00 | 00 | 00 | 00 |
| D0 | 00 | 00 | 00 | 00 | 00 | 00 | 00 | 00 | 00 | 00 | 00 | 00 | 00 | 00 | 00 | 00 |
| E0 | 00 | 00 | 00 | 00 | 00 | 00 | 00 | 00 | 00 | 00 | 00 | 00 | 00 | 00 | 00 | 00 |
| F0 | 00 | 00 | 00 | 00 | 00 | 00 | 00 | 00 | 00 | 00 | 00 | 00 | 00 | 00 | 00 | 00 |

REPETITION SIGNAL

CONTENT OF DATA ROM 711 (ENLARGEMENT MAGNIFICATION=160%)

# F I G. 65

INTERPOLATION SELECTION DATA SD

PROCESSING TIMING SIGNAL TD

INVALID DATA

| ADRS | +0 | +1 | +2 | +3 | +4 | +5 | +6 | +7 | +8 | +9 | +A | +B | +C | +D | +E | +F |
|---|---|---|---|---|---|---|---|---|---|---|---|---|---|---|---|---|
| 00 | 07 | 47 | 87 | C7 | 05 | 07 | 47 | 87 | C7 | 05 | 07 | 47 | 87 | C7 | 05 | 07 |
| 10 | 47 | 87 | C7 | 05 | 07 | 47 | 87 | C7 | 05 | 07 | 47 | 87 | C7 | 05 | 07 | 47 |
| 20 | 87 | C7 | 05 | 07 | 47 | 87 | C7 | 05 | 07 | 47 | 87 | C7 | 05 | 07 | 47 | 87 |
| 30 | C7 | 05 | 07 | 47 | 87 | C7 | 05 | 07 | 47 | 87 | C7 | 05 | 07 | 47 | 87 | C7 |
| 40 | 05 | 07 | 47 | 87 | C7 | 05 | 07 | 47 | 87 | C7 | 05 | 07 | 47 | 87 | C7 | 05 |
| 50 | 07 | 47 | 87 | C7 | 05 | 07 | 47 | 87 | C7 | 05 | 07 | 47 | 87 | C7 | 05 | 07 |
| 60 | 47 | 87 | C7 | 01 | 00 | 00 | 00 | 00 | 00 | 00 | 00 | 00 | 00 | 00 | 00 | 00 |
| 70 | 00 | 00 | 00 | 00 | 00 | 00 | 00 | 00 | 00 | 00 | 00 | 00 | 00 | 00 | 00 | 00 |
| 80 | 00 | 00 | 00 | 00 | 00 | 00 | 00 | 00 | 00 | 00 | 00 | 00 | 00 | 00 | 00 | 00 |
| 90 | 00 | 00 | 00 | 00 | 00 | 00 | 00 | 00 | 00 | 00 | 00 | 00 | 00 | 00 | 00 | 00 |
| A0 | 00 | 00 | 00 | 00 | 00 | 00 | 00 | 00 | 00 | 00 | 00 | 00 | 00 | 00 | 00 | 00 |
| B0 | 00 | 00 | 00 | 00 | 00 | 00 | 00 | 00 | 00 | 00 | 00 | 00 | 00 | 00 | 00 | 00 |
| C0 | 00 | 00 | 00 | 00 | 00 | 00 | 00 | 00 | 00 | 00 | 00 | 00 | 00 | 00 | 00 | 00 |
| D0 | 00 | 00 | 00 | 00 | 00 | 00 | 00 | 00 | 00 | 00 | 00 | 00 | 00 | 00 | 00 | 00 |
| E0 | 00 | 00 | 00 | 00 | 00 | 00 | 00 | 00 | 00 | 00 | 00 | 00 | 00 | 00 | 00 | 00 |
| F0 | 00 | 00 | 00 | 00 | 00 | 00 | 00 | 00 | 00 | 00 | 00 | 00 | 00 | 00 | 00 | 00 |

REPETITION SIGNAL

CONTENT OF DATA ROM 711(REDUCTION M AGNIFICATION=80%)

F I G. 66

750 : SYNC CIRCUIT

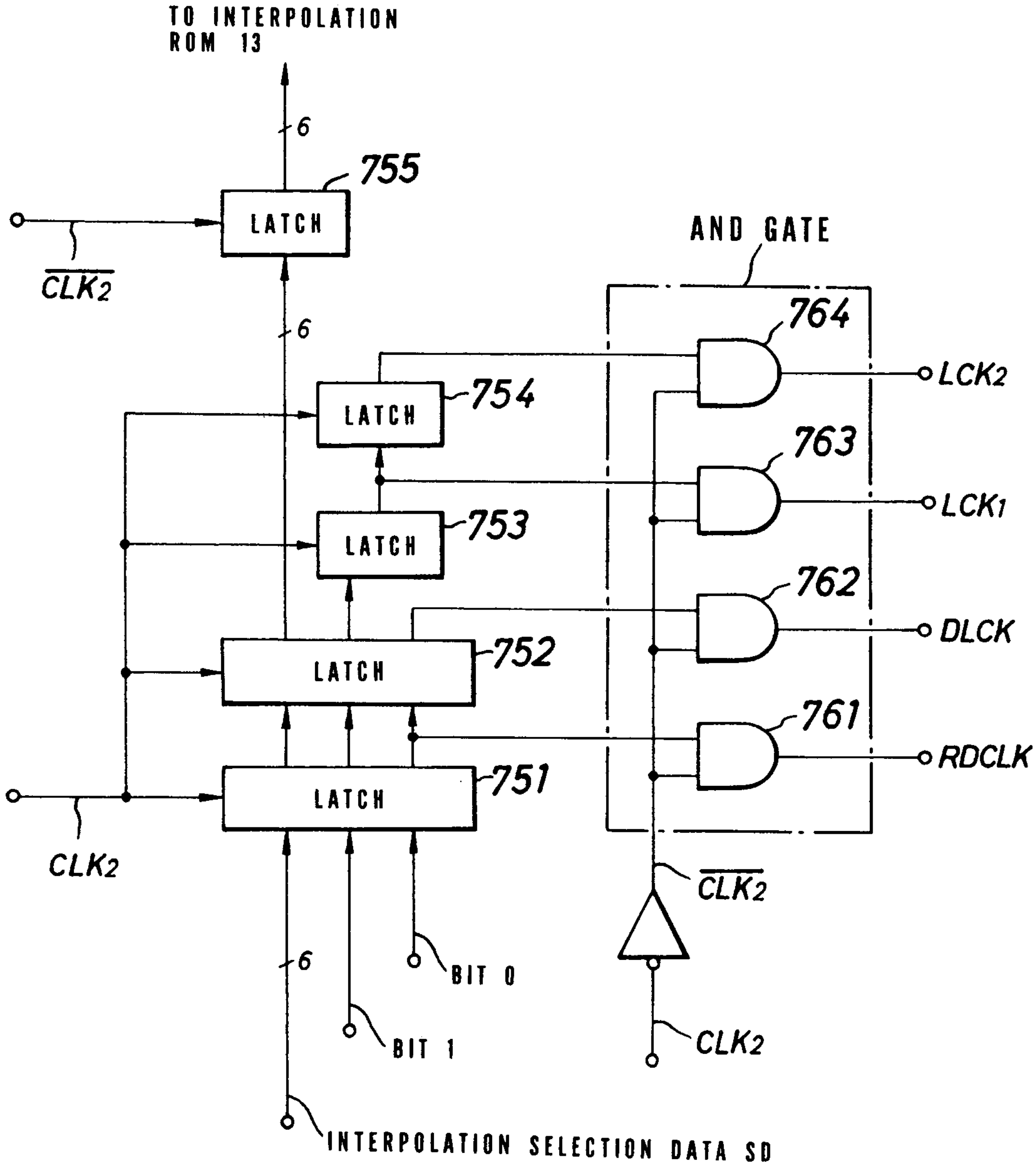

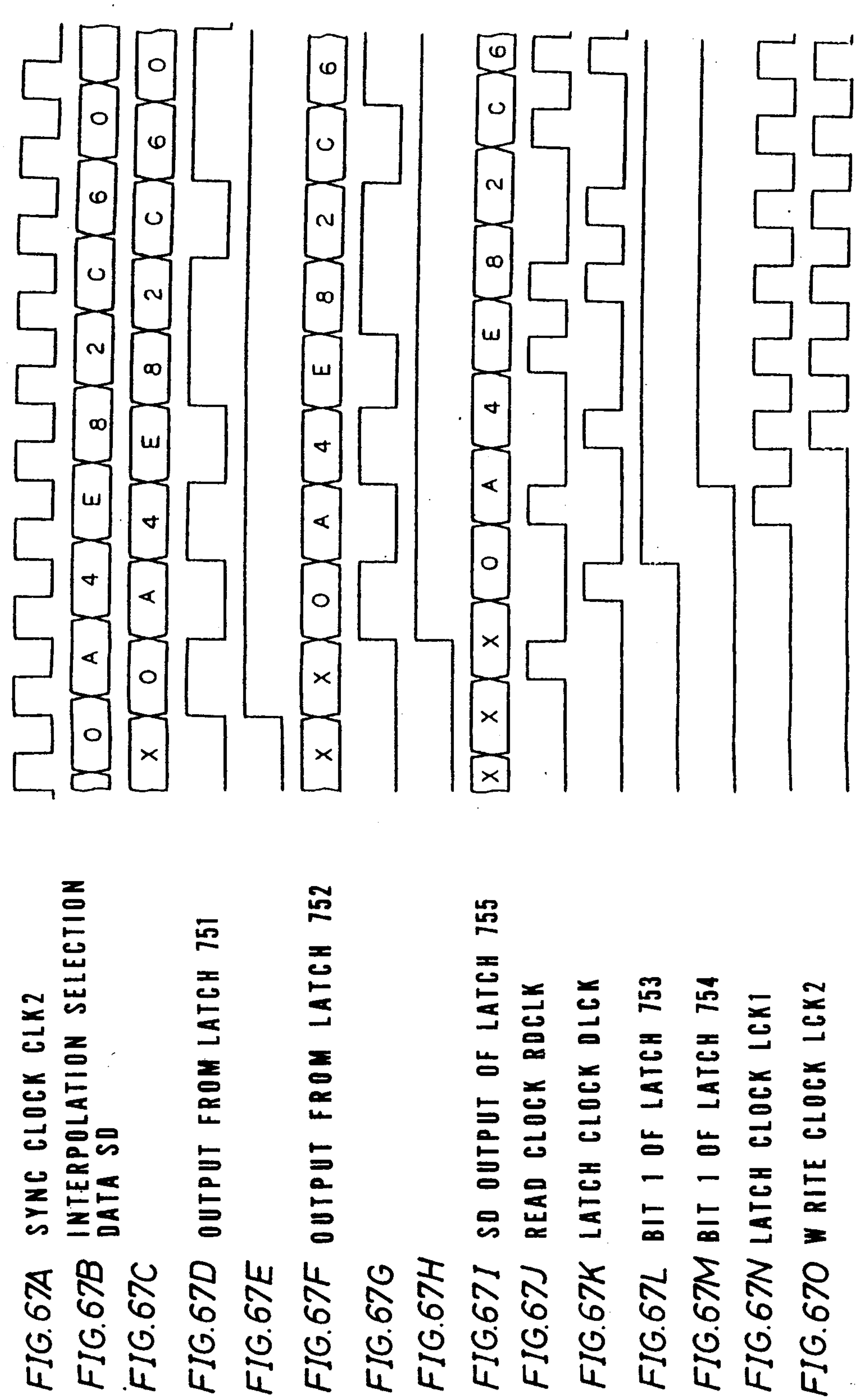
FIG.67A SYNC CLOCK CLK2
FIG.67B INTERPOLATION SELECTION DATA SD
FIG.67C
FIG.67D OUTPUT FROM LATCH 751
FIG.67E
FIG.67F OUTPUT FROM LATCH 752
FIG.67G
FIG.67H
FIG.67I SD OUTPUT OF LATCH 755
FIG.67J READ CLOCK RDCLK
FIG.67K LATCH CLOCK DLCK
FIG.67L BIT 1 OF LATCH 753
FIG.67M BIT 1 OF LATCH 754
FIG.67N LATCH CLOCK LCK1
FIG.67O W RITE CLOCK LCK2

FIG.68A SYNC CLOCK CLK2
FIG.68B INTERPOLATION SELECTION DATA SD
FIG.68C
FIG.68D OUTPUT OF LATCH 751
FIG.68E
FIG.68F
FIG.68G OUTPUT OF LATCH 752
FIG.68H
FIG.68I OUTPUT SD OF LATCH 755
FIG.68J READ CLOCK RDCLK
FIG.68K LATCH CLOCK DLCK
FIG.68L BIT 1 OF OUTPUT OF LATCH 753
FIG.68M BIT 1 OF OUTPUT OF LATCH 754
FIG.68N LATCH CLOCK LCK1
FIG.68O WRITE CLOCK LCK2

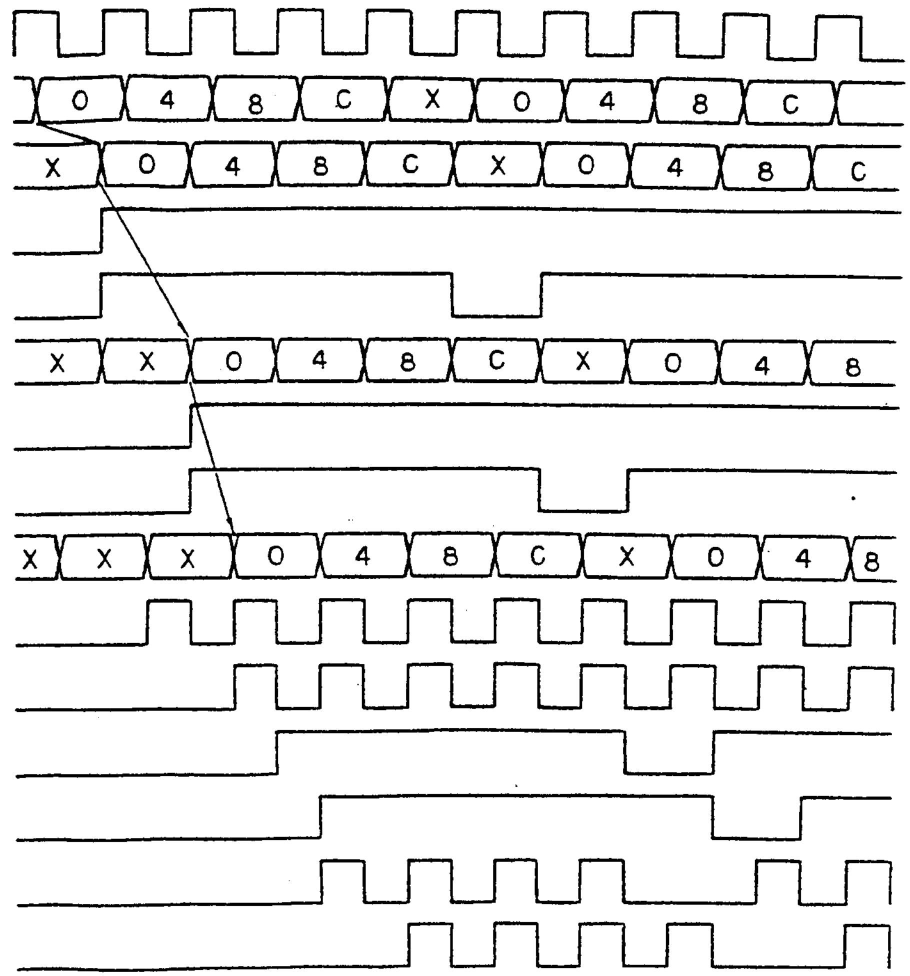

F I G. 69

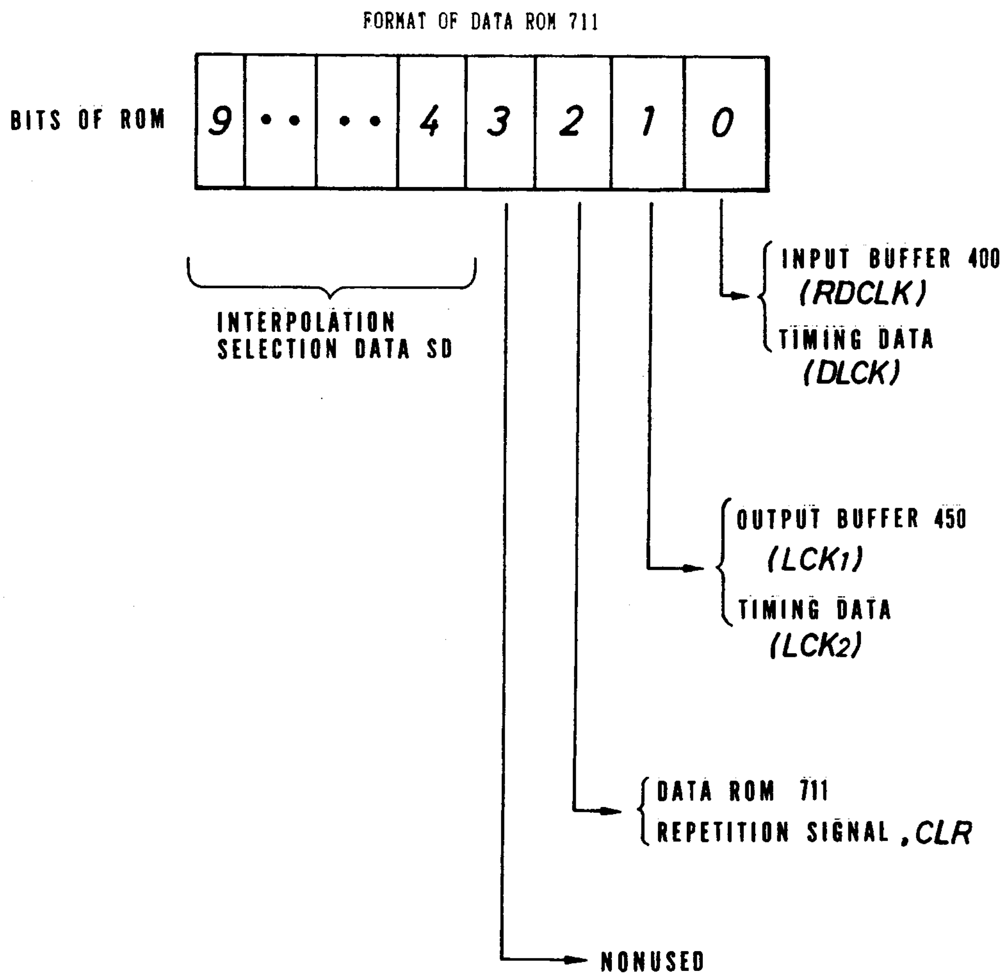
FORMAT OF DATA ROM 711
BITS OF ROM
9
• •
• •
4
3
2
1
0
INTERPOLATION SELECTION DATA SD
INPUT BUFFER 400
(RDCLK)
TIMING DATA
(DLCK)
OUTPUT BUFFER 450
(LCK1)
TIMING DATA
(LCK2)
DATA ROM 711
REPETITION SIGNAL ,CLR
NONUSED

FIG. 70A ORIGINAL IMAGE DATA (INPUT BUFFER)

FIG. 70B IMAGE DATA ENLARGED TO 200% (OUTPUT BUFFER)

FIG. 70C ORIGINAL IMAGE DATA (INPUT BUFFER)

FIG. 70D IMAGE DATA REDUCED TO 50% (OUTPUT BUFFER)

FIG. 70E WRITE AND READ TIMINGS OF OUTPUT BUFFER

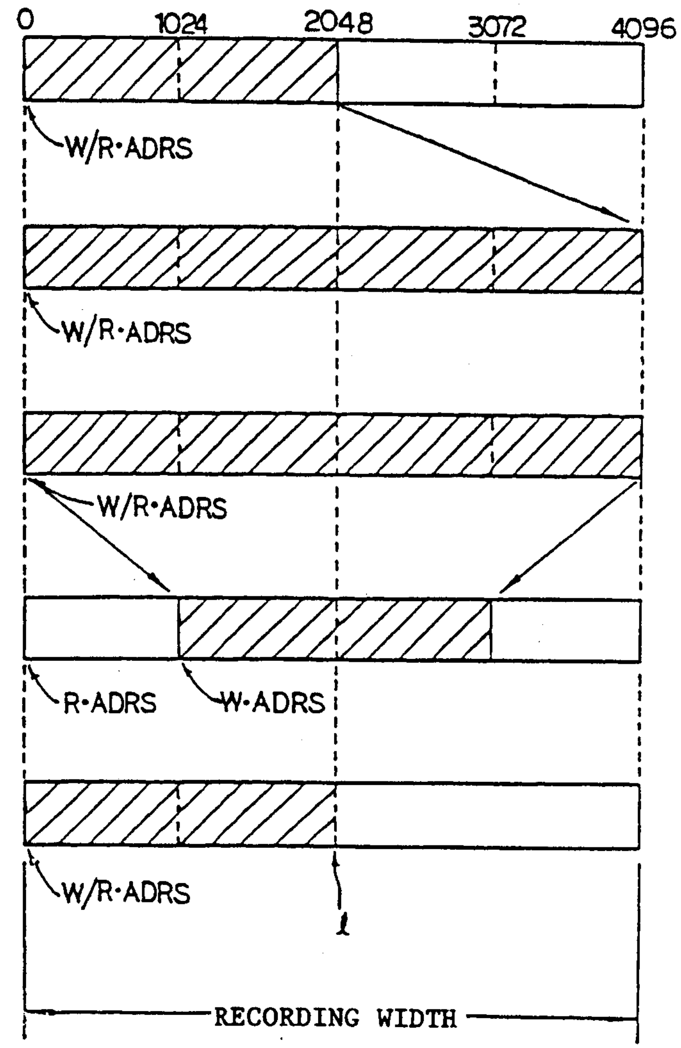

F I G. 71A

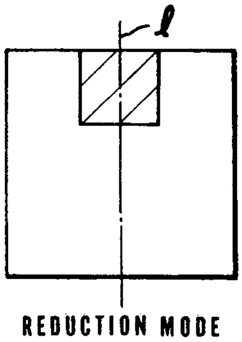


REDUCTION MODE

F I G. 71B

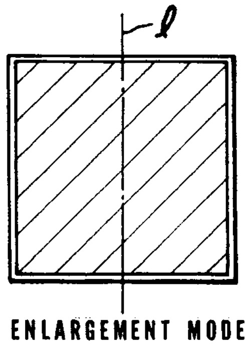


ENLARGEMENT MODE

F I G. 71C

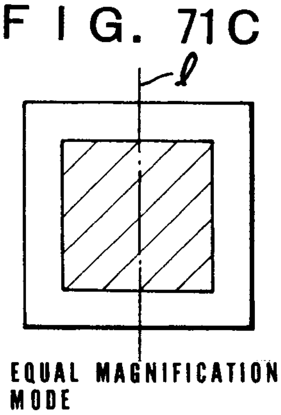


EQUAL MAGNIFICATION MODE

F I G. 72

| MAGNIFICATION $M$ | WRITE START ADDRESS | PRESET DATA $P_0$ |
|---|---|---|
| 50% | 1024 | 0 |
| 51% | 1004 | 0 |
| 52% | 983 | 0 |
| ⋮ | ⋮ | ⋮ |
| 100% | 0 | 0 |
| 101% | 0 | 41 |
| ⋮ | ⋮ | ⋮ |
| 198% | 0 | 2027 |
| 199% | 0 | 2038 |
| 200% | 0 | 2049 |

FIG. 73A HORIZONTAL SYNC SIGNAL H SYNC

FIG. 73B HORIZONTAL VALID AREA SIGNAL H-VALID

FIG. 73C CONTROLL SIGNAL

FIG. 73D MEMORY401

FIG. 73E MEMORY402

FIG. 73F MEMORY351

FIG. 73G MEMORY352

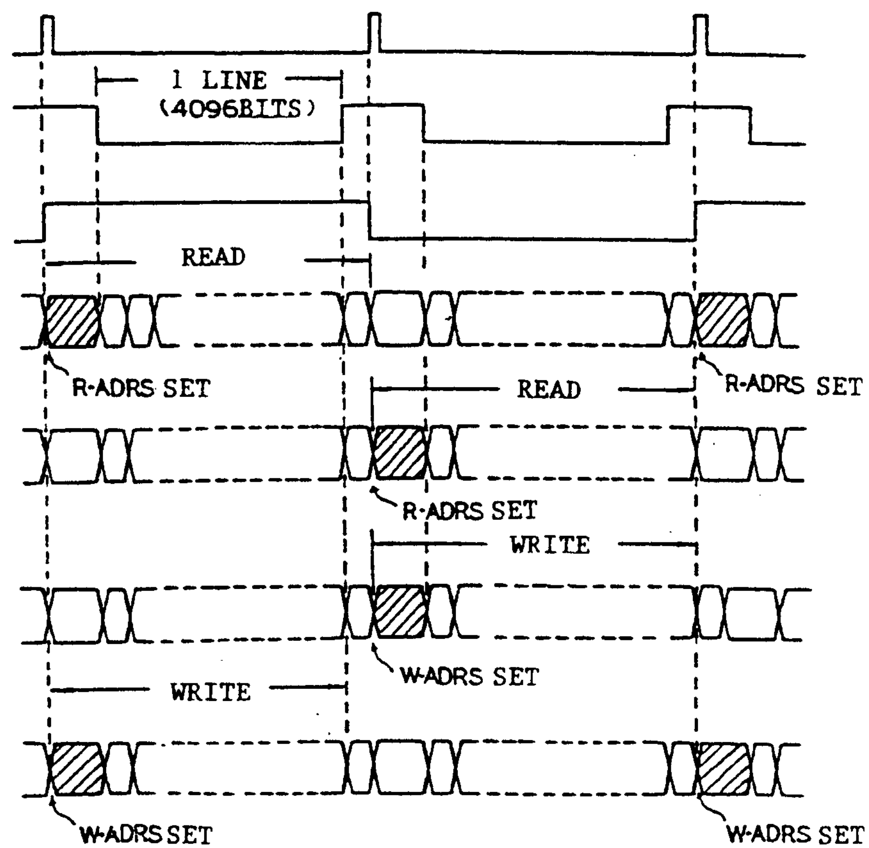

FIG.74A READ CLOCK RDCLK

FIG.74B D OUTPUT OF INPUT BUFFER

FIG.74C LATCH CLOCK DLCK

FIG.74D ADDRESS A4 TO A7 INPUT TO INTERPOLATION ROM

FIG.74E ADDRESS A8 TO A11

FIG.74F ADDRESS A0 TO A3

FIG.74G INTERPOLATION DATA SS

FIG.74H LATCH CLOCK LCK1

FIG.74I LATCH OUTPUT

FIG.74J OUTPUT BUFFER INPUT

FIG.74K W RITE CLOCK LCK2

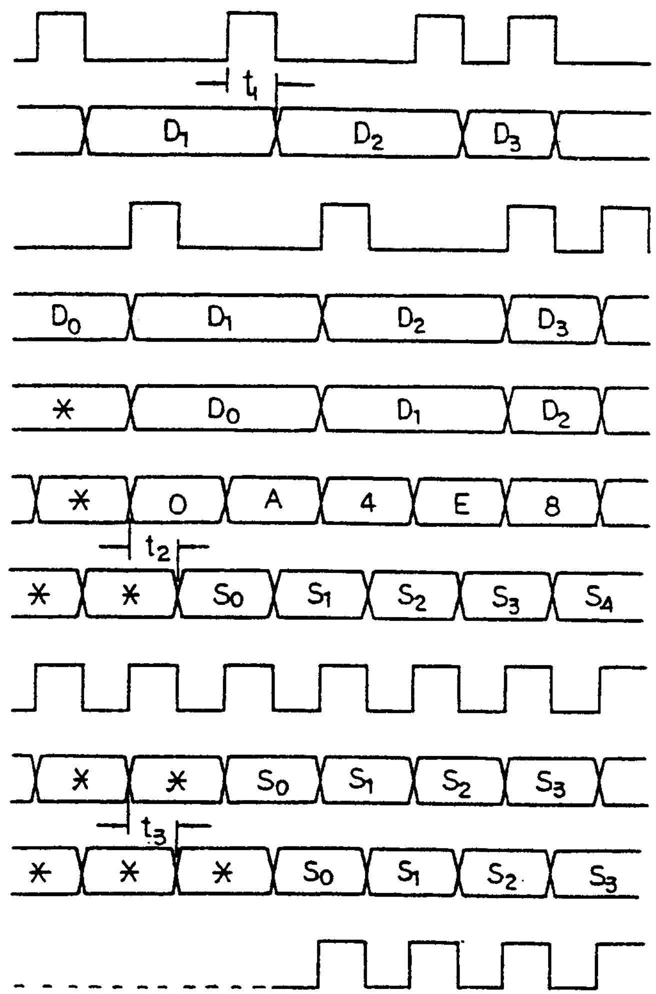

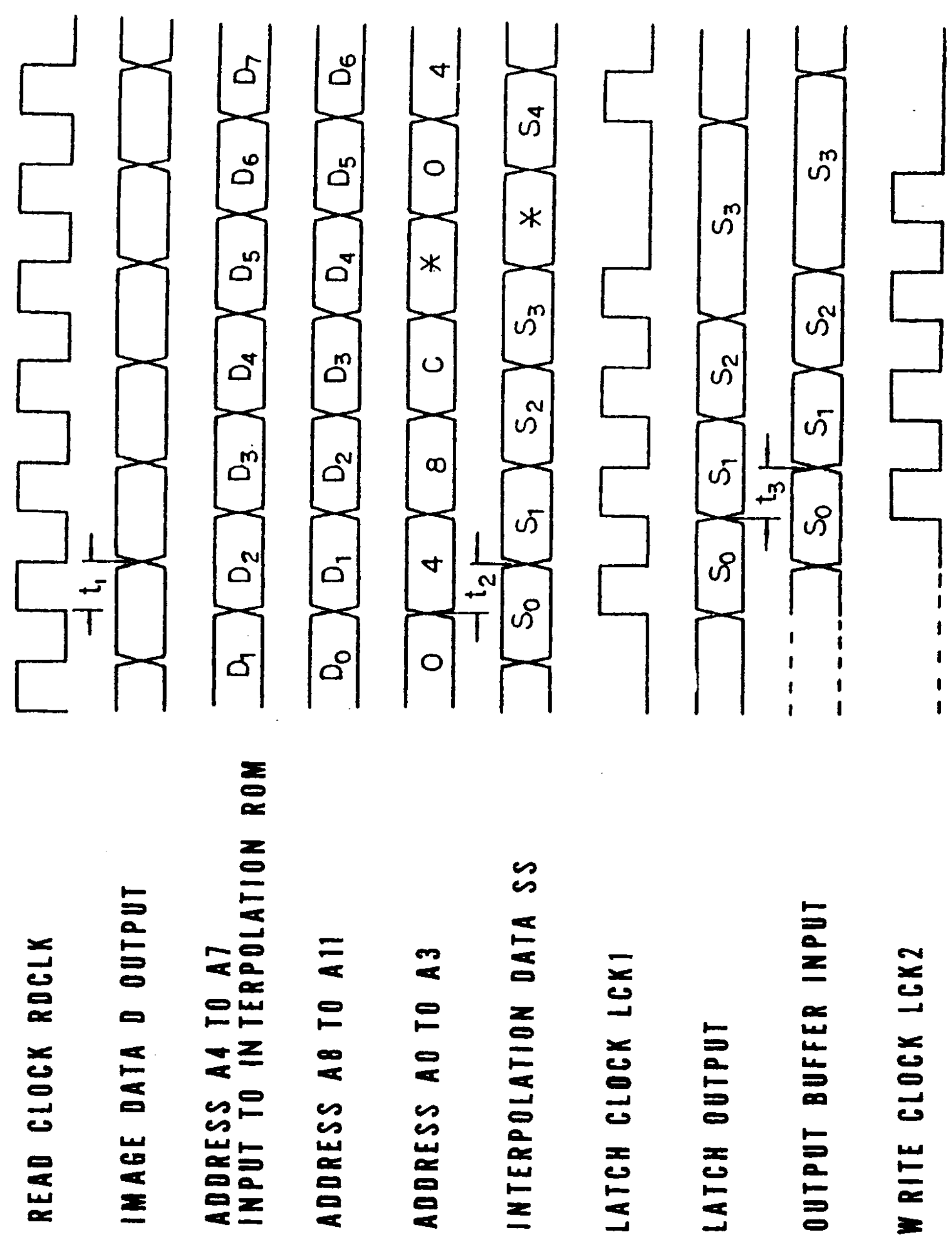


FIG.75A

FIG.75B

FIG.75C

FIG.75D

FIG.75E

FIG.75F

FIG.75G

FIG.75H

FIG.75I

FIG.75J

F I G. 76A

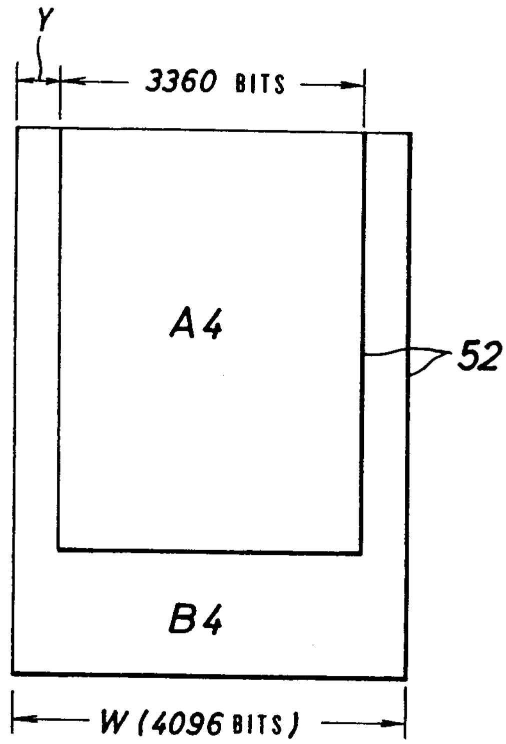


F I G. 76B

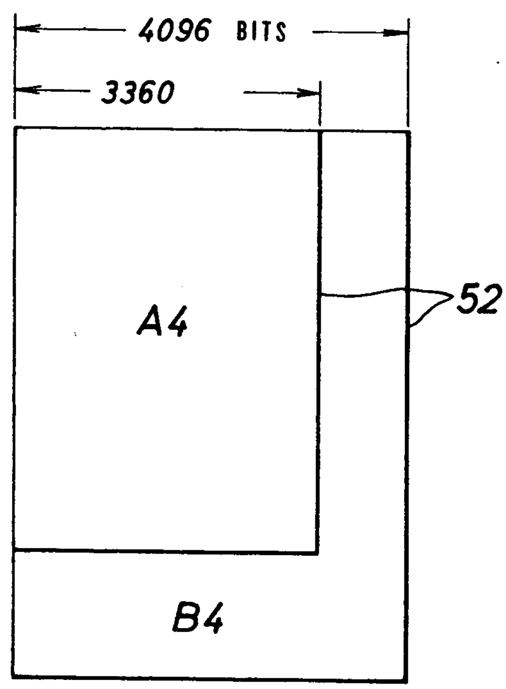

FIG 77

| MAGNIFICATION M | PRESET DATA Po OF INPUT BUFFER | WRITE START ADDRESS OF OUTPUT BUFFER |
|---|---|---|
| 50% | 368 | 0 |
| 51% | 368 | 0 |
| 52% | 368 | 0 |
| • | • | • |
| • | • | • |
| • | • | • |
| 100% | 368 | 0 |
| 101% | 368 | 0 |
| • | • | • |
| • | • | • |
| • | • | • |
| 198% | 368 | 0 |
| 199% | 368 | 0 |
| 200% | 368 | 0 |

F I G. 78

| MAGNIFICATION M | PRESET DATA $P_0$ OF INPUT BUFFER | WRITE START ADDRESS OF OUTPUT BUFFER |
|---|---|---|
| 50% | 0 | 1208 |
| 51% | 0 | 1191 |
| 52% | 0 | 1174 |
| ⋮ | ⋮ | ⋮ |
| 100% | 0 | 368 |
| ⋮ | ⋮ | ⋮ |
| 198% | 1291 | 0 |
| 199% | 1302 | 0 |
| 200% | 1312 | 0 |

FIG. 79

440: HALFTONE PROCESSOR

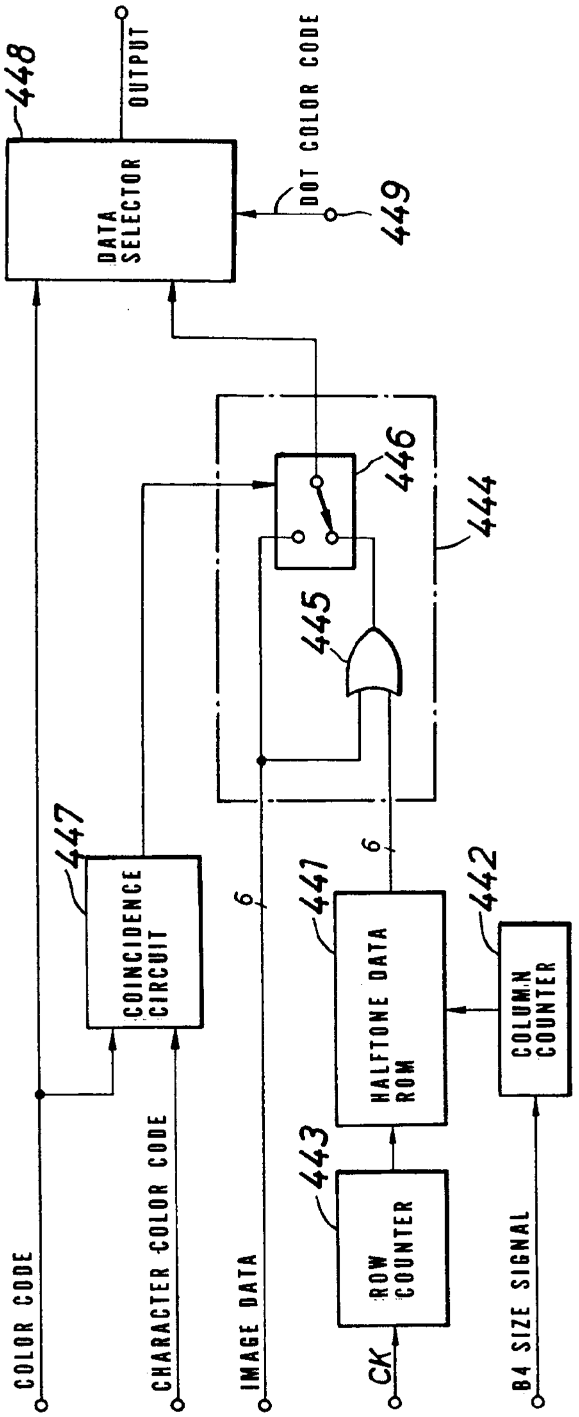


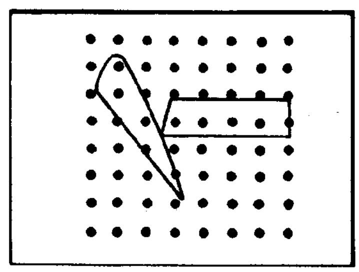

FIG. 80A

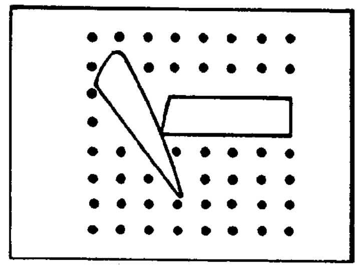

FIG. 80B

F I G. 81

| | | | | | | | |
|---|---|---|---|---|---|---|---|
| 0 | 3F | 3F | 3F | 3F | 3F | 3F | 0 |
| 3F | 3F | 3F | 3F | 3F | 3F | 3F | 3F |
| 3F | 3F | 3F | 3F | 3F | 3F | 3F | 3F |
| 3F | 3F | 3F | 0 | 0 | 3F | 3F | 3F |
| 3F | 3F | 3F | 0 | 0 | 3F | 3F | 3F |
| 3F | 3F | 3F | 3F | 3F | 3F | 3F | 3F |
| 3F | 3F | 3F | 3F | 3F | 3F | 3F | 3F |
| 0 | 3F | 3F | 3F | 3F | 3F | 3F | 0 |

DOT PATTERN DATA

F I G. 82A

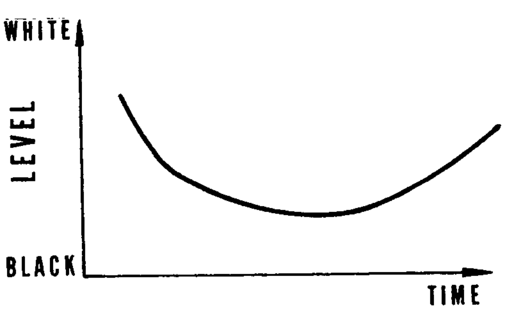


ORIGINALIM AGE DATA

F I G. 82B

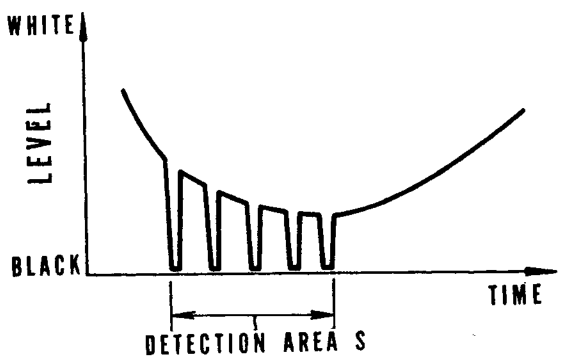


DATA AFTER HALFTONE PROCESSING

F I G. 83

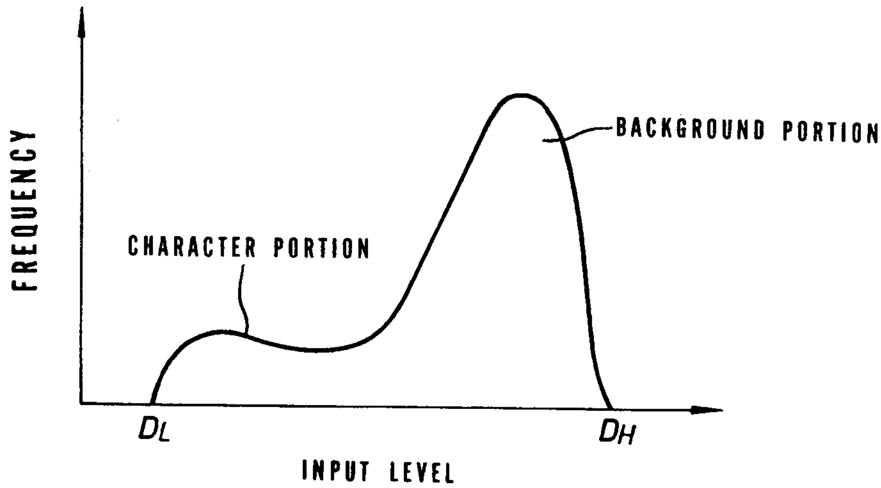
FREQUENCY
CHARACTER PORTION
BACKGROUND PORTION
DL
DH
INPUT LEVEL

F I G. 84

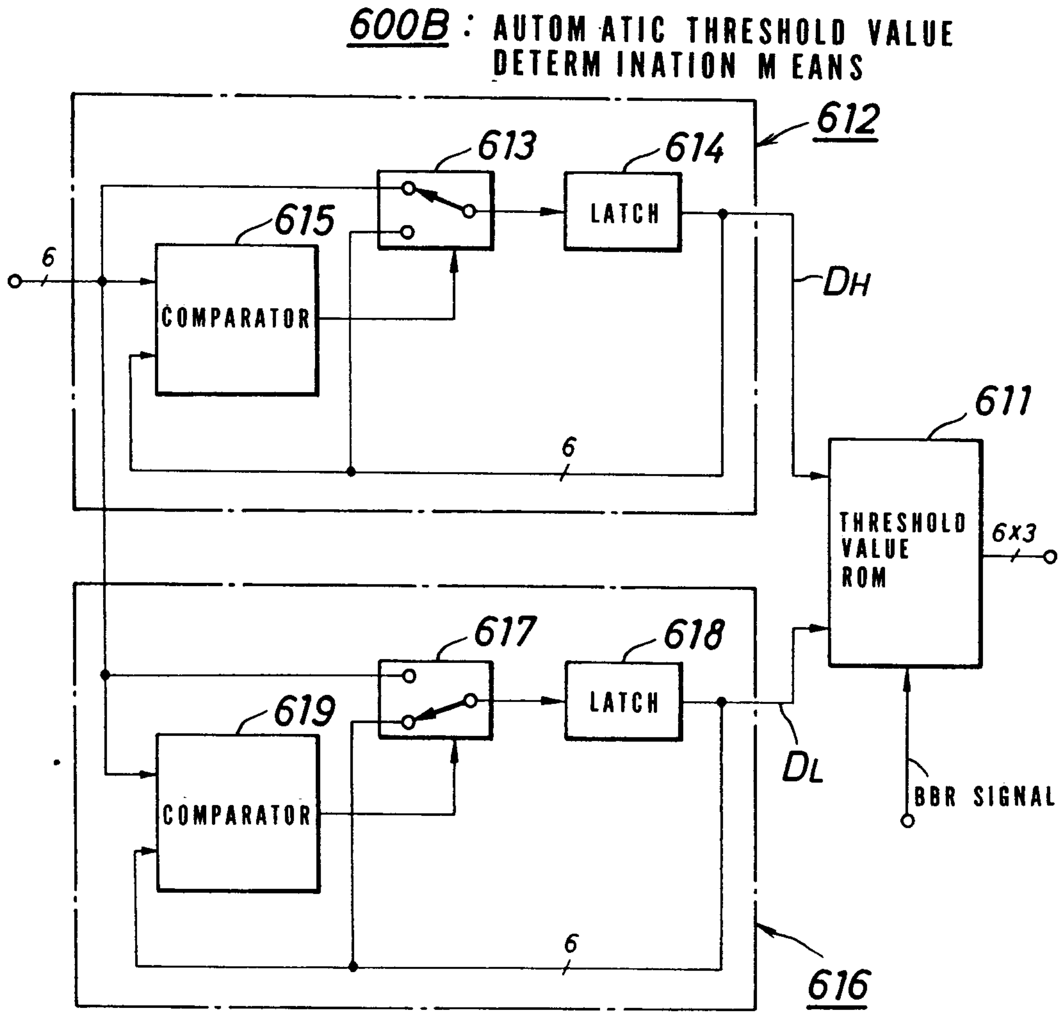
600B : AUTOMATIC THRESHOLD VALUE DETERMINATION MEANS
612
613
614
615
LATCH
COMPARATOR
6
DH
611
THRESHOLD VALUE ROM
6x3
617
618
619
LATCH
COMPARATOR
DL
BBR SIGNAL
616

FIG. 85

600B

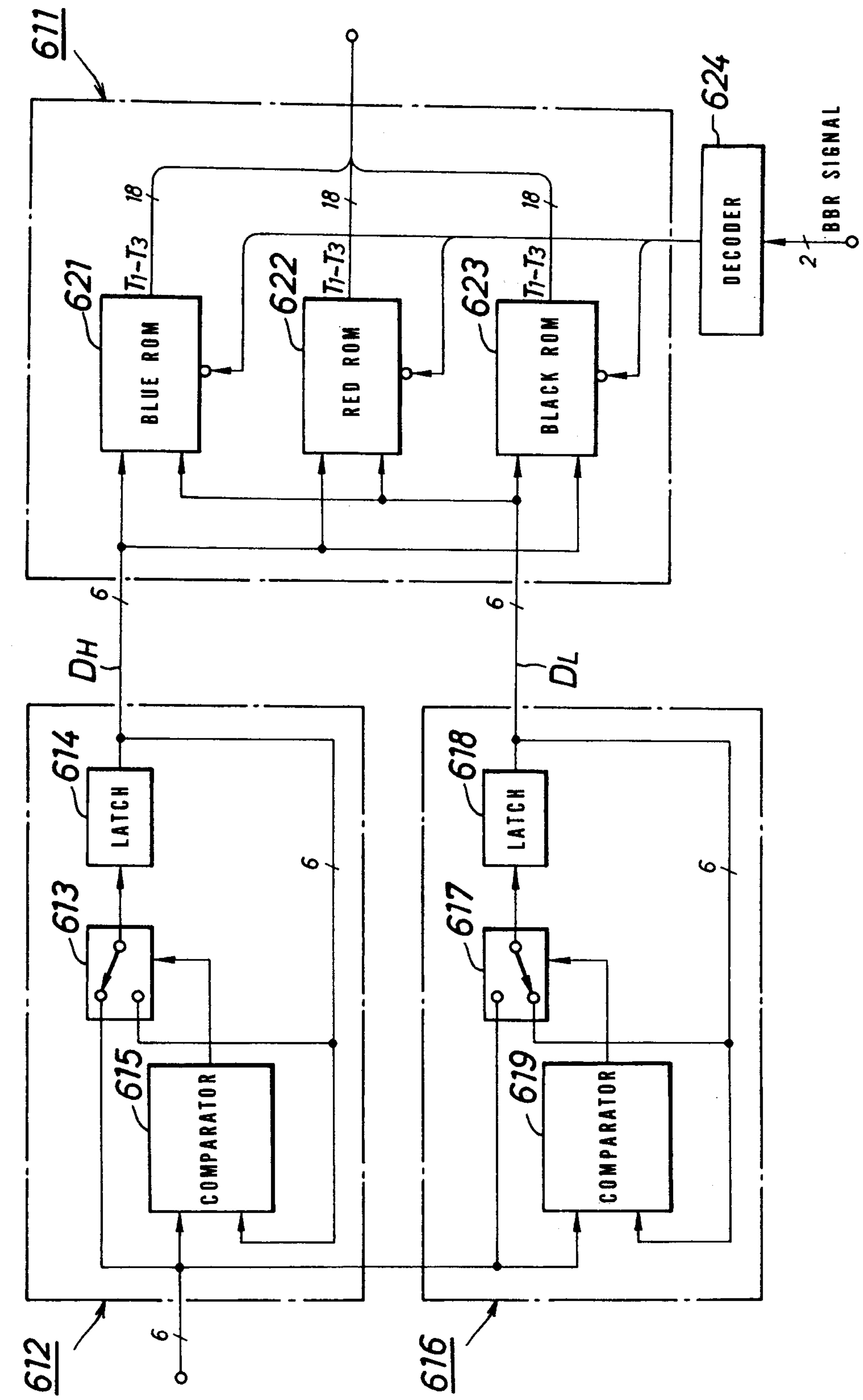
611
612
613
614
615
616
617
618
619
621
622
623
624
BLUE ROM
RED ROM
BLACK ROM
DECODER
BBR SIGNAL
LATCH
LATCH
COMPARATOR
COMPARATOR
$T_1$-$T_3$
$T_1$-$T_3$
$T_1$-$T_3$
18
18
18
6
6
6
6
6
2
$D_H$
$D_L$

FIG. 86

600B

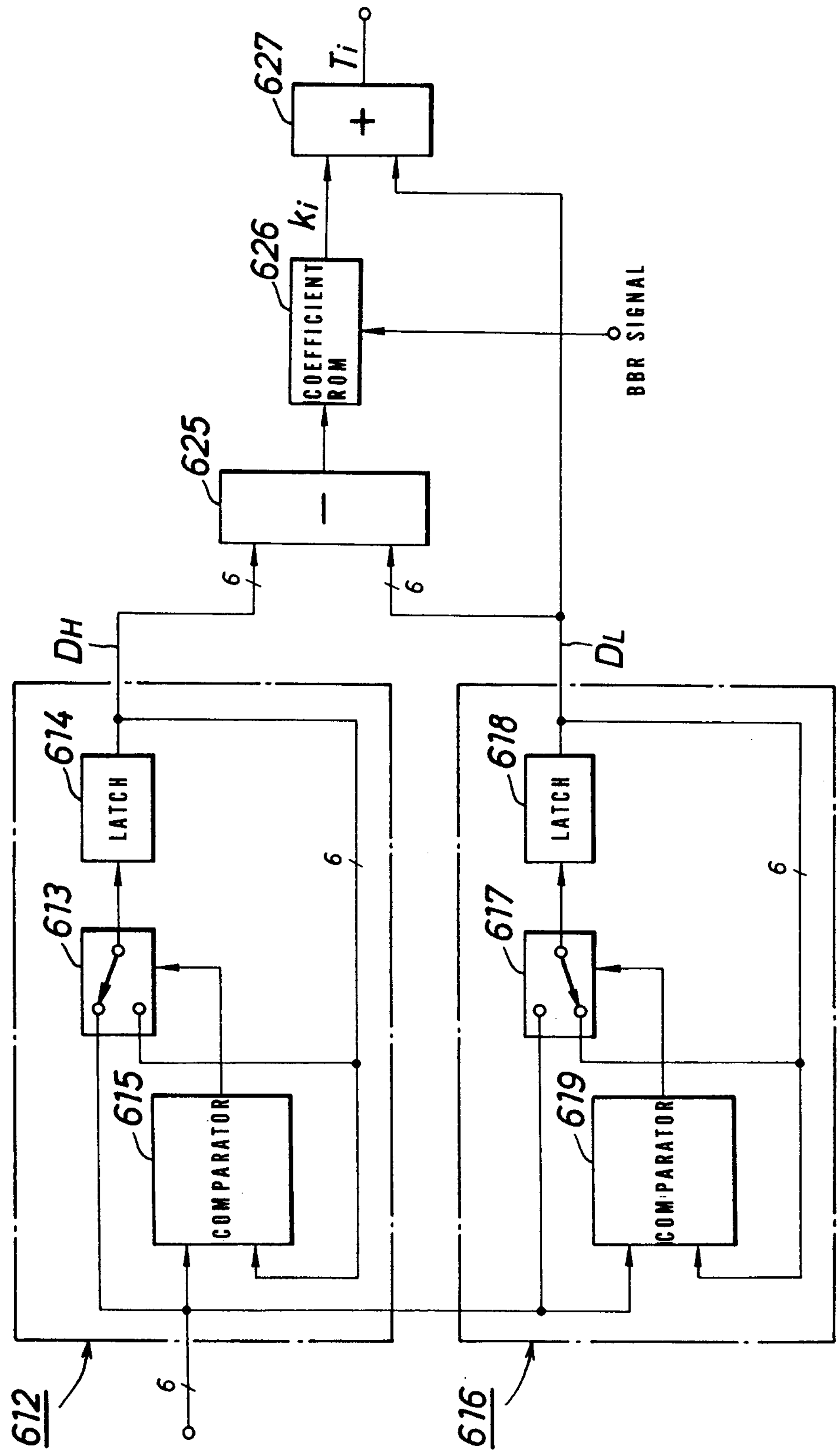

612
616
613
614
615
617
618
619
LATCH
LATCH
COMPARATOR
COMPARATOR
6
DH
DL
625
626
COEFFICIENT ROM
BBR SIGNAL
Ki
627
+
−
Ti

# FIG. 87

| | | | | | | | | |
|---|---|---|---|---|---|---|---|---|
| T1 | 2 | 4 | C | 14 | 12 | D | 7 | 1 |
| | 7 | 9 | 12 | E | B | 10 | A | 5 |
| | F | 10 | 8 | 5 | 3 | 9 | 14 | D |
| | 11 | A | 2 | 0 | 0 | 6 | E | 13 |
| | 13 | D | 7 | 1 | 2 | 4 | C | 11 |
| | B | 11 | A | 4 | 6 | 8 | 13 | E |
| | 3 | 9 | 14 | C | F | 10 | 8 | 5 |
| | 1 | 6 | F | 12 | 15 | B | 3 | 0 |

| | | | | | | | | |
|---|---|---|---|---|---|---|---|---|
| T2 | 17 | 19 | 21 | 29 | 27 | 22 | 1C | 16 |
| | 1C | 1E | 27 | 23 | 20 | 25 | 1F | 1A |
| | 24 | 25 | 1D | 1A | 18 | 1E | 29 | 22 |
| | 26 | 1F | 17 | 15 | 15 | 1B | 23 | 28 |
| | 28 | 22 | 1C | 16 | 17 | 19 | 21 | 26 |
| | 20 | 26 | 1F | 19 | 1B | 1D | 28 | 23 |
| | 18 | 1E | 29 | 21 | 24 | 25 | 1D | 1A |
| | 16 | 1B | 24 | 27 | 2A | 20 | 18 | 15 |

| | | | | | | | | |
|---|---|---|---|---|---|---|---|---|
| T3 | 2C | 2E | 36 | 3E | 3C | 37 | 31 | 2B |
| | 31 | 33 | 3C | 38 | 35 | 3A | 34 | 2F |
| | 39 | 3A | 32 | 2F | 2D | 33 | 3E | 37 |
| | 3B | 34 | 2C | 2A | 2A | 30 | 38 | 3D |
| | 3D | 37 | 31 | 2B | 2C | 2E | 36 | 3B |
| | 35 | 3B | 34 | 2E | 30 | 32 | 3D | 38 |
| | 2D | 33 | 3E | 36 | 39 | 3A | 32 | 2F |
| | 2B | 30 | 39 | 3C | 3F | 35 | 2D | 2A |

F I G. 88

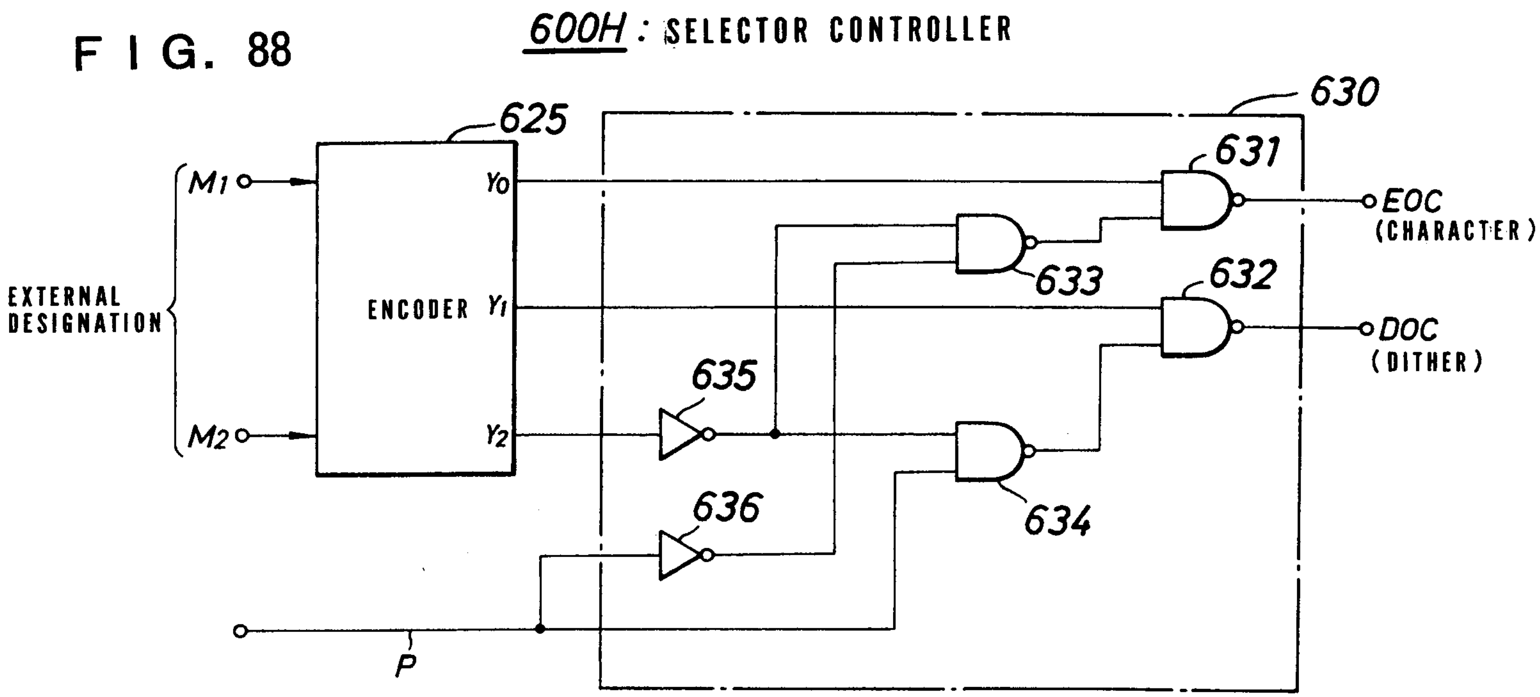


F I G. 89

| MODE | $M_1$ | $M_2$ | $Y_0$ | $Y_1$ | $Y_2$ | EOC | DOC | SELECTOR 1 | SELECTOR 2 |
|---|---|---|---|---|---|---|---|---|---|
| CHARACTER | 0 | 0 | L | H | H | H | L | ON | ON |
| PHOTOGRAPH | 0 | 1 | H | L | H | L | H | OFF | OFF |
| MIXED | 1 | 0 | H | H | L | H/L | H/L | ON/OFF | ON/OFF |

F I G. 90

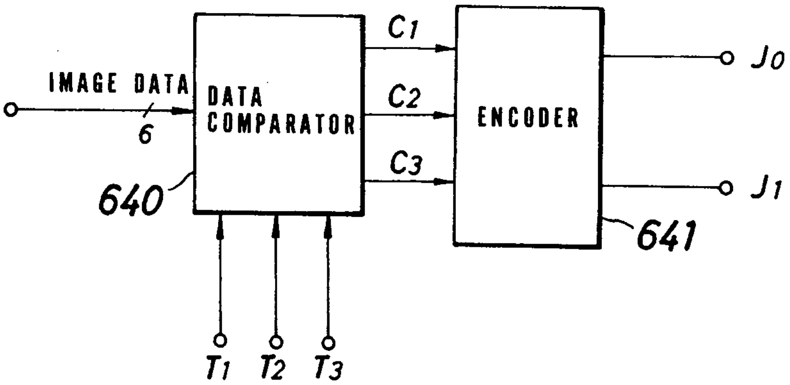


F I G. 91

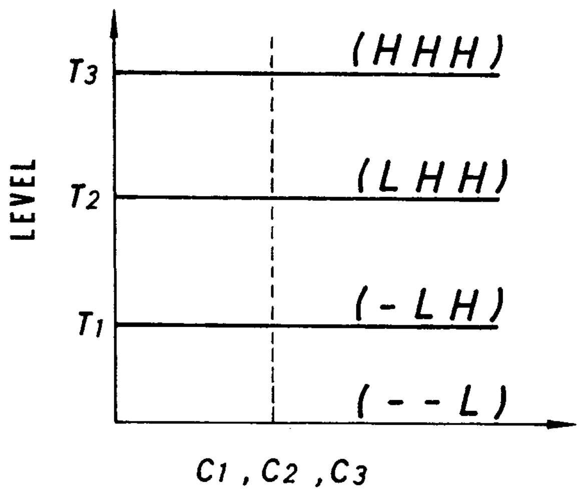


F I G. 92

| $C_1$ | $C_2$ | $C_3$ | $J_0$ | $J_1$ | BEAM MODULATION | COLOR |
|---|---|---|---|---|---|---|
| H | H | H | 1 | 1 | 0 | WHITE |
| L | H | H | 0 | 1 | 1 / 3 | LIGHT GRAY |
| - | L | H | 1 | 0 | 2 / 3 | DARK GRAY |
| - | - | L | 0 | 0 | 1 | BLACK |

F I G. 93

470 : EDGE EXTRACTION PROCESSOR

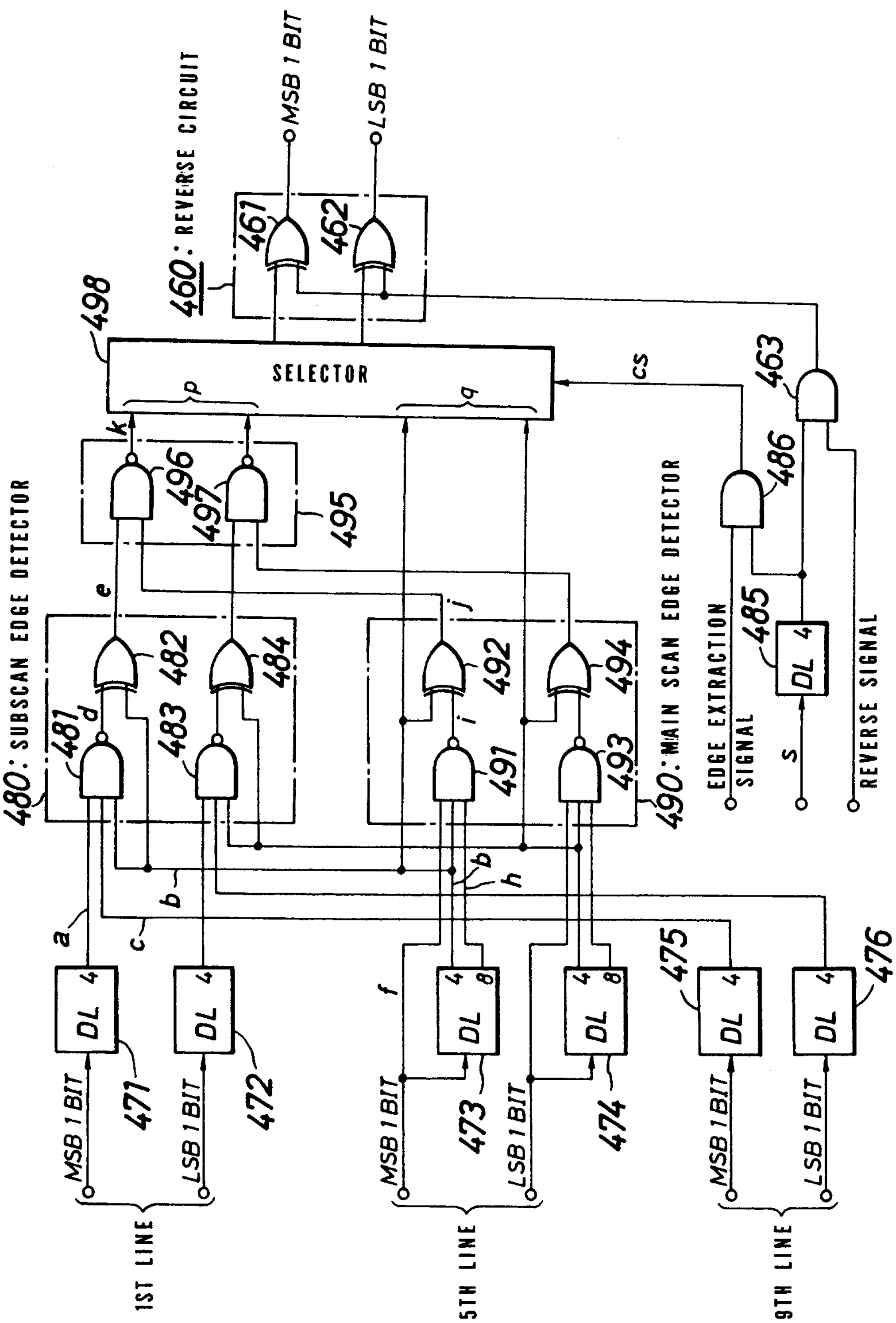

FIG. 94A 1ST LINE SIGNAL a

FIG. 94B 5TH LINE SIGNAL b

FIG. 94C 9TH LINE SIGNAL c

FIG. 94D NAND OUTPUT d

FIG. 94E EX-OR OUTPUT e

FIG. 94F 5TH LINE SIGNAL f

FIG. 94G 4-BIT SHIFTED 5TH LINE SIGNAL g

FIG. 94H 8-BIT SHIFTED 5TH LINE SIGNAL h

FIG. 94I NAND OUTPUT i

FIG. 94J EX-OR OUTPUT j

FIG. 94K EDGE DETECTION SIGNAL k

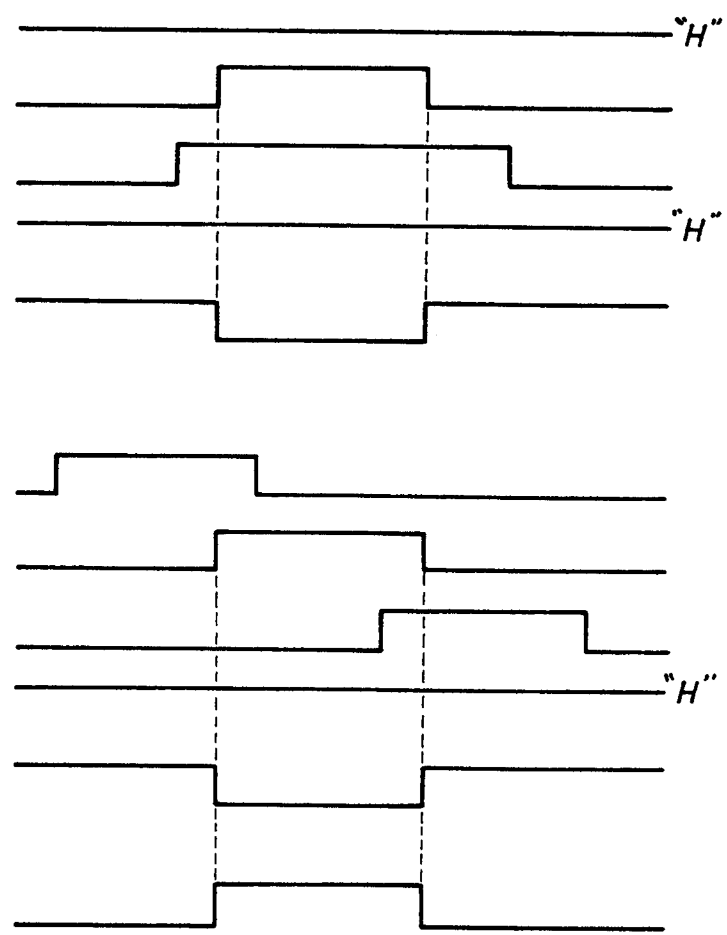

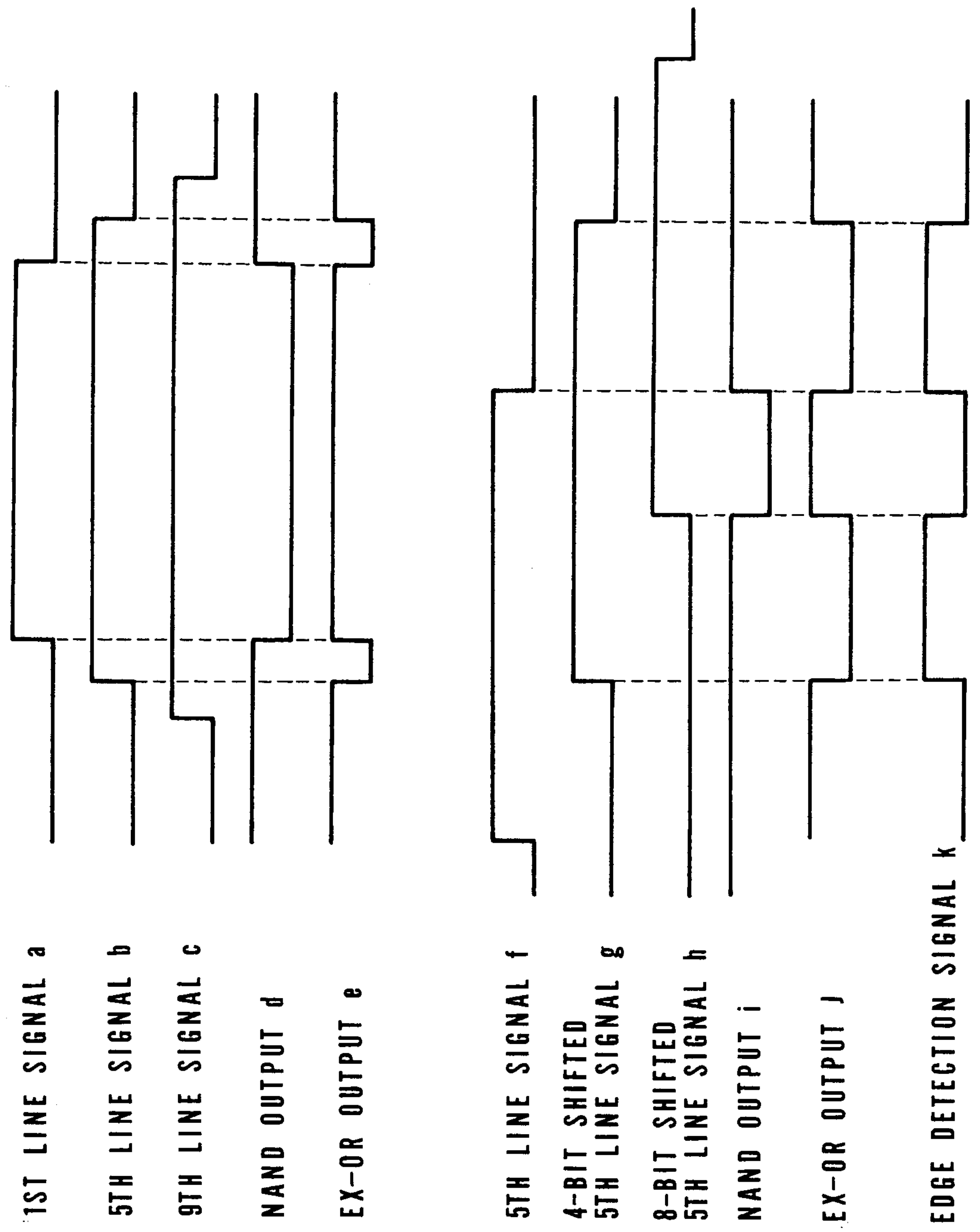


FIG. 95A FIG. 95B FIG. 95C FIG. 95D FIG. 95E FIG. 95F FIG. 95G FIG. 95H FIG. 95I FIG. 95J FIG. 95K

FIG. 96

IMAGE PROCESSING DESIGNATION DATA CORRESPONDENCE TABLE

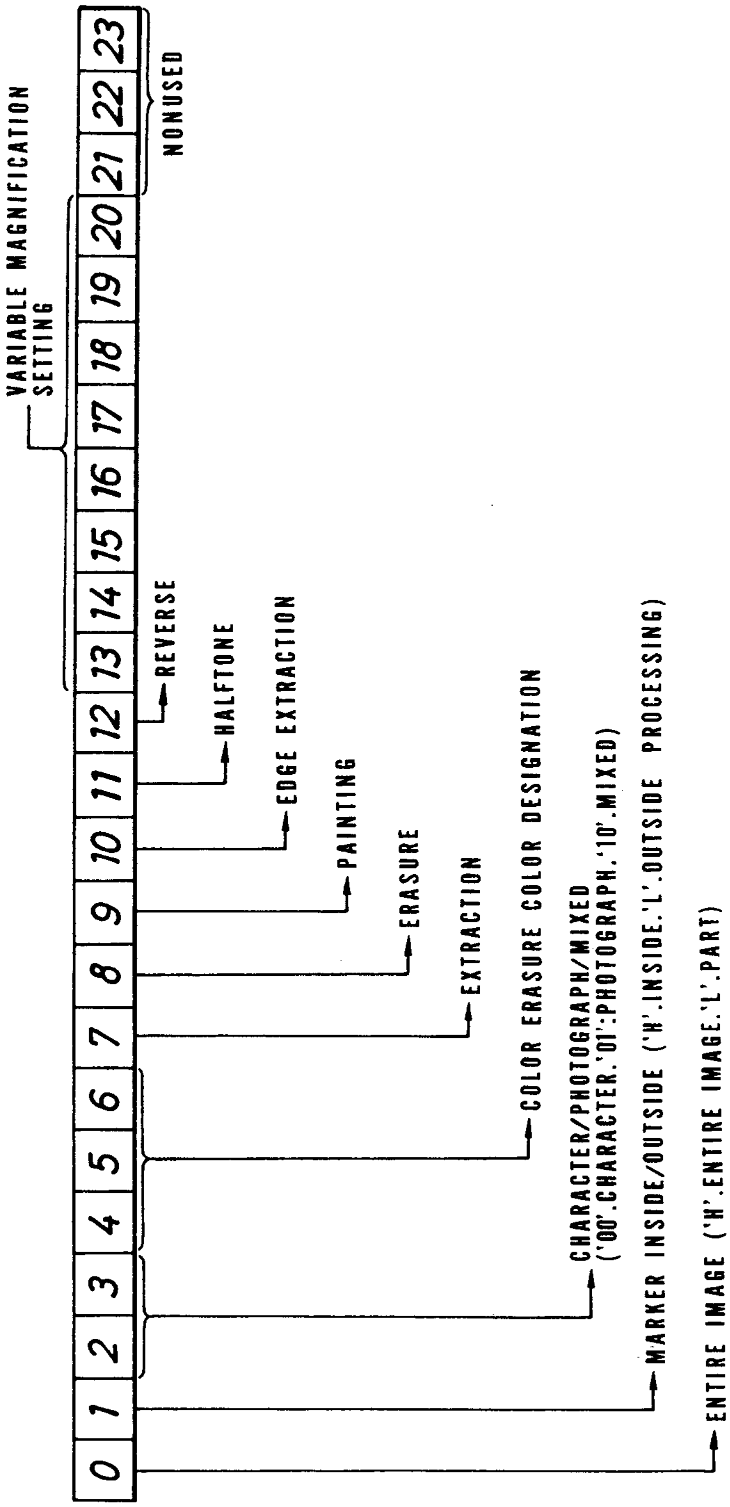

FIG. 97

40: INTERFACE CIRCUIT

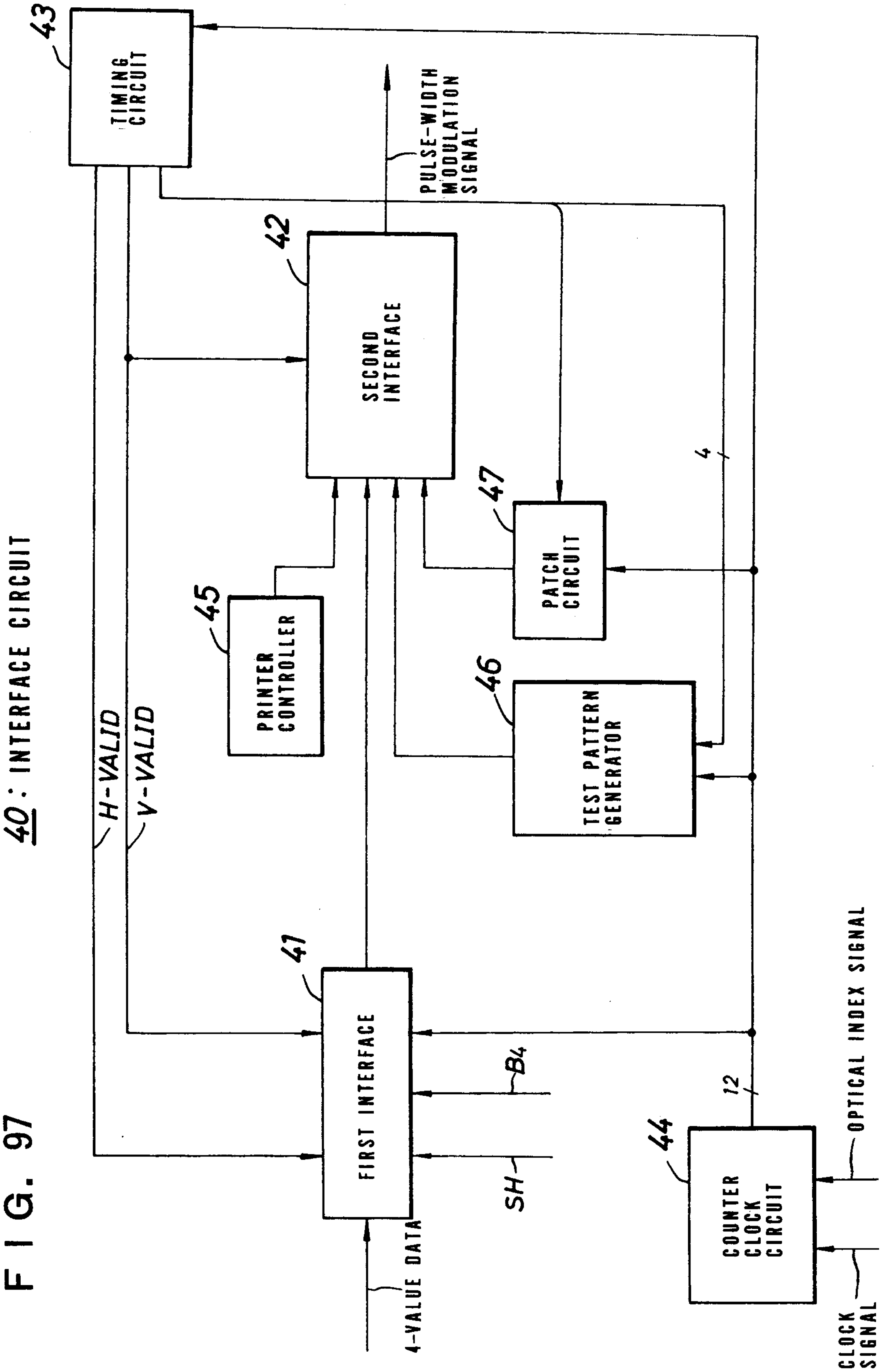

F I G. 98

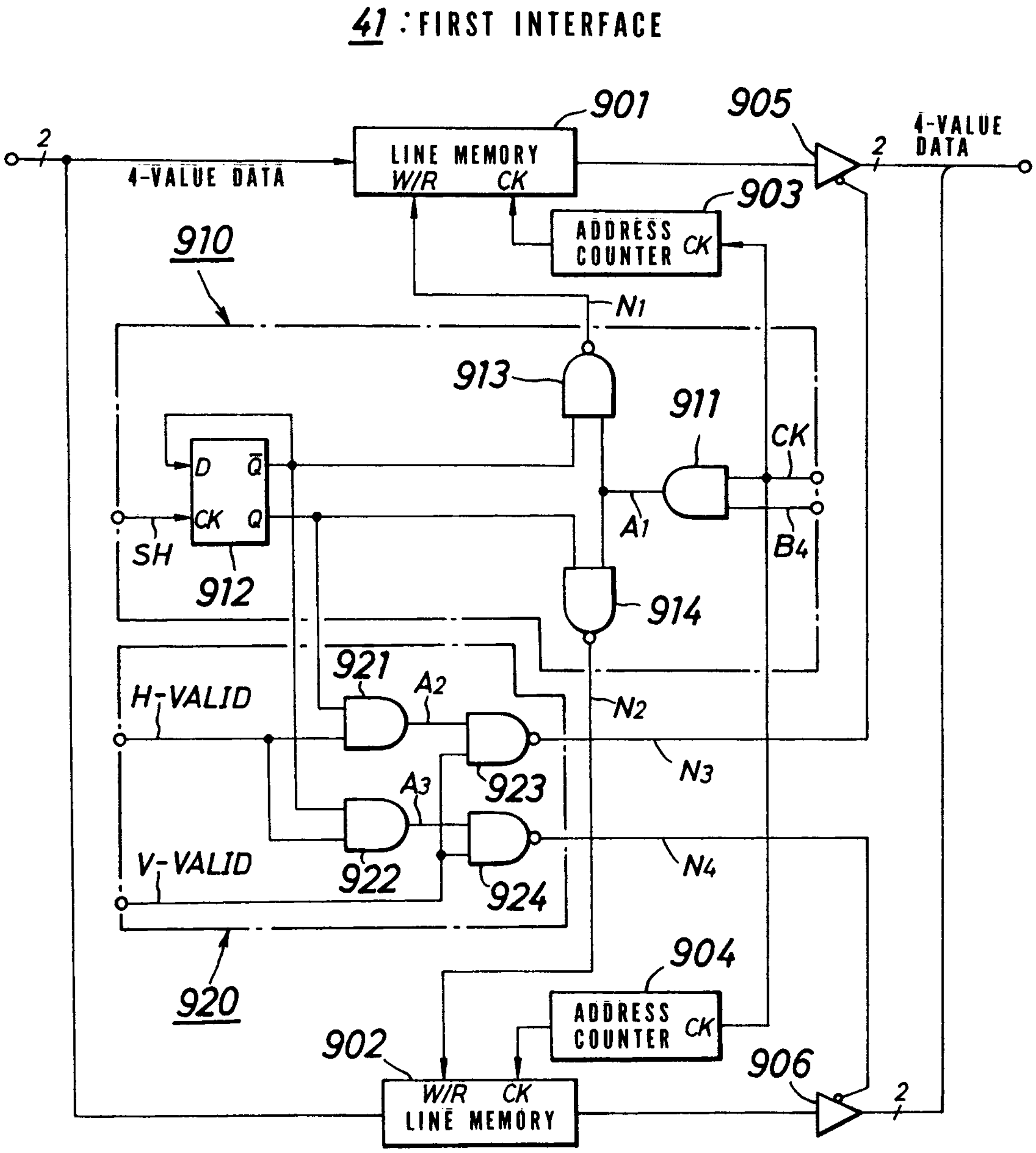
41 : FIRST INTERFACE
901
905
903
910
913
911
912
914
921
922
923
924
920
904
902
906
2
4-VALUE DATA
LINE MEMORY
W/R
CK
ADDRESS COUNTER
CK
N1
D
Q̄
CK
Q
SH
CK
A1
B4
H-VALID
V-VALID
A2
A3
N2
N3
N4
4-VALUE DATA
2
ADDRESS COUNTER
CK
W/R
CK
LINE MEMORY
2

FIG.99A SIZE SIGNAL B4
FIG.99B CLOCK SIGNAL CK
FIG.99C FIRST AND OUTPUT A1
FIG.99D LINE SIGNAL SH
FIG.99E Q OUTPUT
FIG.99F $\bar{Q}$ OUTPUT
FIG.99G FIRST NAND OUTPUT N1
FIG.99H SECOND NAND OUTPUT N2
FIG.99I H-VALID SIGNAL
FIG.99J SECOND AND OUTPUT A2
FIG.99K THIRD AND OUTPUT A3
FIG.99L V-VALID SIGNAL
FIG.99M THIRD NAND OUTPUT N3
FIG.99N FOURTH NAND OUTPUT N4

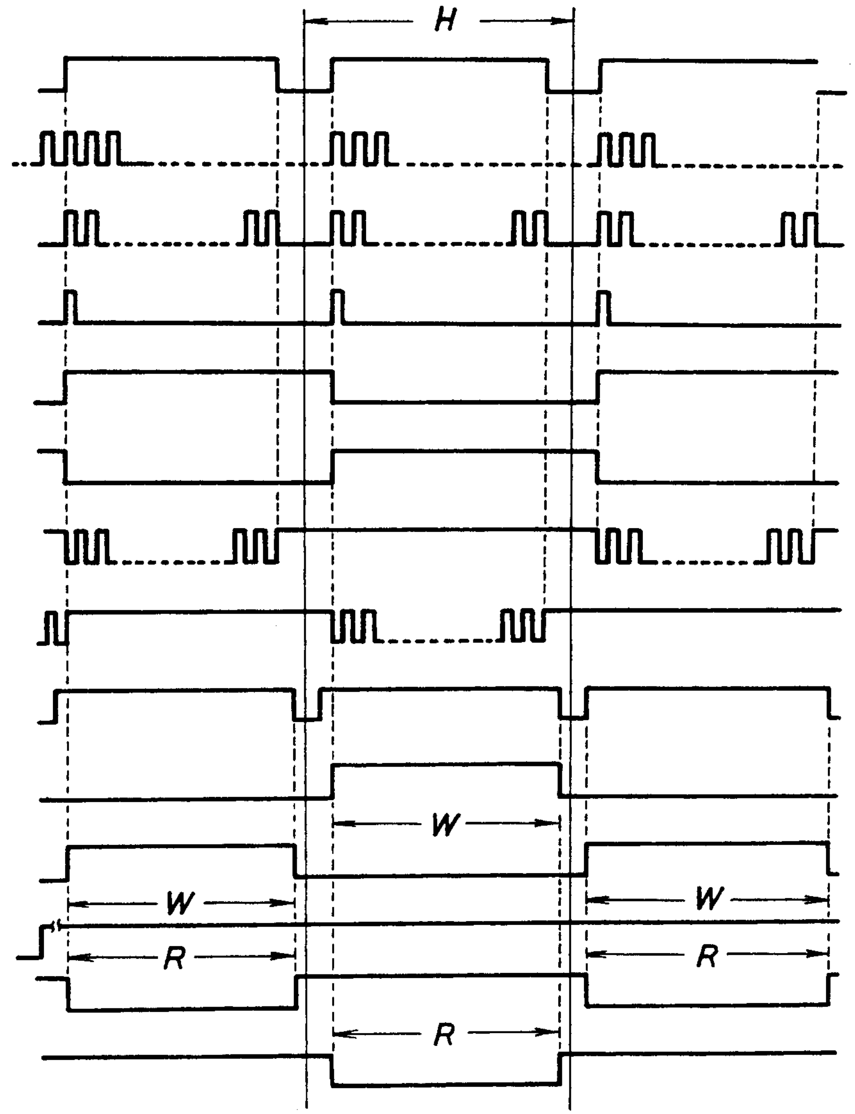

F I G. 100

70 : OUTPUT UNIT

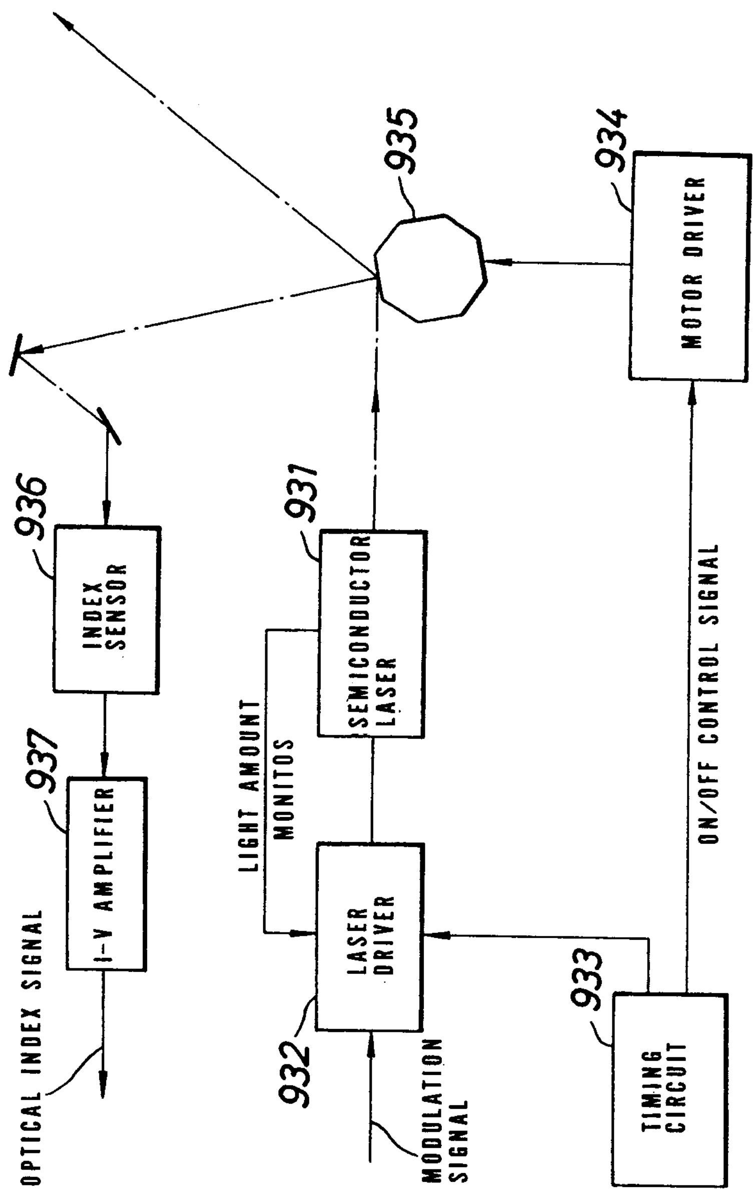

F I G. 101

940: LASER BEAM SCANNER

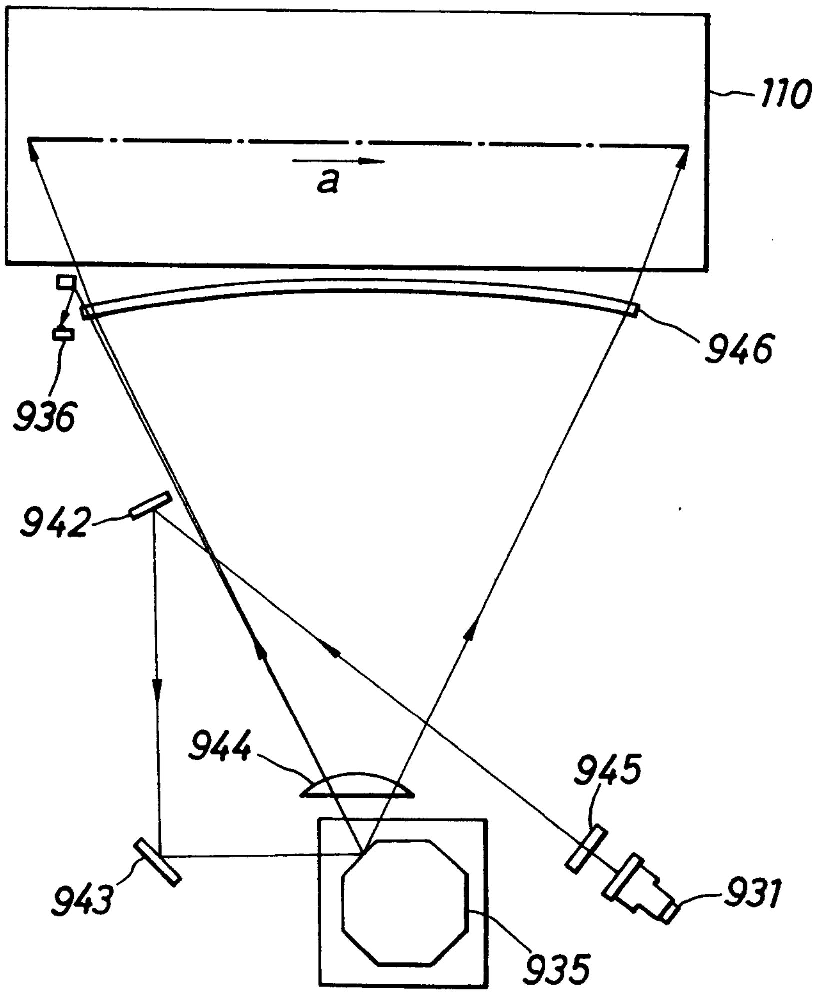

FIG. 102

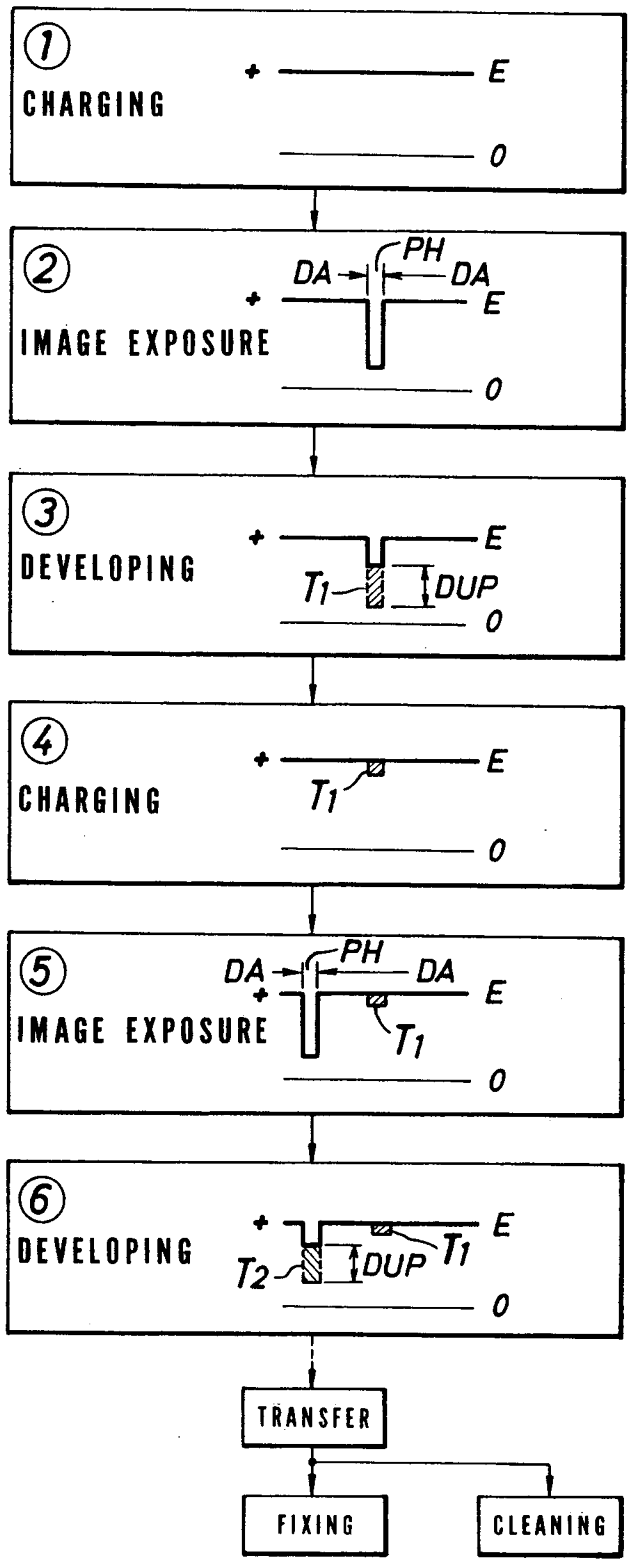
①
CHARGING
+
E
0
②
IMAGE EXPOSURE
DA
PH
DA
+
E
0
③
DEVELOPING
+
E
T1
DUP
0
④
CHARGING
+
E
T1
0
⑤
IMAGE EXPOSURE
DA
PH
DA
+
E
T1
0
⑥
DEVELOPING
+
E
T2
DUP
T1
0
TRANSFER
FIXING
CLEANING

FIG. 103

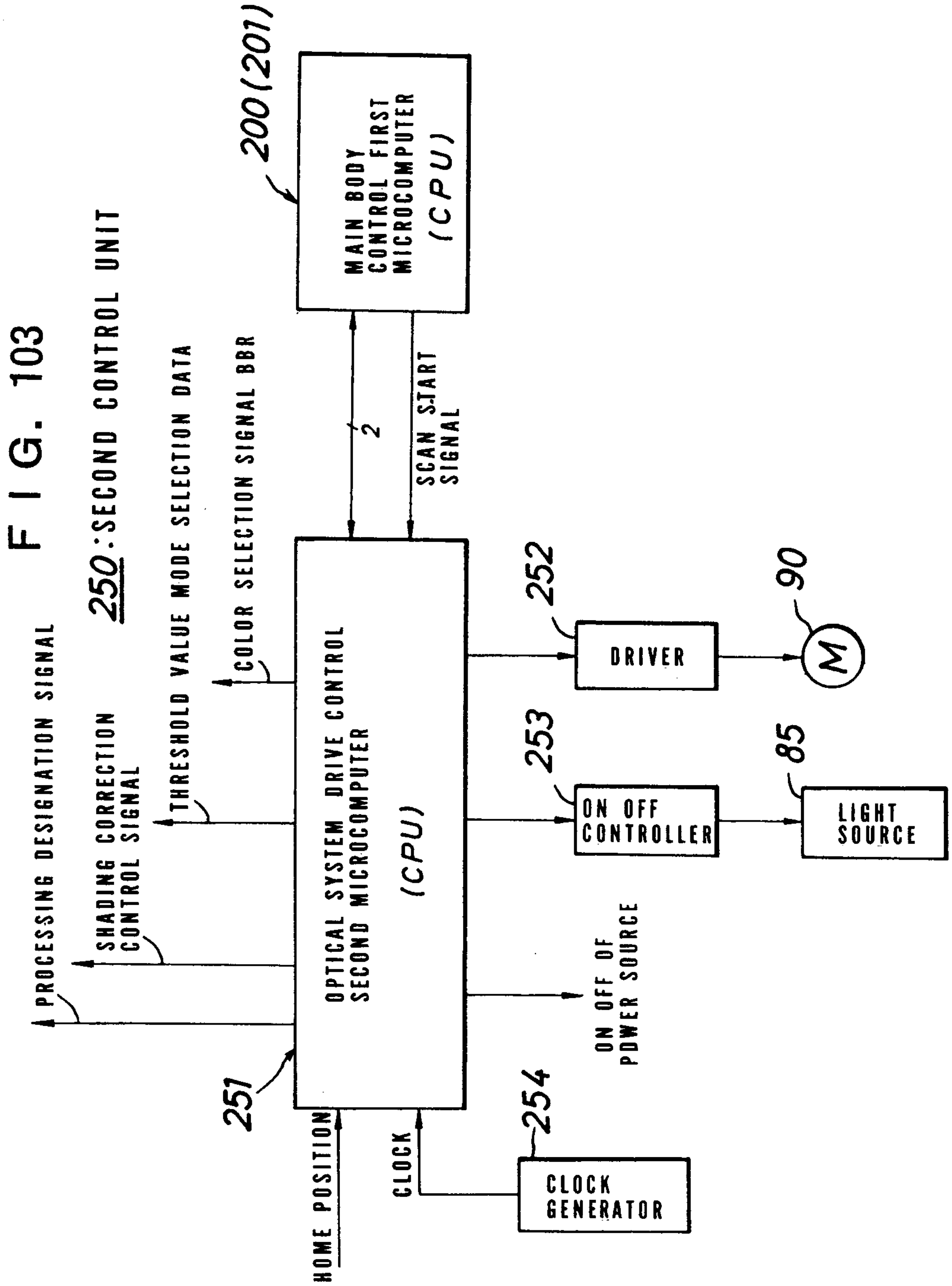
250: SECOND CONTROL UNIT
200 (201)
MAIN BODY CONTROL FIRST MICROCOMPUTER (CPU)
2
SCAN START SIGNAL
PROCESSING DESIGNATION SIGNAL
SHADING CORRECTION CONTROL SIGNAL
THRESHOLD VALUE MODE SELECTION DATA
COLOR SELECTION SIGNAL BBR
OPTICAL SYSTEM DRIVE CONTROL SECOND MICROCOMPUTER (CPU)
251
HOME POSITION
CLOCK
254
CLOCK GENERATOR
ON OFF OF POWER SOURCE
252
DRIVER
90
M
253
ON OFF CONTROLLER
85
LIGHT SOURCE

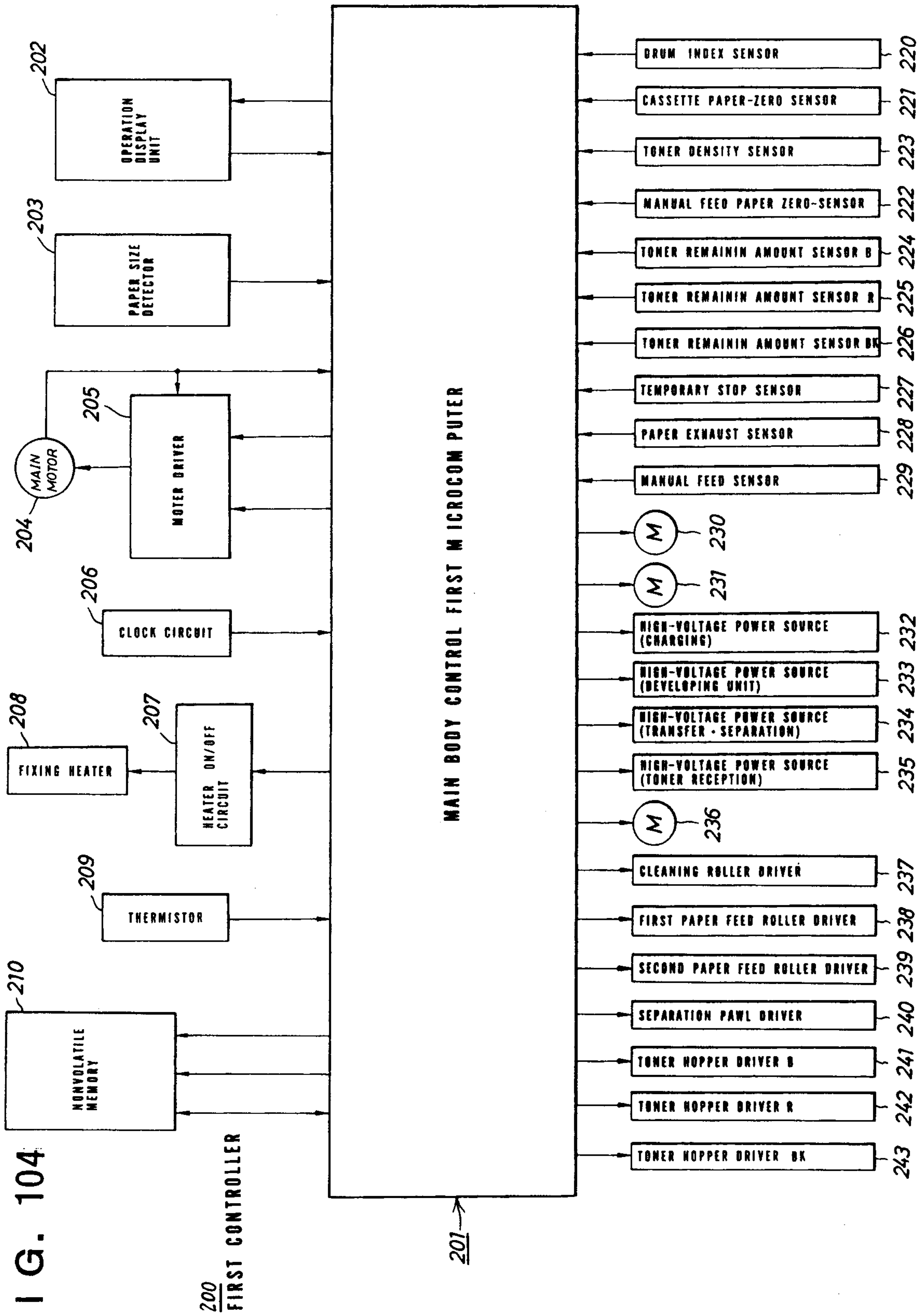

200 FIRST CONTROLLER
201
MAIN BODY CONTROL FIRST MICROCOMPUTER
202
OPERATION DISPLAY UNIT
203
PAPER SIZE DETECTOR
204
MAIN MOTOR
205
MOTER DRIVER
206
CLOCK CIRCUIT
207
HEATER ON/OFF CIRCUIT
208
FIXING HEATER
209
THERMISTOR
210
NONVOLATILE MEMORY
DRUM INDEX SENSOR
220
CASSETTE PAPER-ZERO SENSOR
221
TONER DENSITY SENSOR
223
MANUAL FEED PAPER ZERO-SENSOR
222
TONER REMAININ AMOUNT SENSOR B
224
TONER REMAININ AMOUNT SENSOR R
225
TONER REMAININ AMOUNT SENSOR BK
226
TEMPORARY STOP SENSOR
227
PAPER EXHAUST SENSOR
228
MANUAL FEED SENSOR
229
M
230
M
231
HIGH-VOLTAGE POWER SOURCE (CHARGING)
232
HIGH-VOLTAGE POWER SOURCE (DEVELOPING UNIT)
233
HIGH-VOLTAGE POWER SOURCE (TRANSFER · SEPARATION)
234
HIGH-VOLTAGE POWER SOURCE (TONER RECEPTION)
235
M
236
CLEANING ROLLER DRIVER
237
FIRST PAPER FEED ROLLER DRIVER
238
SECOND PAPER FEED ROLLER DRIVER
239
SEPARATION PAWL DRIVER
240
TONER HOPPER DRIVER B
241
TONER HOPPER DRIVER R
242
TONER HOPPER DRIVER BK
243


FIG. 104

FIG.105A PROCESS
FIG.105B DRUM INDEX SIGNAL
FIG.105C DRUM COUNTER
FIG.105D MAIN MOTOR
FIG.105E CHARGING
FIG.105F DEVELOPING MAGNET B
FIG.105G DEVELOPING MAGNET R
FIG.105H DEVELOPING MAGNET BK
FIG.105I DEVELOPING BIAS B
FIG.105J DEVELOPING BIAS R
FIG.105K DEVELOPING BIAS BK
FIG.105L CLEANING BLADE CONTACT
FIG.105M CLEANING BLADE RELEASE
FIG.105N SECOND PAPER FEED
FIG.105O FIRST PAPER FEED
FIG.105P SECOND PAPER FEED
FIG.105Q TRANSFER · SEPALATION
FIG.105R TONER DENSITY
FIG.105S TEMPORARY STOP SENSOR
FIG.105T PAPER EXHAUST SENSOR
FIG.105U COUNTER
FIG.105V POLYGONAL MIRROR MOTOR
FIG.105W VIDEO GATE
FIG.105X SAMPLE
FIG.105Y V·VALID
FIG.105Z PATCH SIGNAL
FIG.105AA COPY R
FIG.105BB S·START
FIG.105CC HOME POSITION
FIG.105DD READY R

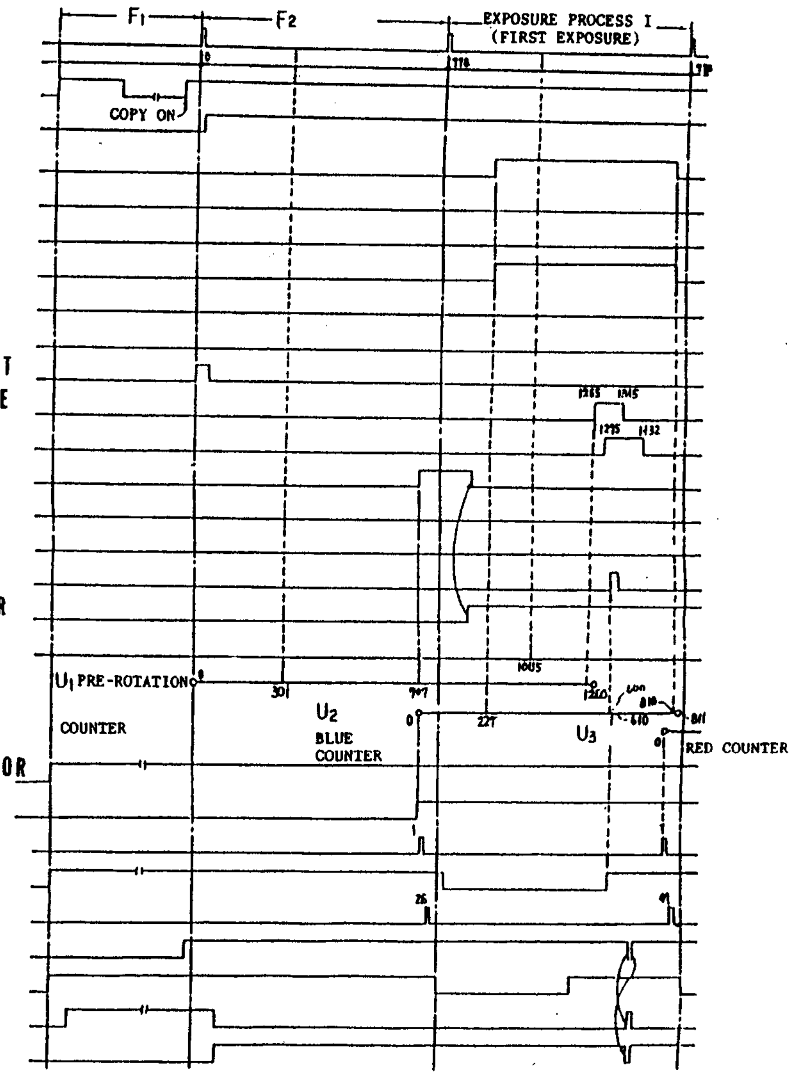

FIG.106A PROCESS
FIG.106B DRUM INDEX SIGNAL
FIG.106C DRUM COUNTER
FIG.106D MAIN MOTER
FIG.106E CHARGING
FIG.106F DEVELOPING MAGNET B
FIG.106G DEVELOPING MAGNET R
FIG.106H DEVELOPING MAGNET BK
FIG.106I DEVELOPING BIAS B
FIG.106J DEVELOPING BIAS R
FIG.106K DEVELOPING BIAS BK
FIG.106L CLEANING BRADE CONTACT
FIG.106M CLEANING BLADE RELEASE
FIG.106N SECOND CLEANING ROLLER
FIG.106O FIRST PAPER FEED
FIG.106P SECOND PAPER FEED
FIG.106Q TRANSFER · SEPARATION
FIG.106R TONER DENSITY
FIG.106S TEM PORARY STOP SENSOR
FIG.106T PAPER EXHAUST SENSOR
FIG.106U COUNTER
FIG.106V POLYGONAL MIRROR MOTOR
FIG.106W VIDEO GATE
FIG.106X SAMPLE
FIG.106Y V-VALID
FIG.106Z PATCH SIGNAL
FIG.106AA COPY R
FIG.106BB S · START
FIG.106CC HOME POSITION
FIG.106DD READY R

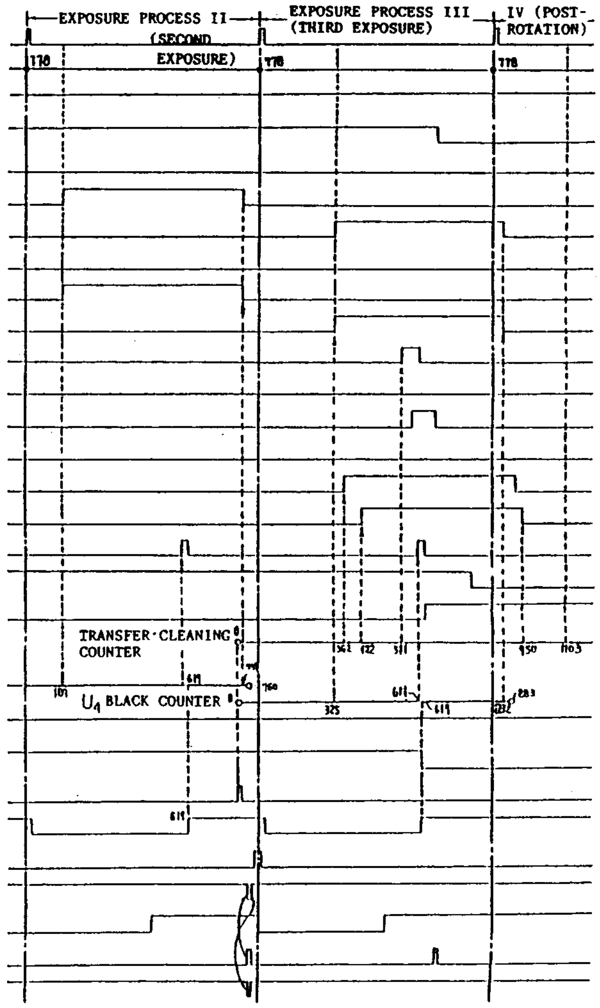

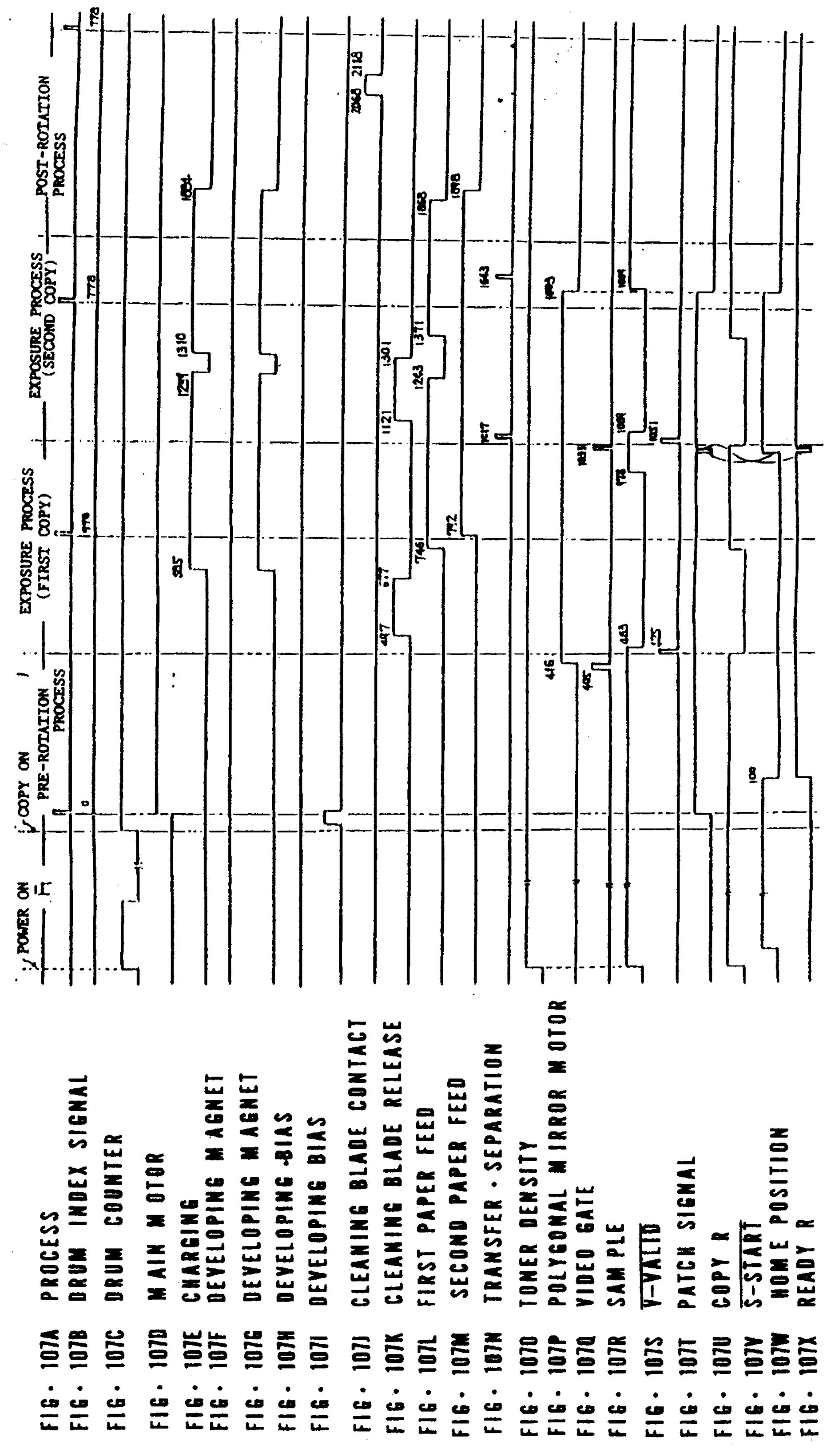
POWER ON
COPY ON
PRE-ROTATION PROCESS
EXPOSURE PROCESS (FIRST COPY)
EXPOSURE PROCESS (SECOND COPY)
POST-ROTATION PROCESS
FIG. 107A PROCESS
FIG. 107B DRUM INDEX SIGNAL
FIG. 107C DRUM COUNTER
FIG. 107D MAIN MOTOR
FIG. 107E CHARGING
FIG. 107F DEVELOPING MAGNET
FIG. 107G DEVELOPING MAGNET
FIG. 107H DEVELOPING -BIAS
FIG. 107I DEVELOPING BIAS
FIG. 107J CLEANING BLADE CONTACT
FIG. 107K CLEANING BLADE RELEASE
FIG. 107L FIRST PAPER FEED
FIG. 107M SECOND PAPER FEED
FIG. 107N TRANSFER · SEPARATION
FIG. 107O TONER DENSITY
FIG. 107P POLYGONAL MIRROR MOTOR
FIG. 107Q VIDEO GATE
FIG. 107R SAMPLE
FIG. 107S V-VALID
FIG. 107T PATCH SIGNAL
FIG. 107U COPY R
FIG. 107V S-START
FIG. 107W HOME POSITION
FIG. 107X READY R

F I G. 108

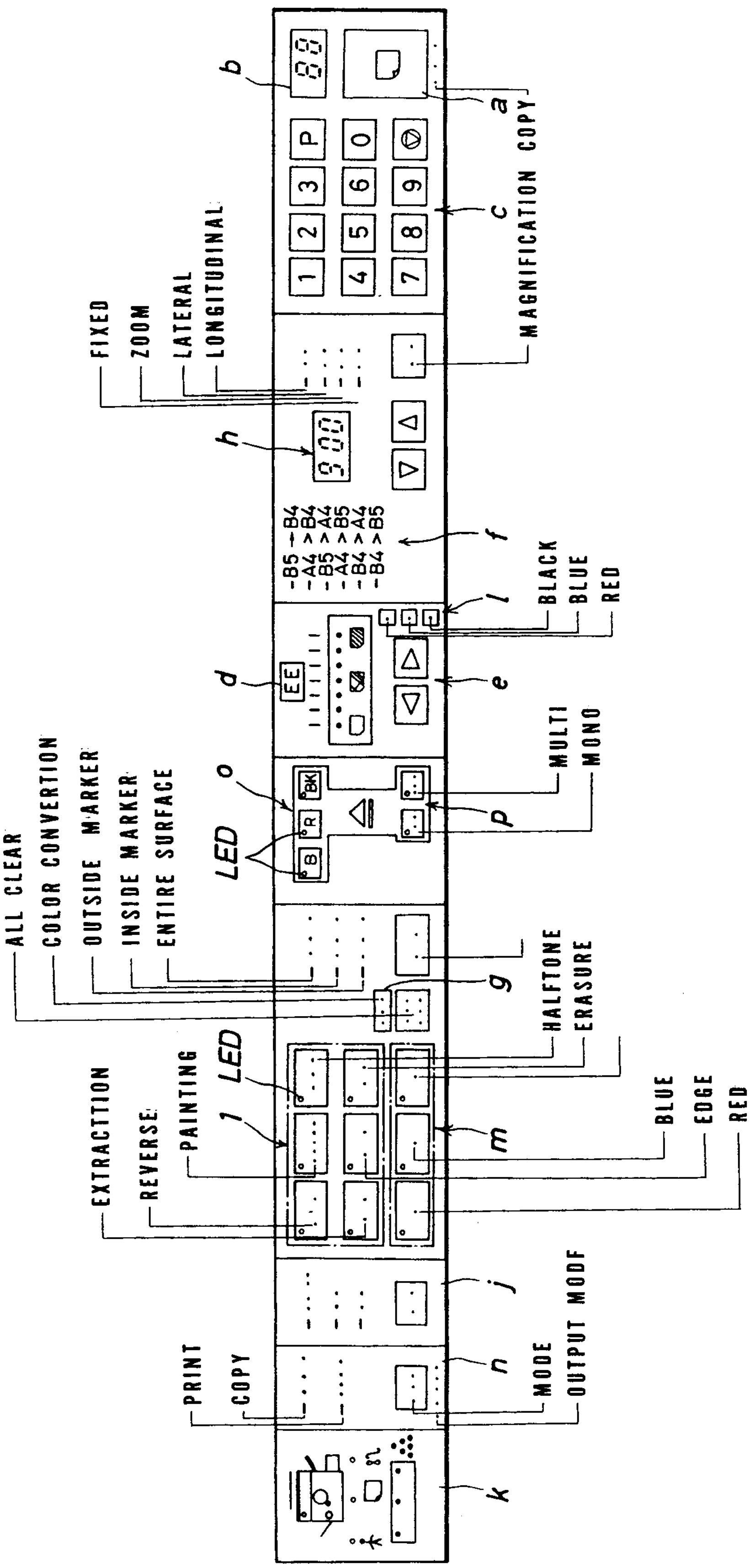
ALL CLEAR
COLOR CONVERTION
OUTSIDE MARKER
INSIDE MARKER
ENTIRE SURFACE
EXTRACTTION
REVERSE
PAINTING
LED
FIXED
ZOOM
LATERAL
LONGITUDINAL
PRINT
COPY
MODE
OUTPUT MODF
HALFTONE
ERASURE
BLUE
EDGE
RED
MULTI
MONO
BLACK
BLUE
RED
MAGNIFICATION COPY
-B5 → B4
-A4 > B4
-B5 > A4
-A4 > B5
-B4 > A4
-B4 > B5
a
b
c
d
e
f
g
h
j
k
l
m
n
o
p
1

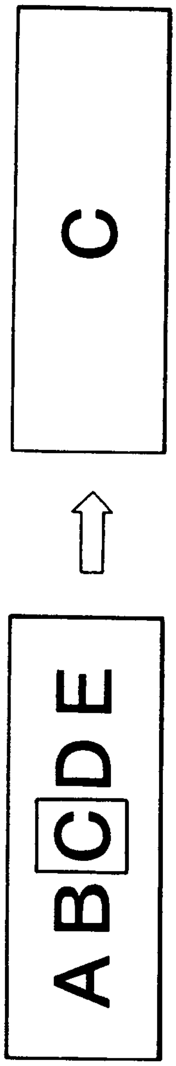


FIG. 109

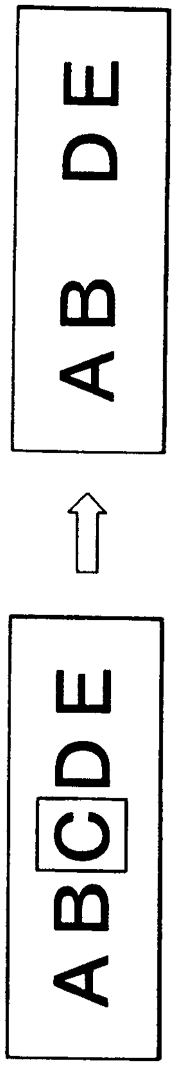


FIG. 110

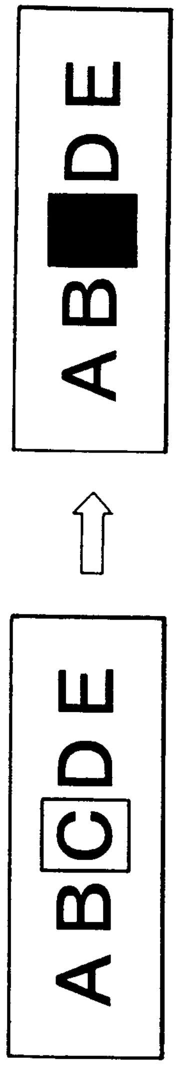


FIG. 111

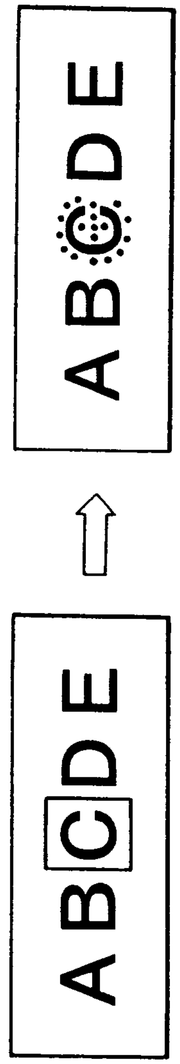


FIG. 112

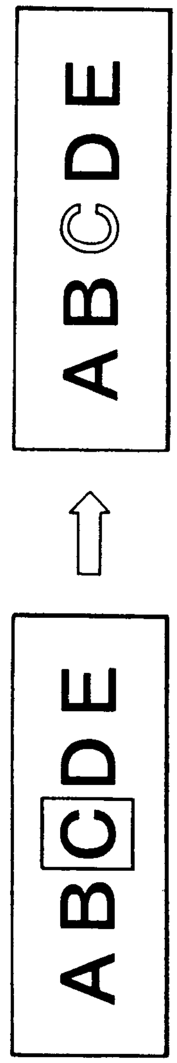


FIG. 113

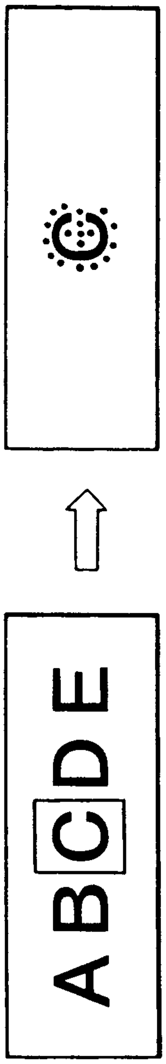


FIG. 114

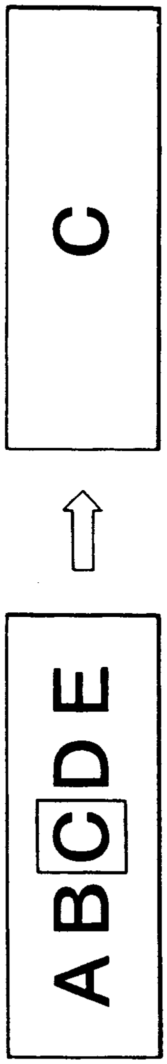


FIG. 115

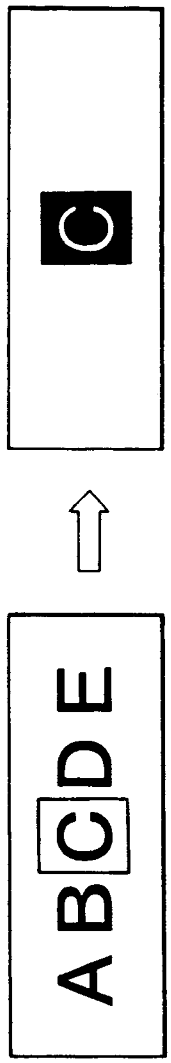


FIG. 116

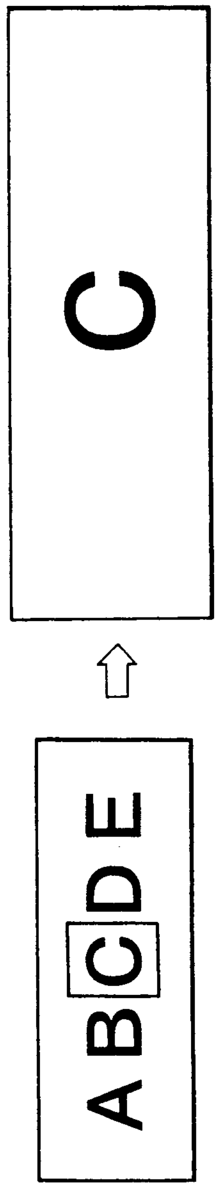


FIG. 117

# FIG. 118

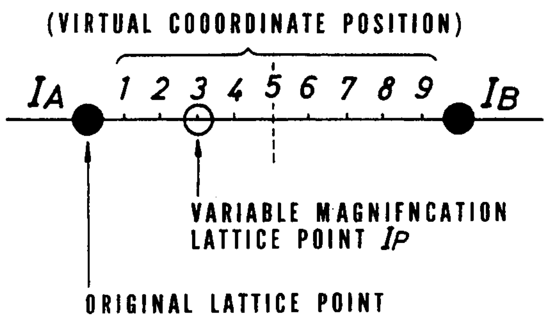


| $I_A$ | $I_B$ | $I_P$ 1 | 2 | 3 | 4 | 5 | 6 | 7 | 8 | 9 |
|---|---|---|---|---|---|---|---|---|---|---|
| 0 | 0 | 0 | 0 | 0 | 0 | 0 | 0 | 0 | 0 | 0 |
| 0 | 1 | 0 | 0 | 0 | 0 | 1 | 1 | 1 | 1 | 1 |
| 1 | 0 | 1 | 1 | 1 | 1 | 0 | 0 | 0 | 0 | 0 |
| 1 | 1 | 1 | 1 | 1 | 1 | 1 | 1 | 1 | 1 | 1 |

# FIG. 119

| $A_8$ | $A_7$ | $A_0 \sim A_6$ 0 | 1 | 2 | ~ | 61 | 62 | 63 |
|---|---|---|---|---|---|---|---|---|
| 0 | 0 | 0 | 0 | 0 | | 0 | 0 | 0 |
| 0 | 1 | 0 | 0 | 0 | | 1 | 1 | 1 |
| 1 | 0 | 1 | 1 | 1 | | 0 | 0 | 0 |
| 1 | 1 | 0 | 0 | 0 | | 0 | 0 | 0 |

FIG. 120

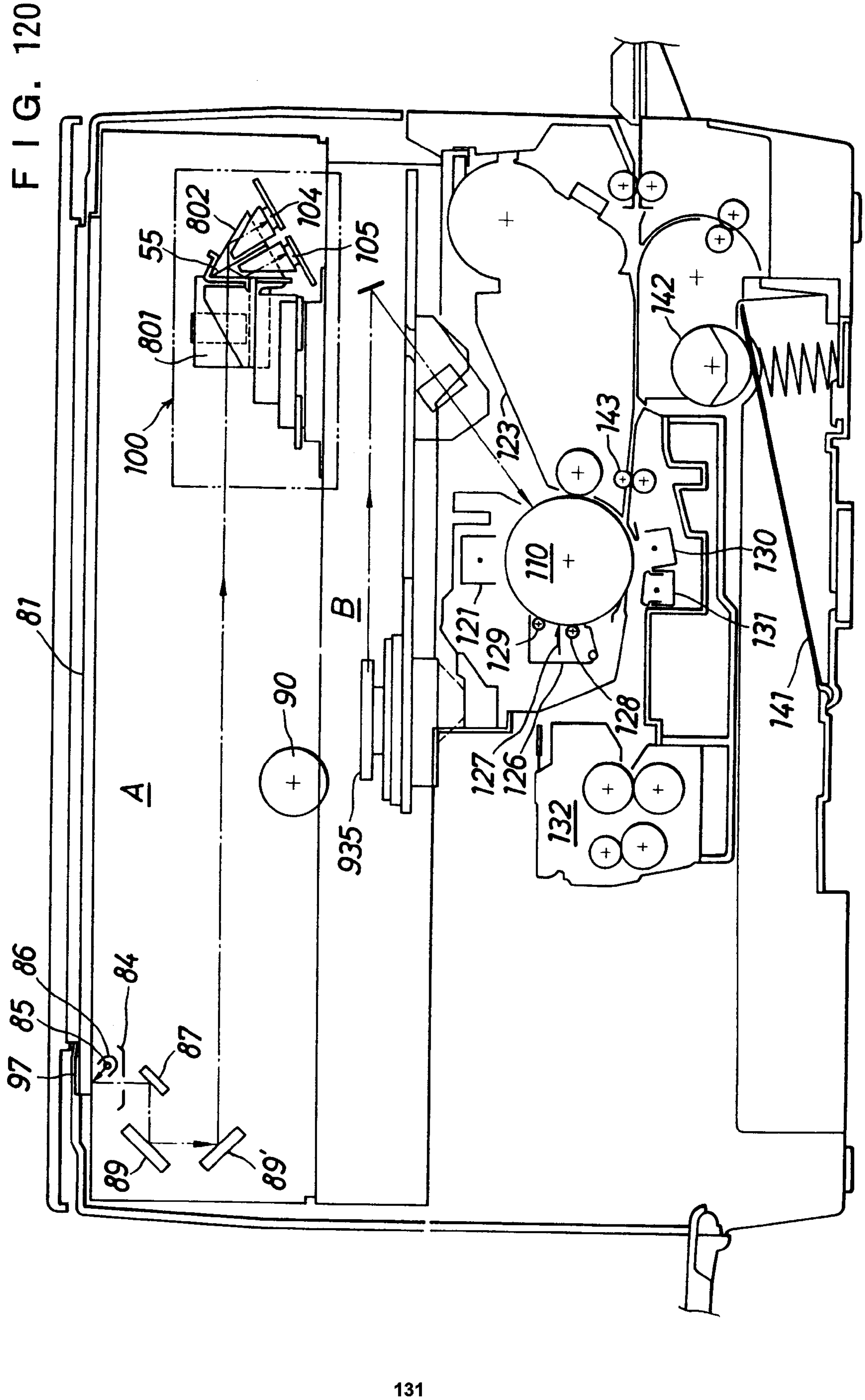
81
97
85
86
84
87
89
89'
A
90
100
801
55
802
104
105
B
935
123
143
110
121
129
130
131
128
127
126
132
142
141